# EUROPEAN PATENT APPLICATION

(11) **EP 1 460 772 A2**
(43) Date of publication of application: **22.09.2004**
(21) Application number: 04013982.6
(22) Date of filing: 15.08.1995
(51) Int. Cl.: H04B 1/40

(54) **Multi-band, multi-mode spread spectrum communication system**

(30) Priority: 18.08.1994 US 293671; 31.10.1994 WO PCT/US94/12464; 07.06.1995 US 482292; 07.06.1995 US 482514; 07.06.1995 US 485987
(62) Divisional of application: 95931528.4
(71) Applicant: XIRCOM Wireless, Inc., Colorado Springs, Colorado 80907 (US)
(72) Inventor: Smith, Douglas G., Arlington, VA 22201 (US); Dixon, Robert C., Palmer Lake, CO 80133 (US); Vanderpool, Jeffrey S., Colorado Springs, CO 80919 (US)
(74) Representative: Leeming, John Gerard

(57) **Abstract**

A technique for spread-spectrum communication (figs. 1, 3, 12 and 14) which uses more than one mode and more than one frequency band. Selectable modes include a narrowband mode (113) and spread-spectrum mode (111), or cellular mode and microcellular mode. Selectable frequency bands include both licensed and unlicensed frequency bands, particularly frequency bands including the 902-928 MHz, 1850-1990 MHz and 2.4-2.4835 GHz frequency bands. Spread-spectrum communication channels are 10 MHz or less in width. The frequency band onto which spread-spectrum signals are encoded may be changed upon a change in environment or other control trigger, such as establishment or de-establishment of a communication with a private access network. A multi-band transmitter (fig. 12) comprises a single frequency synthesiser and a frequency source (606) (e.g. a local oscillator), coupled to selectable band pass filter (619, 620). A multi-band receiver (fig 14.) capable of monitoring one or more frequency bands comprises bank of bandpass filters (714, 715) and a demodulator comprising a single frequency synthesiser and a frequency source (721).

## Description

### CROSS-REFERENCE TO RELATED APPLICATIONS

This application is a continuation-in-part of copending U.S. application Serial No. 08/293,671 filed on August 18, 1994 entitled "MULTI-BAND, MULTI-MODE SPREAD-SPECTRUM COMMUNICATION SYSTEM," which is a continuation-in-part of: (a) U.S. application Serial No. 08/146,492 filed on November 1, 1993 entitled "DUAL-MODE WIRELESS UNIT WITH TWO SPREAD-SPECTRUM FREQUENCY BANDS,", which corresponds to international application Serial No. PCT/US94/12464; (b) U.S. application Serial No. 08/059,021 filed May 4, 1993, entitled "DUAL-BAND SPREAD-SPECTRUM COMMUNICATION" (which is a continuation-in-part of Serial No. 07/976,700 filed November 16, 1992 entitled "SPREAD-SPECTRUM USING TEN-MEGAHERTZ CHANNELIZATION", which corresponds to international application Ser. No. PCT/US93/11065); and (c) U.S. application Serial No. 08/206,045 filed on March 1, 1994, entitled "DUAL-MODE TRANSMITTER AND RECEIVER" (which is a continuation of Serial No. 07/948,293 filed on September 18, 1992, entitled "DUAL-MODE TRANSMITTER AND RECEIVER" and now issued as U.S. Patent No. 5,291,516, which is a file-wrapper continuation of Serial No. 07/698,694 filed May 13, 1991, also bearing the same title).

### BACKGROUND OF THE INVENTION

### 1. Field of the Invention

This invention relates to spread-spectrum communication and, more particularly, to a communication system using multiple communication modes over multiple frequency bands.

### 2. Description of Related Art

Cellular telephony has been well known for many years, but with its growing popularity, more channels in the allocated cellular frequencies have become necessary. Among the proposed advances in the art have been a move from frequency division multiple access (FDMA) systems using narrowband analog communication to digital voice communication using traditional narrowband FDMA techniques possibly coupled with time division multiple access (TDMA) techniques. Further proposed advances include the use of code division multiple access (CDMA) techniques such as spread spectrum systems. Examples of communication protocols include IS-45, IS-95, DCS1900 (otherwise known as GSM), DECT (Digital European Cordless Telephone), and AMPS.

Another approach to the problem of allowing increased numbers of users in a geographic location is the concept of personal communications systems, or PCN's, which utilize microcells. A microcell is similar to a cell in a traditional cellular system, except much smaller. Where a traditional cell may cover an area of several square miles, a microcell may only be a few hundred feet in diameter. By limiting transmit power, more microcells, and thus more users, may be co-located in a geographic area.

Prior art does not teach a method for operation of a single telephone which has the ability to function both as a narrowband frequency, time, and/or code division multiplexed cellular phone, as well as a microcellular telephone utilizing time, frequency, or code division multiplexing, where the cellular and microcellular functions either share the same frequency bands of operation or are offset from each other. Nor does the prior art teach such a system where the microcellular mode may employ a paging unit independent of the unit's telephone functionality.

For purposes of the present specification, "analog voice" is described as a system where an analog voice system directly modulates a radio frequency (RF) carrier or intermediate frequency (IF) signal, and digital voice is described as a system where the signal is first digitized, and possibly compressed through any number of methods common and well known in the art, and whose digital signal is then used for RF carrier or IF modulation. A narrow band modulation typically uses amplitude modulation (AM) or frequency modulation (FM), and has a bandwidth between 3 kHz and 30 kHz.

In spread-spectrum communication, the spread-spectrum signal which is generated and transmitted has a spreading bandwidth which exceeds the bandwidth of the data stream. When using spread-spectrum techniques for wireless communication, it may be necessary to avoid or minimize interference with other users of the electromagnetic spectrum. Some examples of such other users are microwave communication users (such as the Operational Fixed Services ("OFS") using microwave communication towers) and cellular communication users (such as those using cellular telephones). In particular, OFS services are critical to controlling, among other things, the nation's electric power grid, which makes the possibility of inadvertent OFS disruption extremely serious. Accordingly, it would be advantageous to avoid or minimize interference with microwave and cellular communication users.

In wireless communication, the transmitted signal may be subject to various forms of frequency-selective fading, which may cause the signal to fade or drop out over a localized range of frequencies. Although spread-spectrum signals are distributed over a wider range of frequencies than narrowband signals, they may also be subject to frequency-selective fading over a portion of their spreading bandwidth. Accordingly, it would be advantageous to mitigate the effect of frequency-selective fading.

Spread-spectrum modulation in more than one frequency band can be difficult due to the wide separation between frequency bands. For example, operation in the 900 megahertz and 1800 megahertz bands could require a synthesizer capable of covering approximately 1,000 megahertz in frequency spectrum. However, in hand-held equipment such as telephones, it is undesirable to use more than one synthesizer, or even more than one oscillator, due to increased cost, weight, and related considerations. Accordingly, it would be advantageous to provide a spread-spectrum system in which a single, relatively narrow, synthesizer would serve more than one operating frequency band.

### SUMMARY OF THE INVENTION

The invention provides in one aspect a transmitter and receiver capable of operating in a plurality of frequency bands and/or in a plurality of modes, making use of either narrowband or spread-spectrum communication techniques. The invention may be embodied as a cellular or cordless telephone which utilizes frequency division multiplexing, time division multiplexing, code division multiplexing, or various combinations thereof. In one embodiment, the invention possesses both cellular and microcellular functionality, wherein transmission and/or reception may occur using either narrowband or spread-spectrum signals in conjunction with either FDMA, TDMA, or CDMA techniques, or any combination thereof. A system in accordance with the present invention may have two or more modes, such as a cellular mode and a microcellular mode, or such as a spread-spectrum mode and a narrowband mode, and the various modes may occupy common frequency bands, overlapping frequency bands, or distinct, offset frequency bands.

Another aspect of the invention provides a technique for spread-spectrum communication which reduces interference from microwave and cellular communication users, especially when transmitting in a communication band generally used by those users. In particular, said embodiment provides a spread-spectrum technique having a spreading bandwidth of about 10 MHz or less, in combination with a known center frequency. The known center frequency may be within a microwave communication band or a cellular communication band.

Another aspect of the invention provides a technique for spread-spectrum communication which uses more than one frequency band, particularly unlicensed frequency bands, including the 902--928 MHz, 1850--1990 MHz, and 2.4--2.4835 GHz frequency bands, and including the 1910--1930 MHz frequency band or other future unlicensed frequency bands. In said embodiment, the frequency band onto which spread-spectrum signals are encoded may be changed upon a change in environment or other control trigger, such as establishment or de-establishment of communication with a private access network.

The invention may be embodied as a transmitter generally comprising a switch, a tunable-frequency synthesizer, one or more modulators, a dual-band power amplifier (where the dual modes occupy distinct frequency bands) or a single-band power amplifier (where the dual modes occupy single, contiguous, or closely placed distinct bands), and an adjustable bandpass filter. The switch may be used to select either narrowband or spread-spectrum modulation, or may be used to select one of a plurality of frequency bands for transmission. If narrowband mode is selected, a narrowband modulator modulates an input signal, combines it with a carrier frequency generated by the tunable frequency synthesizer, and provides an output to the power amplifier and the adjustable bandpass filter for transmission. If spread-spectrum mode is selected, the input signal is provided to a spread-spectrum modulator for generating a spread-spectrum signal. The spread-spectrum signal is combined with a carrier frequency generated by the tunable frequency synthesizer and provided to the power amplifier and the adjustable bandpass filter for transmission. The adjustable bandpass filter may be tuned, and the power amplifier switched, where distinct, offset frequencies are employed for the two operating modes.

The invention may also be embodied as a receiver generally comprising a switch, a tunable-frequency synthesizer, a tunable bandpass filter, a preamplifier, a frequency converter, an IF amplifier, and one or more demodulators. The receiver generally operates in reverse fashion from the transmitter, whereby the mode select switch is used to select between narrowband or spread-spectrum reception. If in narrowband mode, the adjustable bandpass filter may be adjusted to a narrow bandwidth for passing a received narrowband signal, while in a spread-spectrum mode the adjustable bandpass filter may be adjusted to a wide bandwidth for passing a received spread-spectrum signal. The bandpass filter also is tunable, where different frequencies are utilized for distinct modes, and the preamplifier may also be switch selected or tuned to the appropriate band where the dual modes employ distinct, separated frequency band. The received signal is converted to an IF signal using a local oscillator signal from the tunable-frequency synthesizer, and the IF signal is demodulated by either the spread-spectrum demodulator or the narrowband demodulator depending on the chosen mode.

The invention further provides in another aspect a dual-band spread-spectrum modulator which uses a single, relatively narrow, synthesizer to serve two operating frequency bands. In the lower frequency band, the synthesizer may operate in a high-side injection mode, while in the higher frequency range, the synthesizer may operate in a low-side injection mode. In one embodiment, the lower frequency range may comprise about 1850 to 1990 megahertz, while the higher frequency range may comprise about 2400 to 2483.5 megahertz.

Additional objects and advantages of the invention will be set forth in part in the description which follows, and may be obvious from the description or learned by practice of the invention. The objects and advantages of the invention also may be realized and attained by means of the instrumentalities and combinations particularly pointed out in the appended claims.

### BRIEF DESCRIPTION OF THE DRAWINGS

The accompanying drawings, which are incorporated in and constitute a part of the specification, illustrate preferred embodiments of the invention, and together with the description serve to explain the principles of the invention.
FIG. 1 is a block diagram of a spread-spectrum communication transmitter and receiver;
FIG. 2 is a block diagram cf a dual-mode transmitter according to the invention;
FIG. 3 is a block diagram of a dual-mode receiver according to the present invention;
FIGS. 4 and 5 are illustrations comparing exclusion zones around a microwave beampath;
FIG. 6 is a diagram of triangular cells arranged in a grid pattern;
FIG. 7 is a diagram of a triangular cell;
FIGS. 8 and 9 are diagrams showing an allocation of frequency bands;
FIG. 10 shows a dual-mode spread-spectrum modulator with two frequency bands;
FIG. 11 shows a programmable frequency generator;
FIG. 12 is a block diagram showing an alternative embodiment of a transmitter using a single frequency synthesizer for communicating over a plurality of frequency bands;
FIG. 13 is a block diagram showing another alternative embodiment of a transmitter using a single frequency synthesizer for allowing communication over a plurality of frequency bands;
FIG. 14 is a block diagram of a receiver using a single frequency synthesizer for demodulating signals that may be sent over more than one frequency band;
FIG. 15 is a diagram of frequency bands and sub-bands illustrating frequency pairs that may be generated by the transmitters shown in Figs. 11, 12 or 13;

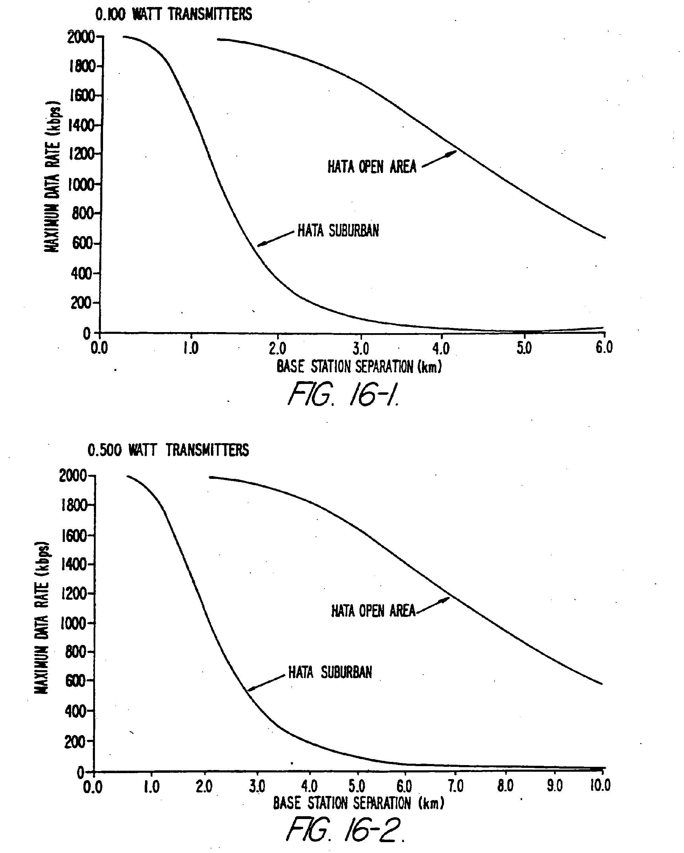

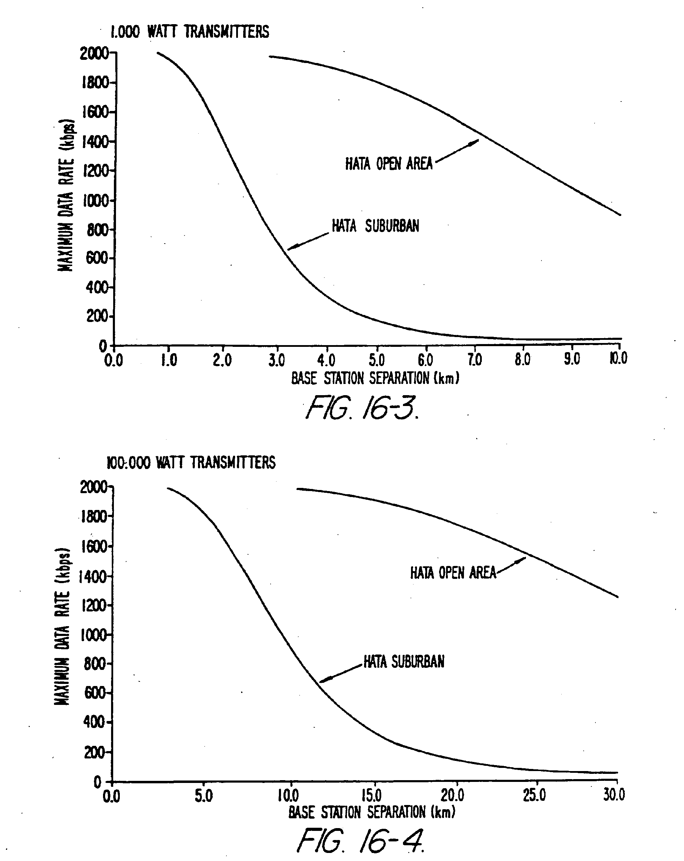

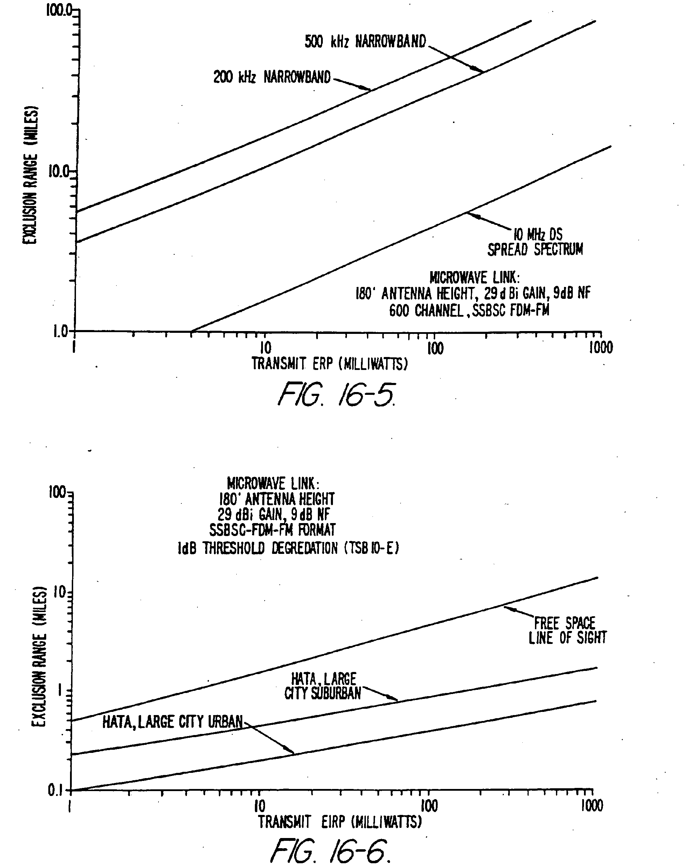

FIGS. 16-1 to 16-6 are data rate and transmission charts for an embodiment of a DBCS system;

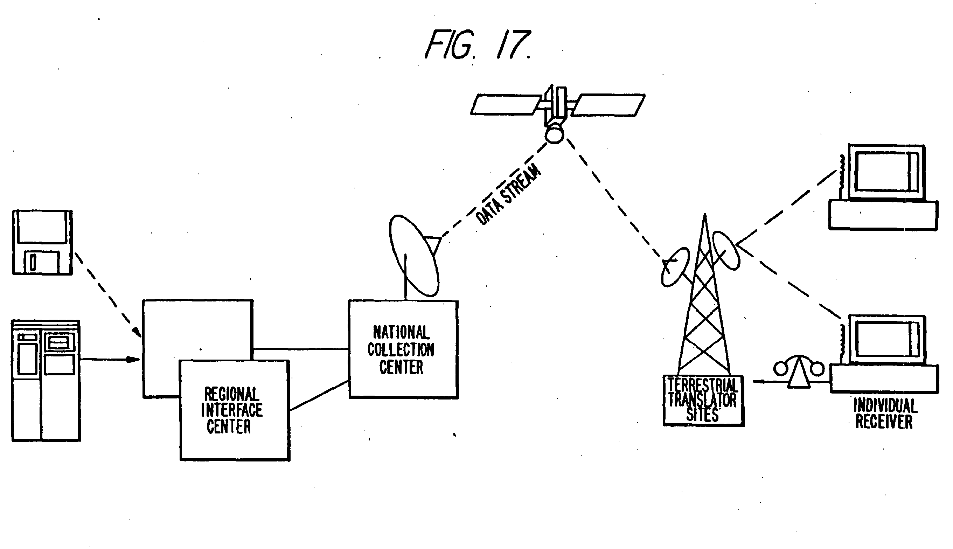

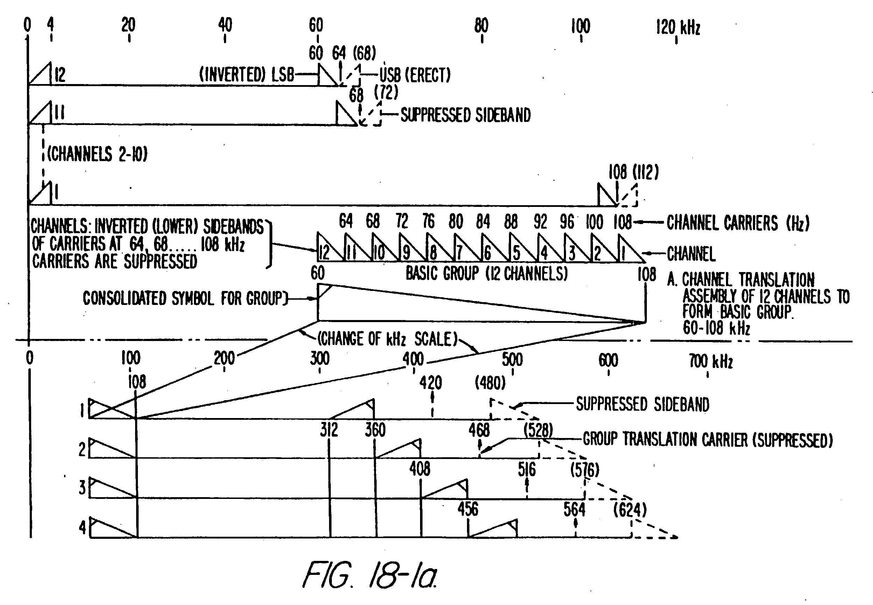

FIG. 17 is a diagram of an embodiment of a DBCS architecture;
FIGS. 18-1a and 18-1b document the formation of a sample 600 channel SSB-SC FDM baseband signal;
FIG. 18-2a and 18-2b are block diagrams of embodiments of a terminal transmitter and receiver;
FIGS. 18-4a, 18-4b, 18-5, 18-6, 18-8 and 18-9 are exclusion zone plots;

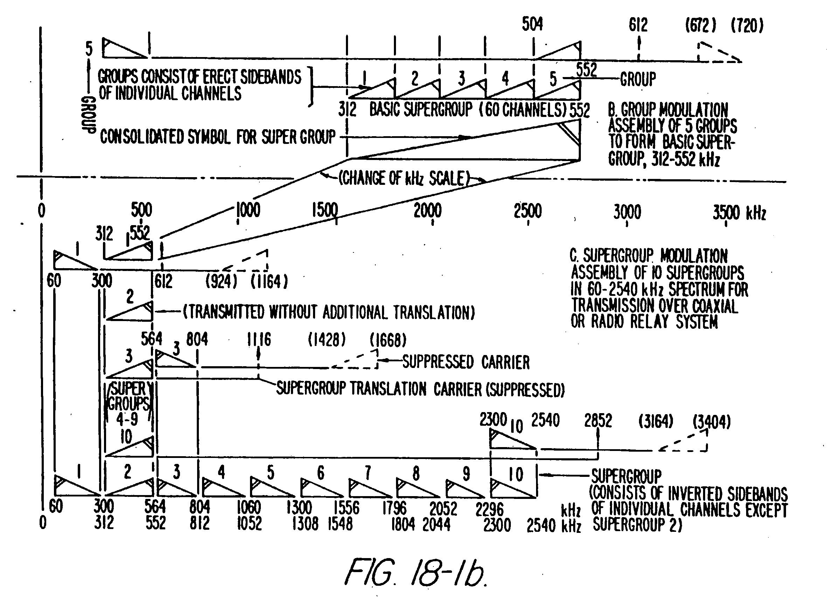

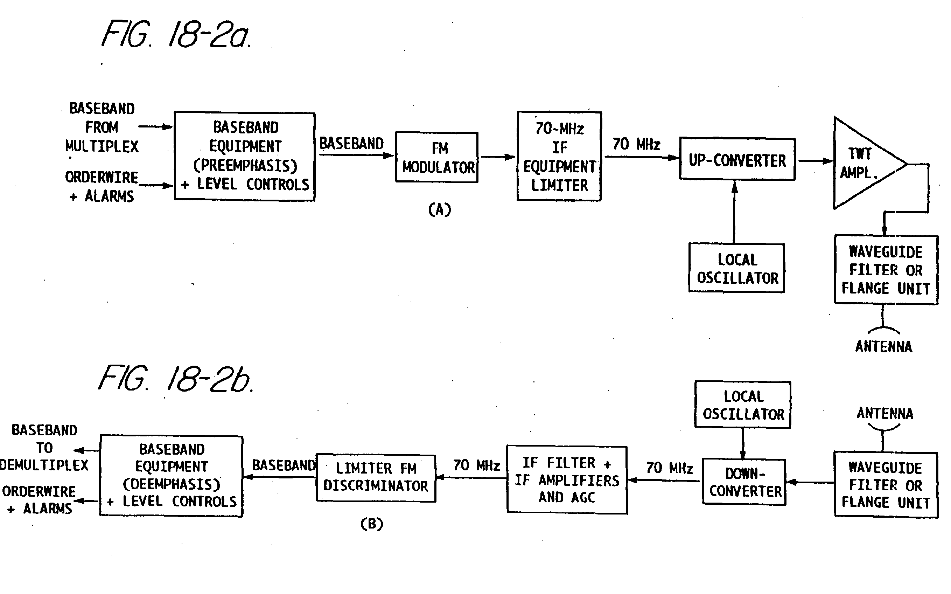

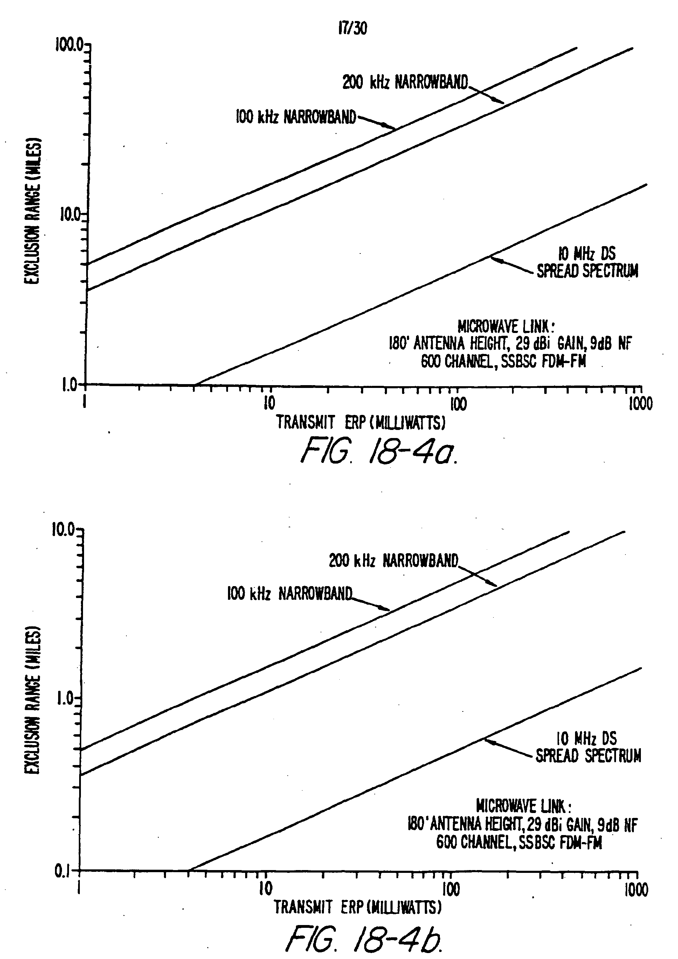

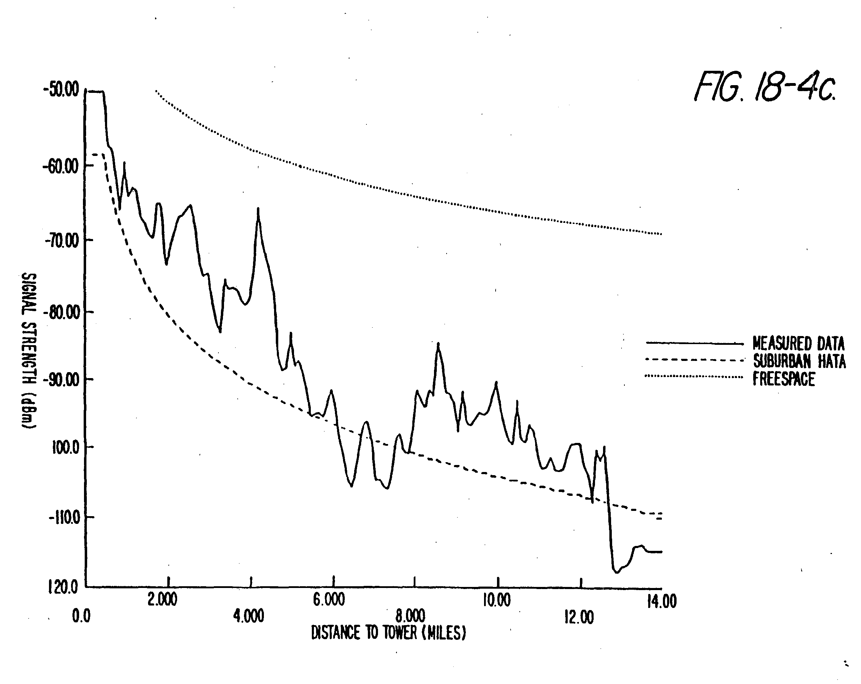

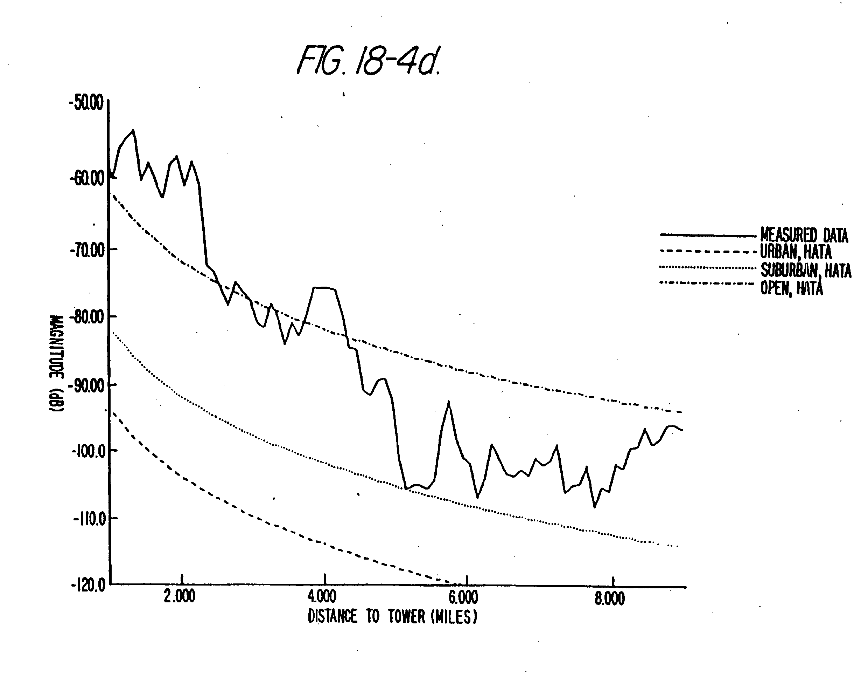

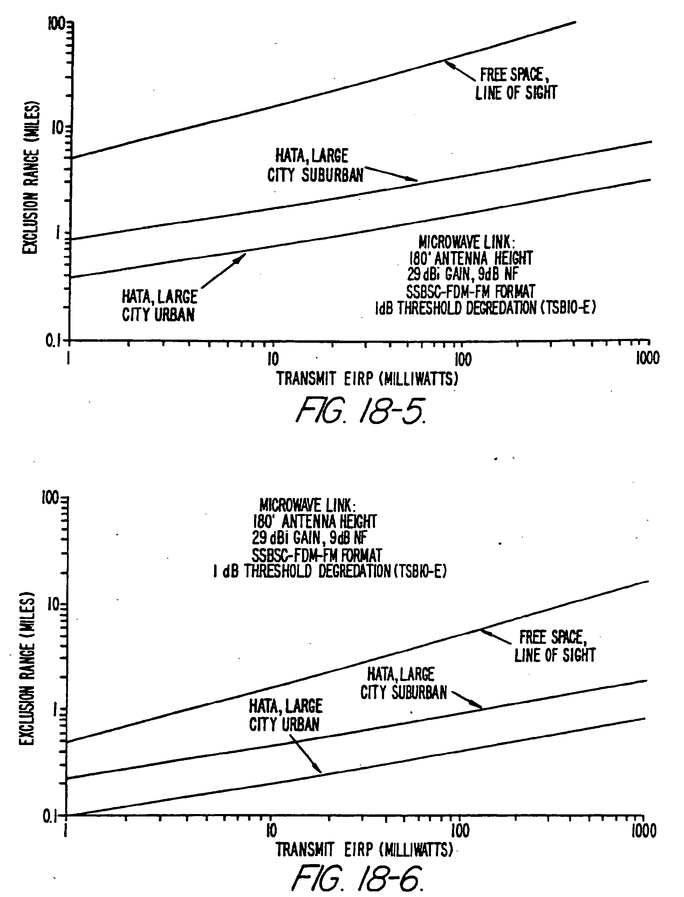

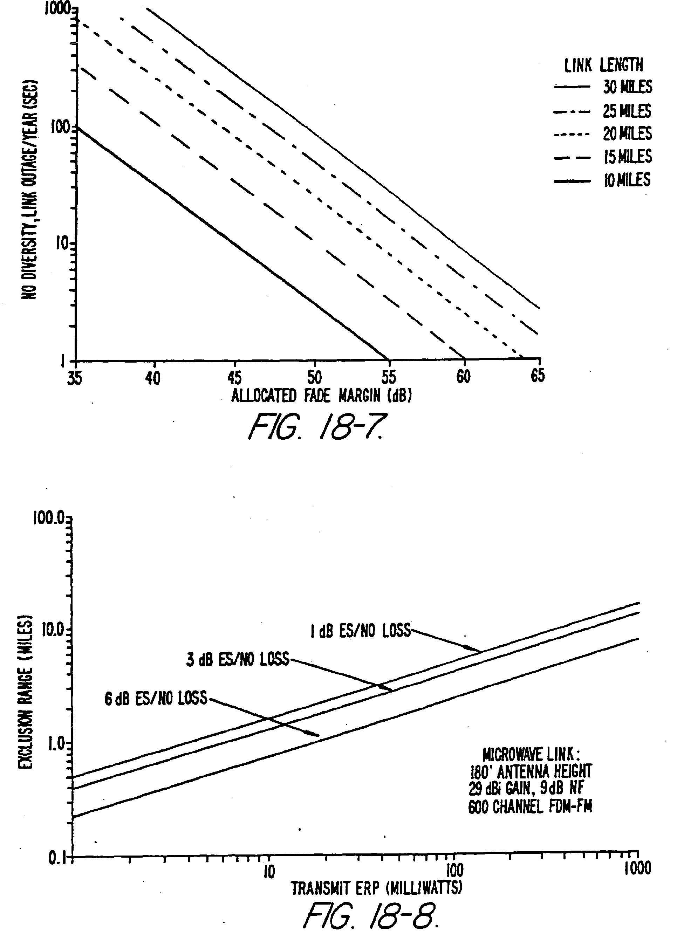

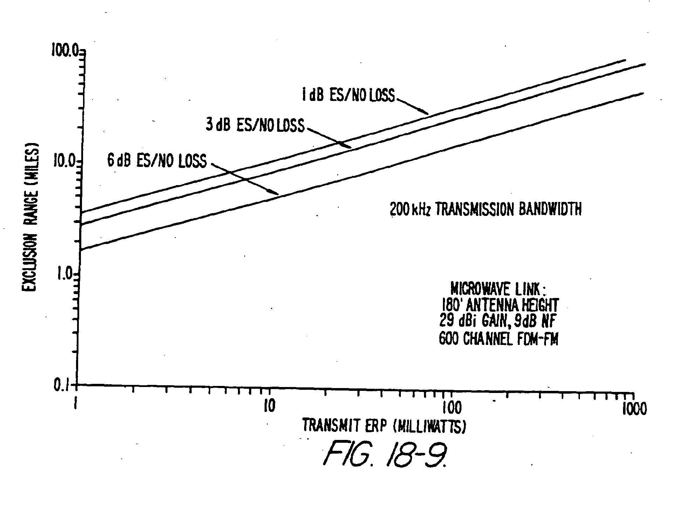

FIGS. 18-4c and 18-4d are OFS tower to mobile signal strength charts;
FIG. 18-7 is a sample link outage time/reliability chart;

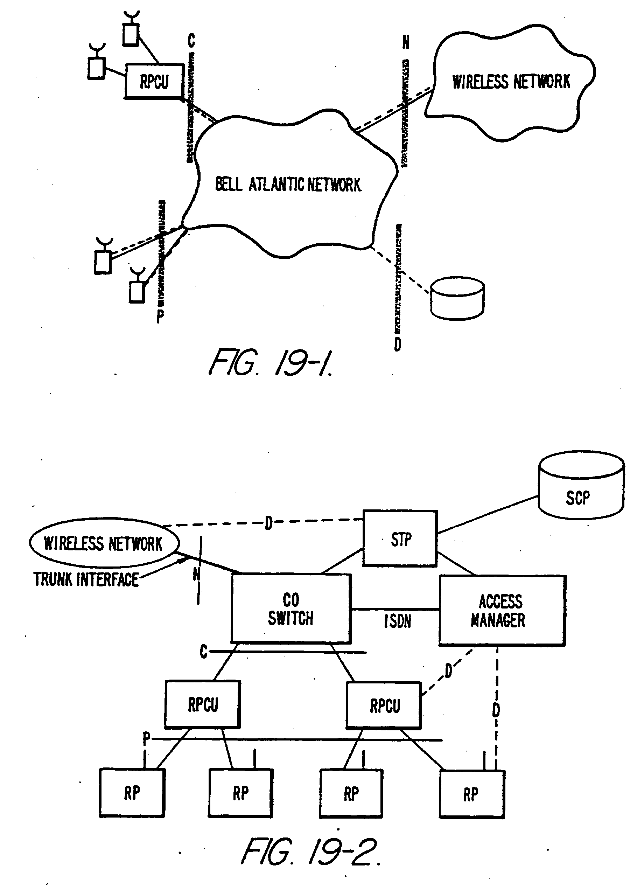

FIG. 19-1 diagrams possible access service interfaces;
FIG. 19-2 diagrams an embodiment of a PCS architecture;

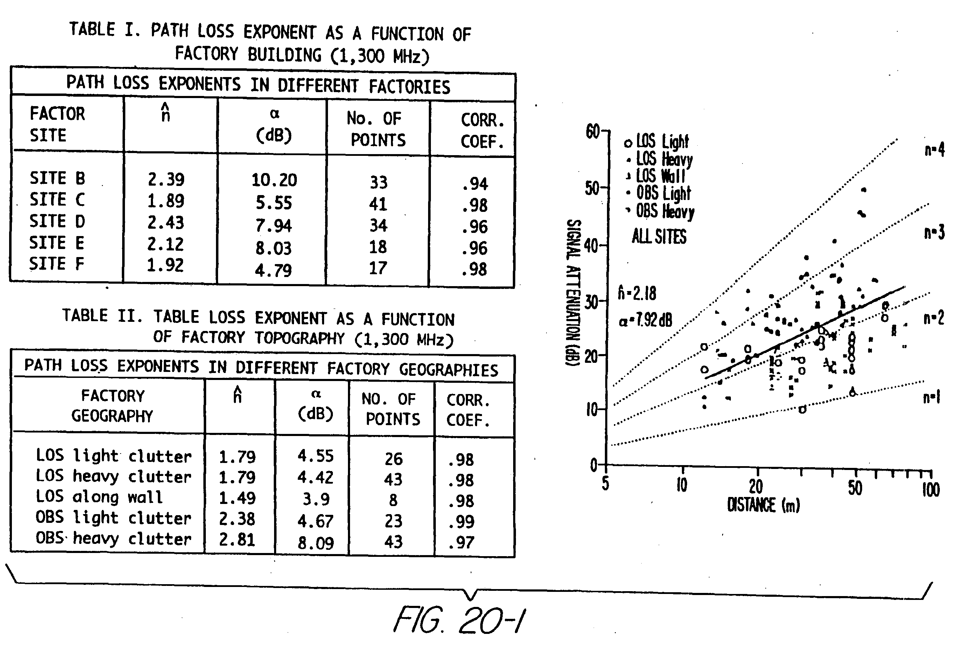

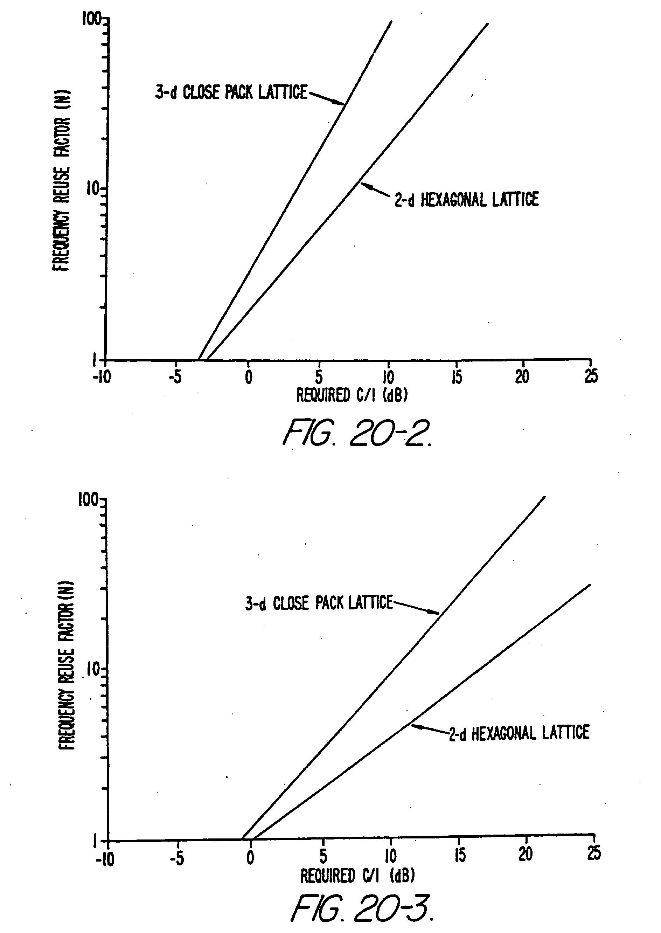

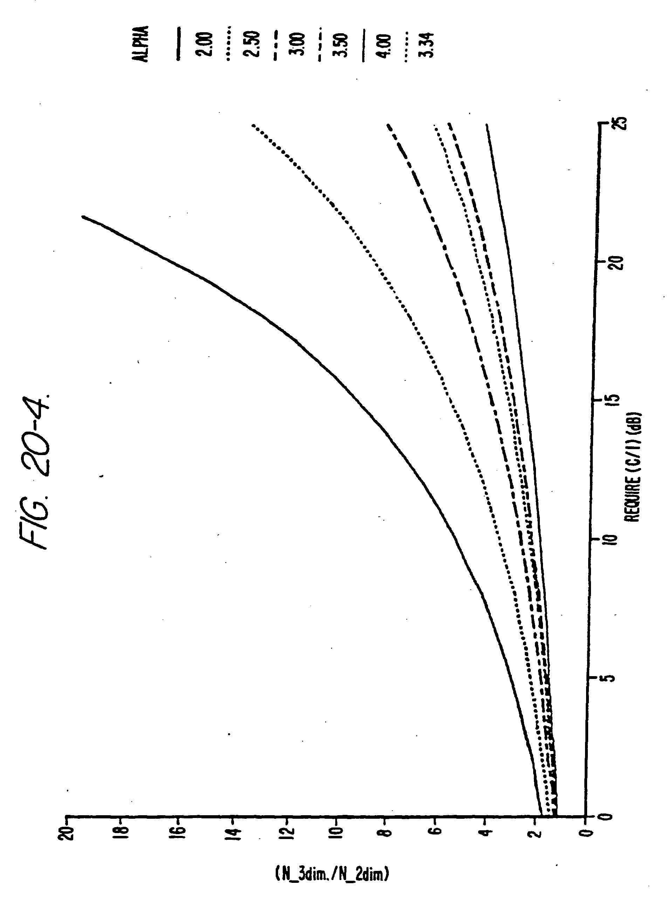

FIGS. 20-1 and 20-4 are propagation coefficient charts;
FIGS. 20-2 and 20-3 are frequency reuse factor charts;

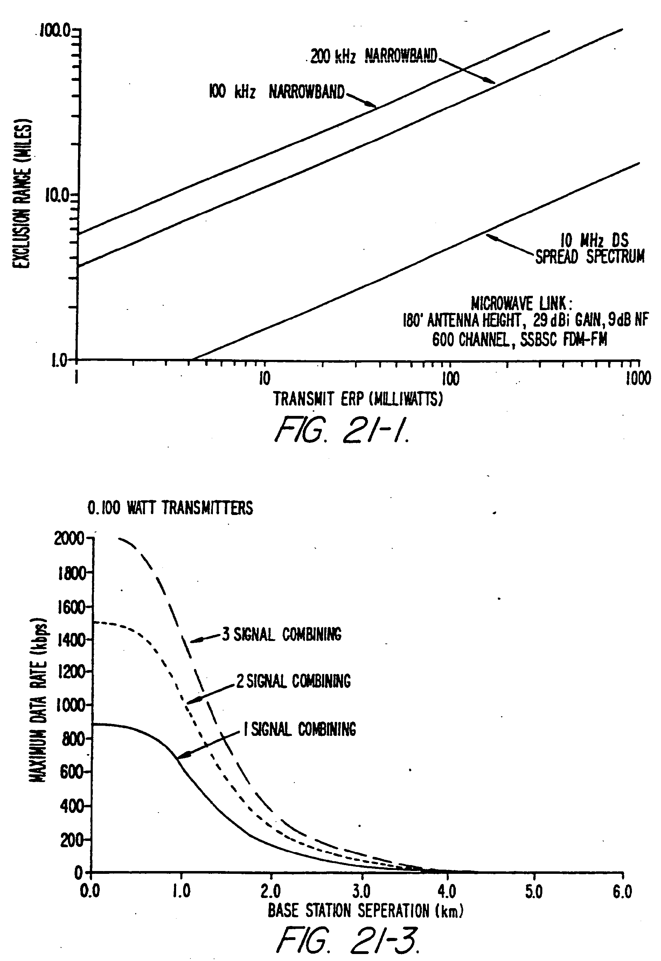

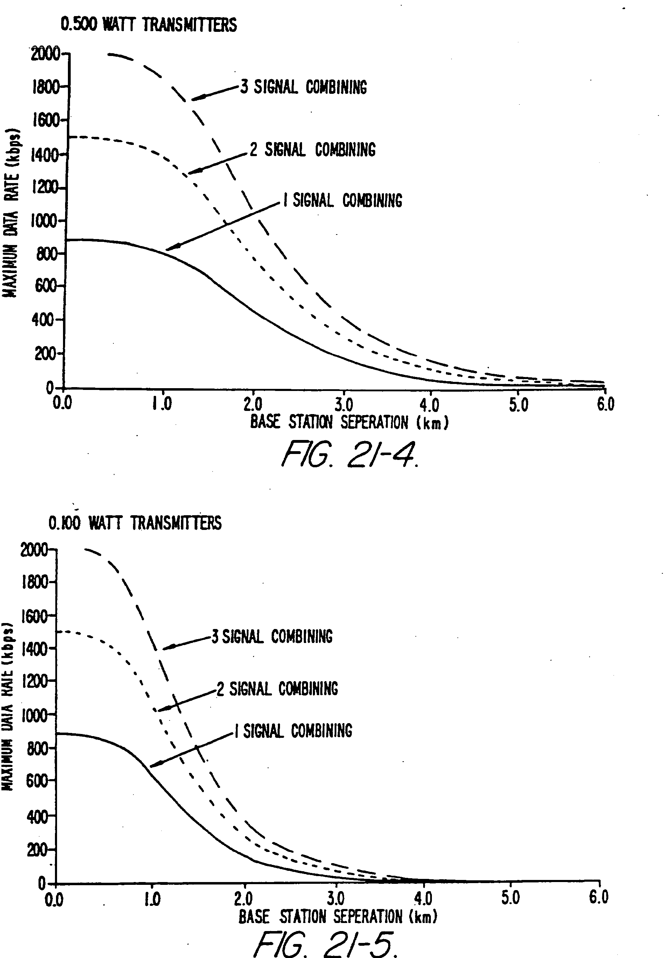

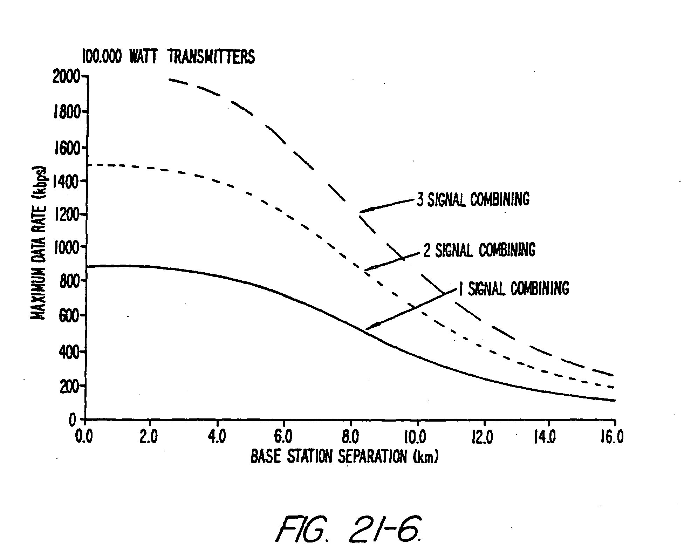

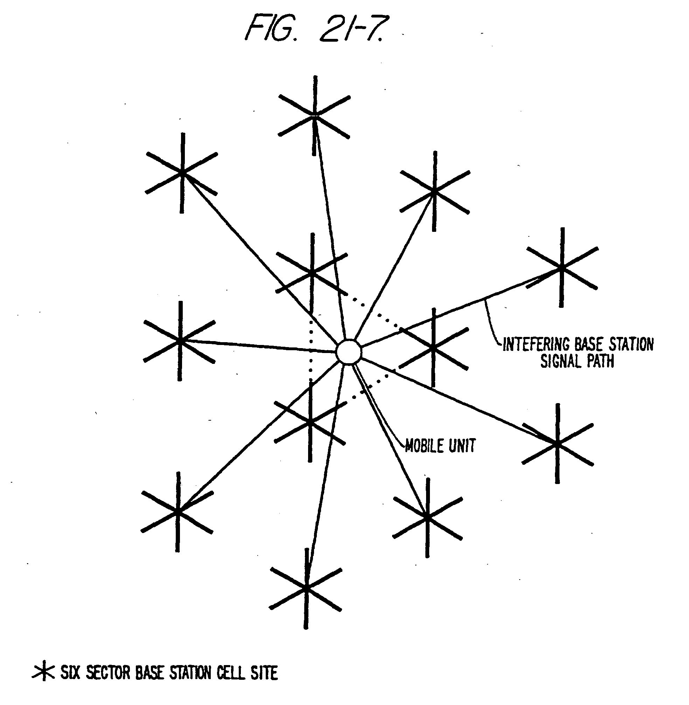

FIG. 21-1 is an exclusion range chart;
FIGS. 21-3, 21-4, 21-5, and 21-6 are data rate charts; and
FIG. 21-7 is a self-interference diagram.

### DESCRIPTION OF THE PREFERRED EMBODIMENTS

Reference will now be made in detail to the present preferred embodiments of the invention, examples of which are illustrated in the accompanying drawings, wherein like reference numerals indicate like elements throughout the several views. The disclosure of the invention may be supplemented by the contents of technical information appended to this specification in a technical appendix section. No admission is made as to possible prior art effect of any part of the technical appendix section.

Modern and proposed cellular telephone systems currently utilize high power, frequency, time, and/or code division multiplexed narrowband radio frequency communication techniques in conjunction with large cells to establish and maintain telephone communications. With the growing popularity of these systems, increased user capacity is required within a geographical area. One approach to providing increased capacity is microcells, which utilize comparatively much smaller cells as well as low power radio frequency techniques.

Traditional cellular systems have proven to be highly capital intensive in base station installations, on the order of several hundred thousand dollars per cell site, and therefore demand high operational and access fees. Proposed microcell systems would require a much lower capital investment per cell at a small fraction of cellular site installation cost, such that shop owners and other small operators could have a cell site easily instilled on their premises. Microcells potentially may be located in public access areas, airports, restaurants, shopping malls, banks, service stations, etc., as well as commercial or office facilities (utilizing wireless PBX, centrex, or key systems), and residential sites. A microcell user, thus, could utilize the same handset at home, in the office, or at most other public places where he or she typically would need access to telephone communications, in a cost effective way, and maintain a single telephone number. Public operational and access charges to the user could then be much lower, likely on the order of pay phone charges per call, not per minute.

A disadvantage of microcellular systems is their potential lack of incoming call accessibility. Potentially, one cannot place a call into the system to the remote user. Studies have been performed, however, that estimate that up to 80% of all calls made in traditional cellular systems are from the user outbound from the microcell user, and not inbound to the user. Even with no inbound access to the wireless microcell user, a potentially large market exists which has little need for incoming access, where users would be willing to surrender incoming call access for the savings of a microcellular pager in the microcell handheld unit, which can provide for a level of incoming access to the user in the public environment.

Another disadvantage of microcells is practical handoff capabilities from cell to cell. Since the cells in a microcell system are small, the system becomes impractical to use from a moving vehicle since the user potentially could be passing through cells every few seconds, making handoffs impractical. Microcellular systems may be designed such that there is no handoff capability between cells, which would provide for a wireless pay phone type of system. Since microcells are so small, system use in remote areas would be impractical due to the number of cell installations necessary to provide complete coverage.

The present invention provides, in one embodiment, a dual-mode transmitter and receiver which achieves advantages of both systems, i.e. the range and mobility of traditional cellular, and the low cost of microcellular. The dual-mode transmitter and receiver include a dual-mode cordless telephone which has as its first mode operational capabilities which allow cellular functionality, and a second mode which allows for microcellular operation. Functionality in the first, or cellular, mode includes a relatively high power cellular telephone employing analog or digital voice techniques in conjunction with frequency, and/or time division traditional narrowband radio techniques. Functionality in the second, or microcellular, mode includes a low power microcellular telephone using digital voice techniques in conjunction with frequency, time and/or code division spread spectrum radio techniques, where the cellular and microcellular functions either share the same frequency bands, or are offset from each other.

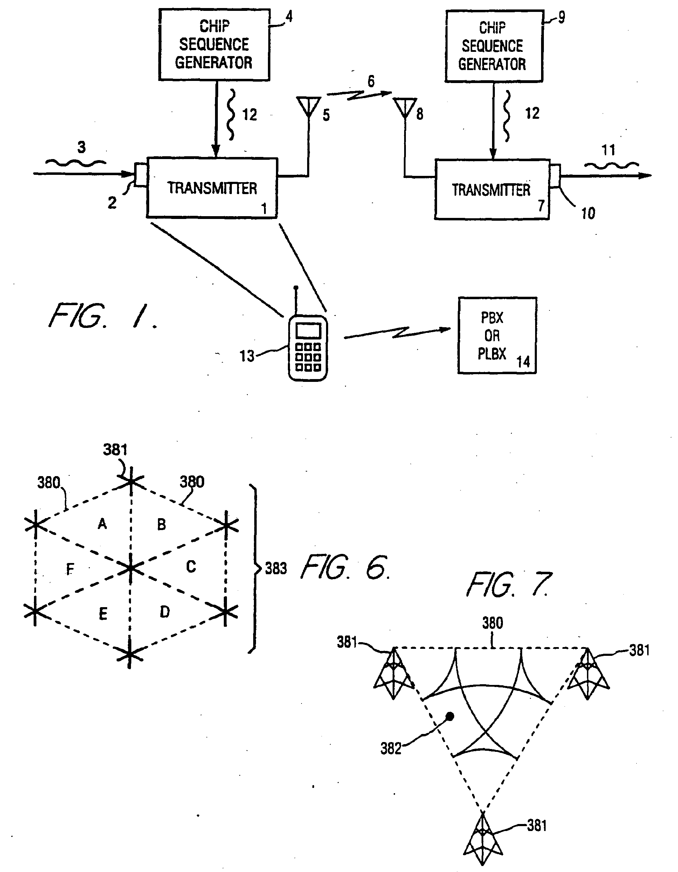

Figure 1 shows a block diagram of a spread-spectrum communication transmitter and receiver.

A spread-spectrum transmitter 1 comprises an input port 2 for input data 3, a chip sequence transmitter generator 4, and a transmitting antenna 5 for transmitting a spread-spectrum signal 6. A spread-spectrum receiver 7 comprises a receiver antenna 8, a chip sequence receiver generator 9, and an output port 10 for output data 11. A chip sequence 12 may be identically generated by both the transmitter generator 4 and the receiver generator 9, and appears essentially random to others not knowing the spreading code upon which it is based. The spread-spectrum signal 6 may have a spreading bandwidth which exceeds the bandwidth of the input data 3. The spread-spectrum signal 6 may also be modulated onto a communication channel having a center frequency, with the center frequency and the spreading bandwidth substantially defining a communication channel. The communication channel may also have a known signal dropoff for energy outside the limits of the channel. An extensive discussion of spread-spectrum communication, spreading codes, and chip sequences, may be found in R. Dixon, SPREAD-SPECTRUM SYSTEMS (2d ed. 1984).

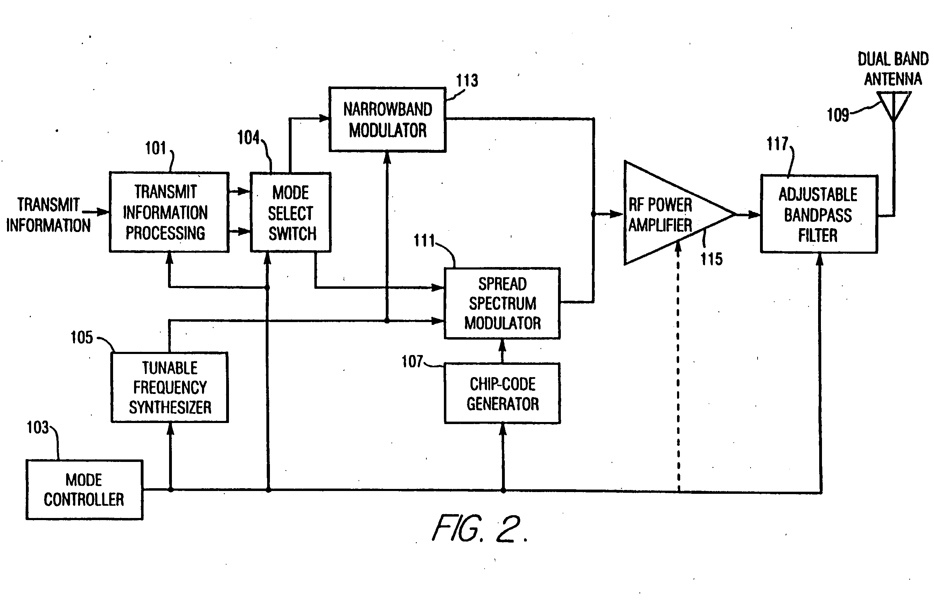

In the exemplary arrangement shown in Fig. 2, a dual-mode transmitter in accordance with various aspects of the present invention is shown comprising an antenna 109, a mode controller 103, a mode select switch 104, transmitter-information processing means 101, a tunable-frequency synthesizer 105, a chip-code generator 107, a spread-spectrum modulator 111, a narrowband modulator 113, a power amplifier 115, and an adjustable bandpass filter 117. The transmitter-information means may be embodied as an information device 101. The information device 101 may include source encoders such as Golay encoders, error correction coding, analog-to-digital converters, etc.

The spread-spectrum modulator 111 is coupled to the information device 101 through mode select switch 104, the tunable-frequency synthesizer 105 and the chip-code generator 107. The narrowband modulator 113 is coupled to the information device 101 through mode select switch 104, and the tunable-frequency synthesizer 105. The power amplifier 115 is coupled to the mode controller 103, the spread-spectrum modulator 111 and the narrowband modulator 113. The adjustable, tunable, bandpass filter 117 is coupled to the antenna 109, the power amplifier 115 and the mode controller 103.

Narrowband or spread-spectrum modulation is selected using the mode controller 103. The information device 101 processes the input information signal, while the tunable-frequency synthesizer 105 generates a carrier signal, and the chip-code generator 107 generates a chip-code signal.

The mode controller 103 controls a mode select switch 104 which directs the processed information signal to the narrowband modulator 113 or the spread-spectrum modulator 111. The spread-spectrum modulator 111 modulates the carrier with the processed information signal and the chip-code signal as a spread-spectrum signal, when the mode select switch 104 has been selected for spread-spectrum modulation. The narrowband modulator 113 modulates the carrier with the processed information signal as a narrowband modulated signal, when the mode select switch 104 is selected for narrowband modulation.

When the mode controller 103 is set to narrowband modulation, the power amplifier 115 amplifies the narrowband modulated signal. Where the dual modes function in distinct frequency bands, the power amplifier 115 may either be wideband enough to function in both bands, or may be adjustable to function in the band pertaining to the mode in operation, with mode controller 103 controlling its operation accordingly. When the mode controller 103 is set to spread-spectrum modulation, the power amplifier 115 amplifies the spread-spectrum signal. Similarly, with a narrowband modulation setting of the mode controller 103, the adjustable bandpass filter 117 has a bandwidth adjusted to a narrow bandwidth and corresponding frequency for passing the narrowband modulated signal. With a spread-spectrum setting of the mode controller 103, the adjustable bandpass filter 117 has a bandwidth adjusted to a wide bandwidth and corresponding frequency for passing the spread-spectrum signal.

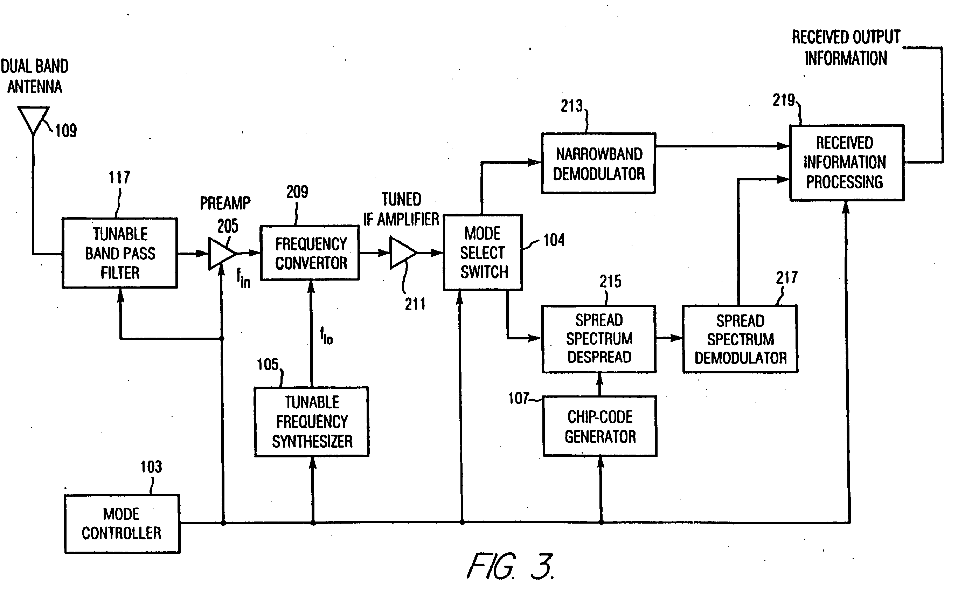

The present invention, as illustrated in Fig. 3, also includes an embodiment as a dual-mode receiver. The dual-mode receiver may comprise a mode controller 103, a tunable-frequency synthesizer 105, a chip-code generator 107, an antenna 109, an adjustable bandpass filter 117, a preamplifier 205, a frequency converter 209, an IF amplifier 211, a mode select switch 104, a spread-spectrum despreader 215, a spread-spectrum demodulator 217, a narrowband demodulator 213, and receiver-information processing means. The receiver-information means is embodied as a receiver-information processing device 219. The adjustable bandpass filter 117, is coupled to the antenna 201 and to the mode controller 103. The preamplifier 205 is coupled to the adjustable bandpass filter 117 and to the mode controller 103. The frequency converter 209 is coupled to the preamplifier 205 and the tunable-frequency synthesizer 105. The IF amplifier 211 is coupled to the frequency converter 209. The spread-spectrum despreader 215 is coupled to the chip-code generator 107 and through the mode select switch 104 to the IF amplifier 211. The spread-spectrum demodulator 217 is coupled to the spread-spectrum despreader 215. The narrowband demodulator 213 is coupled through the mode controller 103 to the IF amplifier 211.

As with the dual-mode transmitter of Fig. 2, the mode controller 103 is used to select reception of narrowband or spread-spectrum modulation. The tunable-frequency synthesizer 105 generates a local oscillator signal, and the chip-code generator 107 generates a reference chip-code signal for comparison with the received chip code signal.

When the mode controller 103 is set to narrowband modulation, the adjustable bandpass filter 117 is adjusted to a narrow bandwidth and corresponding frequency for passing the narrowband modulated signal. With a spread-spectrum setting of the mode controller 103, the adjustable bandpass filter 117 is adjusted to a wide bandwidth and corresponding frequency for passing the spread-spectrum signal. The preamplifier 205 amplifies the filtered narrowband modulated signal when the mode controller 103 is set to the narrowband modulation setting, and amplifies the filtered spread-spectrum signal when the mode controller is set to the spread-spectrum modulation setting and is switch selectable to the appropriate band for each mode where the dual mode occupy non-contiguous or widely separated frequency bands. The frequency converter 209 converts using the local oscillator signal, the filtered narrowband modulated signal and the filtered spread-spectrum signal to an IF signal.

Figures 2 and 3 illustrate the implementation of a dual-band, dual-mode transmitter and receiver, respectively, for use in any narrowband application with capability to switch to a separate frequency band while employing spread spectrum modulation/demodulation in the alternate operating band.

Operation of the dual-band transmitter of Fig. 2 is as follows. Using transmitter-information processing device 101, input information may be filtered, analog-to-digital (A/D) converted if required, as determined by the mode switch control, and applied to either a narrowband or spread spectrum modulation process. Narrowband modulation is employed in a narrowband mode and spread spectrum modulation employed in a spread-spectrum mode. In either mode, the modulated carrier is applied to the dual-band RF power amplifier 115.

The tunable frequency synthesizer 105, which provides the proper carrier for either conventional narrowband or spread spectrum mode, is controlled by the mode switch controller 103, outputting only one of possibly many required transmit carrier frequencies for modulation at any one time.

After amplification, the proper modulated carrier signal, either conventional narrowband or spread spectrum, is applied to an adjustable, tunable bandpass filter 117 and then to the antenna 109. The pass band and frequency of the adjustable bandpass filter 117 is selected by the mode controller 103. This is necessary to meet transmission spurious signal level control standards.

A single, dual-band antenna 109 then acts as a transducer to convert the electrical RF signal from the power amplifier 115 and adjustable bandpass filter 117 to an electromagnetic signal for propagation to the receiver.

The mode controller 103 also controls the operation of a reference code generated by chip-code generator 107. The reference code is used as a spectrum-spreading function in the spread spectrum mode. The chip-code generator 107 would not operate in the conventional narrowband mode.

This transmitter configuration is applicable to any desired dual mode system in which one mode is used in a conventional narrowband system, such is cellular telephones, while a second mode is employed for communicating with a spread spectrum system.

Receiver operation of the receiver in Fig. 3 is as follows. A received signal is converted by the antenna 109 from an electromagnetic signal to an electrical signal. The antenna 109 may or may not be common to the transmitter. The received signal is then applied to an adjustable bandpass filter 117, which may or may not be common to the transmitter, and which is controller by the mode controller 103. The adjustable bandpass filter 203 selects the proper conventional narrowband or spread spectrum operating signal and passes it through a preamplifier 205, whose output is applied to a frequency converter 209.

The other input to the frequency converter 209 is a local oscillator signal generated by a tunable frequency synthesizer 105 whose frequency in turn is controlled by the mode controller 103. The input signal is converted to an intermediate frequency (IF), which may be the same for either conventional narrowband or for spread spectrum signals. The receiver is assumed to be the superheterodyne type, and is illustrated as a single conversion receiver, but may also be implemented by a dual or multi-conversion superheterodyne receiver without a change in the overall system's operation.

An output signal from the frequency synthesizer 105 is multiplied with the amplified input signal from the preamplifier 205 selected by the input filter, in frequency converter 209 to produce the intermediate frequency signal. A tuned, fixed frequency IF amplifier 211 amplifies the received signal and applies it to a mode select switch 104 whose output is coupled to either the conventional narrowband signal demodulator 213 or the spread-spectrum signal despreader 215. The despreader 215 uses a reference code provided by the chip-code generator 107 to facilitate proper spread spectrum signal selection and despreading. This reference code is controlled by the mode controller 103, and may be common to the transmitter shown in Fig. 2.

The spread-spectrum despreader 215 despreads, using the reference chip-code signal, the IF signal as a digitally modulated signal. The spread-spectrum demodulator 217 demodulates the digitally modulated signal as a digitally demodulated signal. The narrowband demodulator 213 demodulates the filtered narrowband modulated signal as a demodulated signal. The receiver-information device 219 processes the demodulated signal as an information signal.

Spread spectrum signals, after being despread, are demodulated by a spread-spectrum demodulator 217, separate from the narrowband demodulator 213. This is necessary because of the difference in conventional signal information modulation of the carrier is typically analog FM, while spread spectrum signals may employ digital modulation and may be digital-to-analog (D/A) converted prior to processing. If the narrowband technique used employs digital modulation, a second narrowband D/A demodulator, similar to the spread spectrum demodulator, may be employed, or the spread spectrum demodulator may be eliminated and D/A demodulation, which may be identical for both narrowband and spread spectrum modulation, may be included as a function of the received information processor.

After despreading, spread-spectrum demodulator 217 output signals are processed, using receiver-information device 219, by filtering, digital-to-analog conversion, and amplification, as necessary, to convert it to a form that is usable to the information output destination. Processing is selected by the mode switch control 103.

As in the transmitter of Fig. 2, more than two modes can be supported by the same general receiver configuration of Fig. 3. This includes operation at multiple frequencies, use of multiple codes, multiple modulation formats, or time-sequential selection of operating mode.

The following illustrate application of aspects of the present invention, for particular modulation schemes.

One embodiment of the invention includes a telephone whose first mode comprises analog voice techniques and traditional cellular frequency division multiplexed operation employing, but not limited to, narrowband radio frequency modulation techniques, such as FM, and whose second mode comprises microcellular operation including, but not limited to, digital voice commanding and/or compression techniques coupled with spread spectrum radio frequency modulation, and/or time and/or frequency division multiplexing techniques, where the cellular and microcellular modes occupy common frequency bands. The microcellular mode also may include a paging function, which may utilize narrowband or spread spectrum technologies, and occupy frequency bands common to the cellular and microcellular modes, or may be offset from both or either, and may be independent of the unit's telephone functionality.

Another embodiment of the invention includes a telephone whose first mode comprises cellular frequency division multiplexed operation employing, but not limited to, narrowband radio frequency modulation techniques, such as FM, coupled with digital voice commanding and/or compression and/or time division multiplexing techniques, and whose second mode comprises microcellular operation including, but not limited to, digital voice compendium and/or compression techniques coupled with spread spectrum radio frequency modulation, and/or time and/or frequency division multiplexing techniques, where the cellular and microcellular modes occupy common or distinct frequency bands. The microcellular mode may also include a paging function, which may utilize narrowband or spread spectrum technologies, and may occupy frequency bands common to the cellular and microcellular modes, or may be offset from both or either, and may be independent of the unit's telephone functionality.

It will be apparent to those skilled in the art that various modifications can be made to the described transmitter and receiver configurations without departing from the scope or spirit of the invention, and it is intended that the present invention cover modifications and variations of the techniques shown herein provided that they come within the scope of the appended claims and their equivalents.

As previously noted with respect to Fig. 1, a spread-spectrum signal 6 may have a spreading bandwidth which exceeds the bandwidth of the input data 3. The spread-spectrum signal 6 may also be modulated onto a communication channel having a center frequency, with the center frequency and the spreading bandwidth substantially defining a communication channel, and the communication channel may have a known signal dropoff for energy outside the limits of the channel. It has been found by the inventors that a particular set of selected values for the spreading bandwidth and the center frequency provide a substantial and surprising advantage when using spread-spectrum techniques for wireless communication.

In particular, it has been found by the inventors that a spreading bandwidth of about 10 megahertz (MHz) or less offers several advantages in spread-spectrum wireless communication. These advantages include:
o minimizing interference with microwave communication users when transmitting in a microwave communication band such as the 1850--1990 MHz communication band;
o minimizing interference with, and maximizing compatibility with, cellular communication users when transmitting in a cellular communication band such as the cellular communication bands near 800--900 MHz and other cellular communication bands;
o mitigating the effect of frequency-selective fading when transmitting using a spread-spectrum technique;
o allowing the same spread-spectrum technique to be used in other communication bands, such as the 902--928 MHz band and the 2400--2483.5 MHz band; and
o other and further advantages which are detailed in, and which would appear from, the technical appendix section to those of ordinary skill in the art, after perusal of the specification, drawings and claims.

Using a 10 MHz or smaller band for spread spectrum communication when transmitting within a microwave communication band (such as the 1850--1990 MHz communication band) minimizes interference with microwave communication users in several ways. As a general matter, interference avoidance is a function of both geography and frequency selection. Typically, microwave communication is directed over a beampath between a microwave transmitter and receiver. Because microwave stations provide critical services such as, for example, controlling the nation's electric power grid, the possibility of inadvertent disruption of such services extremely serious. Accordingly, government regulations typically require that microwave stations such as licensed OFS receivers cannot be required to tolerate more than a set level (e.g., 1 dB) of interference in their areas of operation. Users of the microwave frequency bands within the geographic area of licensed microwave stations therefore cannot operate in a zone which would cause more than 1 dB of interference to the microwave station. This zone may be referred to as an exclusion zone.

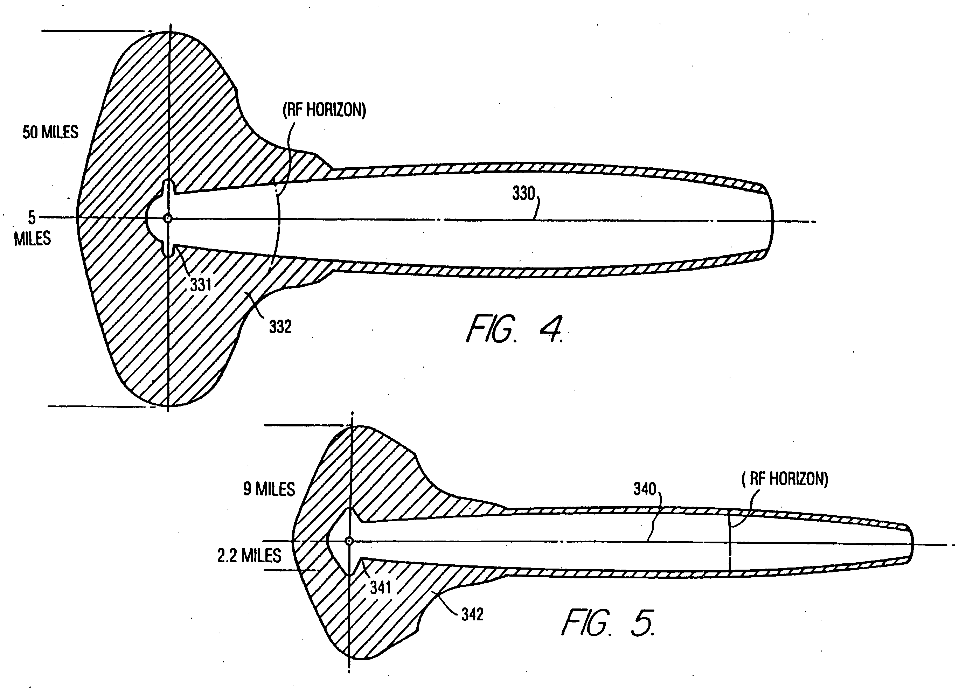

Figures 4 and 5 show examples of exclusion zones for a specific traditional narrowband communication technique as compared to a specific type of spread spectrum communication technique. Figure 4 compares the size of exclusion zones 331 and 332 around a microwave beampath 330 under a theoretical freespace loss model. As can be seen in Fig. 4, the exclusion zone 332 for narrowband communication may be far larger than the exclusion zone 331 for spread spectrum communication. It can also be seen that the exclusion zones 331 and 332 extend farthest in the direction of the beampath 330. With respect to other directions, the exclusion zones 331 and 332 extend relatively farther out at 90 degrees to the beampath 330, but are relatively closer, for example, in the direction opposite the beampath 330 and at various other angles as depicted in Fig. 4.

In a similar manner, Fig. 5 compares the size of exclusion.zones 341 and 342 around a microwave beampath 340 under a HATA loss model (median city suburban assumption). The exclusion zones 341 and 342 for Fig. 5, although derived from a different loss model, are similar in shape to those of Fig. 4.

Because of the particular shape of the exclusion zones 331, 332, 341 and 342 (as illustrated in Figs. 4 and 5), minimizing interference with microwave communication users may potentially be achieved by avoidance of the microwave beampath 330 or 340. It has thus far, however, been unappreciated that OFS avoidance is more difficult for signals, be they narrowband or spread spectrum signals, exceeding 10 MHz in bandwidth or extending over multiple OFS bands. The reason for such difficulty stems from the fact that approximately 94 percent of all OFS links are 10 MHz links. Thus, while it might be possible to select a 10 MHz band on which to transmit so as to interfere with at most only a single 10 MHz OFS link, any signal wider than 10 MHz could potentially interfere with at least two and possibly more OFS links. This problem is exacerbated by the fact that, in and around many urban areas, OFS microwave beampaths of different frequency bands may not necessarily be parallel but may intersect in a variety of patterns. Thus, the existing geographic pattern of microwave links in most major cities would necessitate that, in many if not most cells (in the case of a cellular system), any signal wider than 10 MHz transmitted in microwave frequency bands would interfere with the beampath of more than one microwave station no matter how much frequency avoidance was employed.

In contrast, the present invention provides in one embodiment means for avoiding or minimizing interference with existing OFS links by selection of a particular frequency bandwidth for spread spectrum communication. In particular, this aspect of the present invention provides for a spread spectrum communication bandwidth that is 10 MHz or less in size. Given a known allocation of frequency bands for OFS users, the present invention in one embodiment allows for selection of a 10 MHz or smaller band for spread spectrum communication so as to avoid the beampath of existing fixed microwave users or, in the worst case, to potentially interfere with only a single microwave communication user. For example, if the selected band for spread spectrum communication is coextensive with or entirely within the bandwidth of a known 10 MHz OFS link, then, because OFS channels are frequency multiplexed, the spread spectrum communication signal can interfere with at most the one known 10 MHz link. Further, the spread spectrum transmitter 1 can be geographically located so as to minimize or avoid interference with that existing OFS link.

Another way in which aspects of the present invention minimize interference with microwave communication users is by using a spread spectrum signal for communication. A spread-spectrum signal with its noise-like characteristics creates much less interference than a narrowband signal of comparable power. Approximately 83% of all OFS links use analog microwave systems which are highly susceptible to narrowband interference. The maximum allowable interference to a microwave receiver is commonly defined by the TSB10E standard as only a 1 dB rise in the receiver's noise threshold. A 10 MHz bandwidth spread spectrum signal may result in 1/100 (20 dB) less interference to an OFS receiver compared with a similar power 100 KHz bandwidth narrowband signal. The difference in interference is illustrated, for example, in Figs. 4 and 5. Figure 4 compares the exclusion zone 332 (assuming a 2 GHz microwave transmitter having a directional antenna at a height of 200 feet) of a 100 KHz narrowband signal with the exclusion zone 331 of a 10 MHz spread spectrum signal using a theoretical freespace loss model. The narrowband exclusion zone is 30 to 100 times larger than the spread spectrum exclusion zone. Figure 5 shows a similar comparison using a HATA loss model (median city suburban assumption).

A further advantage of using a 10 MHz or smaller spread spectrum communication bandwidths is that it provides an easy migration path into the existing bands of OFS users if the OFS users can be relocated to another band.

Information relating to construction of a spread-spectrum communication system using a 10 MHz or less spreading bandwidth and having known center frequencies may be found in detail in the technical appendix section. The specification, drawings, claims, and the technical appendix, in combination, contain a written description of the invention, and the manner and process of making and using it, in such full, clear, concise and exact terms as to enable any person skilled in the art to make and use the same.

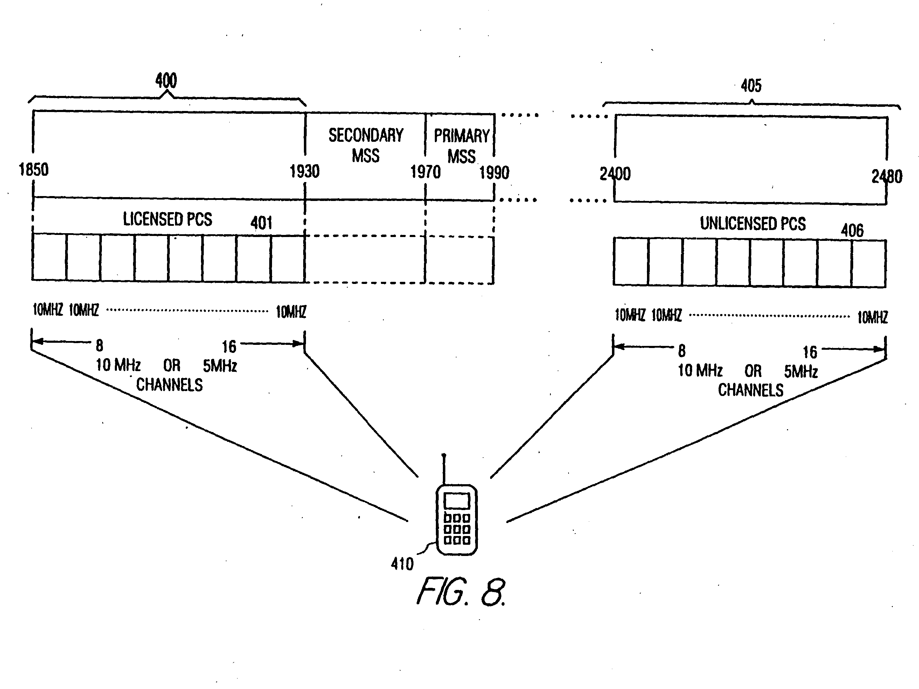

For example, a spread spectrum system for communicating over a 10 MHz or smaller frequency band may be part of a cellular network. The system may comprise a plurality of base stations 381 arranged in an approximately triangular grid 383 covering a service area, as shown in Fig. 6. Regions surrounded by three base stations 381 may comprise triangular cells 380. Each base station 381 may consist of six transmitters, each separately driving a 60° sector antenna. For aesthetic reasons, conformal mount, flat antennas mounted on the sides of buildings may be used in some areas where obtaining zoning for tower mounted antennas is difficult or economically undesirable. Although not required, the frequency of each transmit sector can be different if necessary to minimize interference with existing OFS and PCS services. The data transmission rate may be independently set from cell to cell; that is, different sectors of a base station may transmit at different rates.

A triangular service cell 380 is shown in Figure 7. Three base stations 381 having transmitters form the corners of the triangular service cell 380. The base stations 381 send high speed data using appropriate 60° antennas and may also use different spreading codes and/or different frequencies: Because different frequencies may be used, the described system allows for OFS frequency avoidance on a cell sector by cell sector basis. Within the data stream, block interleaving and convolutional encoding may also be used to further mitigate fading and interference effects. An additional low rate base state/sector identifier data stream, unique to each transmitter, is employed to facilitate mobile unit location determination and data transmission query processing.

In one configuration, the data on the outbound transmission in each triangular cell 380 may be different. Because each transmitter can also use a different spreading code, at a receiver 382 the signals can be separated and processed independently prior to data system combining. As shown in Fig. 7, the receiver 382 within a triangular cell 380 may be in a position to receive signals from at least three base stations 381. The receiver 382 independently despreads the three signals, performs soft decision data demodulation, and combines the data streams prior to convolutional decoding. Code based, variable delays may be introduced to synchronize data streams prior to combining.

The base stations 381 may be synchronized using a global positioning system. By including base station position in the data stream, a user can determine his or her location to an accuracy of about 30 feet by measuring pseudorange to each of the three transmitters located at the base stations 381. The user can also obtain timing information within an accuracy of about 30 to 100 nanoseconds.

The above described system employing triple transmission and spread spectrum communication has several important advantages. The system significantly reduces sensitivity to signal shadowing effects caused by buildings, hills, and similar obstacles. The system mitigates multipath fading effects and enhances error correction coding performance. Further, if interference is encountered at one frequency, a signal may be transmitted at a different frequency by one of the other two base stations 381 of the triangular cell 380. Also, the system architecture reduces required transmit power and, consequently, reduces the potential for OFS interference. Low power transmitters (e.g., as low as 100 mW) may be used in regions where OFS interference exists.

When base stations 381 are located close together, the maximum data transmission rate is determined primarily by mutual interference considerations, while at wider separations of base stations 381, the data transmission rate is limited by noise. Even in areas near an OFS user on the same frequency, a triangular grid of transmitters 1 to 2 km apart may provide 600 kbit/s raw data rate at a bit rate error of 10⁻⁶. A compact receiver may be capable of combining multiple simultaneous 1.5 Mbit/s transmissions in a single contiguous 10 MHz band of shared spectrum. The receiver may have the option of selecting any of the available transmission frequencies based on local propagation characteristics and received S/(1+N). A user experiencing good quality reception may request a higher data rate if total traffic warrants.

The system for transmitting spread spectrum signals over a 10 MHz bandwidth may employ time division multiplexing or duplexing in order to separate users. Time separation avoids interference problems, as the interference in any single time slot is simply that created by a single user. Thus, multiple users could share the same 10 MHz bandwidth while creating the interference of only a single continuous user. In contrast, in other systems the aggregate interference per cell typically rises proportionally with the number of users leading to interference problems with OFS and other users sharing the electromagnetic spectrum. Time division multiplexing or duplexing may be combined with frequency division multiplexing or duplexing in order to increase the number of separate users.

Another aspect of the invention relates to a technique for spread-spectrum communication which uses more than one frequency band, particularly frequency bands including the 902--928 MHz, 1850--1990 MHz, and 2.4--2.4835 GHz frequency bands. As noted above, the spread-spectrum signal 6 may be modulated onto a communication channel. The communication channel may be selected from frequencies in one of a plurality of frequency bands, including the 902--928 MHz, 1850--1990 MHz, and 2.4--2.4835 GHz frequency bands, and including the 1910--1930 MHz frequency band or other future unlicensed frequency bands, or other designated frequency bands.

In this aspect of the invention, a spreading bandwidth of 10 MHz may be used, or a different spreading bandwidth which may be more or less than 10 MHz. A different spreading bandwidth may be used from time to time; a different spreading bandwidth may be used for communication in different frequency bands, or for different uses.

In a preferred embodiment, the invention provides for changing the frequency band onto which the spread-spectrum signal 6 is encoded upon a change in environment or other control trigger. For example, the 902--928 MHz and 2.4--2.4835 GHz bands may be used for private access spread-spectrum communication, such as with a PBX, PABX, residential telephone, key system, Centrex system, or other related system, while the 1850--1990 MHz band may be used for public access spread-spectrum communication, such as public telephone access. In a preferred embodiment, a spread-spectrum transmitter 1 may be embodied in a handset 13 and may dynamically switch from one frequency band to another based on whether it is able to access a local PBX or PABX 14 via spread-spectrum communication. In particular, the handset 13 may be capable of switching between the 1850--2200 MHz band and the 2400--2485 MHz band, or between two sub-bands within those bands. In place of the PBX or PABX 14, a related system such as a residential telephone, key system, or Centrex system may be readily substituted. Alternatively, the transmitter 1 may dynamically switch from one frequency band to another based on local propagation characteristics and received S/(1+N).

Figure 8 shows one possible scheme for dividing the 1850--1990 MHz and 2400--2485 MHz bands into sub-bands of 10 MHz or 5MHz each. A first bandwidth 400 comprising frequencies from 1850--1930 MHz may be divided into sub-bands 402 of 10 MHz or 5 MHz each. Thus, if the first bandwidth 400 is divided into sub-bands 402 of 10 MHz, then eight channels could be provided, while if divided into sub-bands 402 of 5 MHz, then sixteen channels could be provided. Likewise, a second bandwidth 405 comprising frequencies from 2400--2480 MHz may be divided into sub-bands 406 of 10 MHz or 5 MHz each. A dual mode phone 410 provides access to a select one of the plurality of sub-bands 402 in the first bandwidth 400, and may be switched to provide access to a select one of the plurality of sub-bands 406 in the second bandwidth 405.

While transmitting in a sub-band 402 within the first bandwidth 400, which comprises licensed frequency band to which OFS users would have access, the dual mode phone 410 may transmit using spread spectrum communication taking advantage of CDMA and/or TDMA methods in order to minimize interference with OFS microwave users. If no OFS user is present, the dual mode phone 410 may of course transmit using conventional narrowband techniques. While transmitting in a sub-band 406 within the second bandwidth 405, which comprises unlicensed frequencies available to PCS systems such as PBX, Centrex or other systems, the dual mode phone 410 may transmit using spread spectrum communication taking advantage of CDMA and/or TDMA methods in order to minimize interference with existing users, if any, or may transmit using conventional narrowband techniques. Thus, the same dual mode phone 410 may access a cellular system, for example, in a first bandwidth 400 but, by operation of a switch, may access a private access network such as a PBX or Centrex in a second bandwidth 405.

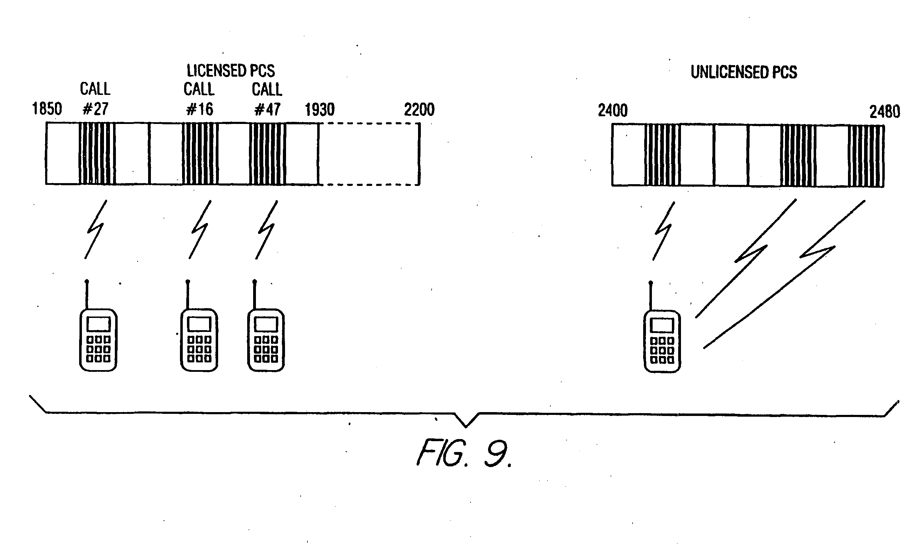

Figure 9 shows a similar scheme for communicating in either one of two different frequency bands.

Information relating to construction of a spread-spectrum communication system which uses more than one frequency band, particularly frequency bands including the 902--928 MHz, 1850--1990 MHz, and 2.4--2.4835 GHz frequency bands may be found in detail in the technical appendix section, as well as in the description set forth earlier herein. The specification, drawings, claims, and the technical appendix, in combination, contain a written description of the invention, and the manner and process of making and using it, in such full, clear, concise and exact terms as to enable any person skilled in the art to make and use the same.

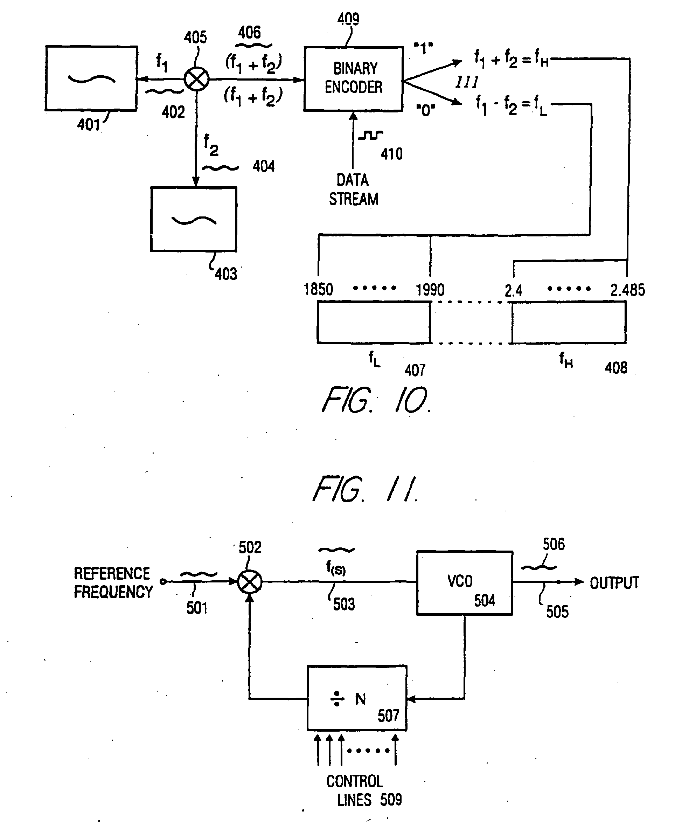

For example, Fig. 10 shows a dual-mode spread-spectrum modulator with two frequency bands. The dual-band spread-spectrum modulator uses a single, relatively narrow, synthesizer to serve two operating frequency bands. In the lower frequency band, the synthesizer may operate in a high-side injection mode, while in the higher frequency range, the synthesizer may operate in a low-side injection mode. In a preferred embodiment, the lower frequency range may comprise about 1850 to 1990 megahertz, while the higher frequency range may comprise about 2400 to 2483.5 megahertz.

The operation of the device shown in Fig. 10 will now be explained in more detail. A first frequency source 401 may generate a first frequency f1 402, while a second frequency source 403 may generate a second frequency f2 404. The first frequency f1 402 and the second frequency f2 404 may be coupled to a multiplier 405, which may generate a bimodal signal 406 with a frequency distribution over two.frequency ranges fL 407 and fH 408. In a preferred embodiment, the lower of the two frequencies fL 407 (fL = f1 - f2) may range from about 1850 to 1990 megahertz, while the higher of the two frequencies fH 408 (fH = f1 + f2) may range from about 2400 to 2483.5 megahertz. When one of the two frequencies f1 and f2, e.g., f2 is chosen between the two ranges, e.g., about 2200 megahertz, the other frequency, e.g., f1 may be chosen between about 300 and 440 megahertz.

The bimodal signal 406 may be coupled to a binary encoder 409, for encoding a data stream 410. The data stream 410, comprising a sequence of data bits 411, may be coupled to the binary encoder 409, which may generate a first frequency, e.g., fL 407, when a data bit 411 in the data stream 410 is a "0" bit, and may generate a second frequency, e.g., fH 408, when a data bit 411 in the data stream 410 is a "1" bit.

The present invention also provides for monitoring a frequency in each band (or transmitting to a frequency in each band) at once, because both (f1 + f2) and (f1 - f2) can be stepped down to the same intermediate frequency with a single local oscillator. When the intermediate frequency is 260 MHz and the local oscillator is set to 2180 MHz, the present invention allows operation at both 1920 MHz and 2440 MHz. When the local oscillator is set 10 MHz greater, the present invention then allows operation at both 1930 MHz and 2450 MHz, i.e., two frequencies each 10 MHz greater. Thus, for paired frequencies, the present invention allows reception or transmission on either frequency (or both) in the pair.

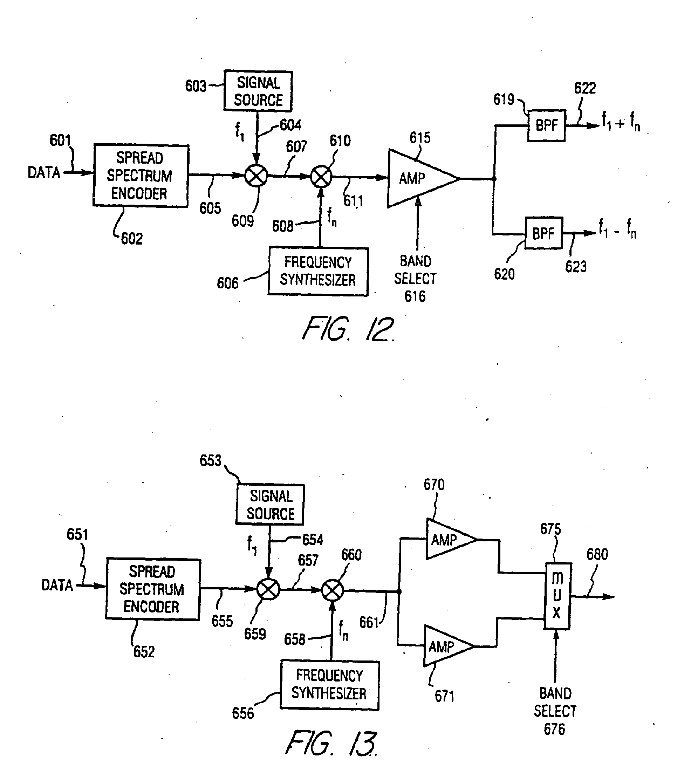

Figure 11 shows a programmable frequency generator.

A reference frequency signal 501 may be coupled to a multiplier 502. The multiplier 502 may generate a signal f(s) 503, which may be coupled to a voltage-controlled oscillator (VCO) 504. The VCO 504 may be coupled to an output node 505, which provides an output frequency signal 506, and may also be coupled in a feedback configuration to the multiplier 502 by way of a programmable divide-by-N counter 507. The programmable divide-by-N counter 508 may be programmed by a set of control lines 509. In one embodiment, the divide-by-N range of the programmable divide-by-N counter 507 comprises 23 steps, from 205 to 234.

Figure 12 is an alternative embodiment of a transmitter using a single frequency synthesizer for communicating over a plurality of frequency bands. In Fig. 12, an incoming data stream 601 to be modulated is provided to a spread spectrum encoder 602, which encodes the data stream 601 and outputs a'spread spectrum signal 605. The spread spectrum encoder 602 may encode the data stream 601 by modulating it with a PN code, or by employing an M-ary spread spectrum technique. The spread spectrum signal 605 is connected to a modulator 609. A carrier signal having a frequency f1 is generated from a signal source 603 and is also connected to modulator 609. Modulator 609 outputs a modulated spread spectrum signal 607.

The modulated spread spectrum signal 607 is connected to another modulator 610. A frequency synthesizer 606 (e.g., such as shown in Fig. 11) generates a programmable frequency signal 608, which is also connected to the modulator 610. The programmable frequency signal 608 has a center frequency of fn, which may be programmed by control lines 509 such as shown, for example, in Fig. 11. Modulator 610 outputs a bimodal signal 611 having frequency components at frequencies f1 + fn and f1 - fn.

The bimodal signal 611 is connected to a wideband amplifier 615. The wideband amplifier 615 is controlled by a band select signal 616, which causes the wideband amplifier 615 to perform at an operating point tailored for either the frequency f1 + fn or the frequency f1 - fn. An output of the wideband amplifier 615 is connected to two bandpass filters 619 and 620. One bandpass filter 619 has a center filtering frequency of f1 + fn, and the other bandpass filter 620 has a center filtering frequency of f1 - fn. The first bandpass filter 619 passes the portion of the amplified signal having frequency components at f1 + fn while attenuating the frequency components at f1 - fn, and the second bandpass filter 620 passes the portion of the amplified signal having frequency components at frequency f1 - fn while attenuating the frequency components at frequency f1 + fn. Bandpass filter 619 outputs an output signal 622 having a frequency f1 + fn, while bandpass filter 620 outputs an output signal 623 having a frequency f1 - fn.

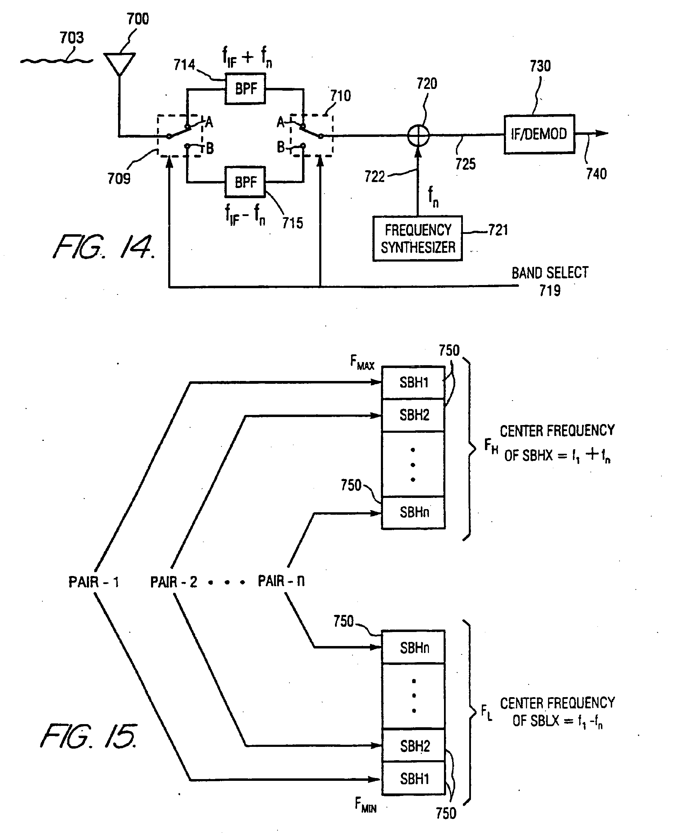

Thus, the Fig. 12 transmitter allows generation and transmission, using a single frequency synthesizer 606, of a signal in either or both of two frequency bands, wherein the frequency f1 + fn lies in one frequency band and the frequency f1 - fn lies in the other frequency band. Figure 15 is a diagram of frequency bands and sub-bands illustrating frequency pairs that may be-generated for a selected f1 and fn. In Fig. 15, a pair of frequency bands F_{H} and F_{L} are each divided into a plurality of sub-bands 750. The higher frequency band F_{H} is divided into sub-bands SBH1, SBH2,...SBHN, while the lower frequency band F_{L} is divided into sub-bands SBL1, SHL2,...SBLN. The sub-bands SBH1...SBHN and SBL1...SBLN are paired, with the highest of the sub-bands SBH1 in the high frequency band F_{H} paired with the lowest of the sub-bands SBL1 in the low frequency band F_{L}, the second highest of the sub-bands SBH2 in the high frequency band F_{H} paired with the second lowest of the sub-bands SBL2 in the low frequency band F_{L}, and so on, until the lowest of the sub-bands SBHN in the high frequency band F_{H} is paired with the highest of the sub-bands SBLN in the low frequency band F_{L}, thereby resulting in frequency pairs PAIR-1, PAIR-2,...PAIR-N. The high frequency band F_{H} may comprise all or a portion of the band ranging from 1850 MHZ to 1990 MHZ, while the low frequency band F_{L} may comprise all or a portion of the band ranging from 2.4 MHZ to 2.485 MHZ. The sub-bands SBH1...SBHN and SBL1...SBLN need not be contiguous within each of the main frequency bands F_{L} and F_{H}.

In operation, the programmable frequency synthesizer 606 is programmed to select a frequency fn, preferably selected from one of a discrete group of N frequencies corresponding to the frequency pairs PAIR-1, PAIR-2,...PAIR-N. The largest selected fn allows operation over the frequency sub-band pair denoted PAIR-1, while the smallest selected fn allows operation over the frequency sub-band pair denoted PAIR-N, with the frequency selections for fn between the smallest and largest values of fn corresponding to frequency pairs PAIR-2 through PAIR-(N-1). Thus, by changing the frequency fn in discrete steps, the transmitter of Fig. 12 can be operated over a different pair of frequency sub-bands 750.

While the Fig. 12 embodiment is described with the frequency f1 greater than frequency fn, it is also possible to have frequency fn be greater than frequency f1. In such a case, the relative frequency difference between the higher frequency signal at a frequency fn + f1 and the lower frequency signal at a frequency fn - f1 will be a constant 2·f1 as the frequency fn is varied according to control lines 509 or other programming means.

Figure 13 is another embodiment of a transmitter using a single frequency synthesizer for allowing communication over a plurality of frequency bands. In Fig. 13, a data stream 651 is encoded by a spread spectrum encoder 652 in a similar manner to Fig. 12. A spread spectrum signal 655 output from the spread spectrum encoder 652 is modulated with a carrier signal 654 from a signal source 653 by modulator 659. The carrier signal 654 has a frequency f1. The modulator output 657 is connected to another modulator 660. A frequency synthesizer 656 (e.g., such as the one shown in Fig. 11) generates a programmable frequency signal 658, which is also connected to the modulator 660. The programmable frequency signal 658 has a center frequency of fn, which may be programmed by control lines 509 such as, for example, shown in Fig. 11. Modulator 660 outputs a bimodal signal 611 having frequency components at frequencies f1 + fn and f1 - fn.

The bimodal signal 661 is connected to two narrowband power amplifiers 670 and 671. One narrowband power amplifier 670 is configured to operate at a frequency of f1 + fn, while the other narrowband power amplifier 671 is configured to operate at a frequency f1 - fn. Outputs from each of the narrowband power amplifiers 670 and 671 are provided to an analog multiplexer 675 (or a set of switches), which selects one of the two outputs from amplifiers 670 and 671 in response to a band select signal 676. The multiplexer 675 may be configured so that it selects one or both of the amplifier outputs, thereby allowing operation over a single frequency band or two frequency bands, and in either case using a single frequency synthesizer 656. The Fig. 13 transmitter operates over paired frequency sub-bands SBH1...SBHN and SBL1...SBLN (see Fig. 15) in a manner similar to the Fig. 12 transmitter, depending on the frequency fn selected for the programmable frequency signal 658.

Figure 14 is a block diagram of a receiver for receiving and demodulating signals that may be sent over two frequency bands. In the Fig. 14 receiver, a transmitted signal 703 is received by an antenna 700 and provided to a switch 709. In one position A, the switch 709 connects to a first bandpass filter 714 having a center filtering frequency of f_{IF} + fn, while in another position B, the switch 709 connects to a second bandpass filter 715 having a center filtering frequency of f_{IF} - fn. In a preferred embodiment, frequency f_{IF} is selected as frequency f1 used in the transmitter.

Outputs from each of the bandpass filters 714 and 715 are connected to another switch 710. In a first position A, the switch 710 connects to the first bandpass filter 714, while in another position B, the switch 710 connects to the second bandpass filter 715.

Switches 709 and 710 are controlled by a band select signal 719. When the switches 709 and 710 are set in position A, the Fig. 14 receiver is configured to detect signals sent over a frequency band centered at f_{IF} + fn, and when the switches 709 and 710 are set in position B, the receiver is configured to detect signals sent over a frequency band centered at f_{IF} - fn. While two switches 709 and 710 are shown in Fig. 14, the same result may be achieved by using only a single switch 709 or 710. A variety of other selection means could also be utilized.

The output from switch 710 is connected to a multiplier 720. A frequency synthesizer 721 generates a programmable frequency signal 722 having a frequency fn. The programmable frequency signal 722 is also connected to the multiplier 720. The frequency fn is selected to match the desired frequency sub-band pair PAIR-1, PAIR-2,... or PAIR-N, and therefore can monitor either of the two sub-bands 750 comprising the pair, depending on the setting of the band select signal. By switching the frequency fn of the programmable frequency signal 722, the Fig. 14 receiver can be adjusted to monitor two other frequency sub-bands 750. The sub-bands 750 that can be monitored by changing frequency fn have the same pattern as shown in Fig. 15 -- that is, the highest sub-band SBH1 in the high frequency band F_{H} is paired with the lowest sub-band SBL1 in the low frequency band F_{L}, and the lowest sub-band SBHN in the high frequency band F_{H} is paired with the highest sub-band SBLN of the low frequency band FL.

By replacing switches 709 and 710 with a connection to both the A and B positions, the Fig. 14 receiver can be modified to simultaneously monitor two frequency bands, i.e., the frequency bands centered at frequencies f_{IF} + fn and f_{IF} - fn.

Multiplier 720 outputs a downconverted signal 725. The downconverted signal 725 is provided to an IF/demodulation block 730, which demodulates the downconverted signal 725 to recover the original information modulated thereon. The demodulation block 730 operates at the frequency f_{IF} (i.e., f1), and may comprise a frequency source for generating a frequency f1, and/or a spread spectrum decoder and demodulator.

As with the dual-band transmitters previously described, the frequency fn in the dual-band receiver of Fig. 14 may be selected as larger than the frequency f1, in which case the bandpass filter 714 may be configured to have a center filtering frequency of fn + f_{IF}, and bandpass filter 715 may be configured to have a center filtering frequency of fn - f_{IF}. Thus, the frequency sub-bands to be monitored would be separated by a fixed 2·f_{IF} as the frequency fn is varied among its programmable frequency values.

### Alternative Embodiments

While preferred embodiments are disclosed herein, many variations are possible which remain within the concept and scope of the invention, and these variations would become clear to one of ordinary skill in the art after perusal of the specification, drawings and claims herein.

For example, information which is encoded for transmission is occasionally referred to herein as "data", but it would be clear to those of ordinary skill in the art, after perusal of this application, that these data could comprise data, voice (encoded digitally or otherwise) error-correcting codes, control information, or other signals, and that this would be within the scope and spirit of the invention.

### Technical Appendix - Excerpts of FCC Submissions

The immediately following sections contain excerpts of technical reference submissions and specifications which were submitted to the Federal Communications Commission in the United States. These sections were included as the "TECHNICAL APPENDIX" in U.S. Application Ser. No. 08/293,671 from which priority is claimed, and have been edited to reduce redundancies.

### SUMMARY

The stage has been set for another breathtaking leap forward in the U.S. Information Age. Increased availability of inexpensive computing power and mass storage has created enormous theoretical capabilities to create, manipulate, and process data. These computer-based advances could vastly expand opportunities for increased efficiency, productivity, and innovation for our country.

But these potential benefits from personal computing to American business and consumers are contingent on the ability to interchange timely, usable data with other information providers and users. While transmission technologies have evolved that efficiently permit point-to-point communications between users, no systems have been effectively deployed to respond to users' needs for point-to-multipoint mass information distribution. Thus while much lip service is paid to "electronic publishing," almost all information is still distributed on paper or by mail, including the rulings of this Commission and even computer software itself.

In this request, Omnipoint Corporation, Oracle Data Publishing, Inc., and McCaw Cellular COmmunications, Inc. (collectively, 'Petitioners') propose an innovative system that would provide a high speed, high volume information "superhighway" to address the public's needs -- the Data BroadCast Service ("DBCS"). This service would enable many important applications to be delivered at a small fraction of the cost of fiber, satellite, or landline distribution, sustainable by private funding sources, and with operations commencing within 24 months. In addition, because DBCS is a broadcast rather than a landline system, it offers many advantages for portable applications that a national fiber optic, satellite, or wireline systems cannot.

Although falling under the broad umbrella of services to be considered by the Commission as "personal communications services," the DBCS proposal is fundamentally distinct from any service contemplated to date:
- *DBCS efficiently utilizes spread spectrum sharing techniques to coexist with incumbent 1850-1990 MHz licensees*. DBCS capitalizes on the use of advanced spread spectrum technology in a one-way format that permits DBCS to co-exist with current microwave operations.
- *DBCS broadcasts data*. Unlike data transmission services relying upon virtual circuits, *i*.*e*., establishing a two-way path between two points, DBCS utilizes an efficient and highly reliable one-way broadcast to bring data transmission within the realm of consumer communications.
- *DBCS transmits data at unparalleled speed*. The DBCS network contemplates transmission speeds of up to 1.5 Mbit/s, which would allow the network to transmit an average sized book in less than 5 seconds *to millions of users simultaneously*, thus dramatically lowering incremental costs for distributing information and making a huge variety of services available from a single device.
- *DBCS has modest spectrum requirements*. DBCS can achieve these significant data transmission rates into low cost devices using only 10 MHz of shared spectrum. This 10 MHz can be shared with existing microwave licensees and possibly with other competing spread spectrum DBCS providers. Any additional spectrum that might be granted would allow further increases in speed and throughput.
- *DBCS can provide ubiquitous service*. The benefits of DBCS are not limited to major metropolitan areas. DBCS can provide highly economic, ubiquitous coverage to even the most remote and rural areas of the continental U.S.
These functional characteristics of DBCS not only embody a number of highly advanced technologies, but also an entirely new way of thinking about data transmission.

What DBCS means for information users and providers is a dramatic change in the availability of timely data in electronic form:
- The entire daily public output of governmental information -- rulings, press releases, studies, records, requests from local, state, federal and military sources -- can be distributed at a small fraction of current costs, without paper. Moreover, it will be automatically filed and stored at each end user site for later retrieval or printing.
- Because DBCS utilizes powerful encryption and access authorization standards, it can also be used by the government efficiently to distribute non-public information internally. Similarly, it also could be used by business to distribute information among employces, selected customers, or to the general public.
- The extreme high speed and low unit cost of DBCS allow it to solve the growing problem of maintaining complex, illustrated, or multimedia documentation at many sites nationwide. This documentation -- for airlines, military equipment, large vehicles, manufacturing devices, farm implements, construction tools, computers, and computer software systems -- is now delivered for the most part on paper, or on mailed electronic media, and is a major expense for American industry. Although electronic publishing systems have allowed business to improve the efficiency of document preparation, DBCS is needed to allow efficient distribution.
- Schools could receive broadcasts of textbooks, including color graphics, updates, and curriculum materials on a highly cost effective basis. With the cooperation of the publishing industry, vast collections of information can be delivered to local libraries that could not possibly afford or support similar collections on paper or if delivered by mail. Moreover, the information can be updated automatically and accessed locally without the need for the expensive high-speed two-way lines that would be required if the data were centrally stored and accessed remotely.
- Universities and research institutes, regardless of size, could automatically receive broadcasts of updated search index information for journals and specialized research information, allowing the users to execute database retrieval searches on their computers. Since the searching functions are done "off-line," and downloading of actual articles is performed separately, database retrieval costs would be much lower. This model of distributed indices and off-line searching would dramatically lower the cost and efficiency of the nation's existing on-line data services industry, thereby making more information available at lower prices to more people.
- New publishing enterprises and self-publishing would be greatly assisted by this new service. DBCS would allow authors to create electronic books that could be distributed throughout the nation at costs which are orders of magnitude lower than paper. An illustrated book-length manuscript could be sent to millions of recipients throughout the nation for a distribution cost of a few dollars. Not a few dollars each; a few dollars for the entire nation.
- Computer users could receive broadcasts ot upgrades to software packages that would be automatically installed on the user's computer, greatly lowering the cost to both users and vendors, while also increasing ease of use. Similarly, the documentation for the software could also be delivered by DBCS. America now runs on software, and the best selling computer software titles now outsell any new books, periodicals, movies or music.
- All existing news and financial services can be carried by DBCS and accessed individually by authorized subscribers. A financial analyst could receive minute by minute broadcast news that was filtered to allow the user to track all stories concerning a specific company, a market group, or, for example, the progress of U.S./Mexican trade negotiations. Subscribing to a new service can be accomplished with a single telephone call, and new subscribers can be activated without installing leased lines or VSAT systems. By accommodating all services and subscribers in a single network, DBCS will greatly expand the potential for current and new electronic publishing, as a central market stimulates commerce.
- Medical institutions could receive broadcast information updates regarding new treatment methods, newly available therapies, and disease control statistics, including detailed illustrations and raw data results that are not now possible to distribute electronically at reasonable cost.
- Because of the inherent efficiency of a broadcast topology, DBCS would also allow the creation of a national electronic mail delivery system that would offer message rates dramatically lower than current e-mail (or land mail) systems, while allowing the delivery of images, graphics and facsimile that current landline dependent services cannot cost-effectively support.
Since all of this information is provided in a manipulable, electronic form, users can optimize their use of the data in highly personal ways to enhance their productivity and facilitate their information processing tasks.

In order to provide these significant public benefits, DBCS relies upon advanced technology direct sequence spread spectrum devices and associated network technology. These technological advances were developed by Omnipoint, one of the DBCS principals. Since 1987, Omnipoint has been conducting laboratory research and computer modeling, and it began limited field trials in 1990 under its own experimental licenses to validate a DBCS network that would allow:
- *High Performance Receivers*. Petitioners' advanced technology will permit each DBCS user to receive up to 1.5 Mbit/s data transmissions from multiple simultaneous sources in a small, low power, safe, inexpensive, and relatively long battery life mobile unit. DBCS receivers support a data rate that is orders of magnitude faster than existing FM technologies and a transmission range orden of magnitude greater than comparably fast technologies.
- *Shared Use of Existing Spectrum*. DBCS has been designed to coexist with the Operational Fixed Service ("OFS") users in the 1850-1990 MHz band. Through a number of innovative techniques made possible through the use of advanced spread spectrum technology and taking advantage of the one-way characteristic of the broadcast service, DBCS can be deployed without displacing existing users of the band.
These innovations are significant advances over the state of the radio art allowing Petitioners to realize a cost effective, high speed, high volume, wireless data superhighway today, and without consuming massive spectrum resources or requiring the construction of universal fiber service.

Petitioners have designed DBCS as a comprehensive answer to information providers' data transmission and management needs. Technically, DBCS responds to widespread public demand for inexpensive, high speed, high volume nationwide digital data delivery. DBCS is an enabling technology that will permit nearly ubiquitous access to up-to-the-minute information and allow economic delivery of a rich variety of new information-based services designed to promote productivity and efficiency. The service will add a new dimension to personal computing and personal communications.

Omnipoint Corporation ("Omnipoint"), Oracle Data Publishing, Inc. ("Oracle"), and McCaw Cellular Communications, Inc. ("McCaw") (collectively, "Petitioners") jointly request a pioneer's preference for an innovative Data Broadcast Service ("DBCS"). As detailed below, DBCS will offer the public inexpensive access to a reliable and secure nationwide information superhighway operating at speeds up to 1.5 megabits per second ("Mbit/s"). This technological breakthrough relies on a small, low cost receiver capable of combining multiple simultaneous 1.5 Mbit/s transmissions in a single contiguous 10 MHz band of shared spectrum. Significantly, Petitioners' proposed use of 1850-1990 MHz can be integrated into the band by sharing with existing terrestrial licensees -- permitting an extraordinary new use of spectrum without displacing established users.

Petitioners represent the combined spread spectrum, data processing, and wireless communications strengths of Omnipoint, Oracle, and McCaw. Drawing from the collective resources of these industry leaders, Petitioners designed DBCS as a complete Information Age solution to information providers' needs for wide area, high speed, or high volume data delivery. The proposed service will allow inexpensive, ubiquitous access to a multitude of informarion sources and enable economic delivery of many needed new information-based services, including several contemplated for the proposed national fiber optic data network. Petitioners' efforts to pioneer this innovative new service warrant grant of a preference in the licensing of DBCS providers.¹
¹ Petitioners believe that DBCS falls within the realm of services currently being considered as PCSs and that the general licensing and service rules adopted for PCSs can be appropriately modified to reflect DBCS concerns. Accordingly, Petitioners are requesting a waiver of the pioneer's preference requirement to file an associated petition for rulemaking. *See Pioneer's Preference Reconsideration Order*, FCC 92-57 at ¶18 (rel. February 26. 1992). In the event that Petitioners' waiver request is denied, Petitioners will file a petition for rulemaking within the prescribed 30 day period.

### I. PETITIONERS' QUALIFICATIONS AND EXPERIENCE

Petitioners are a high technology venture formed to advance a comprehensive solution for providing accessible, functional, timely data on a highly cost-effective basis. The venture represents the collective strengths and resources of three industry leaders. It combines Omnipoint's knowledge of spread spectrum and network design, Oracle's experience in data management, and McCaw's understanding of wireless communications. Accordingly, Petitioners hold unique qualifications to fulfill DBCS's potential for improving productivity, increasing access to information, and increasing the utility of information.

Omnipoint is the country's leading manufacturer of true direct sequence handheld spread spectrum technology. With almost 300 man-years of experience in the design and development of spread spectrum systems, Omnipoint was the first company to develop handheld spread spectrum phones, to develop a palm sized spread spectrum modem, to test spread spectrum in microcells, to test spread spectrum phones with AIN features, to operate in conjunction with cable TV networks, to operate spread spectrum phones in the unlicensed bands, and, in late 1991, to demonstrate spread spectrum phones in the 1850-1990 MHz band. Omnipoint's advanced technology gallium arsenide integrated receiver, which allows Omnipoint's techniques to be used anywhere from 800 MHz to 2.5 GHz, is the basis of the only wireless spread spectrum network system capable of handling voice, data, and video in portable products.

Oracle is the nation's largest provider of database software and services, and America's third largest software firm overall, with projected revenues of over one billion dollars in its current year. Oracle's relational database management system ("RDBMS") is the standard for relational database products worldwide, commanding a majority of the RDBMS market. Oracle's RDBMS currently functions on over 80 computer platform including personal computers, workstations, minicomputers, and mainframes. The company's expertise in developing and managing database software that performs across a wide number of platforms brings to the venture the experience necessary to manage the extensive information that will be transmitted over the DBCS network for system managers, information providers, and information users. Oracle also has a large national network of sales offices and support personnel, including many technical assistance representatives, that could form an integral part of a customer support network.

McCaw is the nation's leading provider of wireless personal communications services. McCaw and its affiliate, LIN Broadcasting Corporation, have ownership positions in over 100 cellular markets across the country with nearly 100 million potential customers, or "POPs." The company has been at the forefront of joint cellular industry initiatives to maximize the potential of cellular radio through seamless, national wireless services. For example, McCaw has been a driving force in the formation of the Cellular One®, the North American Cellular Network, and the national Data Over Cellular project announced in April of this year. McCaw and its affiliate, LIN Broadcasting Corporation, also have extensive experience in managing mass communications cable television and broadcast television systems, as well as an extensive national telecommunications network billing and administrative infrastructure.

### II. DBCS ADDRESSES UNMET DATA COMMUNICATIONS NEEDS

DBCS is a bold response to current problems in how information is used and disseminated in today's society. Although the computer has become an indispensable technology in the information user's quest to process data efficiently, the functionality of computers for both businesses and consumers is limited by the availability of needed data and the utility of the information that is provided to the computer. By creating a data broadcast network, the Petitioners have effectively isolated the characteristics of delivery that users need so that information can be more accessible and productively used.

To date, data interexchange has been almost exclusively the domain of two-way, individual circuits, whether temporary switched circuits or semi-permanent leased circuits. Although there will always be a need for interactive two-way connections, the use of two-way circuits for pure bulk data point-to-multipoint transfer applications is inefficient. However, it is the only solution today because sufficiently reliable one-way communications are not available. In other words, the cost of distributing information to multiple users using a series of point-to-point connections rises linearly with the number of distributees. Furthermore, the price of telecommunications has remained relatively static with only small improvements in throughput, and consequently the costs of data transmission for one-way point-to-multipoint applications are unlikely to decline relative to the growth of information being generated. For DBCS, the costs are fixed whether one user or 10 million receive the data.

To date, the explosion in computing power has not meant an explosion in information management power. Despite the advent of extraordinary computer processing power, data transmission is still in its infancy. The overwhelming majority of business information, for example, still is transmitted on paper.² Several technologies have been deployed to address the worst deficiencies of paper as an information distribution methodology. Until DBCS, none of these interim technologies offered a comprehensive solution to the problem of mass information dissemination:
- Facsimile machines, for example, improve the timeliness of information delivery, but do not address the cost-effectiveness of storing, transporting, and publishing extensive libraries of documentary information, nor do they address the user's needs to manipulate data upon receipt, since the tools of automation cannot be used to expedite the search for relevant information.
- CD-ROM technology significantly improves on an information provider's ability to store information in an electronic form, thereby enabling end users to manipulate the data as they see fit. Unfortunately, CD-ROMs are not an economically viable means of data transfer for the great majority of information sources, since complex and expensive technology currently is required to "write" CD-ROMs, although the price of CD-ROM "read" technology is decreasing. Moreover, CD-ROM drives are slow, the devices are read-only, and at approximately 540 MB capacity, they are not significantly greater capacity than many of the magnetic disk drives now available. Even more importantly, CD-ROMs still rely on physical transportation for data transmission, thus limiting the timeliness of the data that can be transferred. This may explain why industry projections for the media have never been realized.
- Online databases were, perhaps, the best solution deployed to date. The database author maintains the timeliness of the data and users can manipulate the data set functionally to retrieve items of interest. Unfortunately, a typical commercial database functions as if the user's computer were no more than a "dumb" terminal. Users generally must initiate access to the data, and thus may not learn about time critical information until after the information has ceased to be useful. In addition, the price of two-way, interactive connections has placed a premium on their usage since every user pays for the entire distribution cost to him even though the data is the same.
DBCS solves these basic problems for users by combining a nationwide point-to-multipoint broadcasting network for the delivery of digitized data with a sophisticated data management system.
² Somewhat ironically, even information generated on computers is rendered to print format for dissemination. This pleading, for example, was produced as a collaborative effort using word processing software on several different computer systems. However, it has been rendered onto paper for submission to the FCC. Paper persists because of its benefits of relative permanency, ability to be physically shared with others, relatively inexpensive publishing costs, and capacity to communicate virtually any type of information. The timely delivery of printed information, however, depends upon physical transportation of the paper itself. The costs and inconvenience of this paradox are well known.

DBCS involves a complete rethinking of data transmission fundamentals. Petitioners designed DBCS as a one-way data path that would be reliable enough to obviate the need for error and flow control signals, thus freeing point-to-multipoint data transfer from the constraints of expensive, circuit-based operations. By enhancing the availability and utility of information, DBCS will provide significant productivity and efficiency benefits for both businesses and consumers, as well as promoting information flow to the information disenfranchised.

### III. THE DBCS SYSTEM

### A. DBCS SERVICE CAPABILITIES

DBCS offers a complete and inexpensive solution to information age data distribution problems for a wide variety of new data services. First, DBCS is very fast and, under prearranged conditions, the DBCS architecture can distribute information almost instantaneously. Second, the DBCS network configuration allows point-to-multipoint distribution at a very low incremental cost per information receiver. Third, DBCS efficiently transmits the increasingly large volumes of data that are being amassed, and are required for emerging graphical applications and interfaces, as well as existing textual information. As shown in Petitioners' market study (Appendix B), and summarized below, information creators increasingly need these capabilities, individually and collectively, to enhance the utility and accessibility of their data for the information consumer.

*Speed*. The high speed of the DBCS network is, in itself, a distribution solution necessary for certain time sensitive services. Such services include, for example, news, weather, and financial information distribution services. Some of these services are available today, but as text-only offerings for premium, "high-end" users, because the lack of a suitable transmission vehicle drives up delivery costs. DBCS, in contrast, could inexpensively transmit a single-spaced ASCII page in less than 3/100ths of a second and thus permit information providers to include, for example, graphical weather maps or newsworthy photographs. Most highly time sensitive data networks, on the other hand, require capacity on demand even for text-only services, and thus rely on permanent networks of leased lines, satellite/FM sideband transmission, or VSAT technology. Not only are the initial fixed costs of these services prohibitive, there also are high recurring costs. Furthermore, since satellite-based technologies typically rely on line of sight transmission, time sensitive data may not be available to all users.

*Low Costs and Ubiquity*. There also are a number of beneficial emerging services that require economical distribution of information from a single source to a large base of users, including electronic delivery of periodicals, software updates, compound documents, complex documentation, and decentralized database search indices. At the present time, to the extent that these services are offered at all, the delivery mechanisms are quite expensive or very slow. Periodicals, for example, typically travel by mail.³ Software updates generally art transferred on floppy disks retailed through various vendors, a process that is slow and expensive.⁴ And, for those specialized providers who have separated the processing and retrieval aspects of commercial databases to allow users to perform searches and inquiries on their own computers, information often is transmitted on CD-ROMs, a technology that has been slow to gain public acceptance, requires a special reader costing $500.00 or more, is slow, read-only, and incapable of dynamic updating -- and still must be delivered by mail. For many of these services, delivery adds significantly to the cost of providing the service, and can easily render the service prohibitively expensive. The lack of a ubiquitous delivery system like DBCS thus impedes the growth of a wide range of beneficial information services.
³ There are, for example, over 100,000 newsletters in the United States, and 11.000 other periodicals (8.800 of which are non-consumer, non-agricultural). The U.S. Postal Service, in fact, estimates that 10.6 billion pieces of 2nd class mail will travel at a total mailer cost of $1.91 billion.
⁴ Software updates of top-selling microcomputer products typically have a cost of goods between $7.00 and $12.00 per copy. Although development costs will still remain a large expense, DBCS could virtually eliminate the actual distribution costs and the costs of producing updates in multiple medias (*e*.*g*., 3 1/2" and 5 1/4" floppy disks) for different CPUs.

*High Capacity*. DBCS also offers a high volume "pipeline" -- 60 to 75 gigabytes per day using compression techniques ― making feasible services relying on economic delivery of large quantities of one-way electronic data. Such services could include, for example, the delivery of the entire daily output of governmental information, the distribution of internal and public business documents, maintenance of specialized multimedia documentation at remote sites, the distribution of books, periodicals, and self-published manuscripts, downloading of data from databases, color graphics applications, remote publication of specialized documentation that must be regularly updated, transmission of data secured using high level encryption routines, and de-archiving from centralized electronic storage banks. These services are not ordinarily available because today's solution to high volume data transfer needs is circuit oriented, requiring inefficient use of two-way access lines. Since the fixed and recurring costs of these lines grows with the data rate, users must either pay high charges for circuit use or live with extremely slow throughput rates.

High circuit costs and low throughput make it impossible, for example, to distribute software updates, a product which runs on computers and therefore should lend itself to electronic distribution. A 5 megabyte software package (excluding documentation) would take almost five hours to transmit to each end user at the widely available 2400 baud speed (not including ACK/NAK packet protocol overhead), and over one hour at 9600 baud. This is unacceptably slow and cumbersome for customers. Moreover, the cost per end user would greatly exceed postal costs. Thus, electronic software distribution by current circuit technology is both less convenient and less economical than shipping. Although the technology is in place to deliver software digitally, these factors explain why it is only done for small game-type programs.

### B. THE DBCS SYSTEM ARCHITECTURE

The DBCS network, in a very simplistic sense, can be viewed as a centralized information clearinghouse delivering data to users throughout the nation over a low cost, high speed broadcast superhighway. Information providers -- *e*.*g*., news wire services, database services, and publishers -- forward data by various means to a central collection point. This data is rapidly collated and packaged with other sources' data, and distributed throughout the network for dissemination to end users. End users, in turn, receive the information via radio broadcasts and manipulate the information in privately beneficial ways. Thus, DBCS can be broken down functionally into four components: (1) information transmission to the clearinghouse; (2) distribution and control of information transmission within the network; (3) information transmission from the network to end users; and (4) end user control of transmitted information. Each of these elements is described below.

*Information transmission to the DBCS network*. Petitioners' have structured the DBCS network to allow information providers the greatest practical degree of flexibility. For example, virtually any electronic information source can interface with the network to provide data for broadcast. Petitioners intend to support links that include specialized gateways (*e*.*g*., electronic mail systems or intracorporate networks); dial-up access via modem (*e*.*g*., incidental users); and leased data lines from information providers needing regularly scheduled broadcast time slots (*e*.*g*., an agricultural weather service or a legal database). Information providers will be required to transmit, or maintain at the central site, a data bank containing the logical addresses of the users or groups for whom the data is targeted. Because the system is very flexible, end user billing arrangements and special data handling routines at the end user's receiver also can be structured as needed.

Petitioners anticipate that DBCS local transmitters will provide wide area coverage not only in major metropolitan areas, but in all but the most remote rural regions.⁵ And, using Omnipoint's unique direct sequence spread spectrum technology and the characteristics of one-way broadcast transmission (*e*.*g*., DBCS is a predictable interferer since there are no uncontrolled remote transmitters), these local transmitters will be capable of co-existing with the current OFS microwave users. In addition, with the combination of a simulcast spread spectrum network, DBCS receivers capable of constructive signal summing, and with the absence of capacity constraints limiting the size of DBCS cells, Petitioners have incredible flexibility in transmitter effective radiated power ("ERP"). Thus, Petitioners arc able to use extremely high power (*e*.*g*., 100+ watts), wide area transmitters in regions where OFS interference concerns are not present and sectored, low power transmitters (*e*.*g*., potentially as low as 100 milliwatts) where interference potential does exist. Accordingly, DBCS is a highly efficient proposed use of spectrum.
⁵ Users in remote areas, however, are not precluded from accessing DBCS. Since the nationwide satellite simulcast is always available in lieu of the locally retransmitted broadcast, any user can access the DBCS network through the use of a VSAT terminal. Importantly, in those regions of the country where broadcast transmission is uneconomic; *i*.*e*., low population density agricultural regions, VSAT use is economic and line of sight is always available. In fact, rural agricultural users are among the biggest consumers of VSATs. VSAT recipients of DBCS will still benefit from the wide variety of services available and the convenience of DBCS software.

*Intranetwork distribution and control of information*. Utilizing the raw data, logical addresses, and options requested by the information provider, the DBCS carrier prepares the information for transmission over the wireless network. The information provider's data will be addressed and the address information encrypted to ensure providers with control over access by the end user.⁶ Each provider's data are assembled into a stream relying on defined priorities for delivery; *i*.*e*., a news source may require an extremely high priority, while a documentation update may be deferred for nighttime or another, non-busy, time for transmission. The data stream will then be compressed and packetized, and forward error detection codes will be added to ensure data integrity. Importantly, all of these tasks are automated and can be accomplished with negligible time lag. Finally, the packet stream will be uplinked to a satellite with national coverage for retransmission to the individual local transmitters that comprise Petitioners' ubiquitous broadcast network.⁷
⁶ Information providers will also have the option of having their data encrypted.
⁷ Although VSAT disuibution is uneconomic for all individual end users, since Petitioners spread the transmission nerwork costs over a wide user base. VSAT discribution within the network is highly economic.

*Information transmission from the network to end users*. At each network satellite receive station, a VSAT receives the satellite data stream and rebroadcasts the information terrestrially using a nondestructive spread spectrum technique. Due to the design of Petitioners' spread spectrum network, DBCS transmissions will penetrate interior and exterior walls to provide high quality indoor reception. Each user's receiver monitors the incoming stream from the local transmitter, becoming active only for data destined for that particular address (thus conserving battery power in portable systems). Any packets addressed to the receiver will be separated from the broadcast stream and decoded to verify error free transmission. The data will then be reassembled from the packets and passed to the DBCS Electronic Librarian™ resident in the user's computer.

Since DBCS is designed as a mass communications technology, important design goals included making DBCS receivers small and extremely low cost, while offering data rates fast enough to multiplex a wide variety of services. Using Omnipoint's spread spectrum devices and custom chip technology, DBCS receivers should be small enough to fit even within handheld devices, making DBCS a viable transmission system for portable computer users as well as users at fixed locations. Omnipoint's technology also obviates the need for complex, costly, and power consumptive adaptive equalizers necessary to overcome delay spread induced inter-symbol interference, and thus production DBCS receivers should function in a mobile environment and cost less than $100.00. This is well within the reach of domestic computer users. In fact, a typical consumer user could easily amortize the cost of a DBCS receiver with one year's local telephone bill.⁸
⁸ The FCC's Industry Analysis Division has indicated that the average residential user's telephone bill is between $17.00 and $18.00 per month, and the average business user's local telephone bill is between $40,00 and $45.00 per month.

*End user control of transmitted information*. The end user's DBCS system will include, in addition to the receiver unit, customized Electronic Librarian™ software for the user's computer to process and store information passed to the computer by the DBCS receiver. The DBCS Electronic Librarian™ generally will be a background task in the processor that will decide what actions should be performed on the data it receives. In the simplest case, the data will be stored and the user alerted to its presence. Using a DBCS application program, the user could then, among other things, preview the information, read the information once, delete the information, or republish the information locally with varying charges.⁹ For a more complex database application, the DBCS Electronic Librarian™ might automatically perform an index update, modifying information in a search tree resident on the user's computer.¹⁰ The DBCS Electronic Librarian™ also could pass the data through an end user-defined filter to screen for information that triggers software alarms. For example, a user could subscribe to a general news wire service and request to be notified about articles using certain key words like "telecommunications" or "PCS." Thus, DBCS is not merely a conduit for information, but rather a comprehensive data management system for information providers, and a central source for the very wide variety of information services needing speed, capacity, and reliability.
⁹ As discussed in the system architecture appendix (Exhibit B), certain DBCS functions will require a backhaul network to support administrative and accounting options. Petitioners, using Oracle's considerable experience as a data management company, are creating a billing system that functions on a periodic basis, transmitting data on usage from the end user to the central billing system by landline or other back channel. For example, the user might dump the billing date to a diskette in encrypted form, or have his computer automatically call a regional billing center and send the information over a telephone connection to a network billing computer, DBCS cannot, and is not intended to, eliminate completely the need for interactive connections, but it can significantly minimize the number of transactions that must occur using two-way real time connections.
¹⁰ Instead of maintaining indices at a single central location, news retrieval services could now use DBCS to broadcast their index daily, allow local off-line searches, and then deliver the data requested with far lower costs and greater efficiency than their current on-line system.

### C. DBCS CAN BE IMPLEMENTED WITH A SHARED ALLOCATION OF 10 MHz IN THE EMERGING TECHNOLOGIES BAND

Petitioners have requested a transmission bandwidth of 10 MHz for DBCS implementation.¹¹ This bandwidth, which is consistent with the current OFS channelization policies, allows for robust multiple signal combining and ultimately provides for up to 1.5 Mbit/s wireless data broadcasting rates. In comparison, narrower bandwidth systems would cause significantly greater interference to an incumbent OFS user and would therefore require exclusion zones that would make DBCS impractical. For example, a 500 kHz system operating *outside* the OFS beam path at just 100 milliwatts would still require up to a 35 mile exclusion zone. Omnipoint's system at 100 milliwatts requires only a 5 mile exclusion zone assuming worst case free space propagation and the requirement not to raise the OFS noise floor by more than 1 dB.¹²
¹¹ Importantly, 10 MHz constitutes a minimum spectrum allocation for DBCS, but the FCC abould recognize that the system could provide significantly higher data rates if more contiguous spectrum were to be made available.
¹² Most real world situations will allow Omnipoint to operate significantly closer.

Petitioners believe that DBCS spectrum needs can be satisfied using the bands the Commission recently proposed to reallocate in the 2 GHz band for use by "emerging technologies."¹³ The Commission also proposed measures to relocate the existing fixed microwave users of the band. For the technical reasons noted *supra*, Petitioners submit that DBCS is suited ideally for deployment in the emerging technologies band since the dislocation effects of DBCS on existing OFS users are insignificant in comparison to other services. Not only is DBCS the type of service the Commission is seeking to promote,¹⁴ the electrical interference characteristics of the emerging technologies band will allow DBCS to "share" spectrum with existing users, thereby minimizing the impact of new technology development.
¹³ *In the Matter of Redevelopment of Spectrum to Encourage Innovation in the Use of New Telecommunications Technologies*, ET Docket No. 92-9 (February 7, 1992).
¹⁴ DBCS is a technically innovative new service appropriate for licensing as an emerging technology. In the Commission *Emerging Technologies NPRM,* it indicated that "frequencies in the emerging technologies bend would be intended primarily for use by new services made possible through technological advances." *Id*. at ¶ 28. Accordingly, the FCC stated that "requests for operation of new services in these bands should demonstrate that the service makes innovative use of a new technology and that the technology is most appropriately suited to operate [in] the 2 GHz region." *Id*. As shown in Sections IV and V, *infra*, DBCS meets these requirements.

Significantly, the use of spread spectrum for DBCS also provides a mechanism for introducing competition. Because separate orthogonal pseudo-noise ("PN") codes could be assigned to different providers to operate CDMA systems on the same 10 MHz band, more than one licensee can be accommodated on the same bandwidth.¹⁵ Notwithstanding CDMA sharing; the band has a finite capacity and unlimited entry is not possible. In other words, each additional spread spectrum system licensed in the same band will raise the threshold elevation of OFS receivers and lower the signal to noise ratio for DBCS receivers. At some point, the ambient noise in the band will overwhelm existing systems, and, in any event, will necessitate higher power or lower data rate operation.
¹⁵ Even with spread spectrum operation, two or more DBCS providers utilizing the same band would be required to co-locate transmitters and to share the technology for DBCS operation in order to guarantee that PN codes would be orthogonal. Petitioners are continuing to experiment with other possible competitive arrangements that would permit full facilities-based competition.

### IV. DBCS IS AN INNOVATIVE AND EFFICIENT DATA TRANSMISSION SERVICE WARRANTING GRANT OF A PIONEER'S PREFERENCE

### A. PEITTIONERS HAVE DEVELOPED SPREAD SPECTRUM TECHNICAL INNOVATIONS TO IMPLEMENT THE DBCS SERVICE

The Commission promulgated strict standards for the award of licensing preferences in the *Pioneer Preference Order*.¹⁶ In particular, the Commission indicated that it would grant pioneer's preferences only to applicants that have invested significant efforts to develop a new or enhanced service,¹⁷ stating a pioneer must "demonstrat[e] that it ... has developed an innovative proposal that leads to the establishment of a service not currently provided or a substantial enhancement of an existing service."¹⁸ In this context, an "innovative proposal" means:
[T]he petitioner ... has brought out the capabilities or possibilities of the technology or service or has brought them to a more advanced or effective state. Generally we believe that an innovation could be an added functionality, a different use of the spectrum than previously available, or a change in the operating or technical characteristics of a service, any of which involve a substantial change from that which existed prior to the time the preference is requested.¹⁹
The Commission also listed a number of potential indicia of new or enhanced services:
[A]n added functionality provided to a broader group of customers than was previously available or a new technology that permits 1) increased ability to perform an existing work requirement; 2) increased capacity in an existing service; 3) a substantial cost reduction in an existing service; 4) improved quality of an existing service.²⁰
As shown below, Petitioners' DBCS implementation satisfies the FCC's stringent standards for award of a pioneer's preference.
¹⁶*Establishment of Procedures to Provide a Preference to Applicants Proposing an Allocation for New Services*. 6 FCC Red at 3488 (1991) ["*Pioneer Preference Order*"], *recon*. FCC 92-57 (rel. February 26, 1992).
¹⁷ *Pioneer Preference Order*, 6 FCC Red at 3494 n.10.
¹⁸ *Pioneer Preference Order*, 6 FCC Red at 3494.
¹⁹ *Id*.
²⁰ *Id*.

Specifically, Petitioners have incorporated a number of technical advances into two innovations that make DBCS possible. First, Omnipoint's development of extremely high performance direct sequence spread spectrum receivers has opened the door to creating a consumer-oriented, reliable, wide area, and high speed data broadcast network. Second, the combination of several advanced technologies allow DBCS to be integrated with existing spectrum licensees operating OFS microwave stations, permitting DBCS to be implemented without displacing other valuable spectrum uses. Petitioners submit that these innovations warrant a pioneer's preference.

### 1. DBCS's Use of Advanced Technology In Providing Low-Cost, High Speed, High Volume and Wide Area Data Broadcasts Is Unlike Any Existing Or Proposed Service

Petitioners' DBCS system is unlike any service implemented or proposed to date. DBCS provides wide area distribution of one-way data at nominal data rates of up to 1.5 Mbit/s to low cost, low power receivers -- a substantial technical achievement. Omnipoint's spread spectrum system provides several major pioneering innovations that enable such an extraordinarily high data rate to be delivered to low cost stationary and mobile receivers:
- Traditional RF digital simulcast broadcast techniques have been limited to low data rates (*i*.*e*., under 24 kbit/s) or very short ranges (*i*.*e*., a few hundred feet at 500 kbit/s) due to the need for impractically expensive and power consumptive adaptive equalizers to overcome delay spread induced inter-symbol interference ("ISI").
- Traditional techniques cannot allow for low cost receivers to receive *multiple simultaneous* signals up to 1.5 Mbit/s in order to provide continuous overlapping coverage. Paging simulcasts are currently done at 1200 baud and the state of the art in theory for FM techniques is 3000 baud. VBI broadcasts operate at approximately 9600 kbit/s and the fastest FM subcarrier broadcasters reach speeds of 20 kbit/s, with contemplated improvements allowing perhaps 64 kbit/s. This speed is below the throughput requirements of many individual services, and cannot support a wide variety of data-rich or graphical services. VSAT can, of course, provide sufficient speed, but without in-building coverage and at considerable installation cost and complexity not economic for most end users and applications in urban areas.
DBCS uses a multiple signal combining spread spectrum system that sums the energy from multiple paths, eliminating the need for complex cell site planning and complex continuous frequency scanning receivers. In addition, Omnipoint's spread spectrum system overcomes cell boundary problems (*e*.*g*., hand-off or jamming), and, in fact, turns it into an advantage (*i*.*e*., complete coverage at low cost).

Although point-to-multipoint radio services do exist, *e*.*g*., the Digital Electronic Messaging Service or VSAT distribution, no other radio based technology provides the cost and coverage characteristics of DBCS. In fact, none of the existing vehicles for point-to-multipoint transmission even purport to be consumer technologies. DBCS provides not only "a substantial cost reduction" for consumers, but also high speed and high volume transfer capability -- an "increased ability to perform an existing work requirement." Thus, DBCS is "a different use of the spectrum than previously available" within the meaning of the *Pioneer's Preference Order*. Further, DBCS represents an enormous advance in the "speed or quality of information transfer" that "significantly reduce[s] costs to the public,' and thus should be given "careful consideration [for a pioneer's preference]."²¹
²¹ *Id*.

### 2. Petitioners Have Developed Efficient Technologies That Capitalize on Data Broadcast Characteristics To Allow the DBCS System To Share With Existing OFS Users

After considerable laboratory investigation, computer modelling, and field testing under Omnipoint's experimental license, Petitioners already have made substantial progress in validating a DBCS system capable of coexistence with existing OFS users. The final phase of Petitioners' testing will culminate in the near future when a prototype data broadcast system is implemented in Colorado Springs, Colorado. Petitioners have a high degree of confidence that these tests will prove out DBCS technology, since, as shown in Exhibit A, extensive work already has been done to demonstrate DBCS's sharing ability.

DBCS's ability to coexist in the current OFS band is the result of low power direct sequence spread spectrum equipment specially developed by Omnipoint to take advantage of the following characteristics of DBCS:
- *Channelization*. DBCS utilizes a 10 MHz contiguous band of spectrum consistent with the existing channelization of the band (*i*.*e*., 94 percent of all OFS links in this band are 10 MHz links);
- *Predictability*. Unlike two-way systems, DBCS is predictable as a potential interferer because *there are no remore transmitters causing uncontrolled interference;* and,
- *Orientation*. Since DBCS transmitter sites are fixed, the antenna orientation is known and DBCS can make use of orthogonally polarized antennas.
In order to minimize impact on OFS operations, Petitioners have designed spread spectrum equipment capitalizing on these factors, which feature:
- *Extremely Low Potential for Interference to OFS.* Omnipoint's direct sequence spread spectrum system provides low spectral density for coexistence. In actual practice, when transmitting in the direction of a co-channel OFS receiver, an exclusion zone invariably must be established. The required exclusion range is a function of transmit effective radiated power ('ERP'), signal bandwidth, and the allowable apparent noise figure of the OFS receiver, referred to as threshold elevation. Because DBCS uses a noise-like, spread spectrum signal, the effect of DBCS transmissions on OFS merely increases the threshold elevation. For a given transmit ERP, Petitioners' 10 MHz bandwidth signal results in 1/100 (20 dB) less interference to an OFS receiver compared with a similar power, 100 kHz bandwidth signal. *Translated into range, DBCS transmit stations can be a factor of ten times closer to a typical analog OFS receiving station than a narrowband transmitter*.
- *Signal Robustness*. Omnipoint's spread spectrum system introduces noncoherent detection and reception of multiple simultaneous signals. This provides DBCS with reduced sensitivity to multipath and a mechanism for combining three way data transmissions. DBCS's overlapping coverage and the receiver's ability to combine up to three signals has a number of significant benefits: (1) sensitivity to signal shadowing effects caused by buildings, hills, and other terrain considerations is considerably reduced; (2) multipath fading effects are mitigated and error correction coding performance is enhanced; (3) triple transmission provides space diversity; and, (4) spread spectrum provides frequency diversity.
- *Low Transmit Power*. The DBCS network utilizes sectorized transmissions to avoid jamming OFS receivers. To maximize deployment flexibility, DBCS is designed to permit all sectors and transmitters to operate at the same frequency. Petitioners' technical appendix shows that even areas near an OFS user on the same frequency, a triangular grid of transmitters 1 to 2 km apart provides 600 kbit/s raw data rate. Since, in any given area, the DBCS receiver will be in range of up to three base stations, Omnipoint's hand held direct sequence spread spectrum technology permits radical reductions in transmission power.
All of the above factors combine to reduce the potential for interference to OFS licensees. While no existing co-channel technology can guarantee complete overlay coverage without interference, the exclusion zones for DBCS are so much smaller than for other systems that DBCS can be commercially deployed without significant disruption of existing users.

The Commission has stated that "technologies that yield efficiencies in spectrum use ... or spectrum sharing ... will be given careful consideration [for a pioneer's preference].²² By allowing DBCS to be deployed on channels already occupied by OFS fixed microwave users, Petitioners' technology is a radical advance in spectrum efficiency that warrants grant of a pioneer's preference.
²² *Id*.

### B. DBCS IS INHERENTLY NATIONWIDE IN SCOPE

DBCS has the potential to expand greatly the information service options available in the U.S. market. However, for technical and market reasons, DBCS is inherently nationwide in scope and cannot viably be offered on a smaller scale. First, the fundamental concept behind DBCS is centralized collection and national distribution of information. In order to accomplish this feat, full CONUS satellite delivery to individual transmitters is the only suitable intranetwork transport system. Creating a network of T-1 circuits to individual transmitters spaced, in places, at less than 5 miles, would be prohibitively expensive and provide lower reliability. Thus, DBCS's technical foundation relies on a national transmission system and DBCS providers should be issued nationwide licenses.

Second, DBCS is characterized economically by high initial infrastructure costs, high fixed overhead costs, and virtually nonexistent incremental costs for additional subscribers. This is true for both the broadcaster and the information provider, and has a direct impact on the Petitioners' ability to attract providers to the service. In other words, in order to recover fixed costs, Petitioners must amortize the large infrastructure and overhead costs over an extremely large customer base. Although the same theory is true to some extent for all radio services, the extreme disparity between fixed and variable costs for DBCS compels national licensing.

Third, without the capability to achieve nationwide distribution for its data product, an information provider must maintain dual distribution channels. Since most existing data and computer marketing is conducted on a nationwide basis, any market divisions imposed by regulation would require information providers to maintain two distribution infrastructures. Generally, information providers' costs per subscriber will be defined by the most expensive distribution method, and thus multiple market divisions for DBCS will negate the bulk of DBCS's low cost benefits. Moreover, many niche services which serve a particular social or business need, for example agriculture or science, can only obtain an adequate community of interest from a national base. Thus, if DBCS is not licensed on a national level, many of the contemplated new services may not emerge.

Finally, DBCS end users' data needs are not categorically confined to localities or regions, but arc nationwide. The ability to access data from local providers, in fact, generally represents market segments where the impact of DBCS will not be felt as significantly, since as the cost of distribution decreases, and the available means of distribution increases, the closer the information source gets to the end user. DBCS will only achieve its highest potential benefits for users if the network allows data users to access information on a nonspecific geographic basis.

Petitioners are sensitive to the Commission's predisposition to only award national pioneer preferences where fully justified and under conditions that ensure competitive entry. For technical, operational, and economic reasons, DBCS can and should be considered a national service. Most fundamentally, national coverage is essential to meet the needs of information service providers serving customers across the country. National coverage also is necessary to take full advantage of the efficiencies of mass distribution contemplated in this proposal. In addition, the direct sequence spread spectrum innovations associated with DBCS will permit multiple competing licensees utilizing the same 10 MHz spectrum, if carefully coordinated, or if the Commission determines an additional 10 MHz band should be allocated to DBCS. Accordingly, Petitioners respectfully request a national pioneer preference for DBCS.

### C. DBCS WILL PROVIDE SIGNIFICANT PUBLIC BENEFITS

It is a truism that business runs on information. Our competitiveness as a nation depends upon each individual's ability to assimilate, manage, and leverage a rapidly expanding base of information. The four keys to accomplishing this task are: (1) accessibility, or the ability to obtain necessary information; (2) timeliness, or the ability to receive up-to-date information; (3) functionality, or the ability to manipulate and extract useful data from a larger pool of information; and (4) cost efficiency, or the ability to perform the information processing tasks inexpensively. DBCS offers an unparalleled scheme for providing the information user with each of these keys.

Importantly, however, DBCS is not simply a big business service. Since broadcasting is unmatched as a medium of mass communication, new small business, educational, and consumer users can be added at a minimal incremental cost to the DBCS provider. DBCS receivers are targeted to cost under $100.00, making DBCS a technology accessible to the majority of America. The DBCS user base can easily be extended from beyond the business world to consumers, educational users, rural users, and governmental users without additional infrastructure costs. Indeed, it is these "information poor" users that may gain the most from DBCS deployment, since serving these consumer markets can be accomplished on a highly cost-effective basis relative to these users' ability to pay. In contrast, today database subscribership is peaking, and industry analysts have concluded that such services are reaching maximal market penetration under the current data transmission infrastructure.

Petitioners' unique DBCS network architecture, in addition to providing low-cost ubiquitous coverage, allows information vendors controlled end user access. Since access to data can be regulated, the pricing of information itself can be structured to increase the availability of the information to a wider consumer base. For example, a news wire service could charge a premium for minute by minute coverage, but offer an hour by hour service to the general public and schools. Because the data has already been archived, offering the secondary service costs the information provider virtually nothing, can be provided at a nominal charge, and thus promotes increased availability of useful data for the public as a whole. Similarly, since the services provided can be user-specific, information providers could create preferential pricing policies for public institutions like libraries, schools, or government institutions. Thus, DBCS is an enabling technology that promotes data transmission for the vast portions of the population that are information disenfranchised.

### V. CONCLUSION

In adopting its pioneer preference policies, the Commission has sought to encourage innovation, promote efficient use of spectrum, and hasten the advent of important new wireless services to the public. In choosing "tentative selectees" for such preferences, the Commission also has focused upon the technical feasibility of bringing the concept into reality and the extent to which the requestors have committed substantial resources toward that objective. On all counts, the DBCS service and its proponents meet these strict criteria.

DBCS will bring the exciting potential of innovative, direct sequence spread spectrum technology to the public. Spectrum efficiency would be maximized to an unprecedented level by allowing new data broadcast service providers to use a modest 10 MHz of spectrum on a shared basis with incumbent 1850-1990 MHz licensees. The resulting service would provide for the first time a digital data superhighway that spans the country and extends the capabilities of advanced computing to all segments of society.

Petitioners' principals have already invested substantial resources and expertise in evolving the concept into reality. Work already undertaken confirms the basic feasibility of the system. Tests about to be undertaken will soon verify its full capabilities. Indeed, three major corporations with well recognized capabilities (Omnipoint, Oracle, and McCaw) have combined their technological, marketing, and economic strengths to ensure that the allocation of spectrum will be promptly followed by the deployment of a viable and important new service.

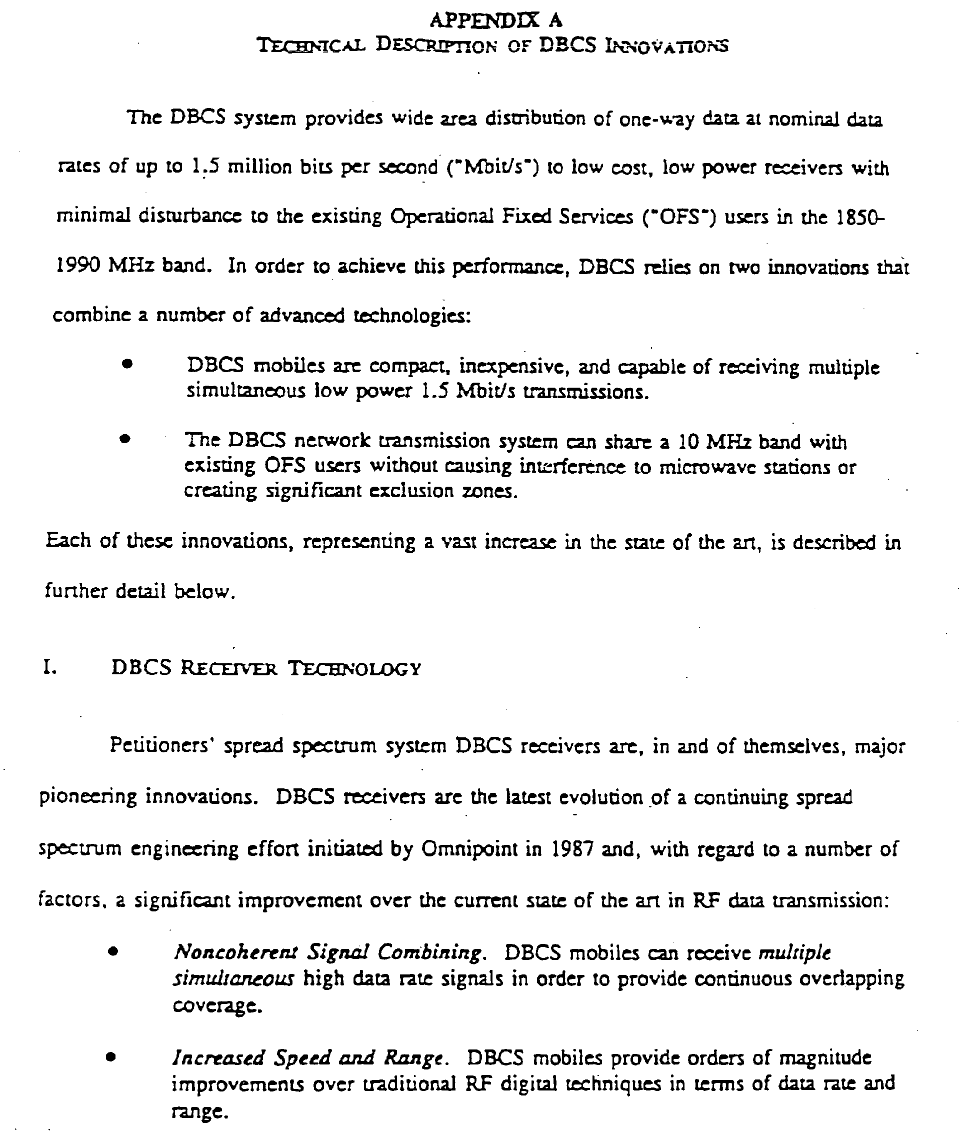

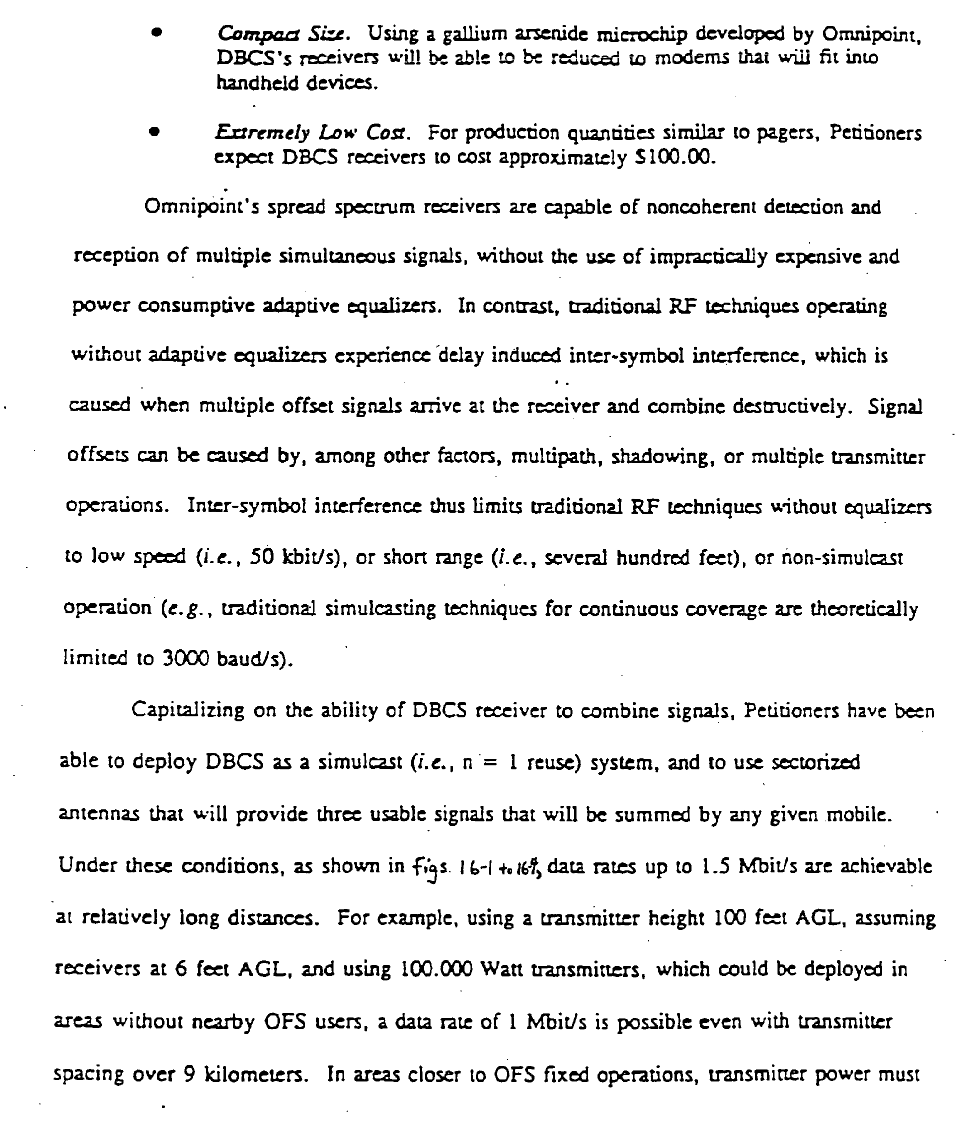

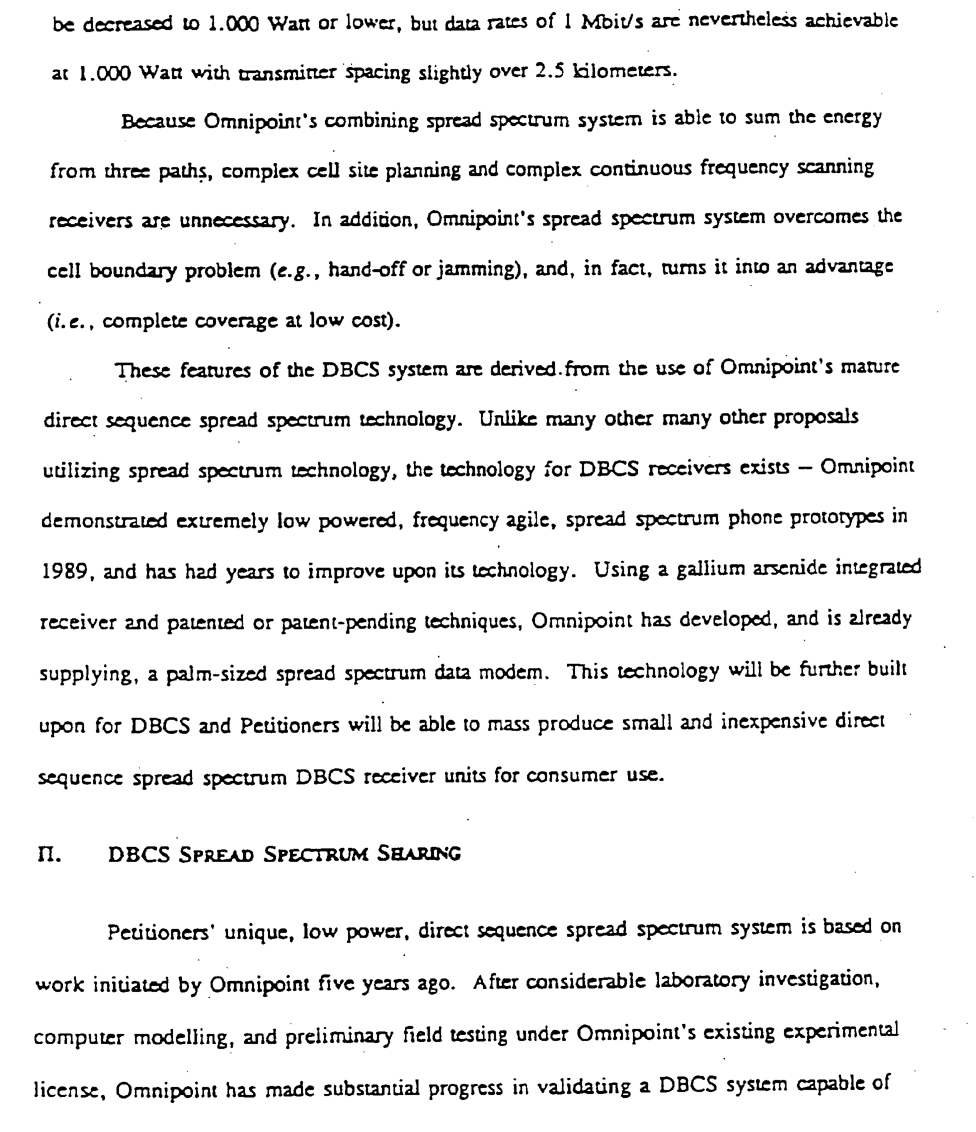

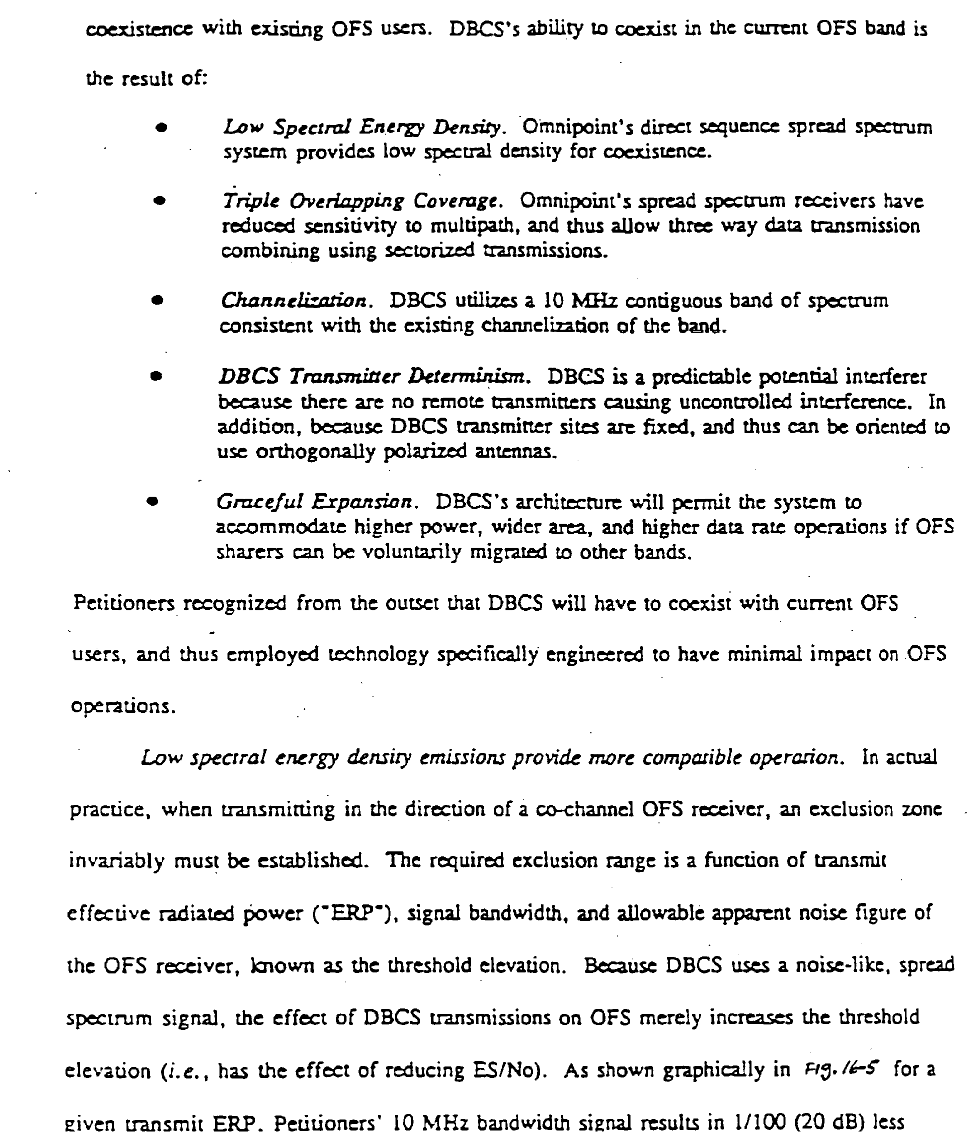

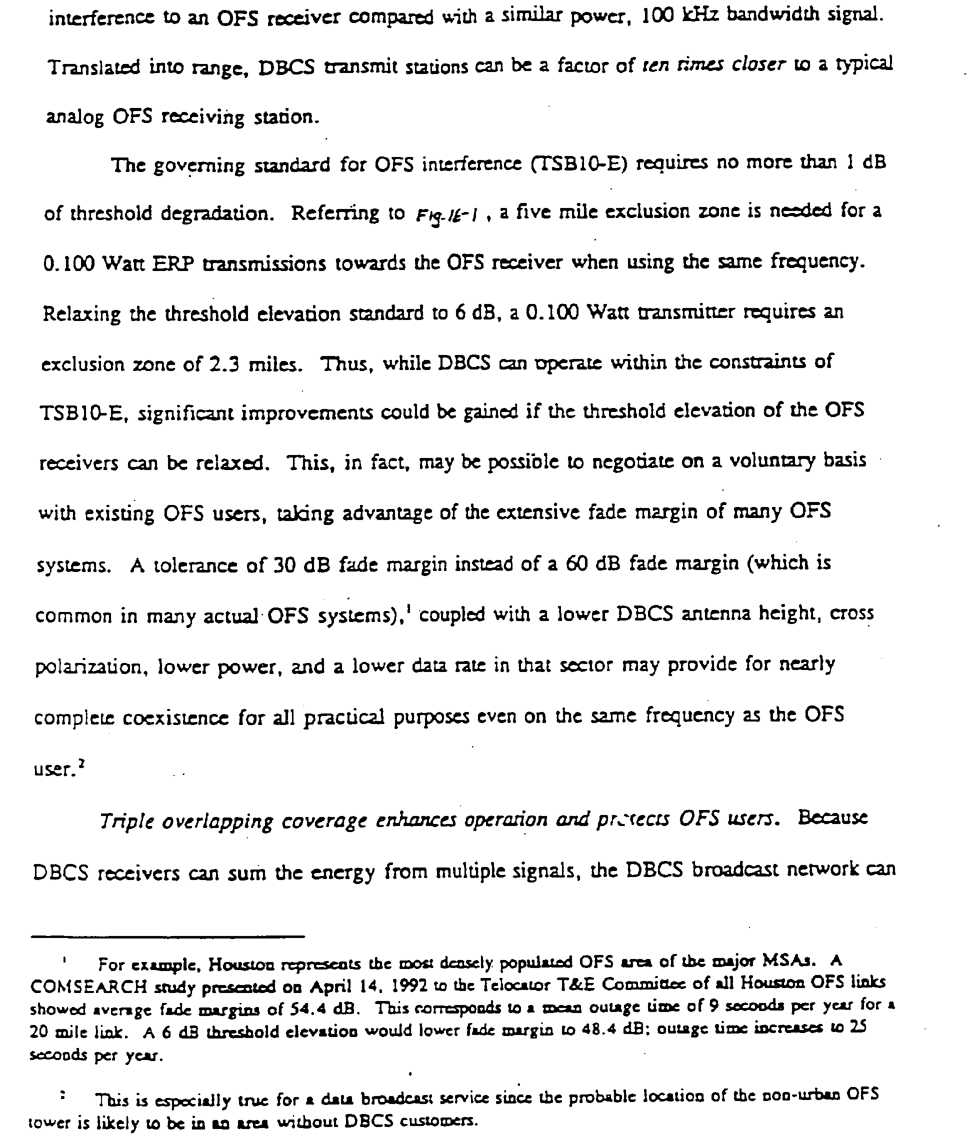

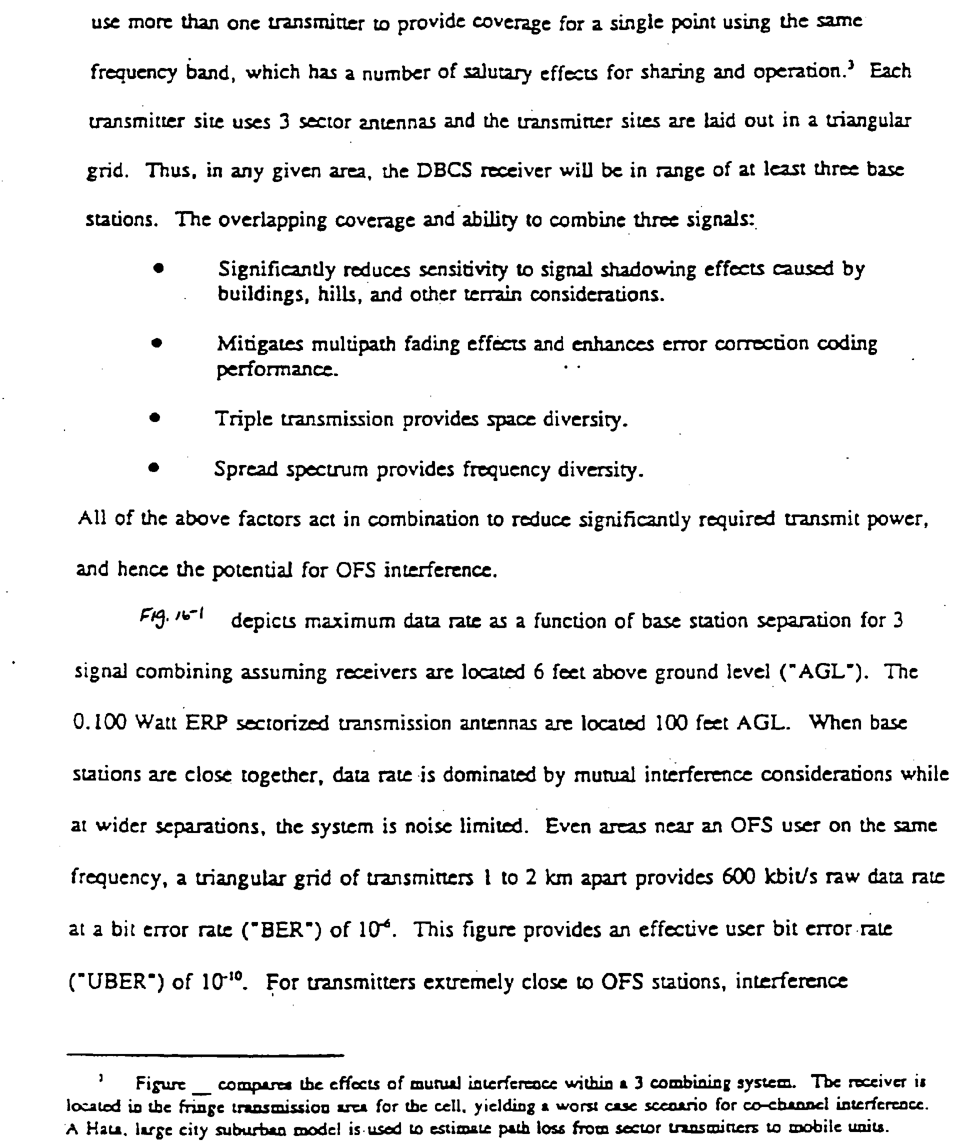

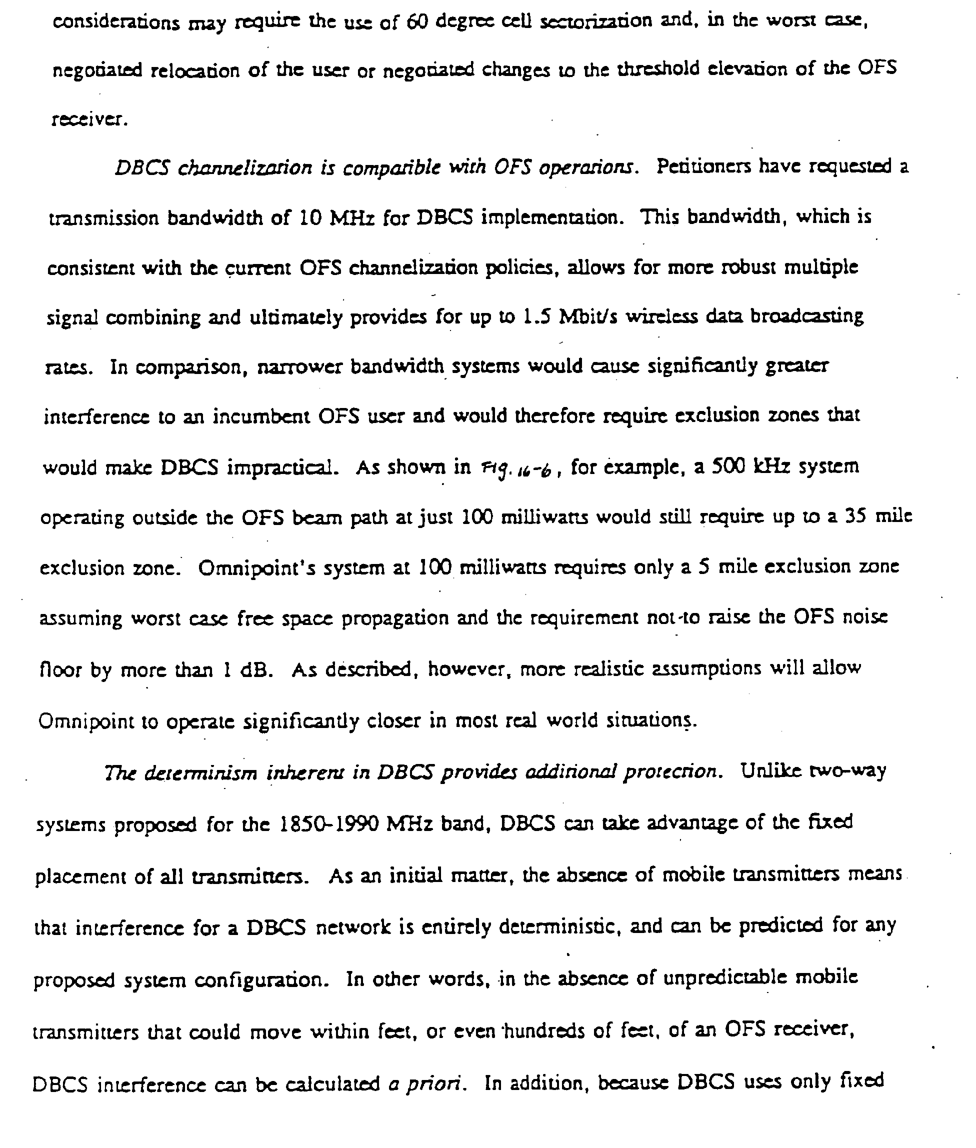

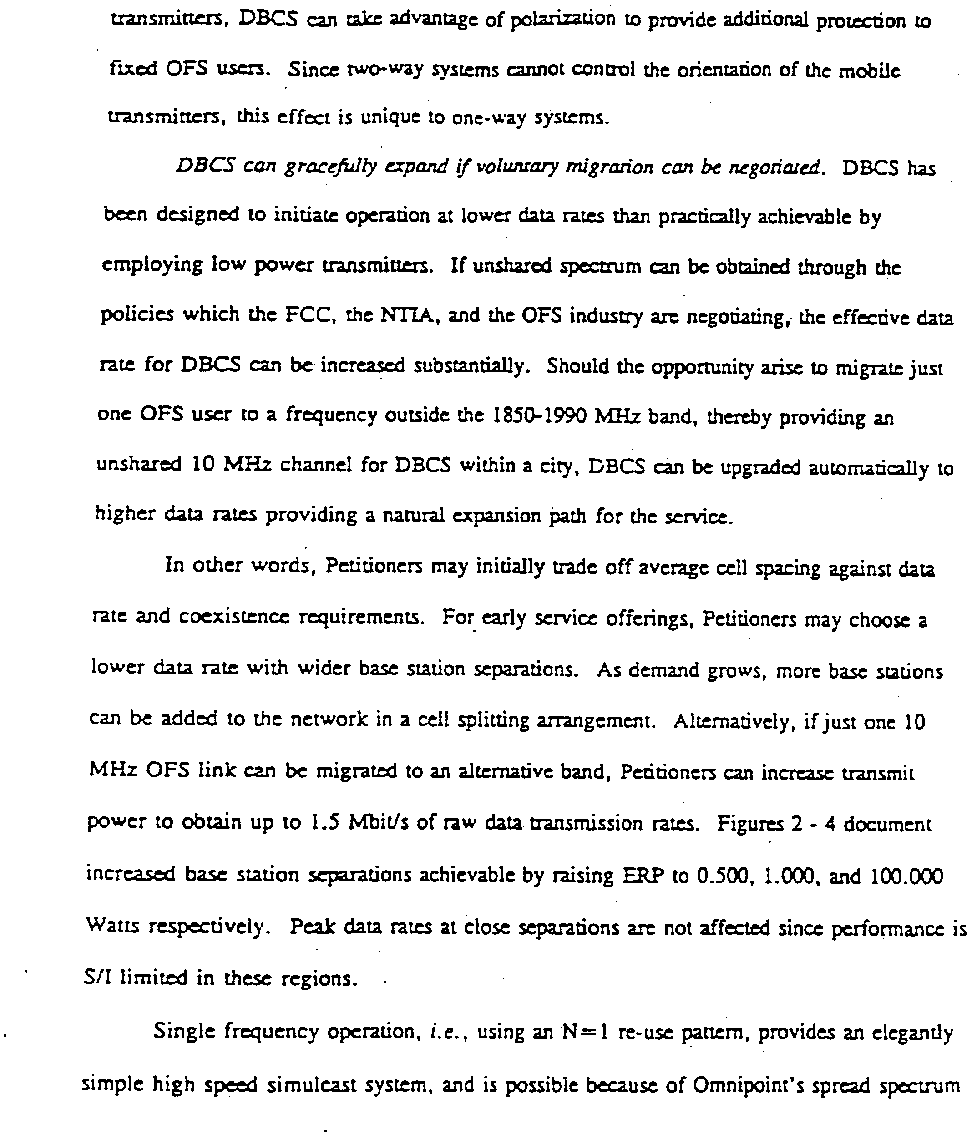

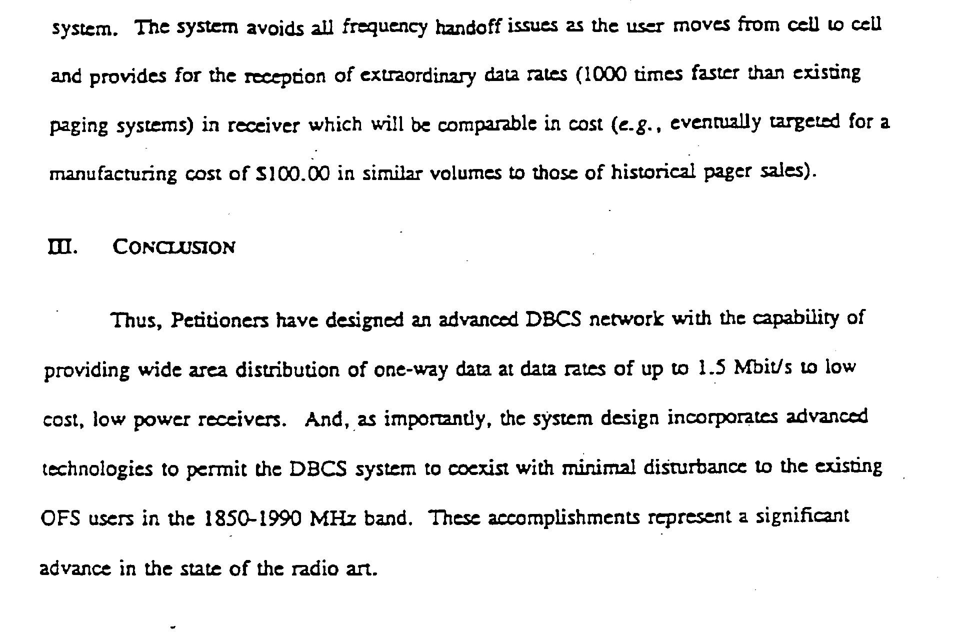

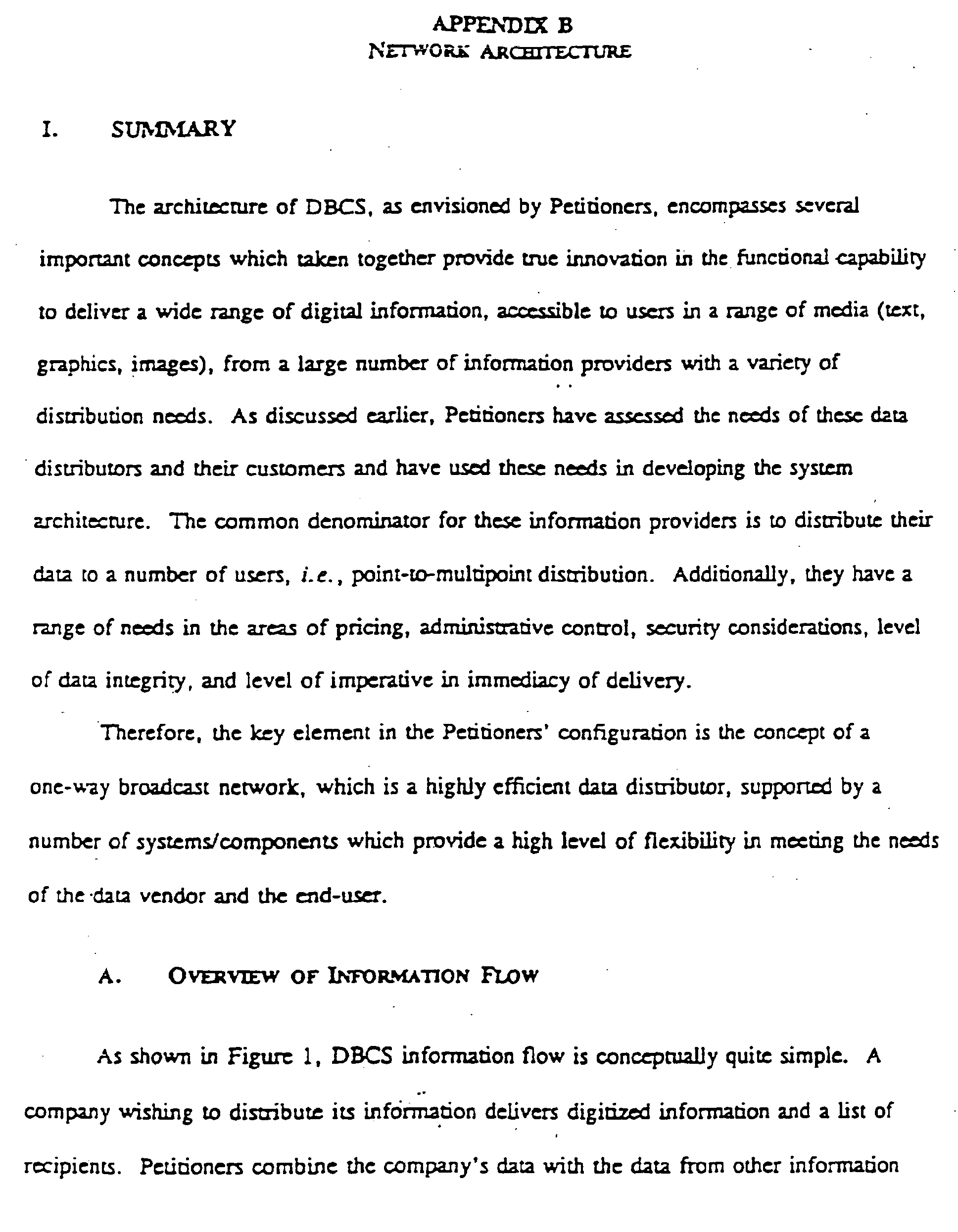

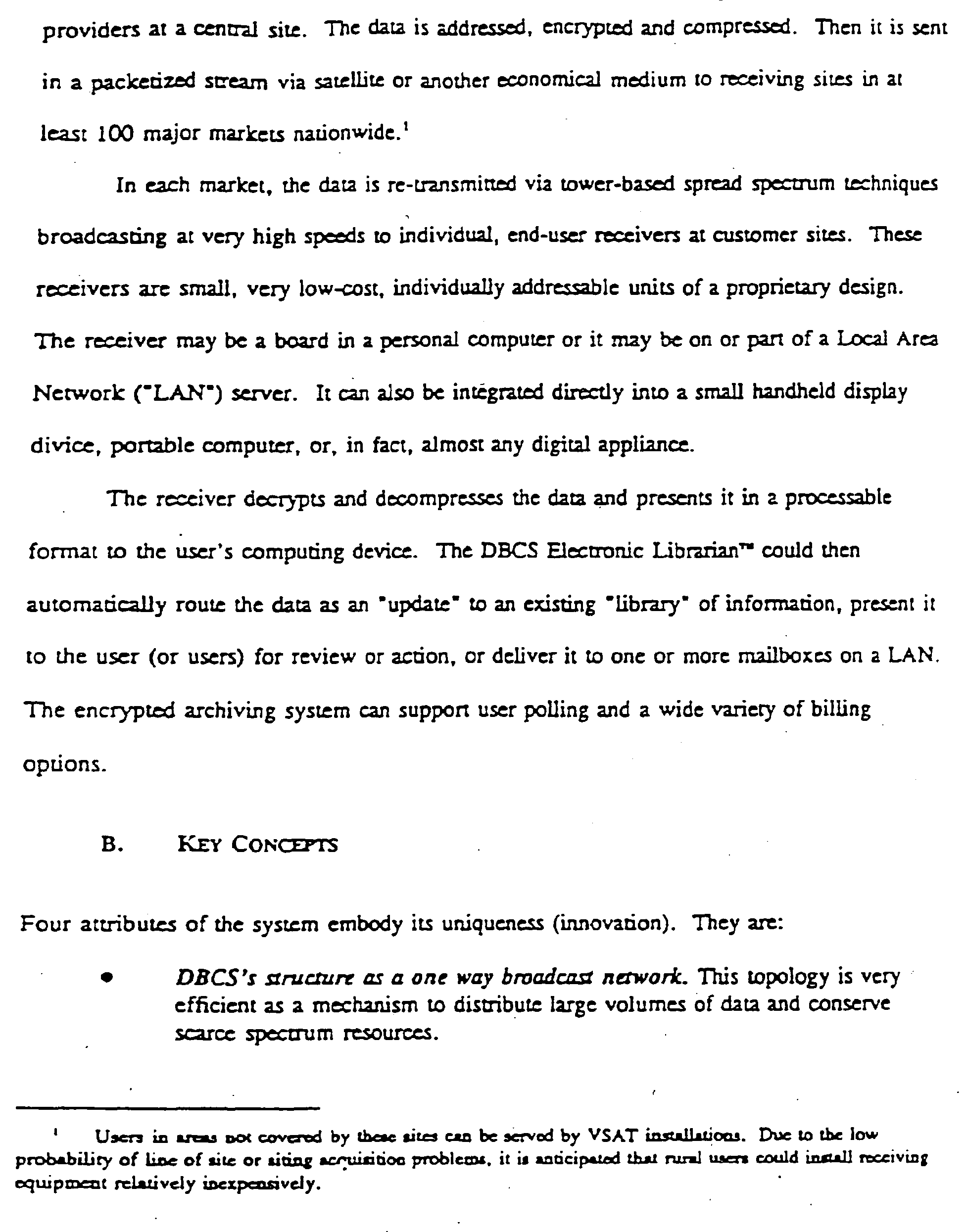

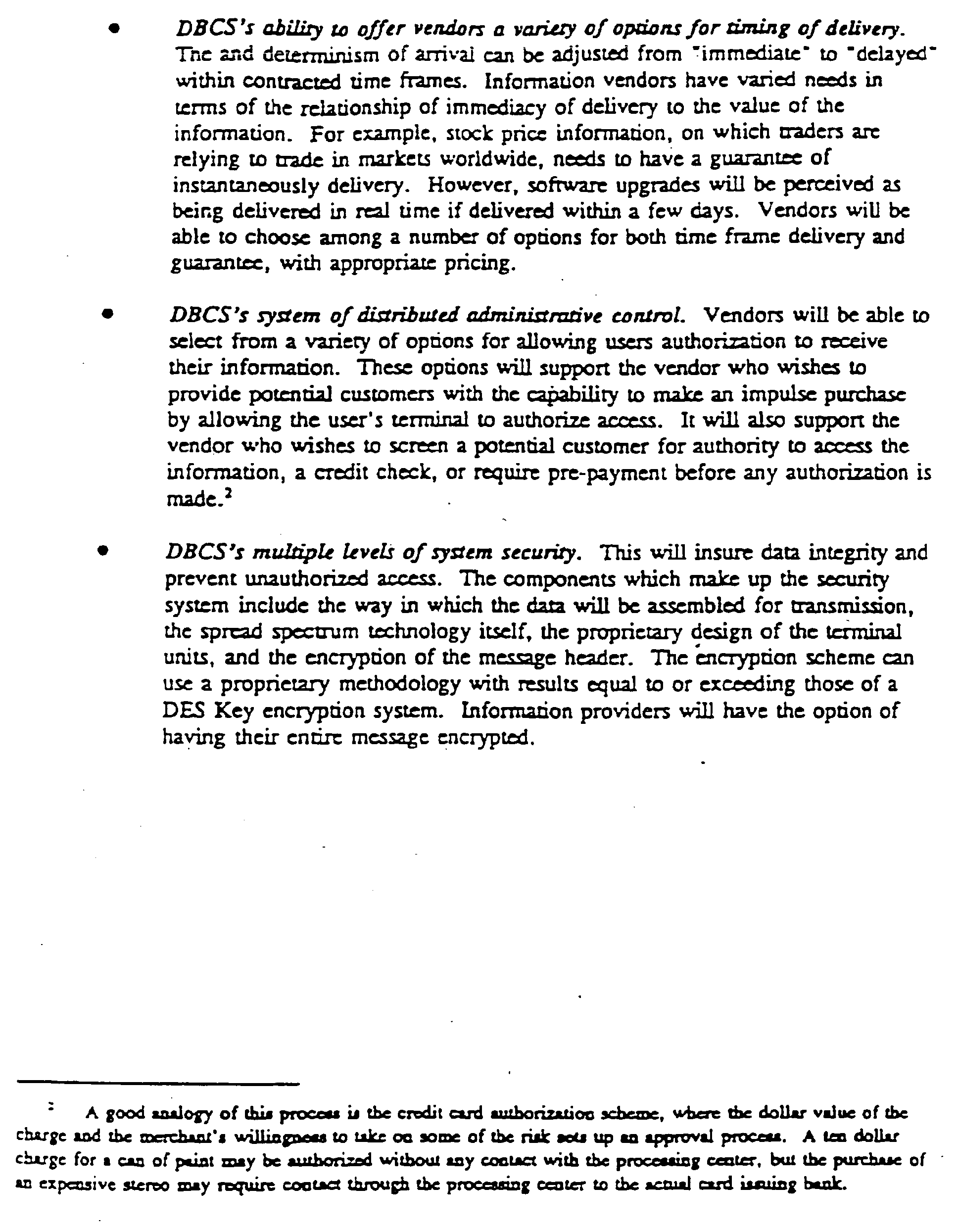

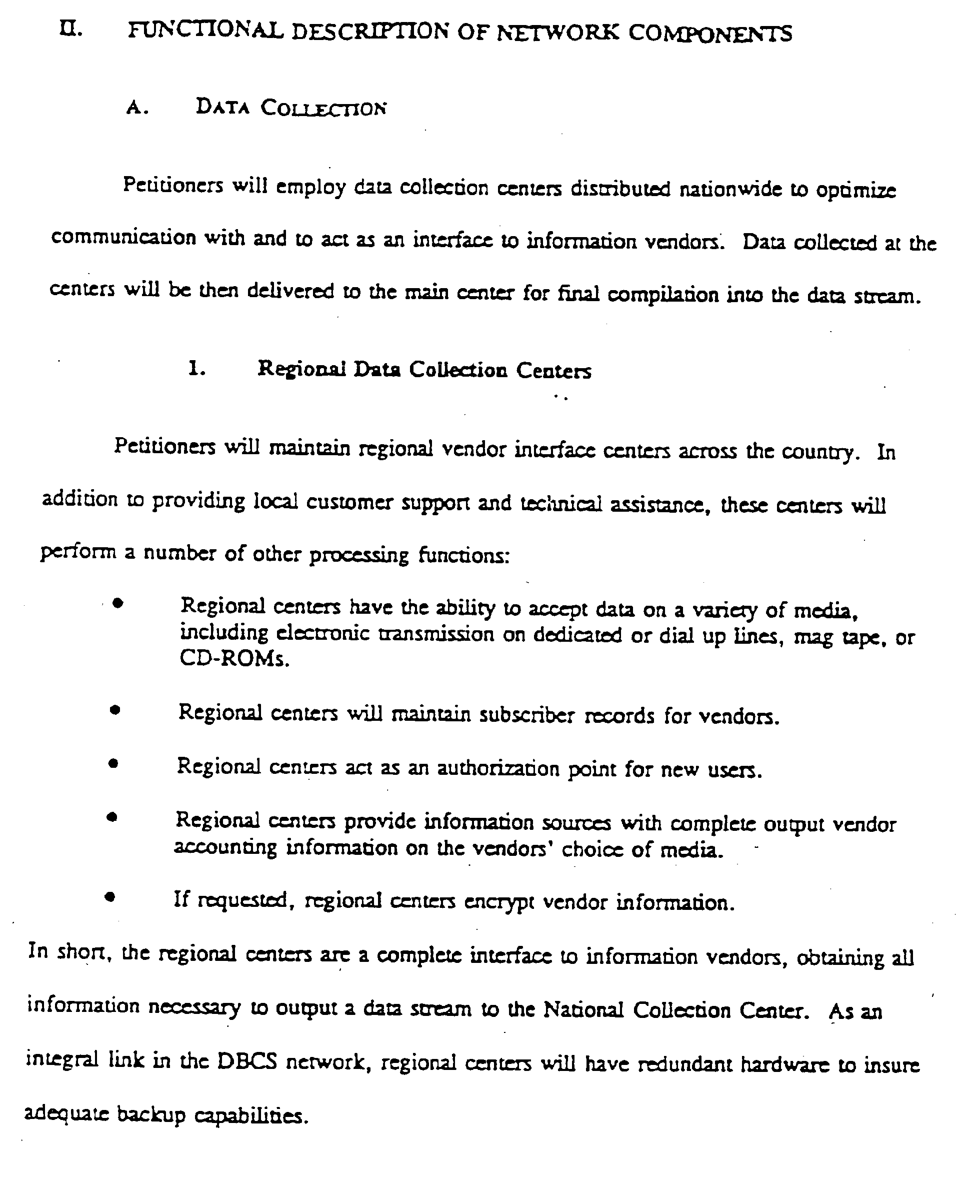

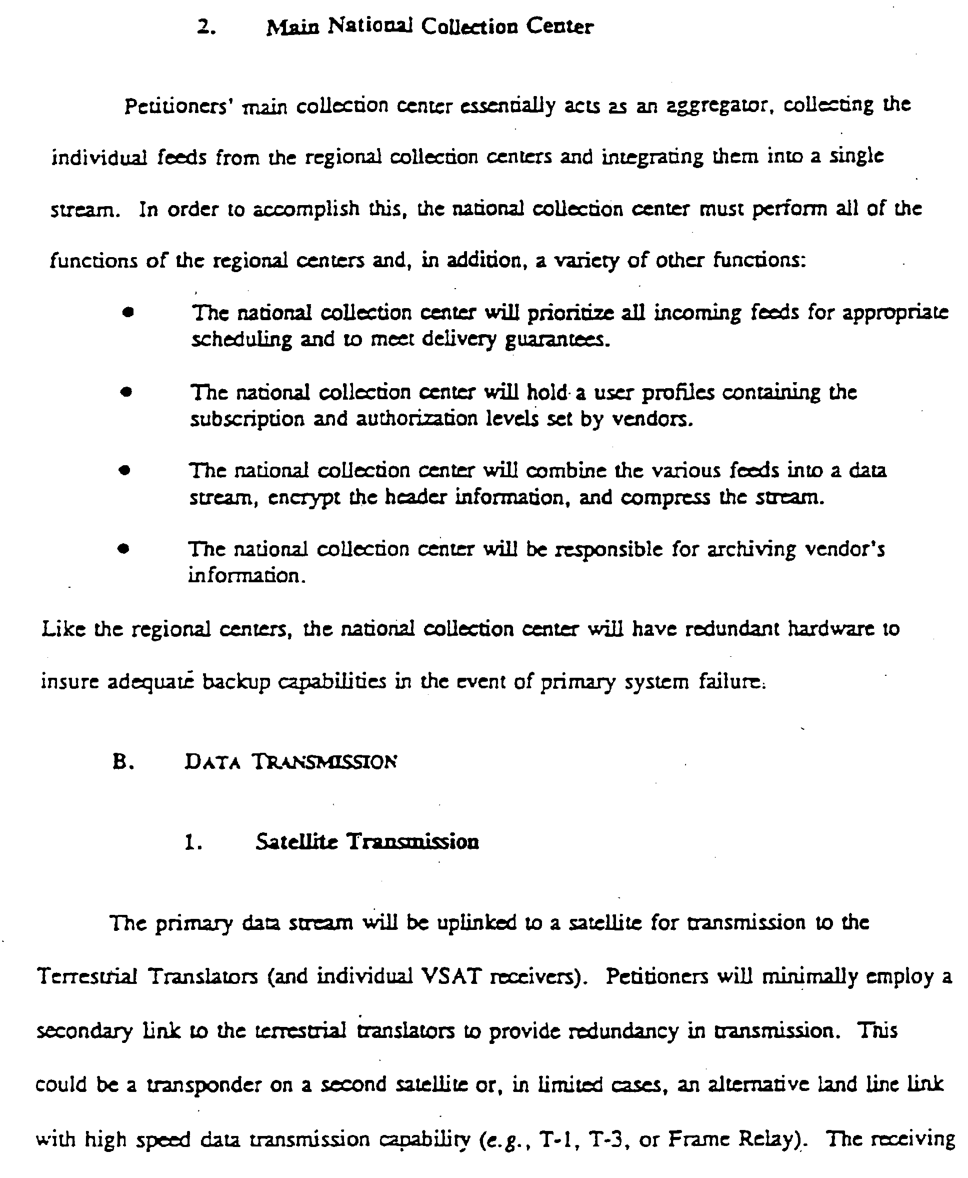

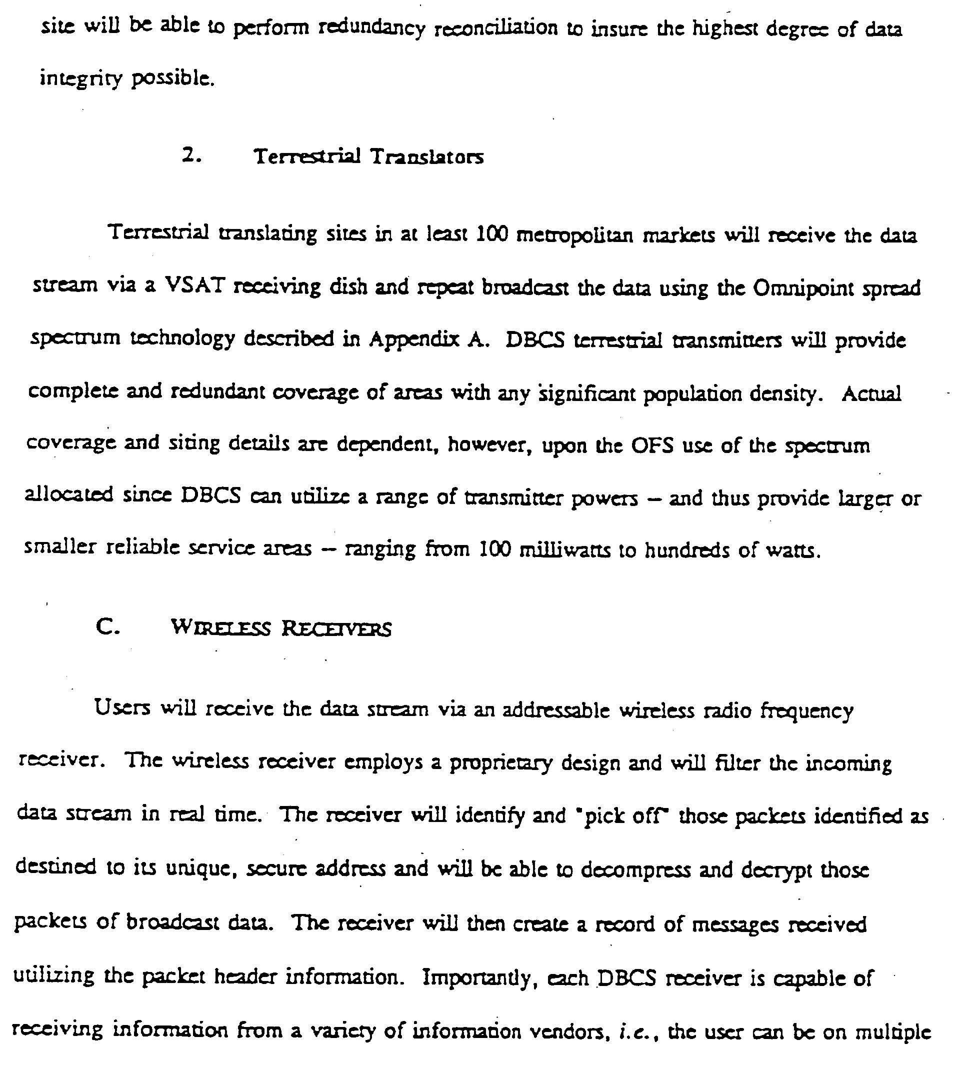

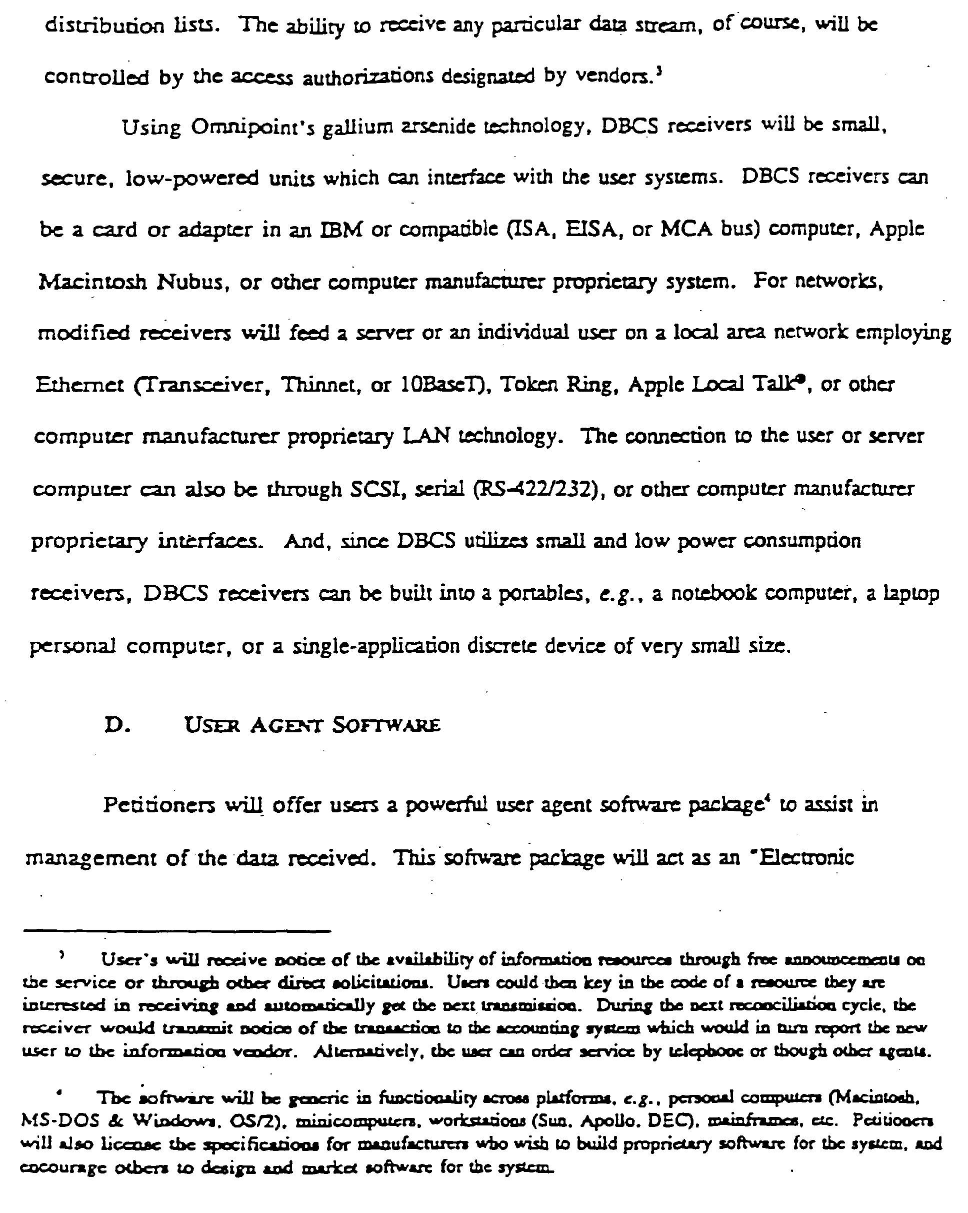

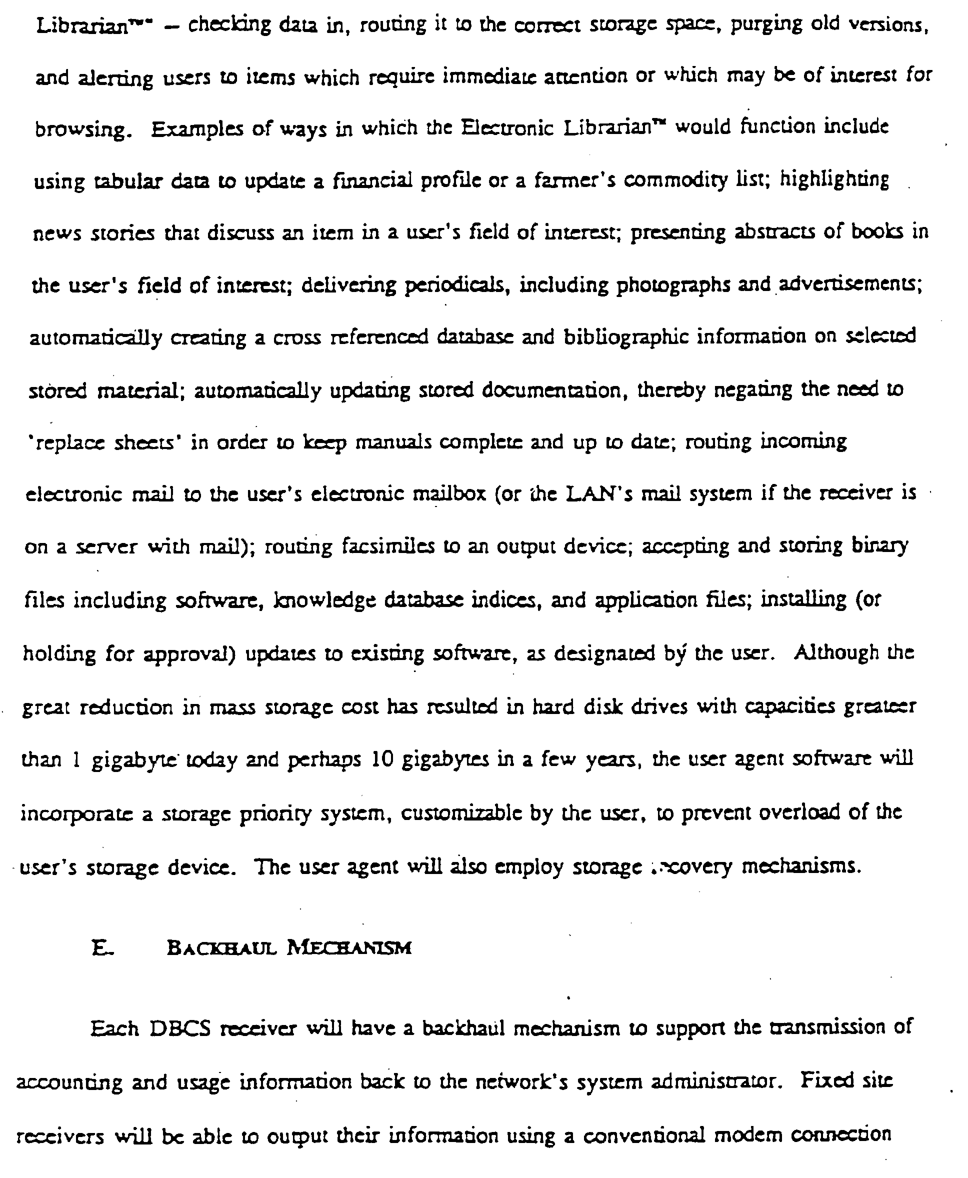

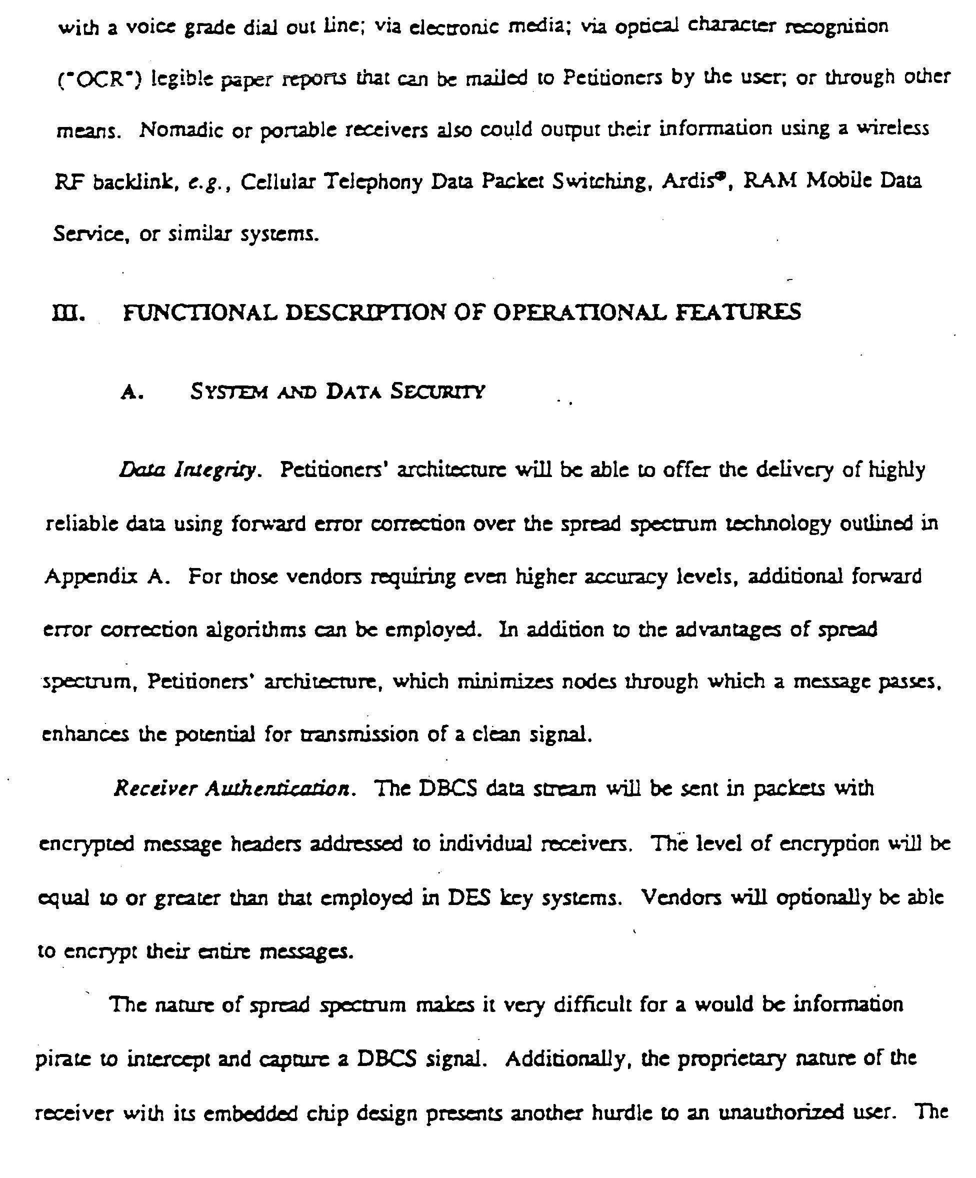

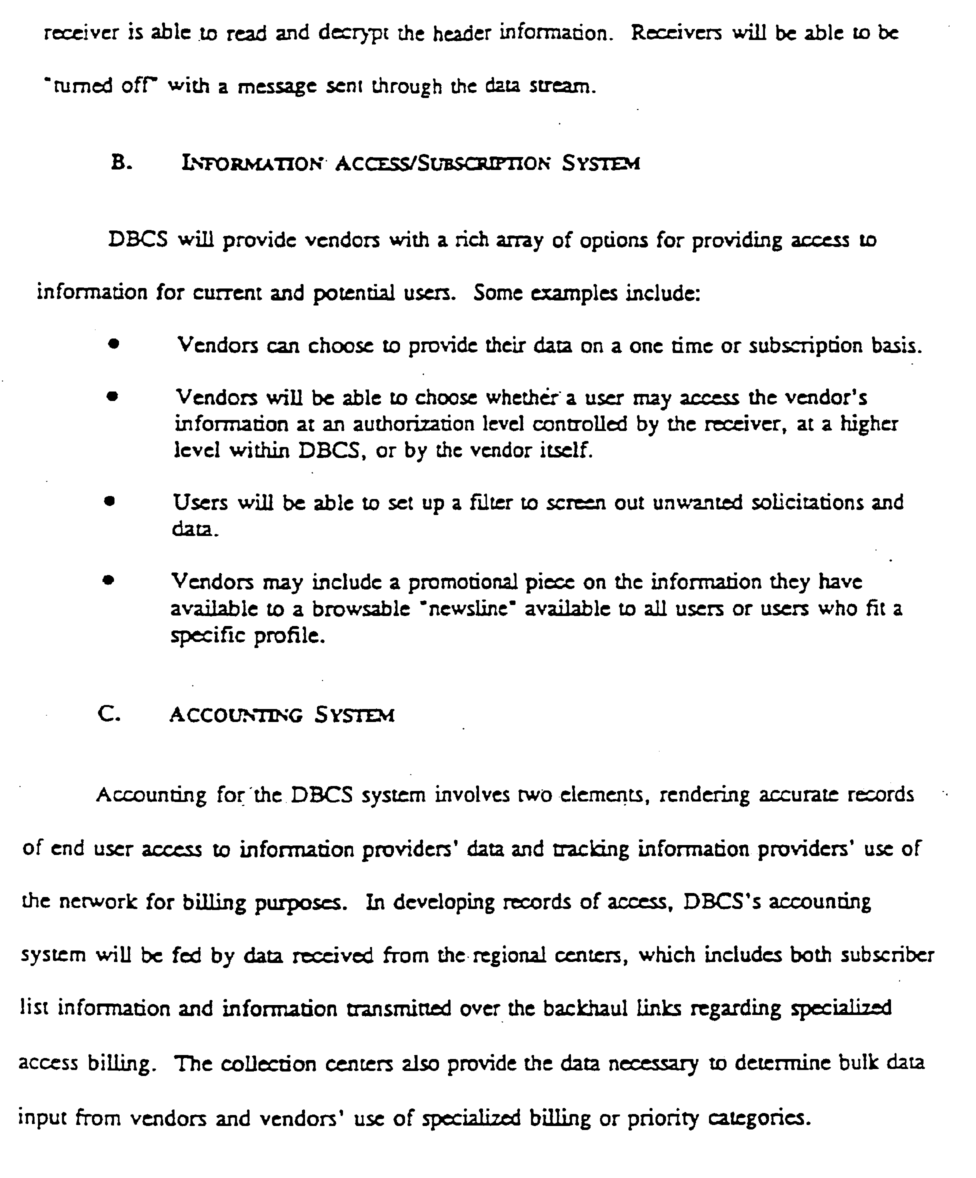

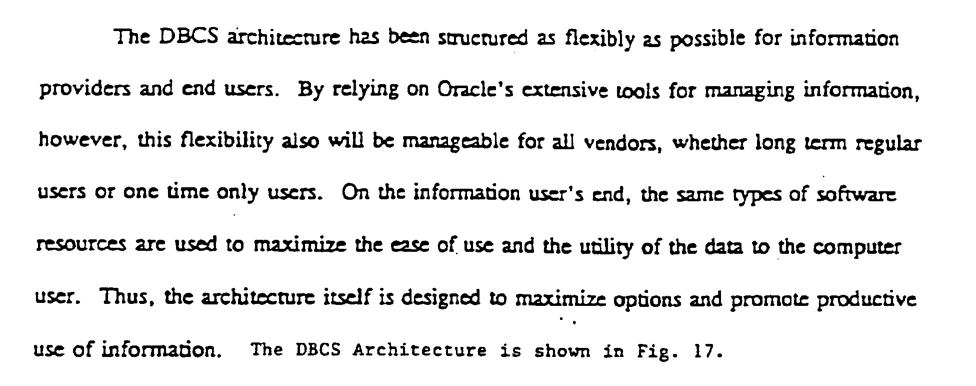

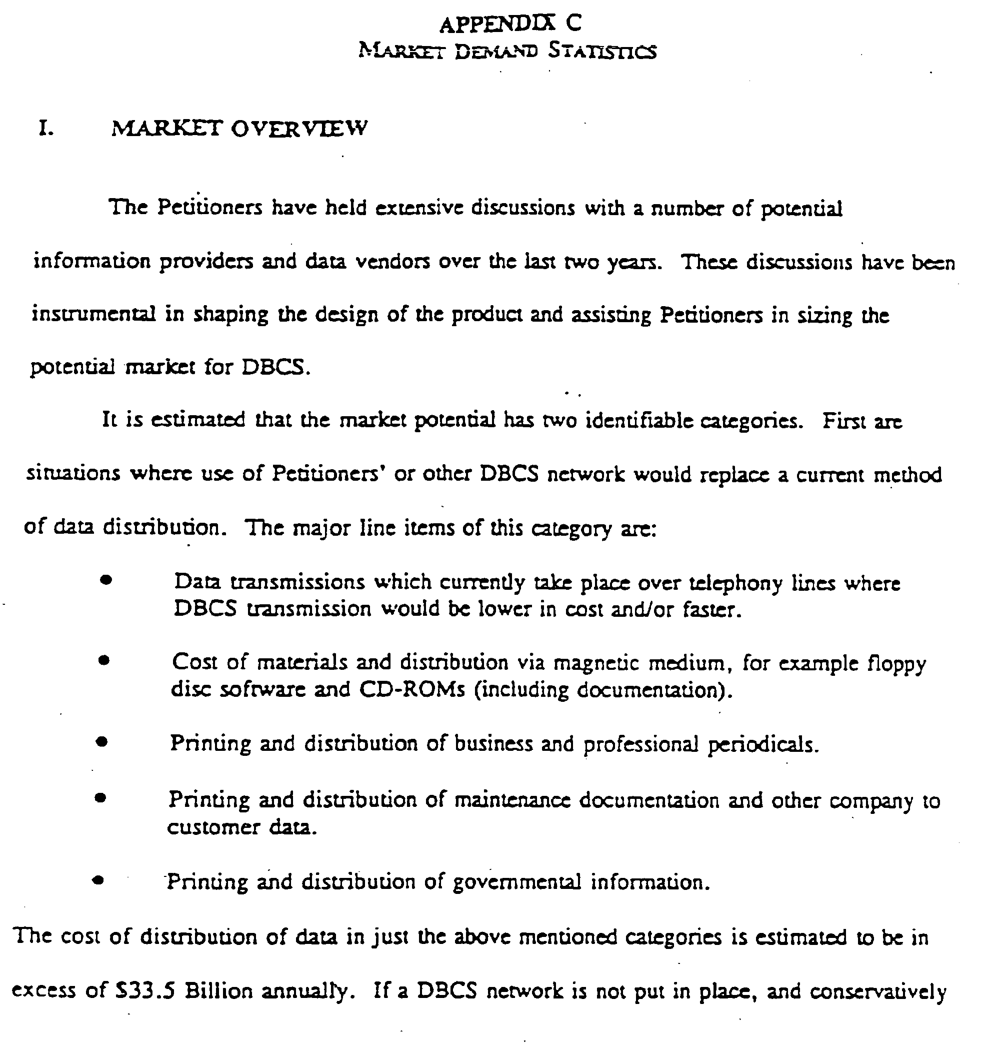

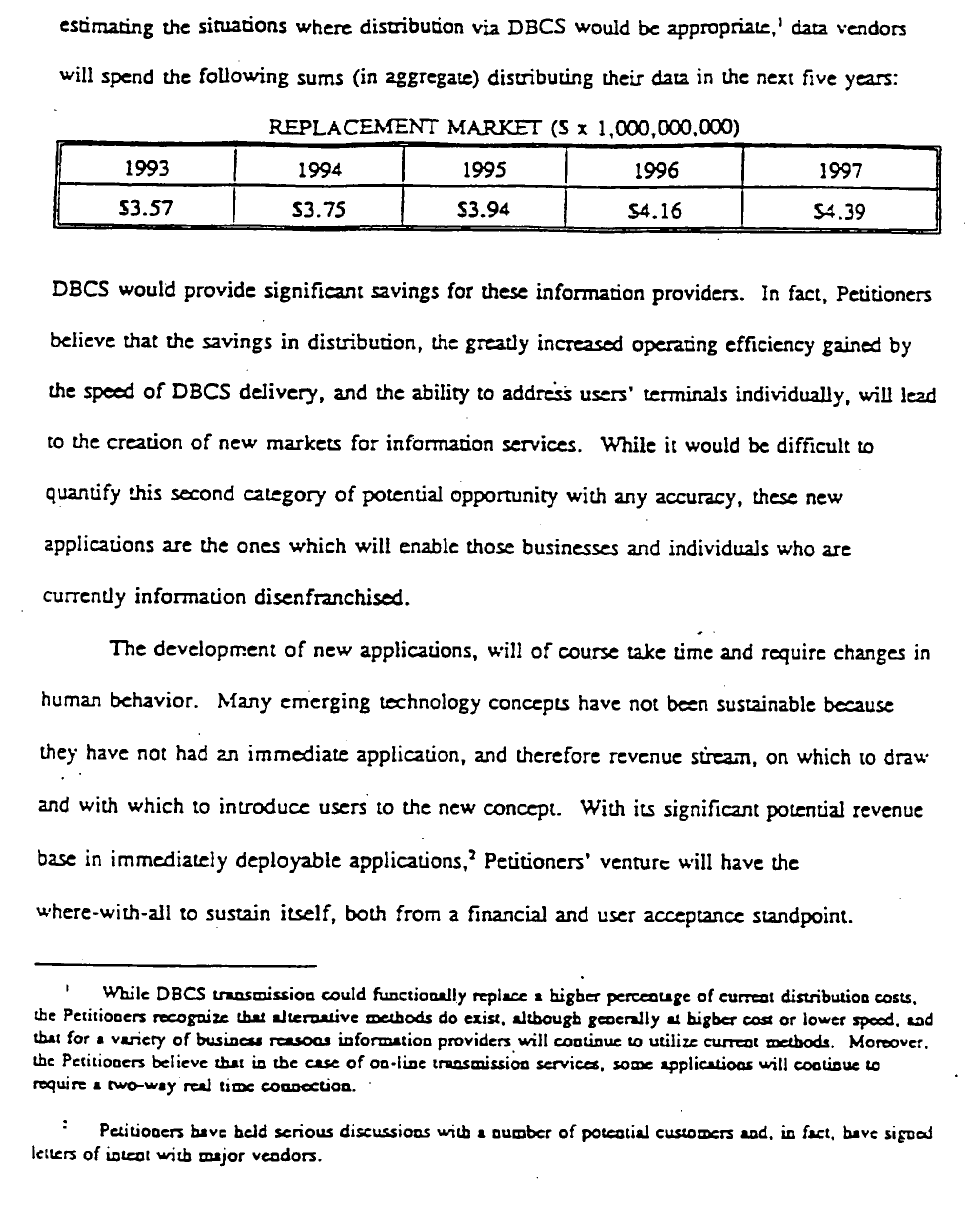

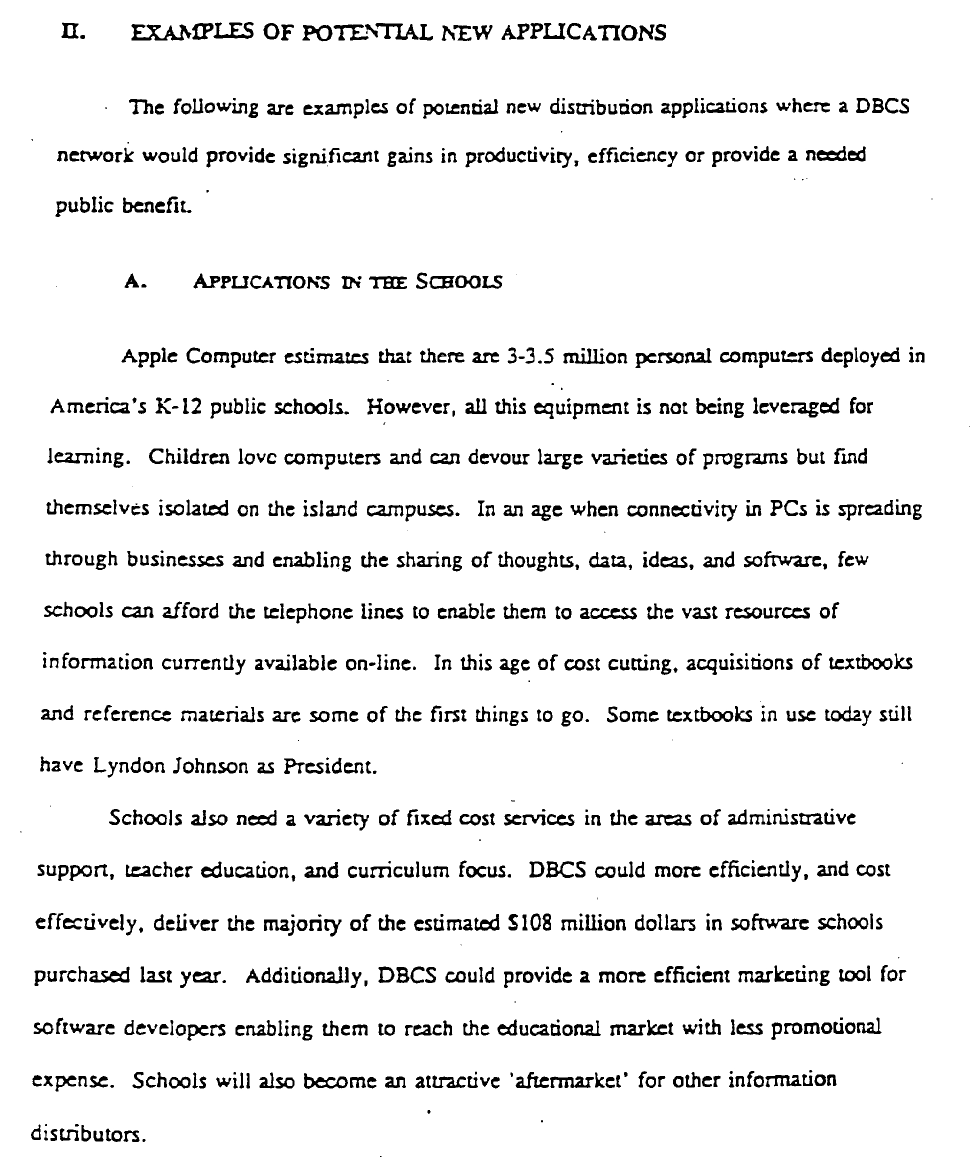

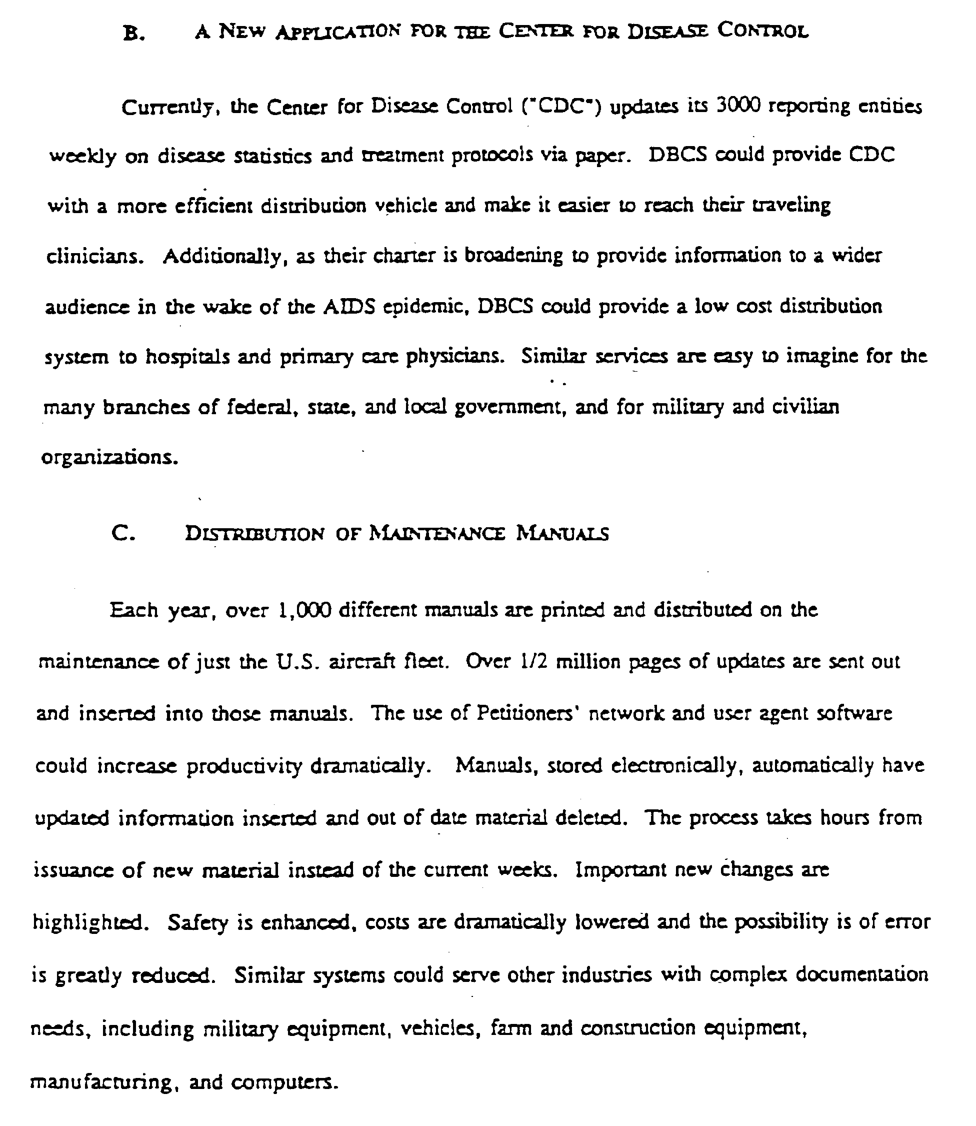

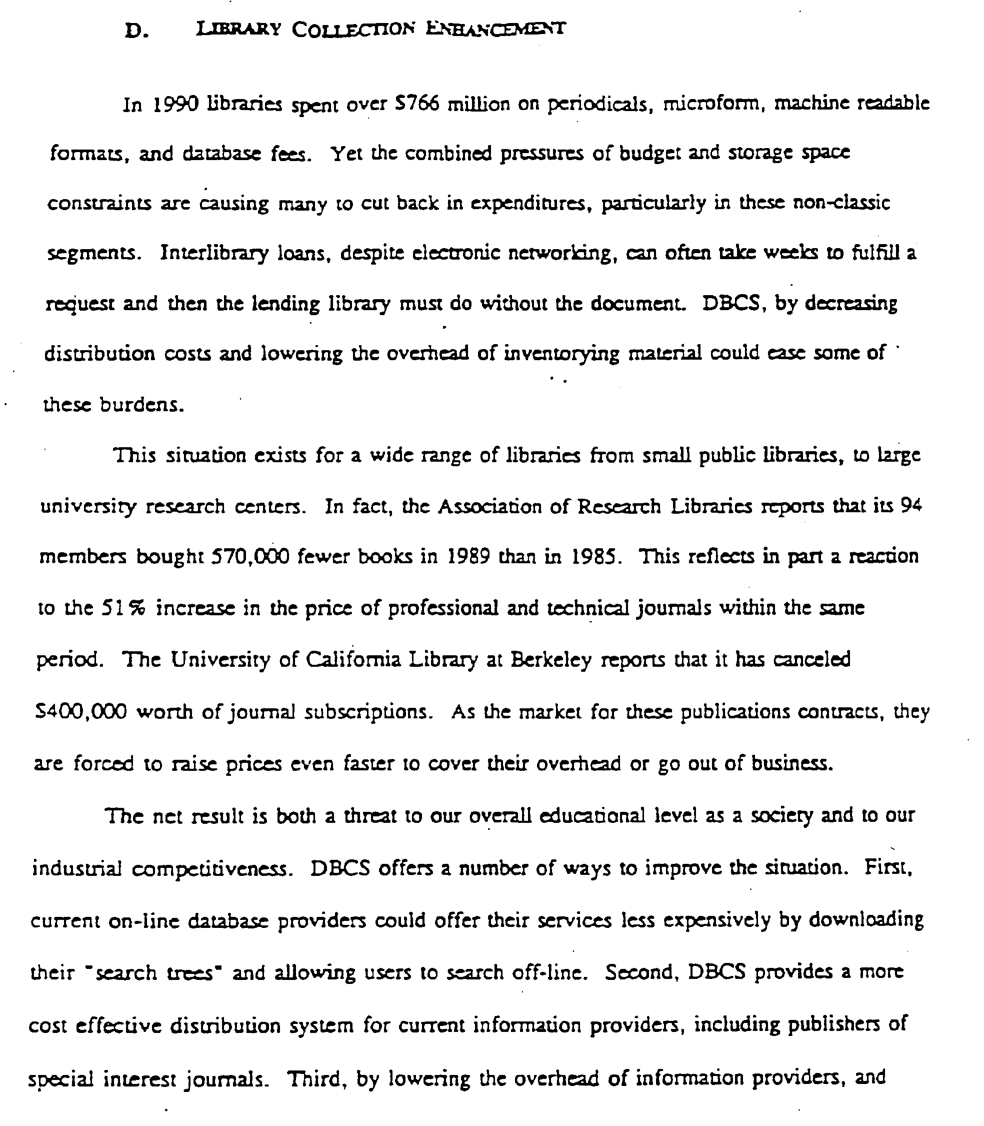

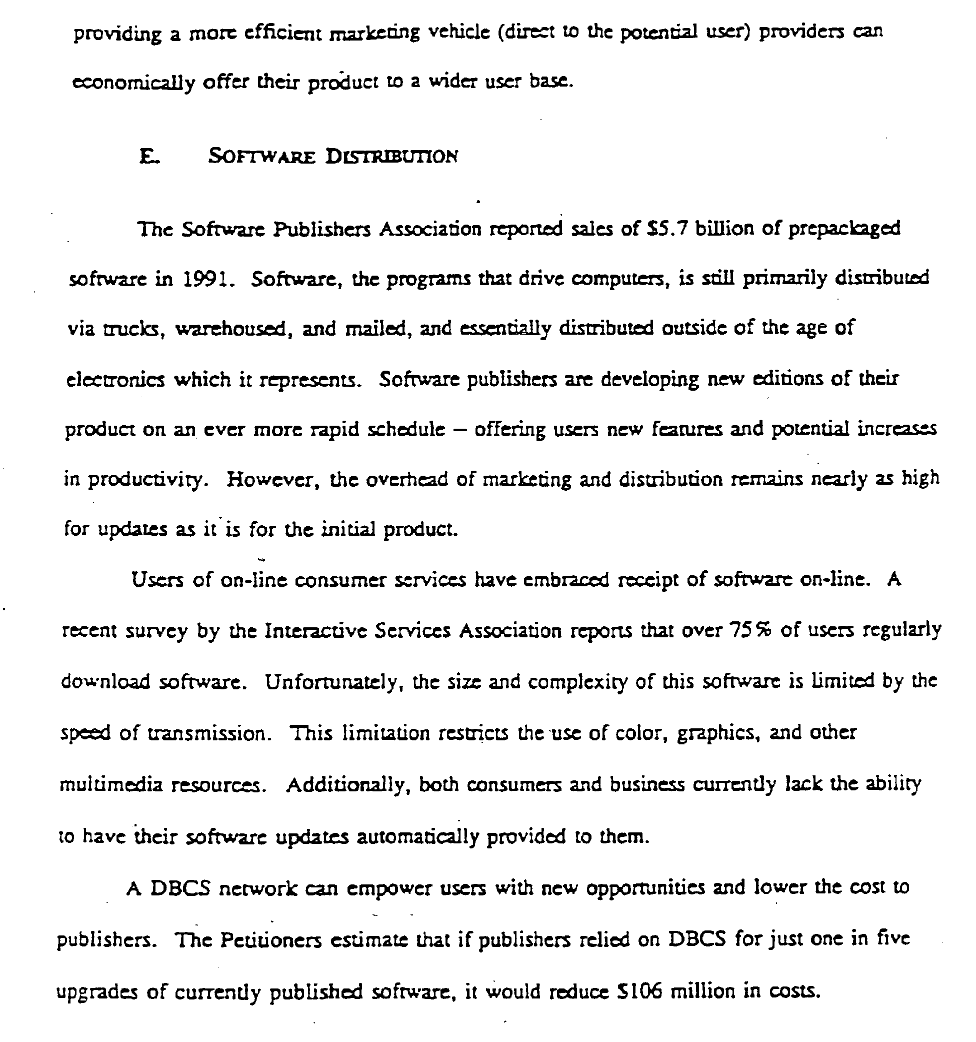

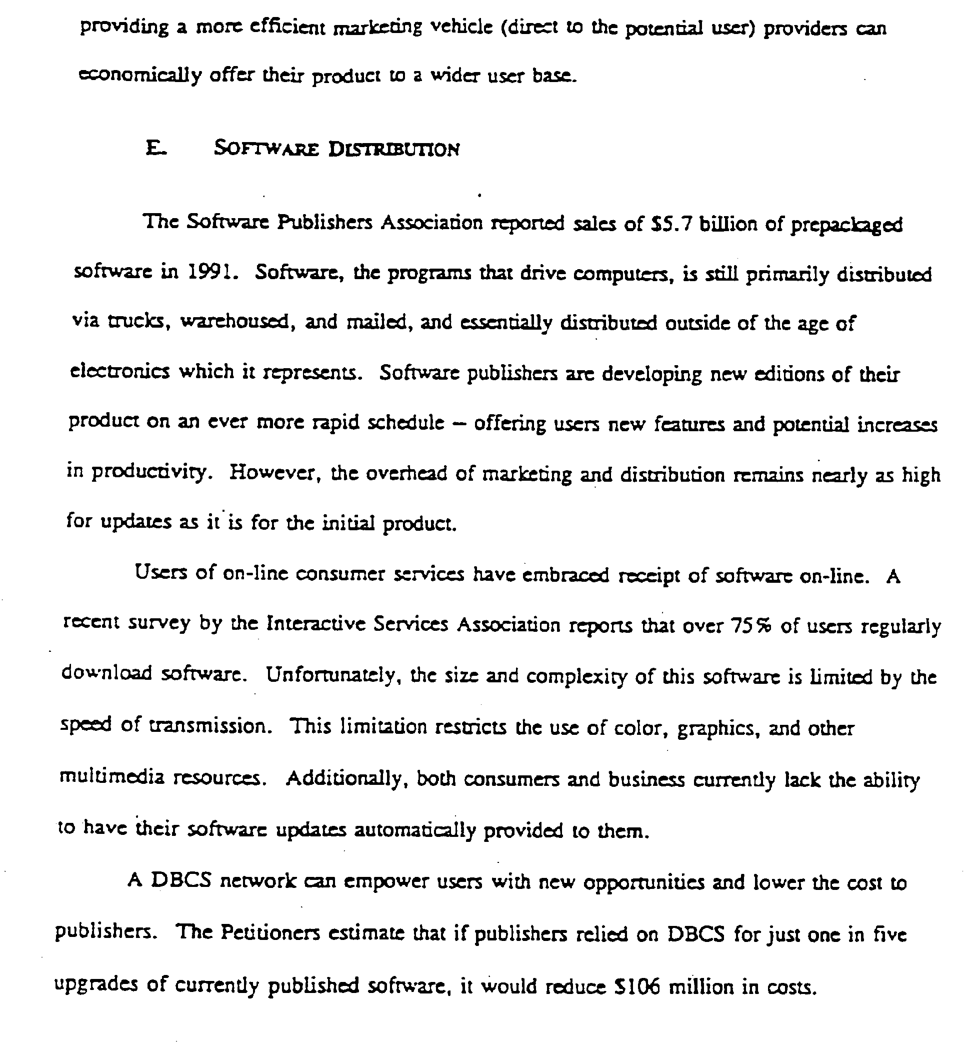

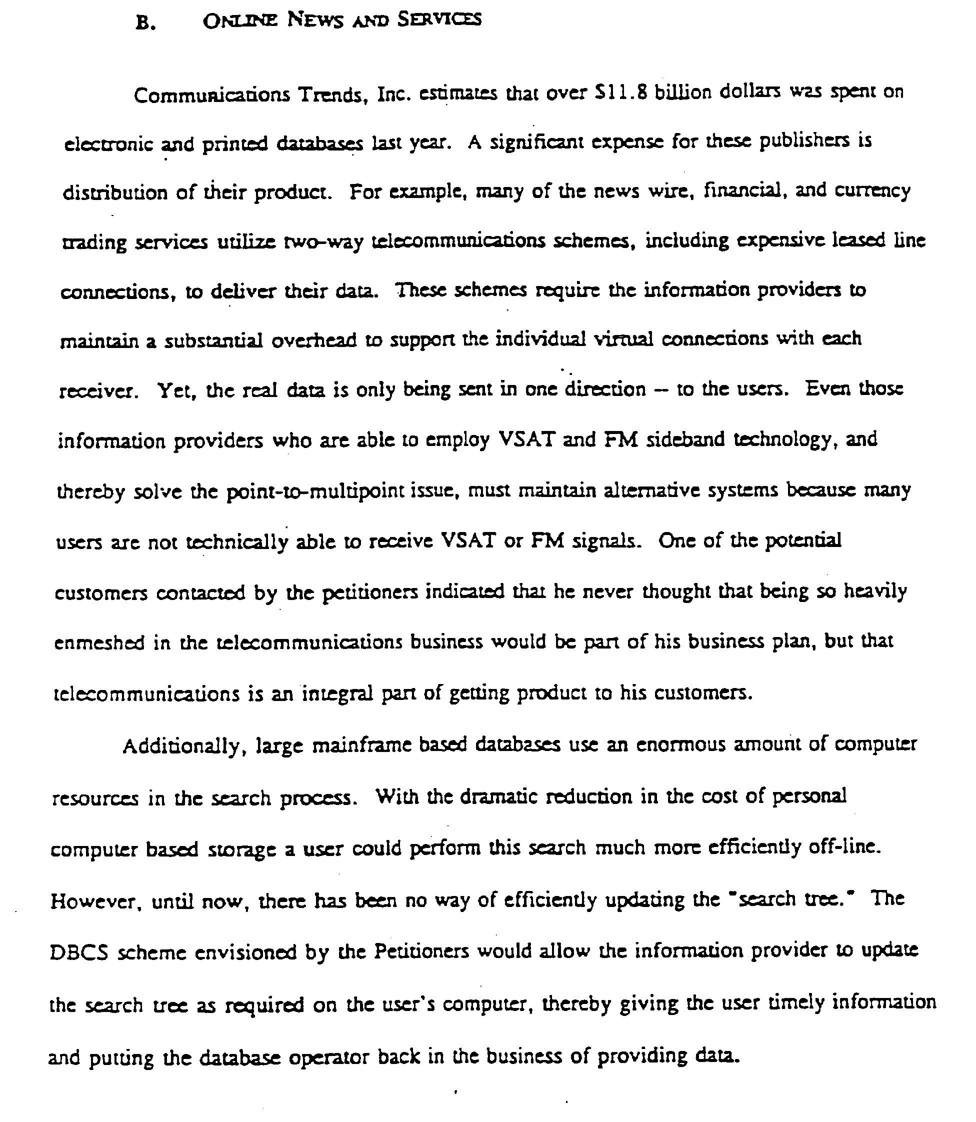

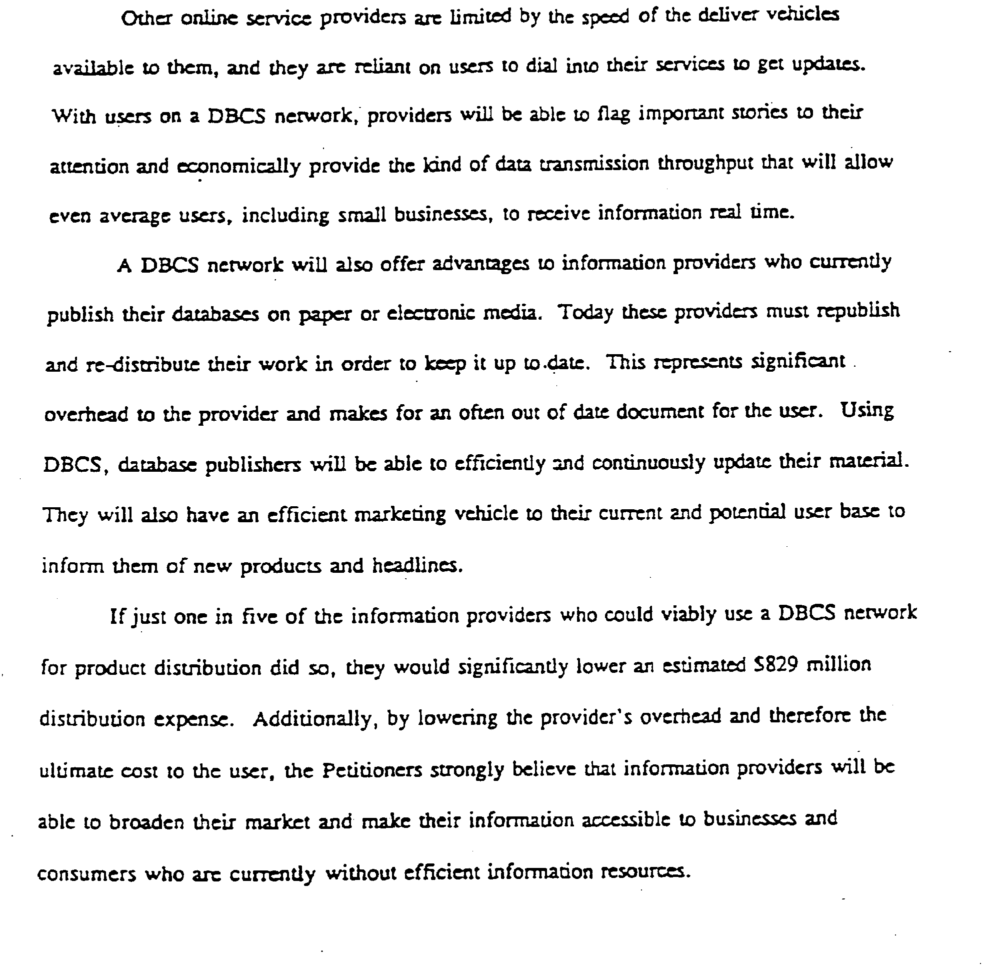

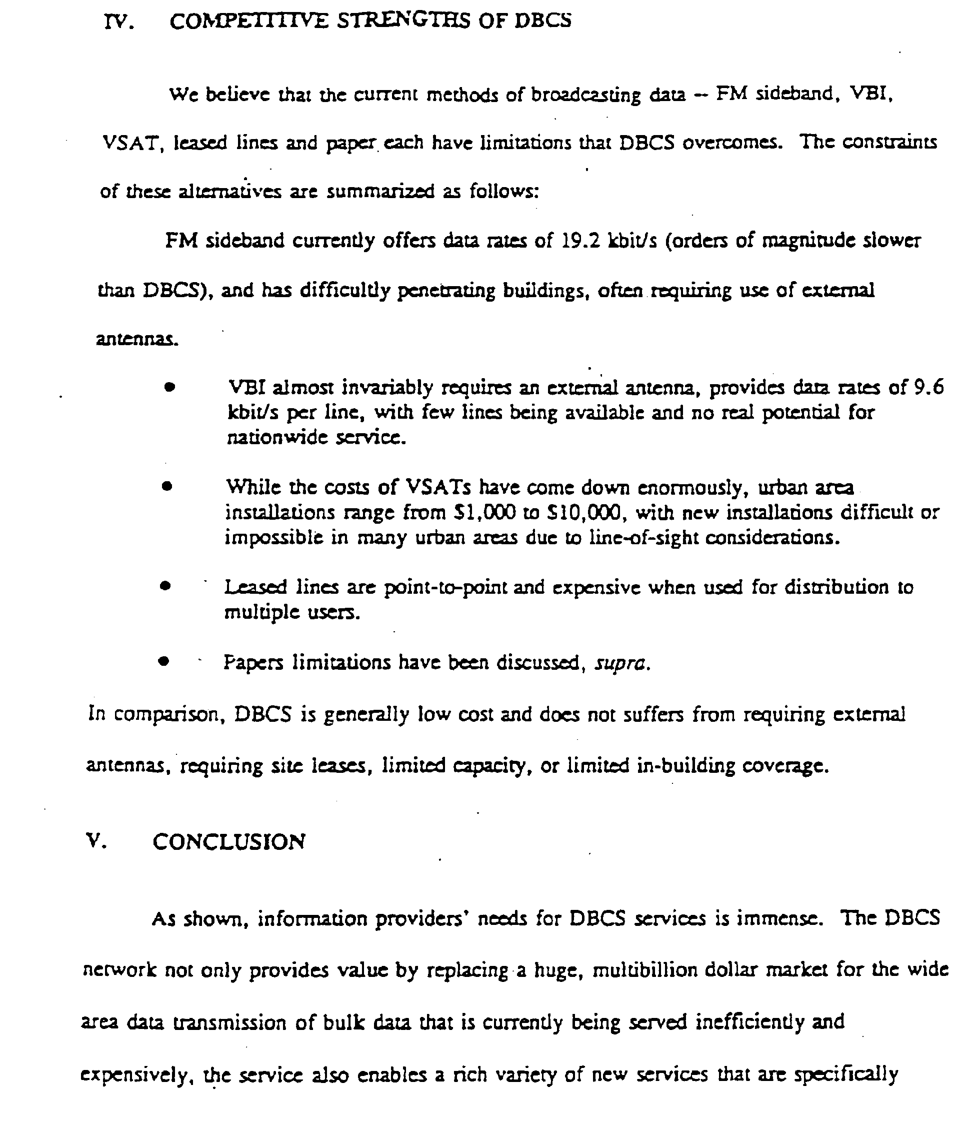

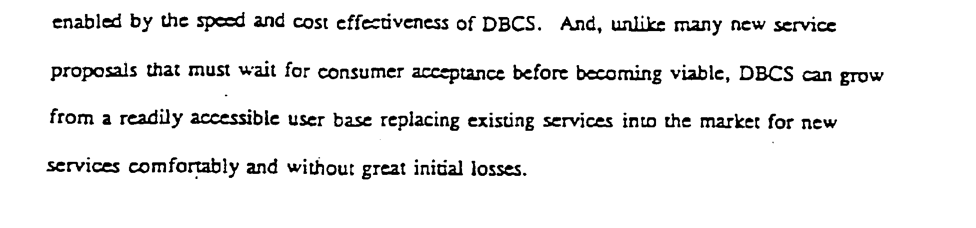

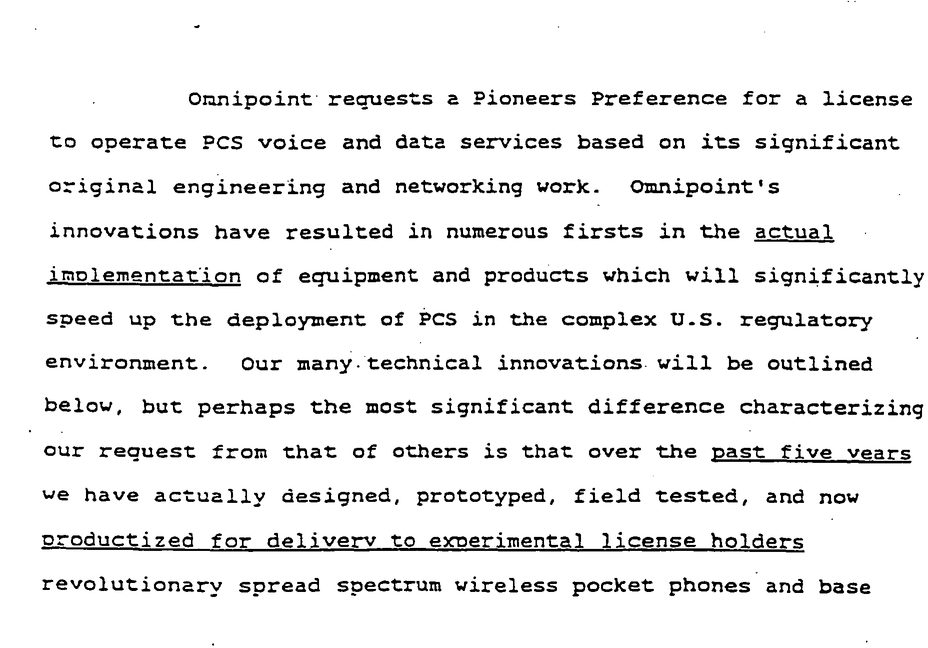

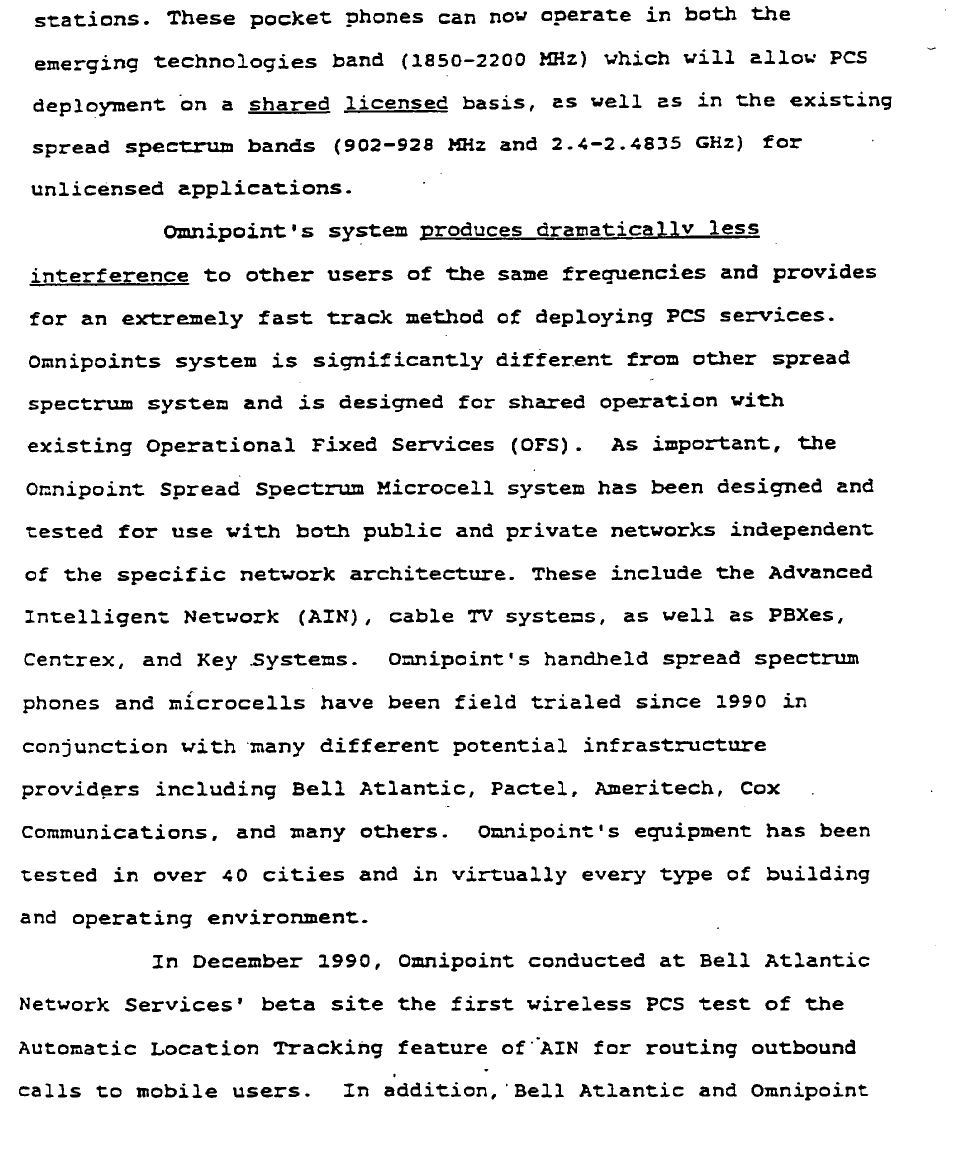

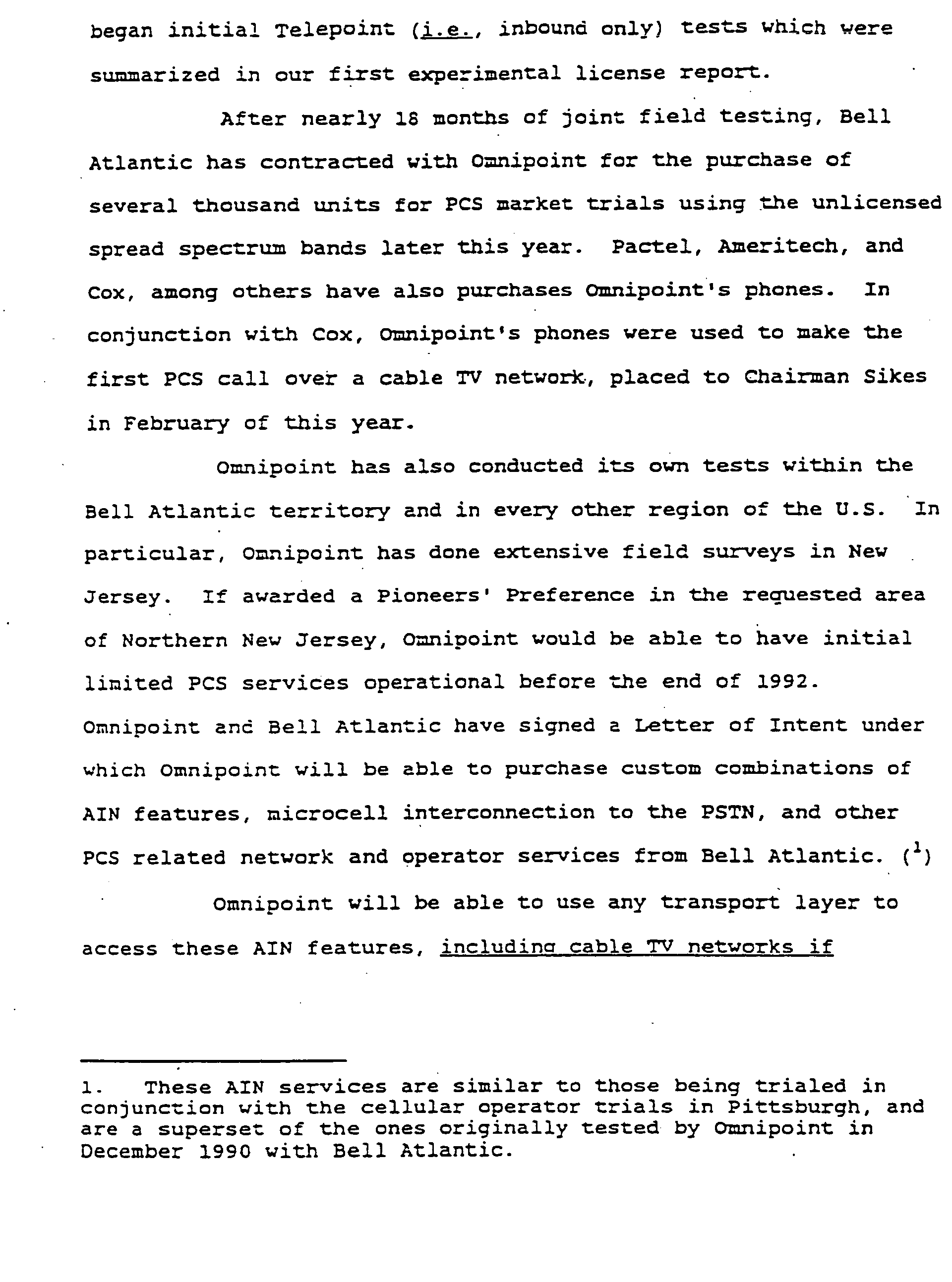

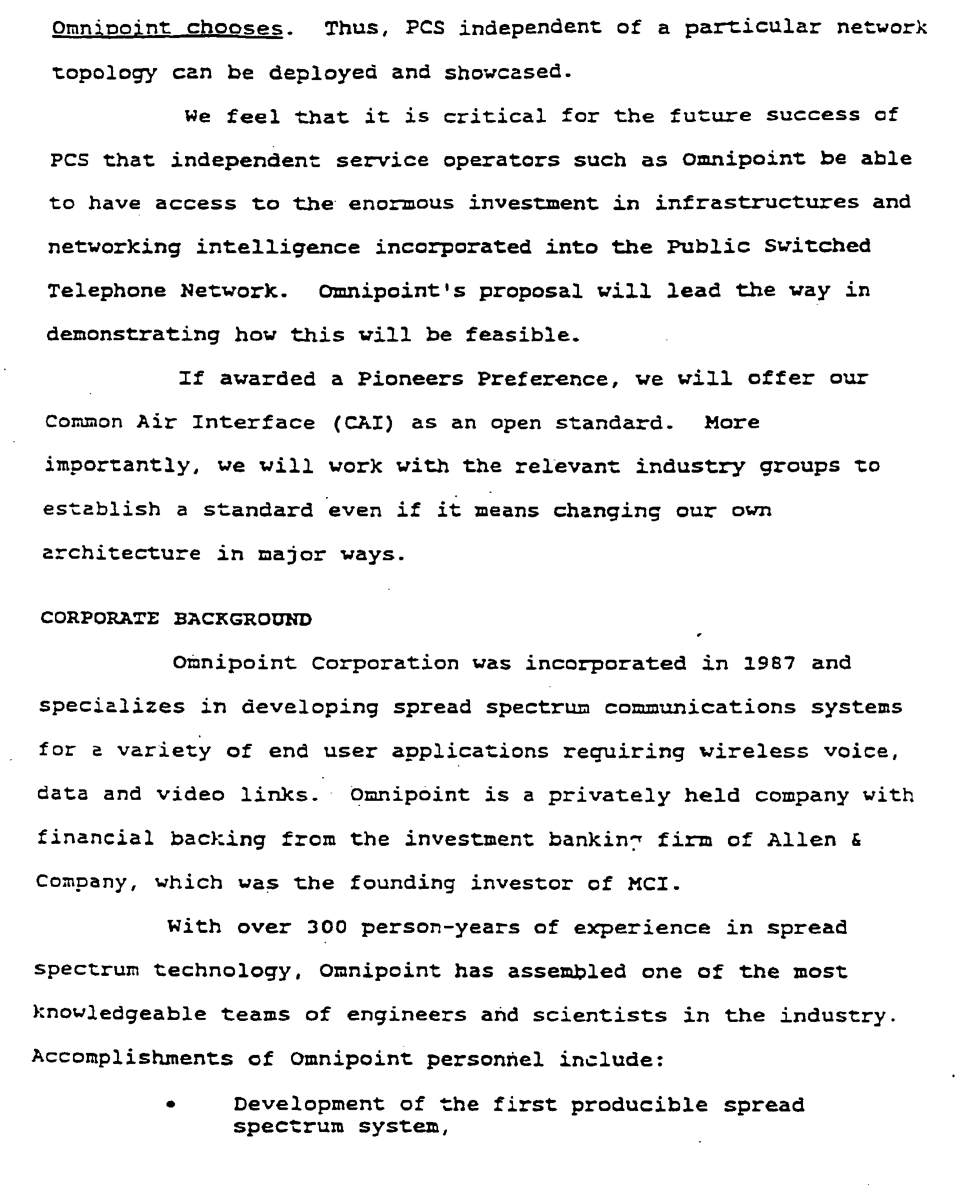

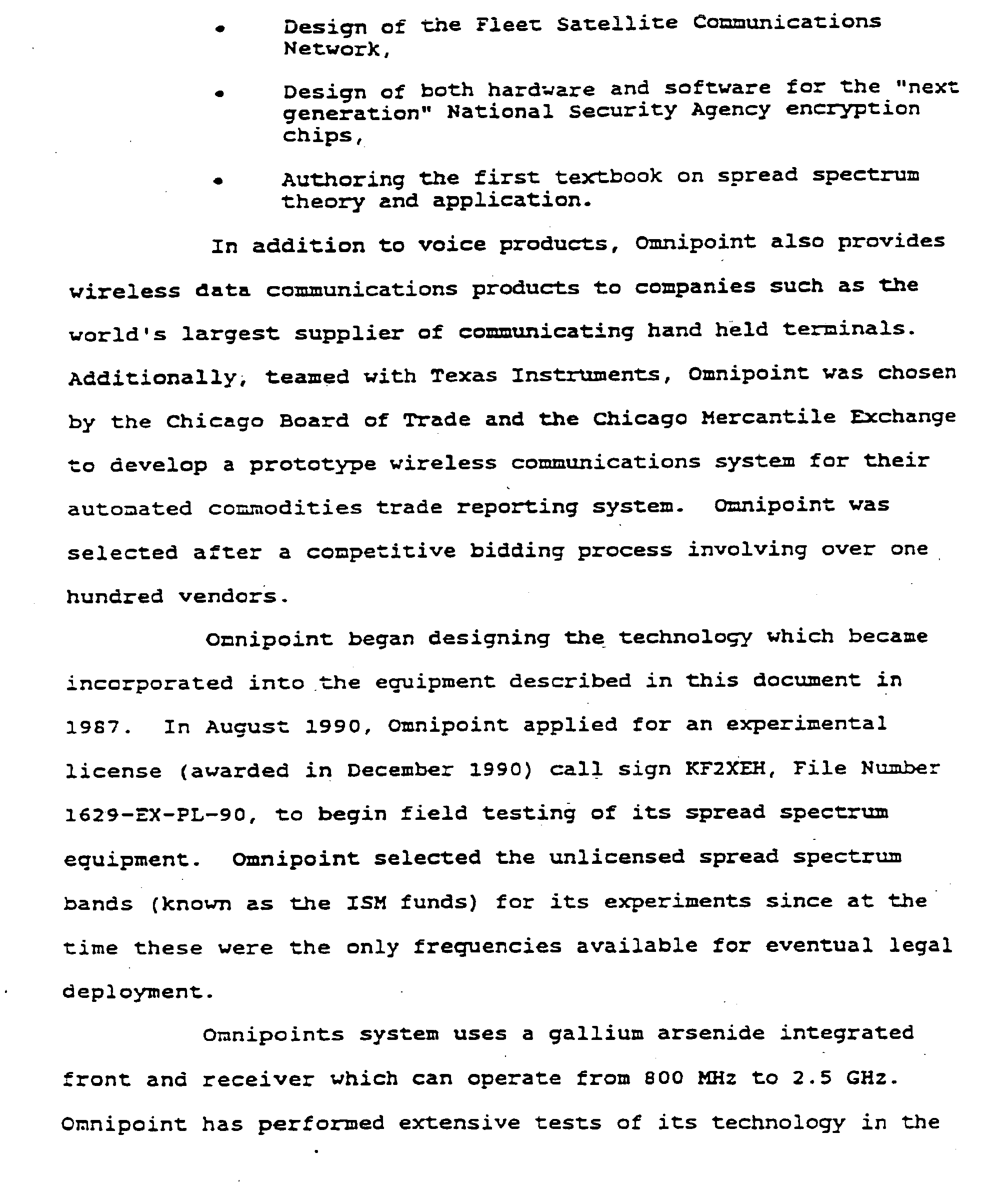

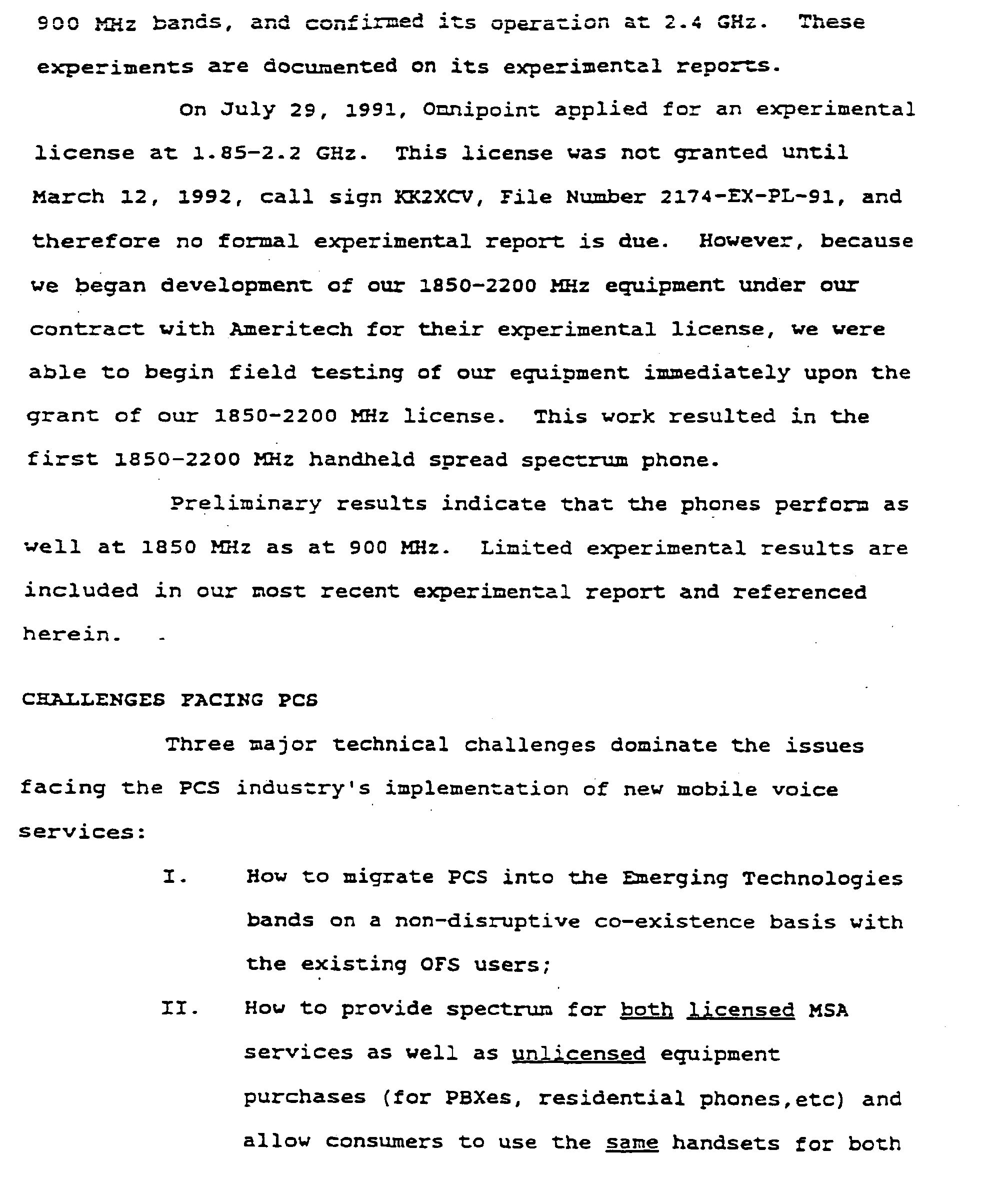

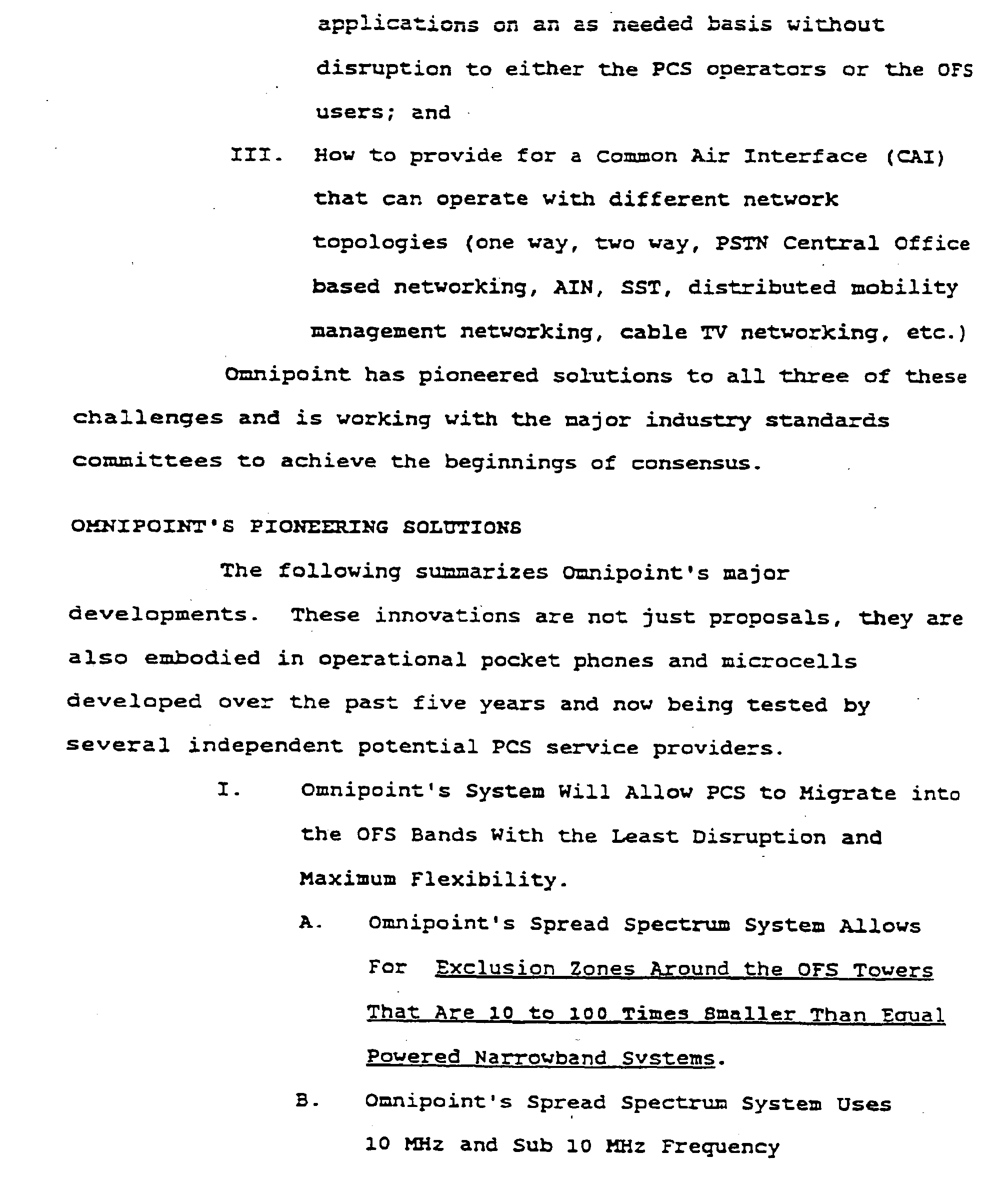

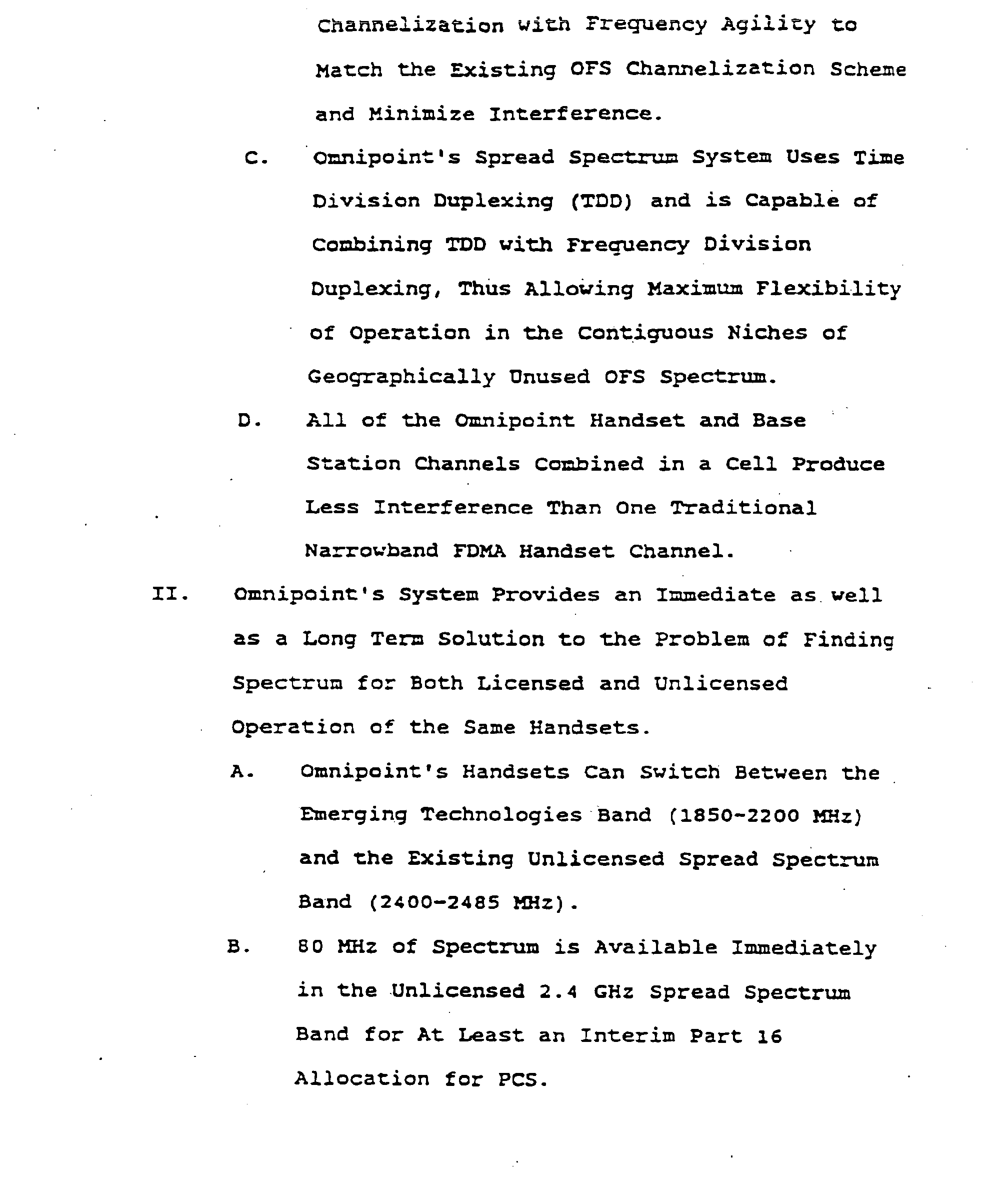

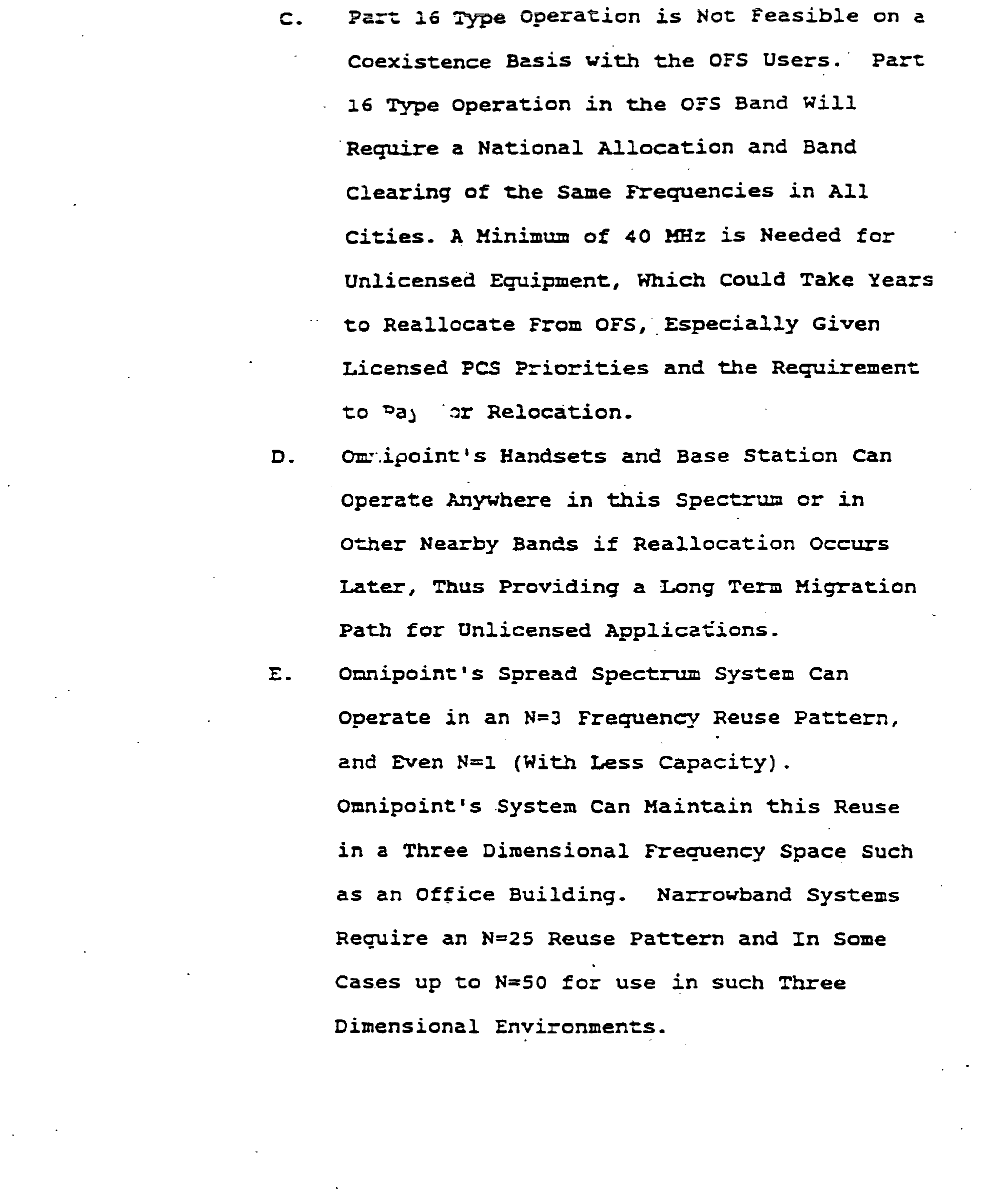

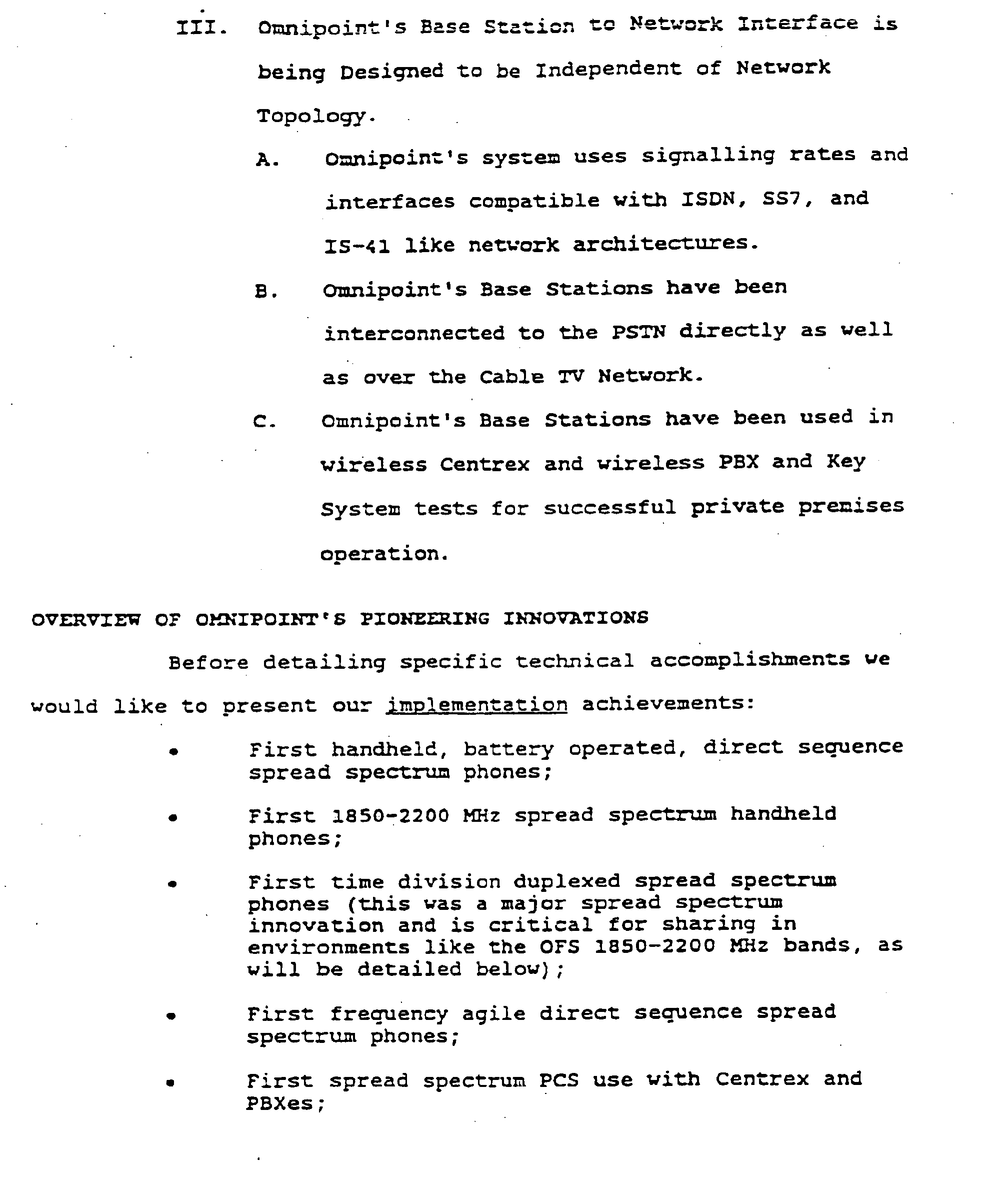

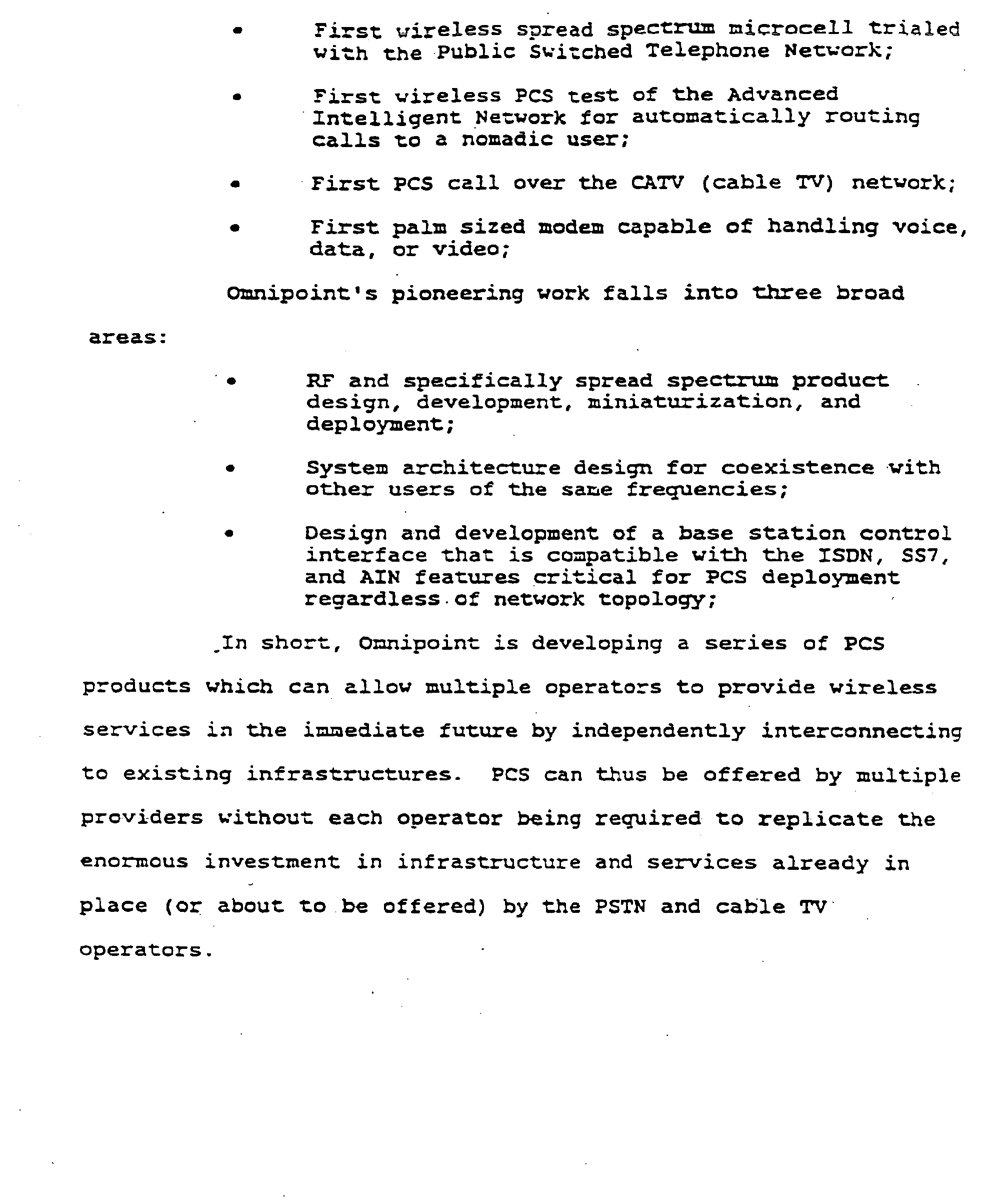

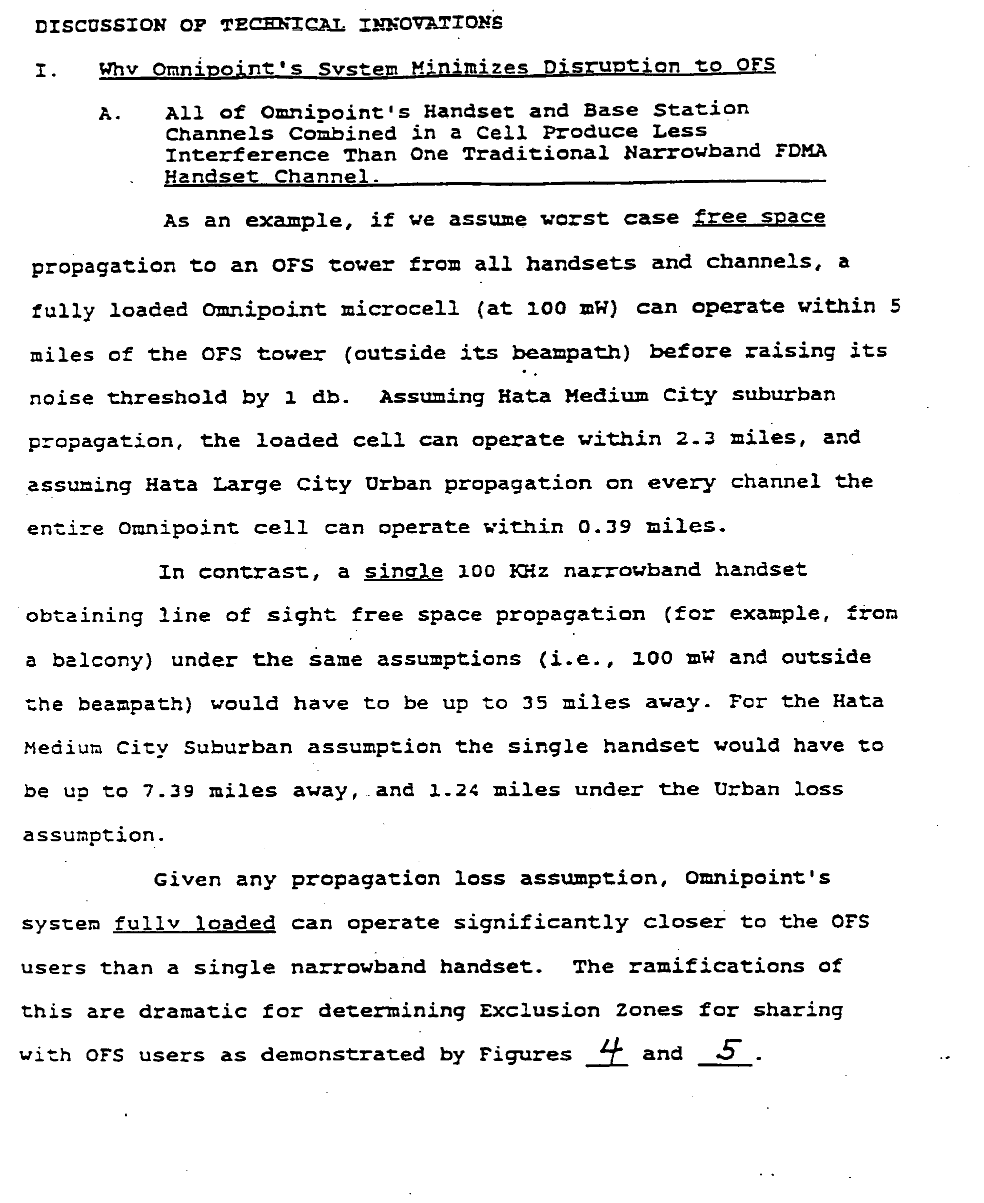

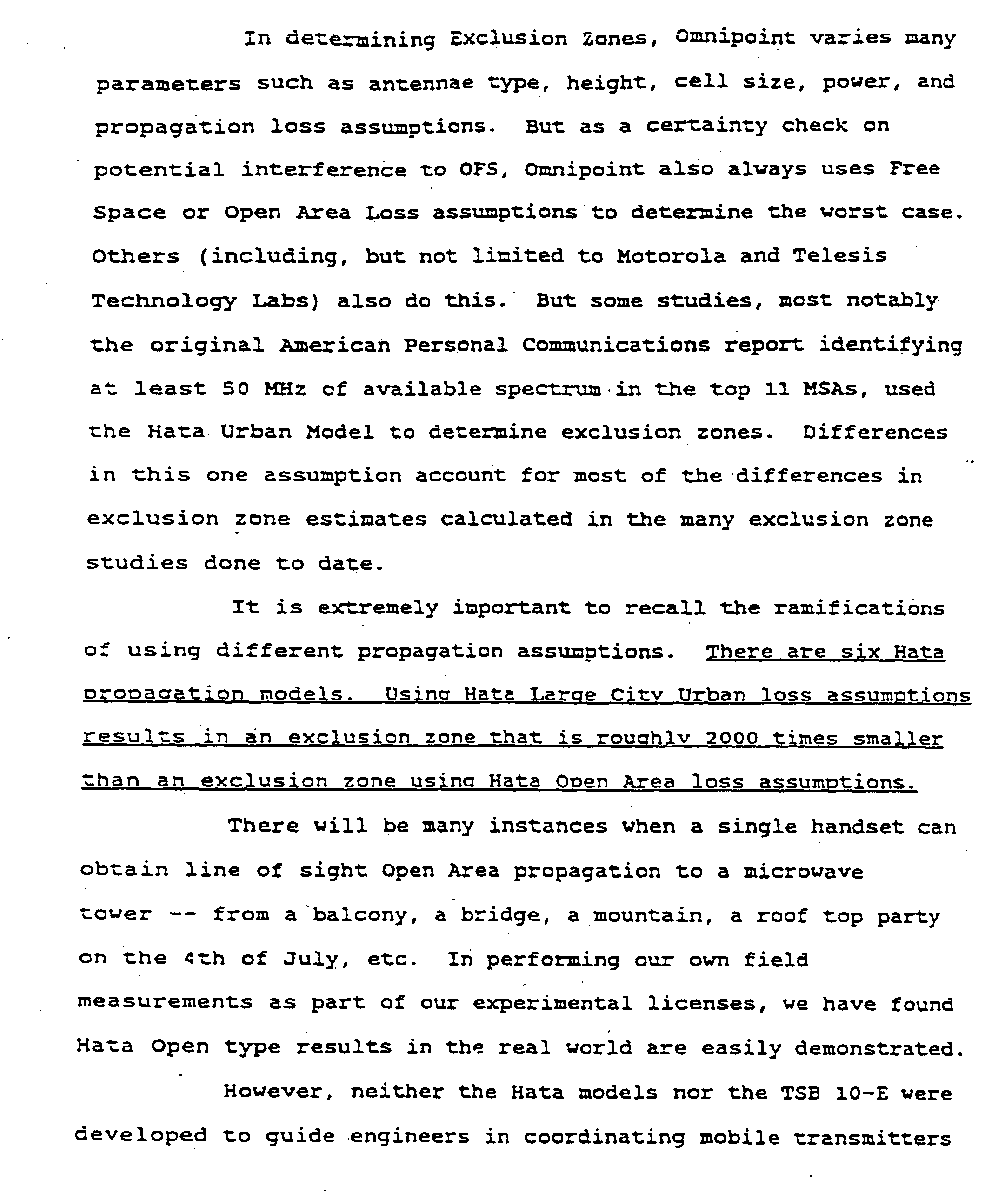

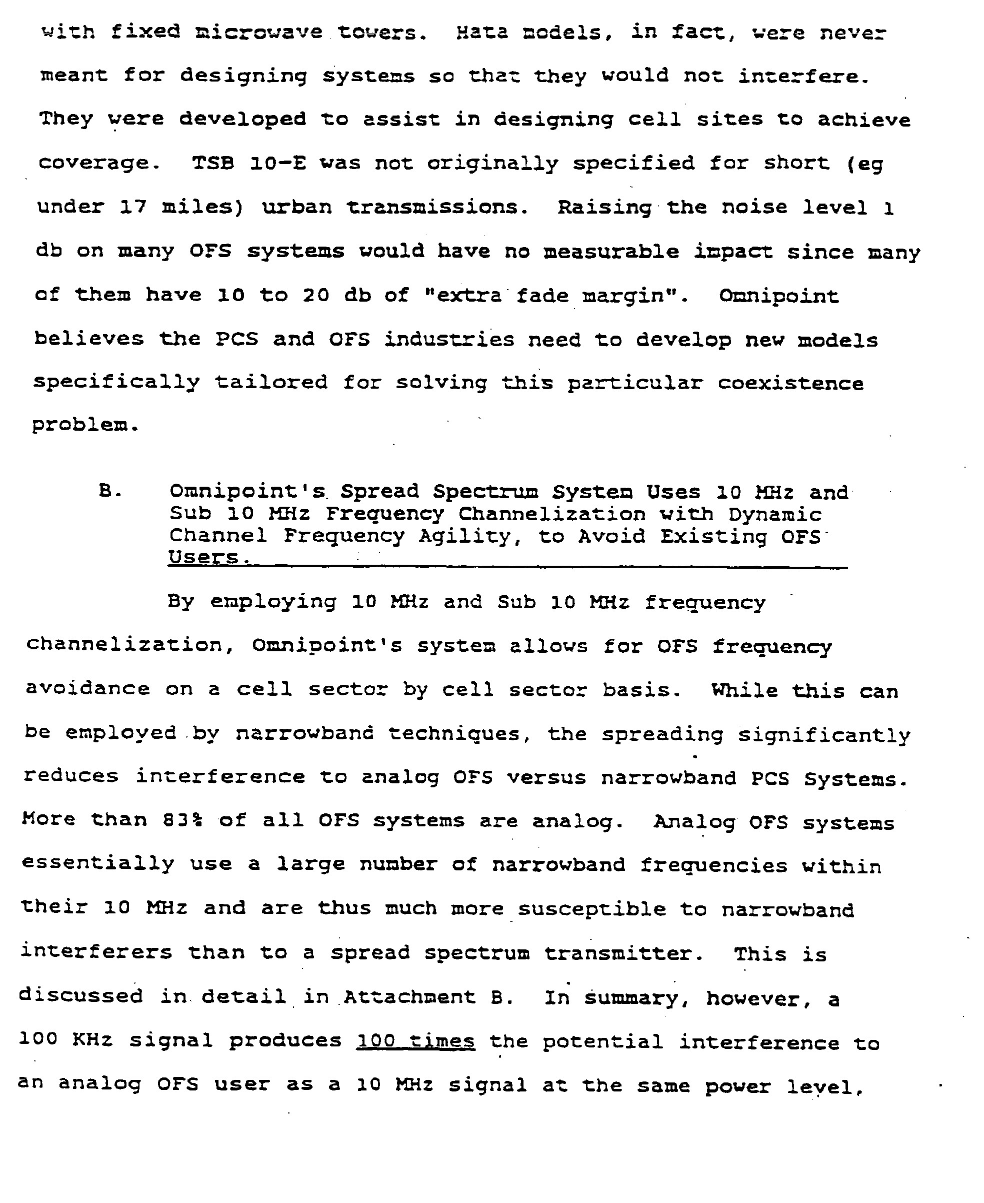

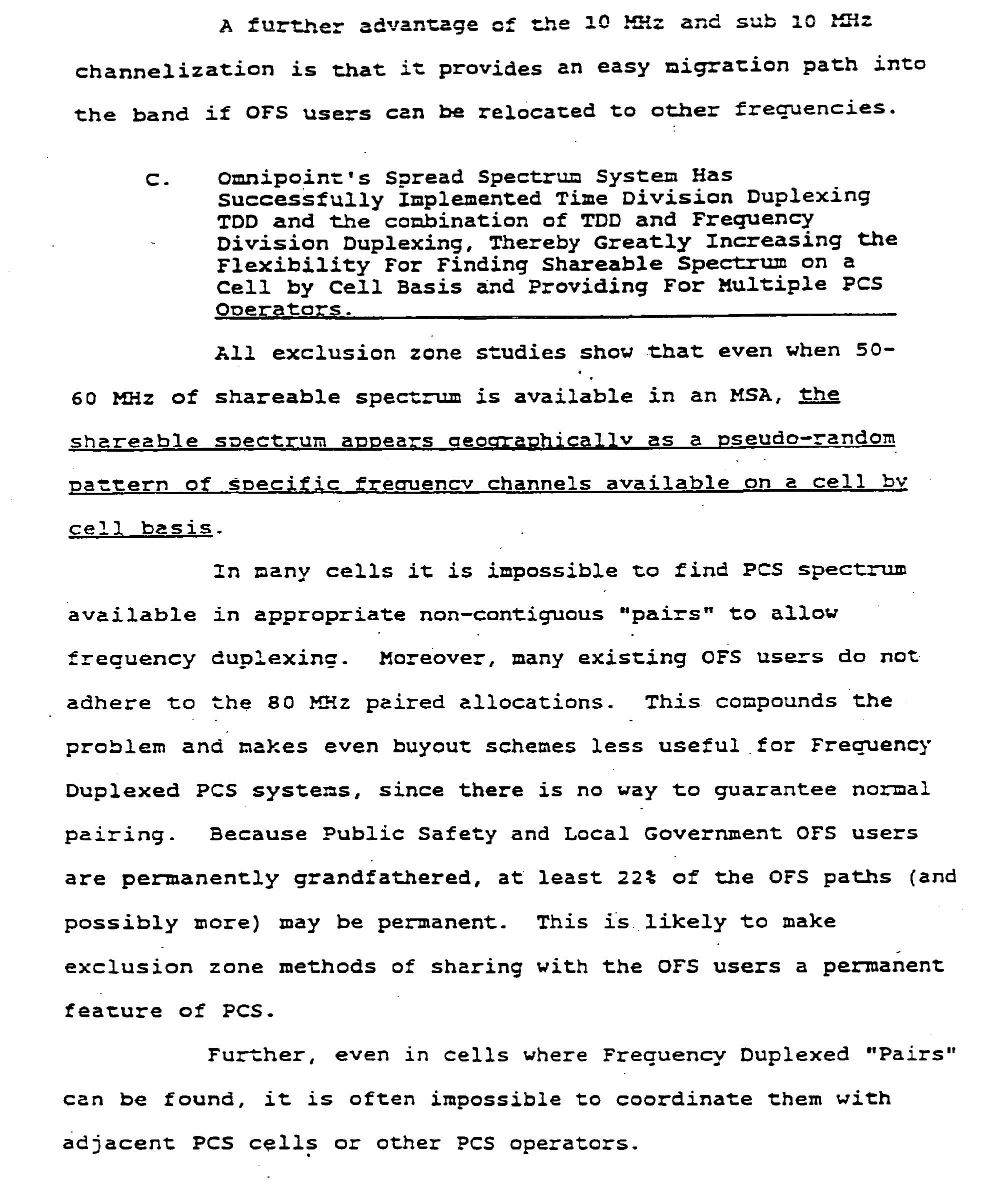

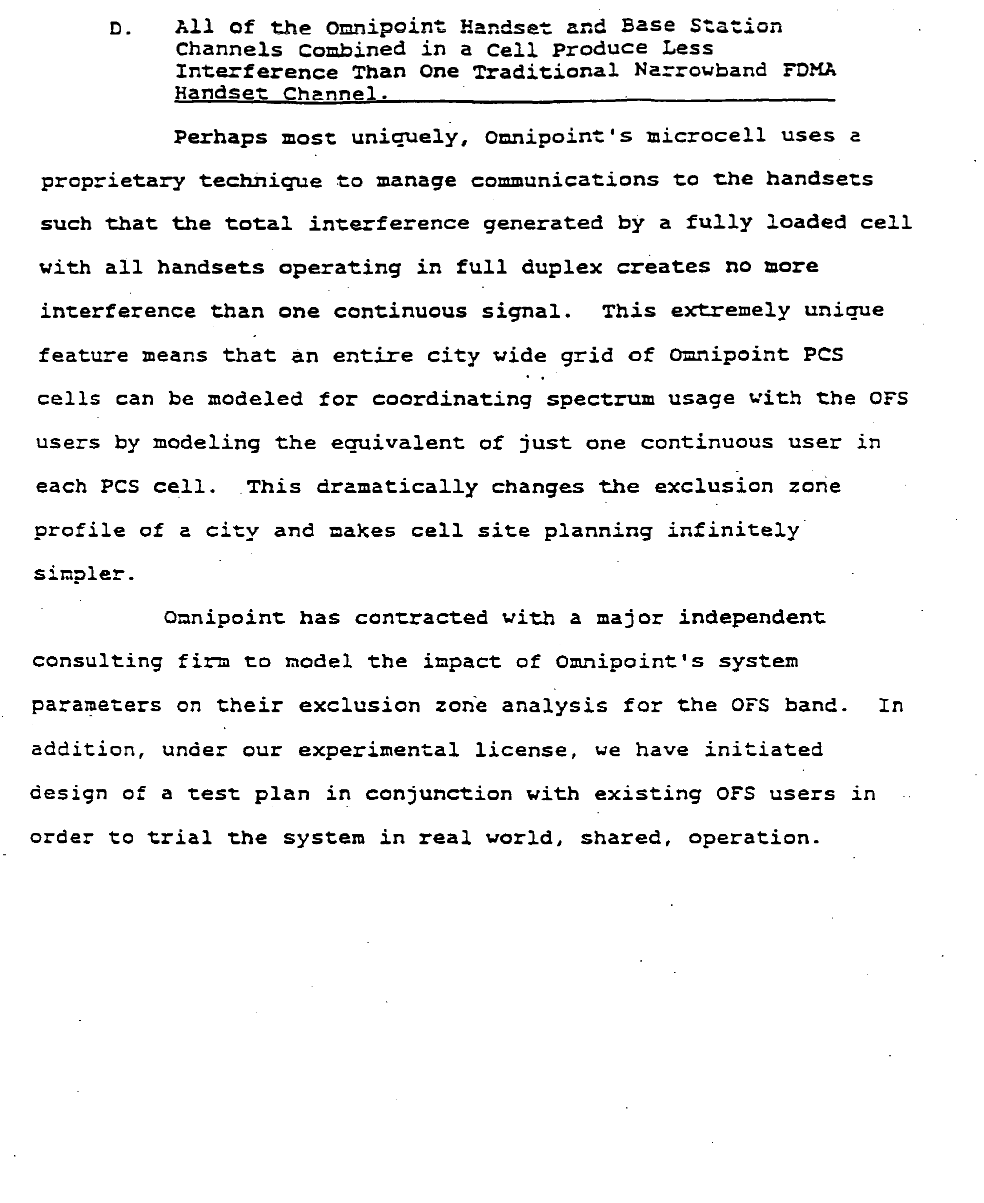

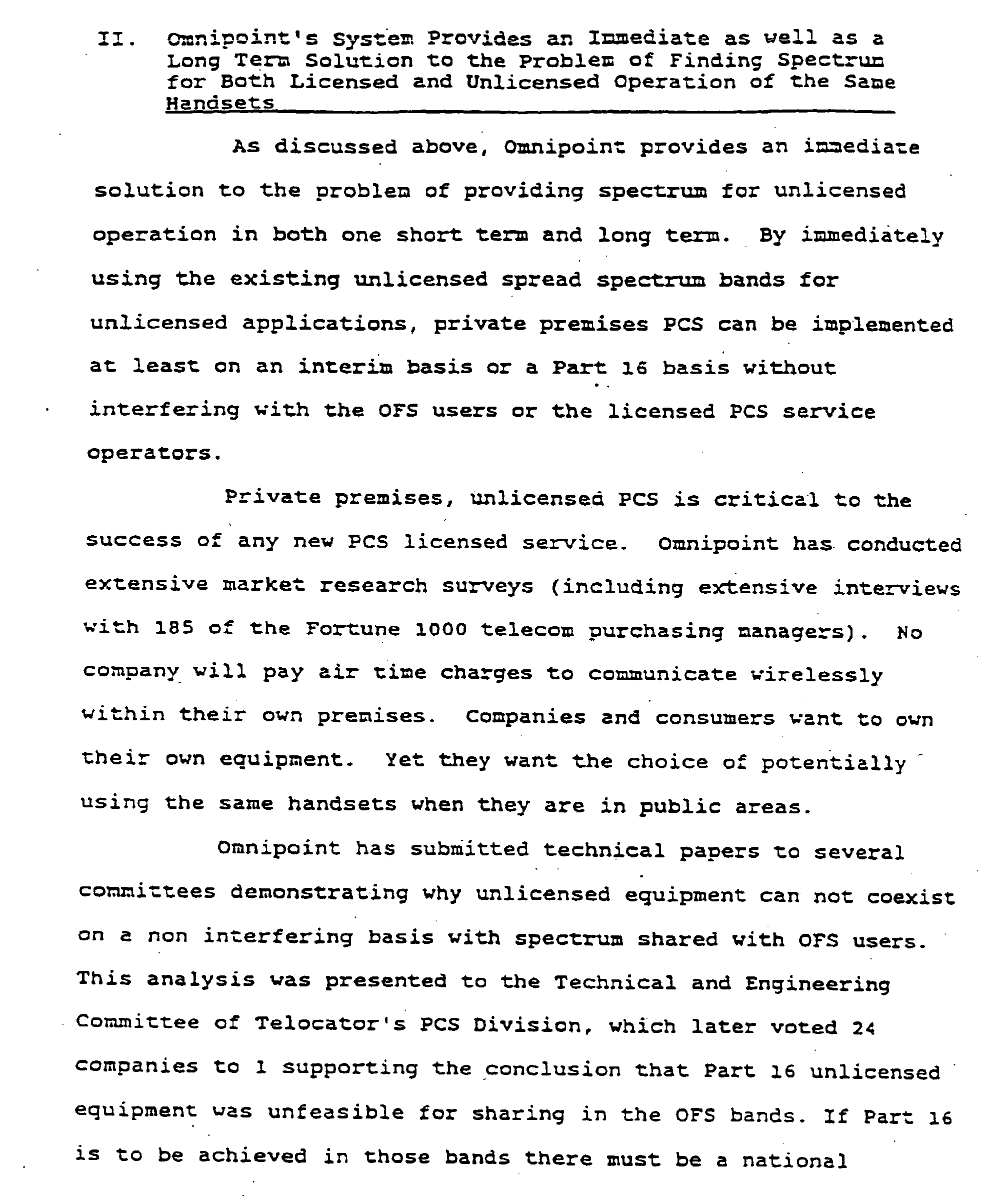

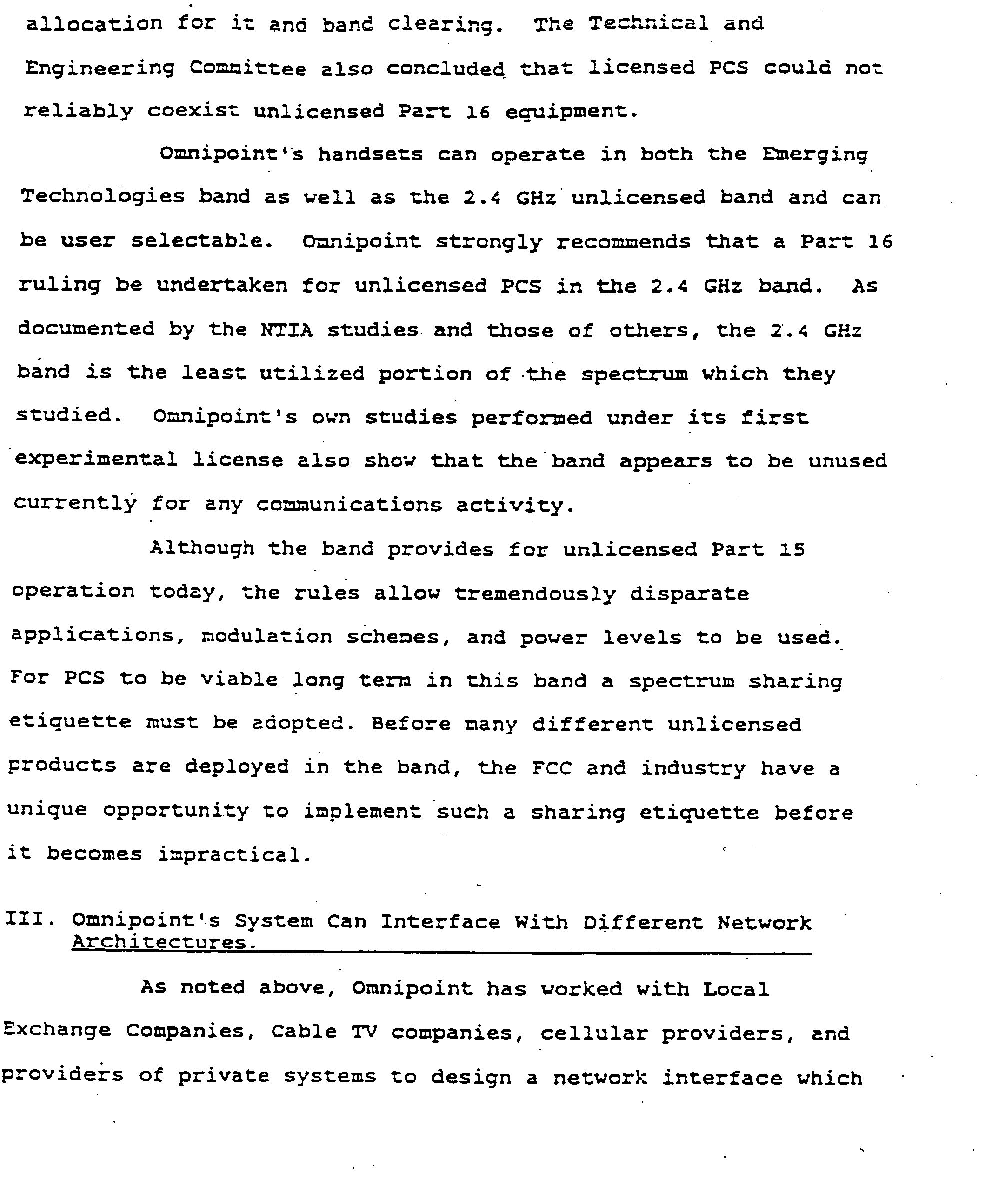

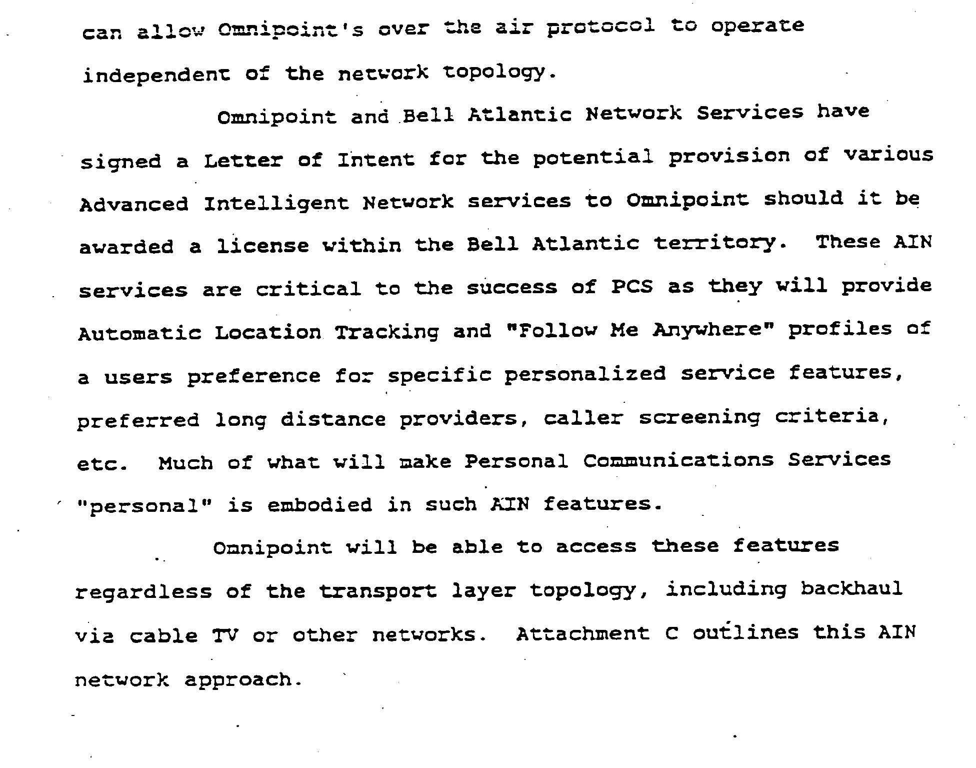

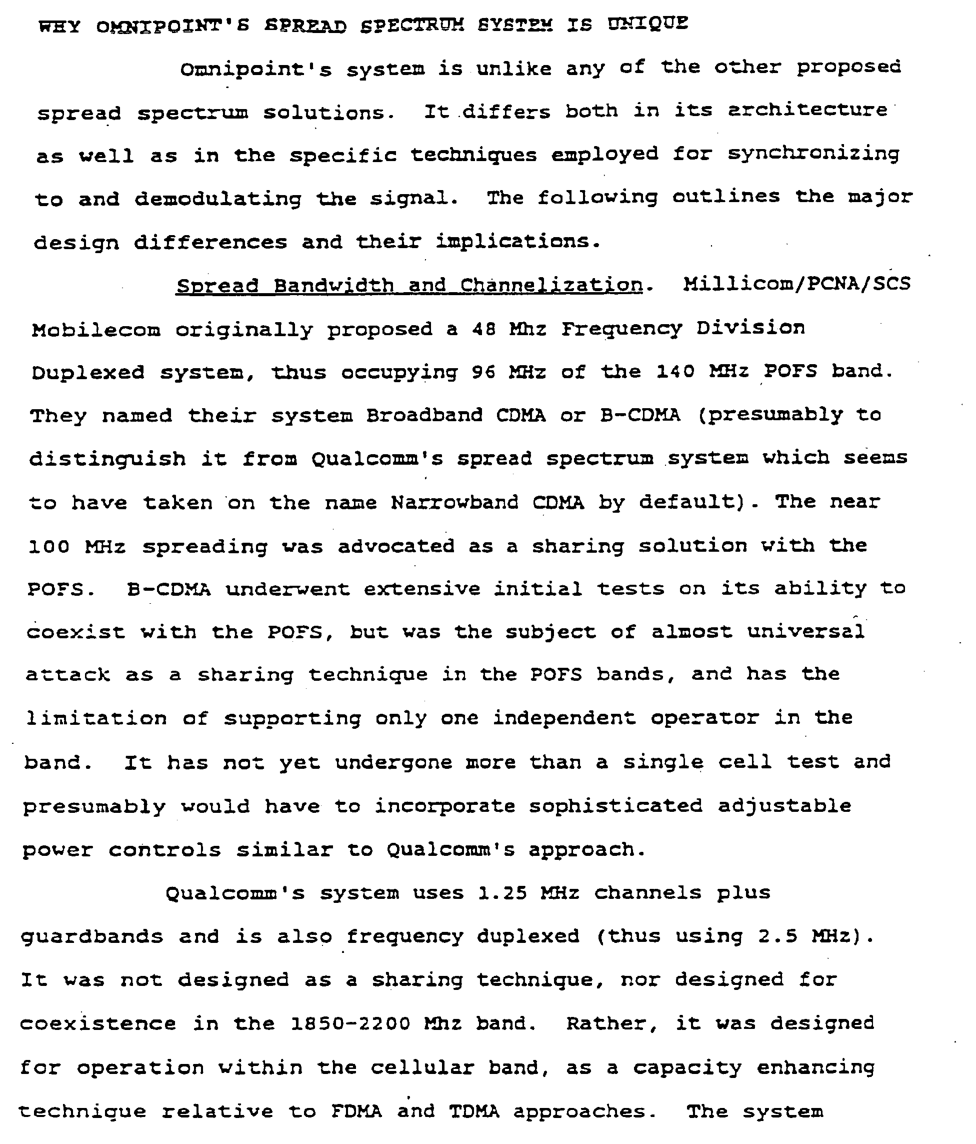

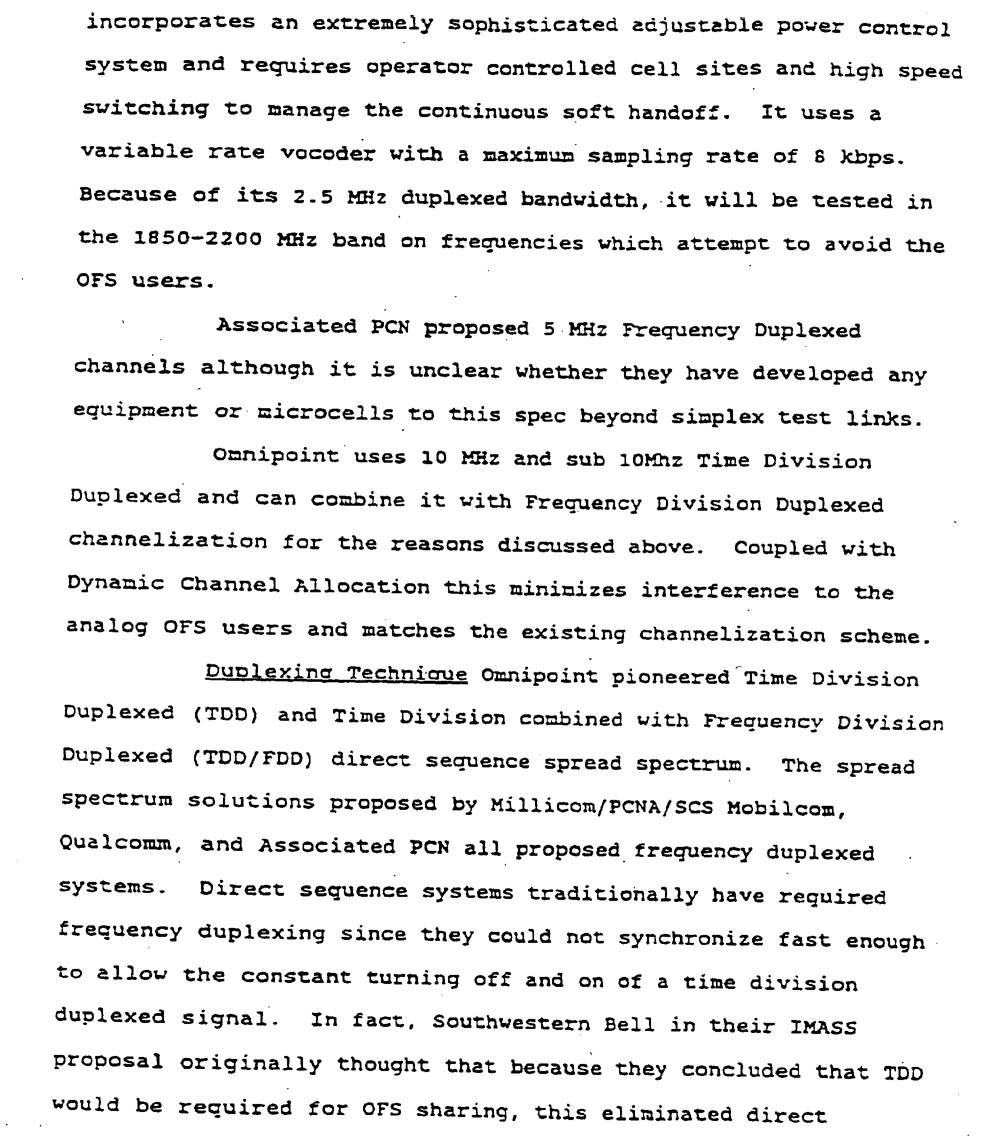

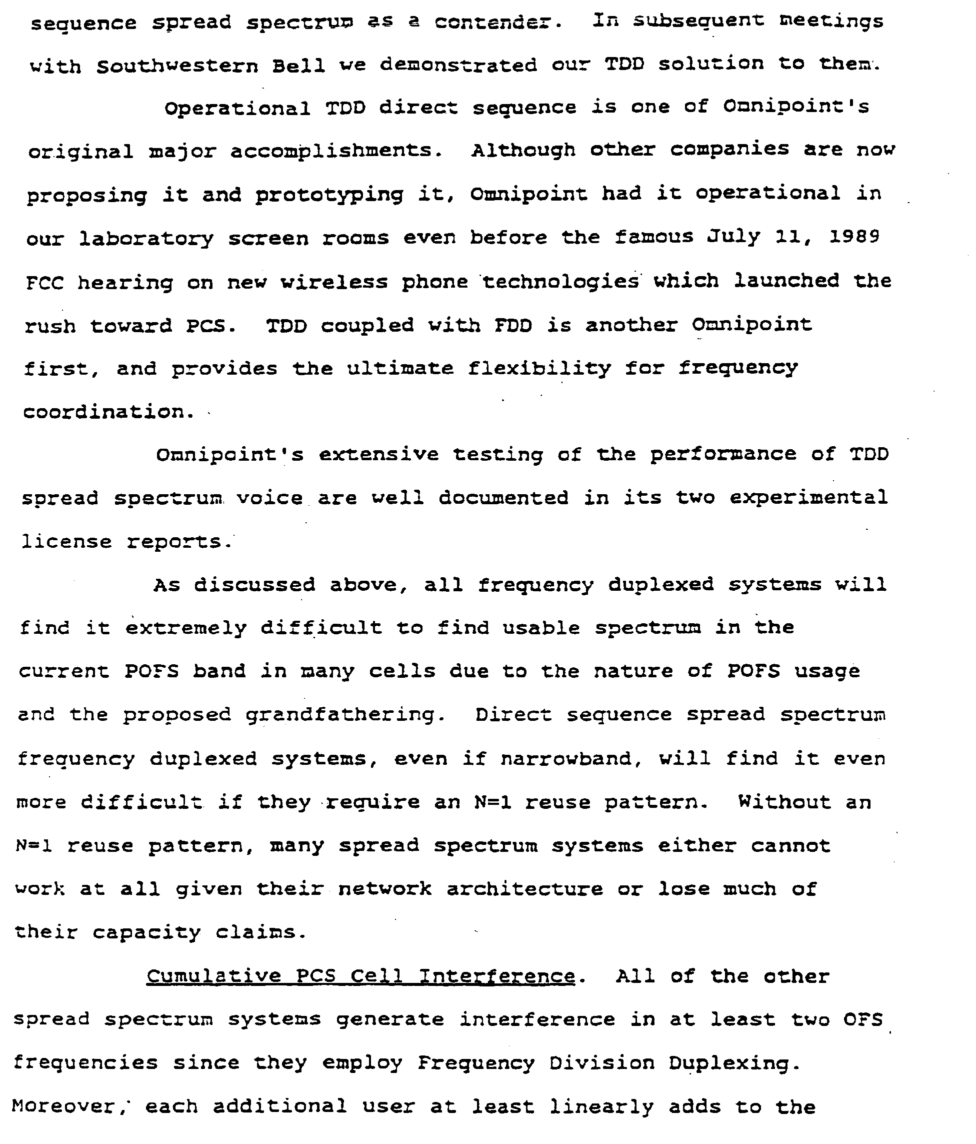

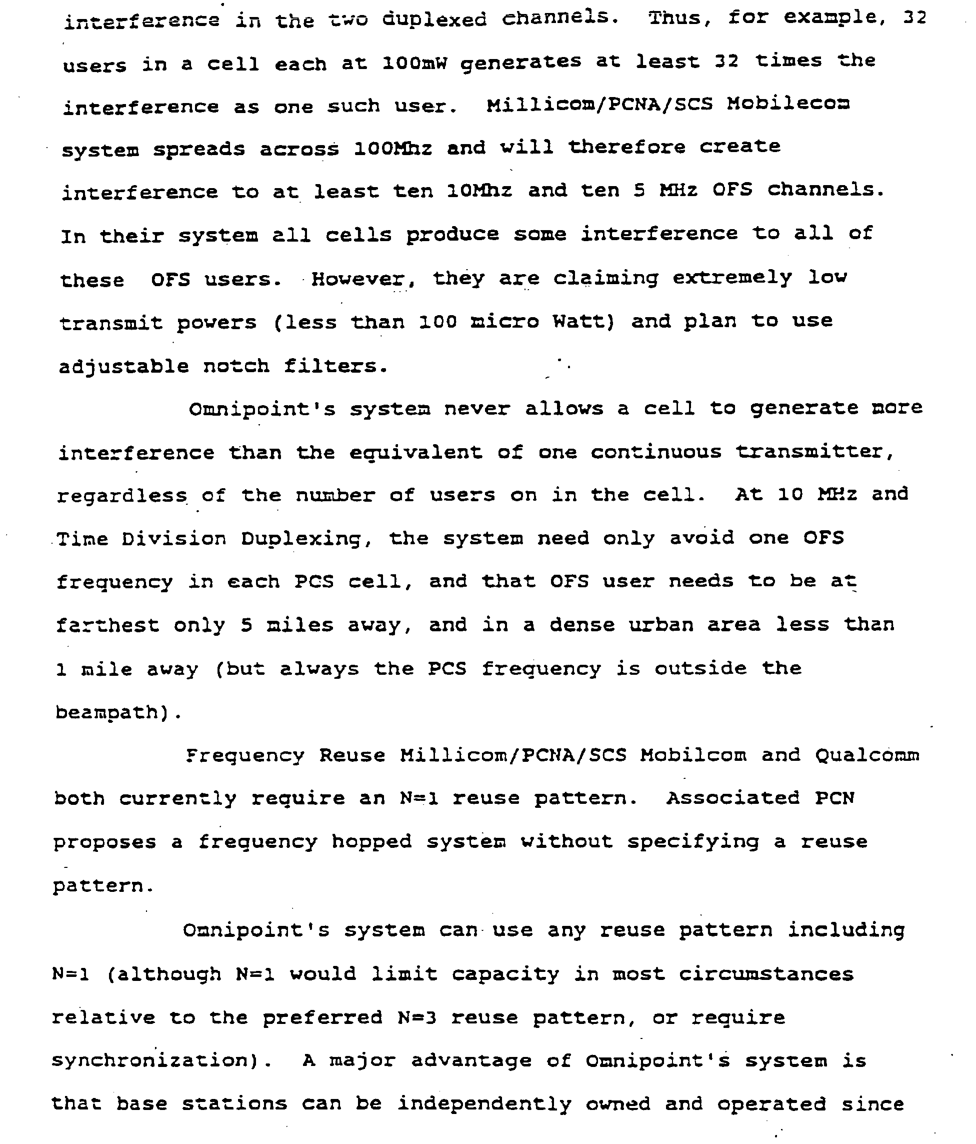

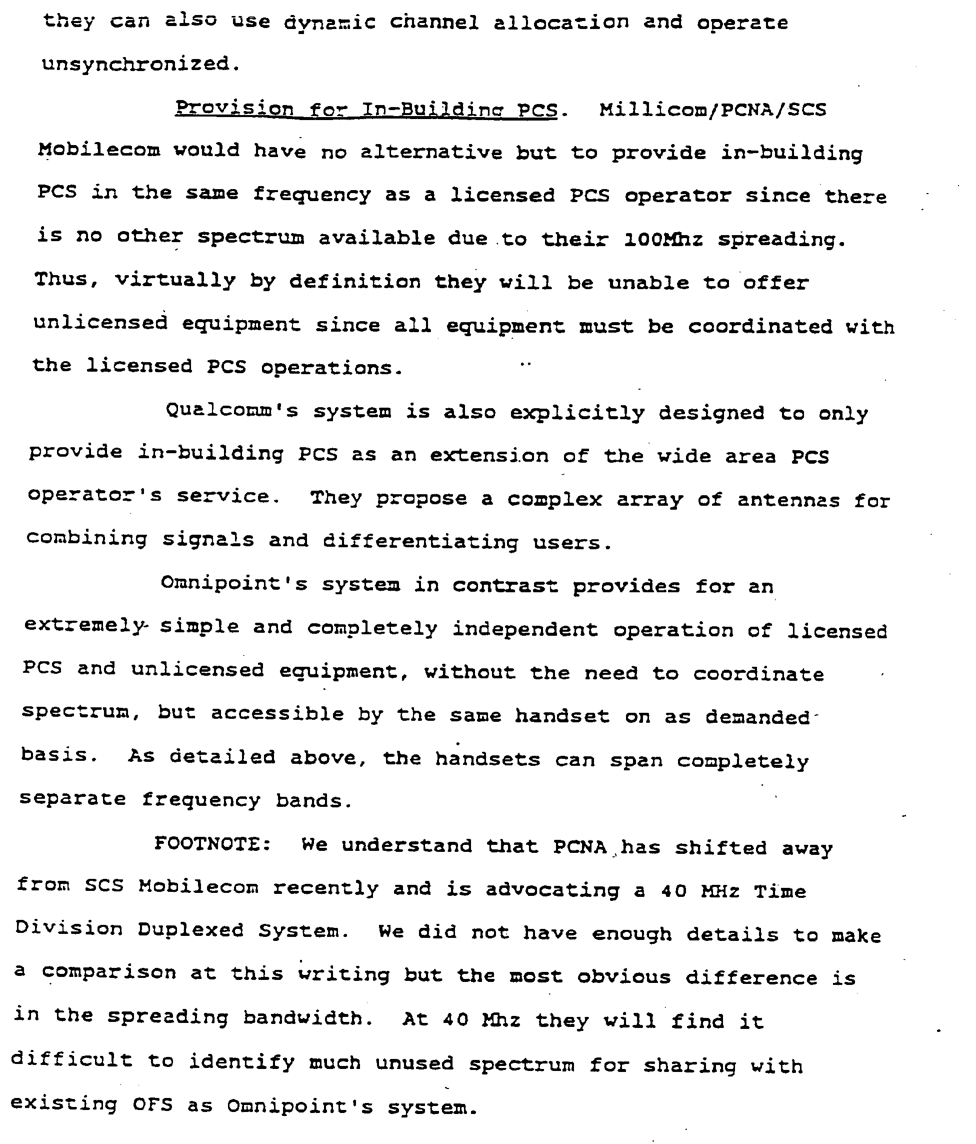

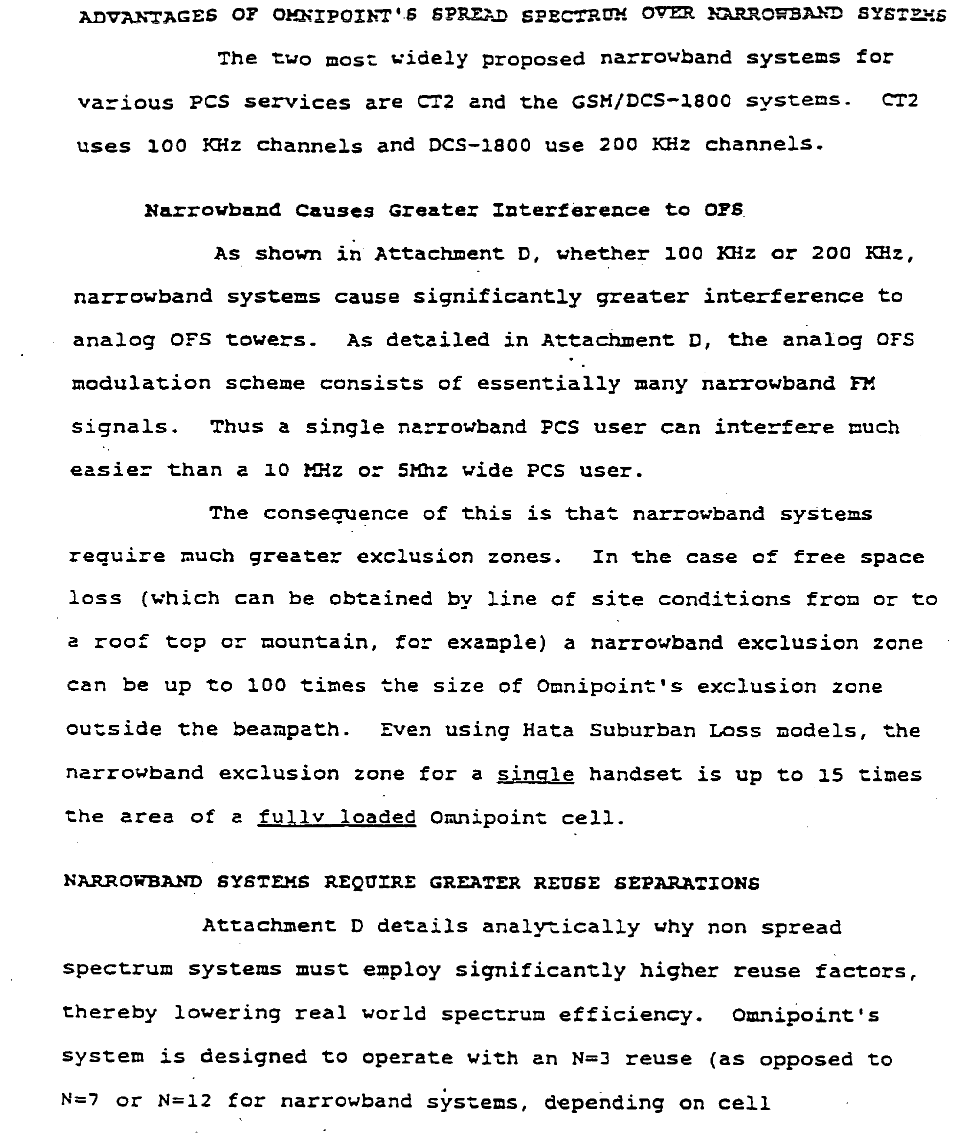

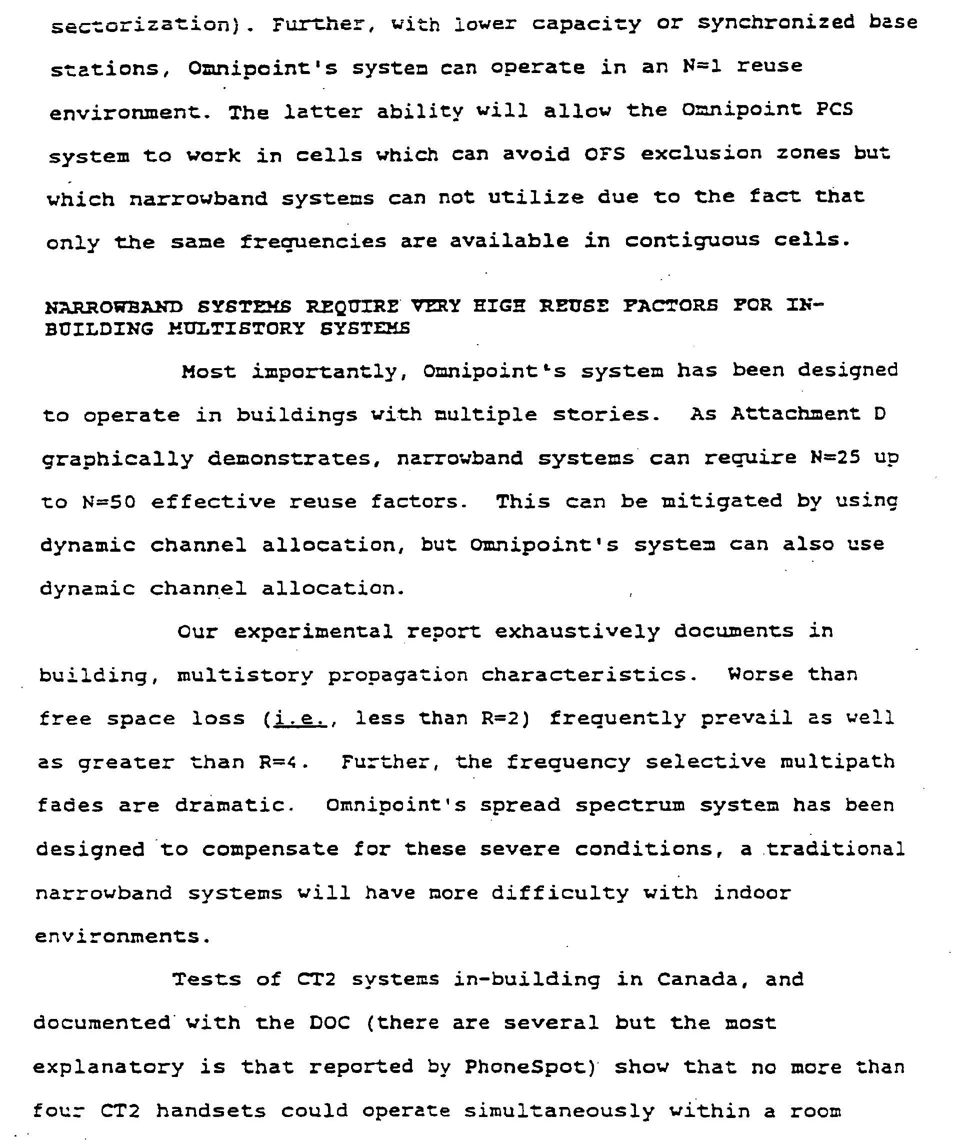

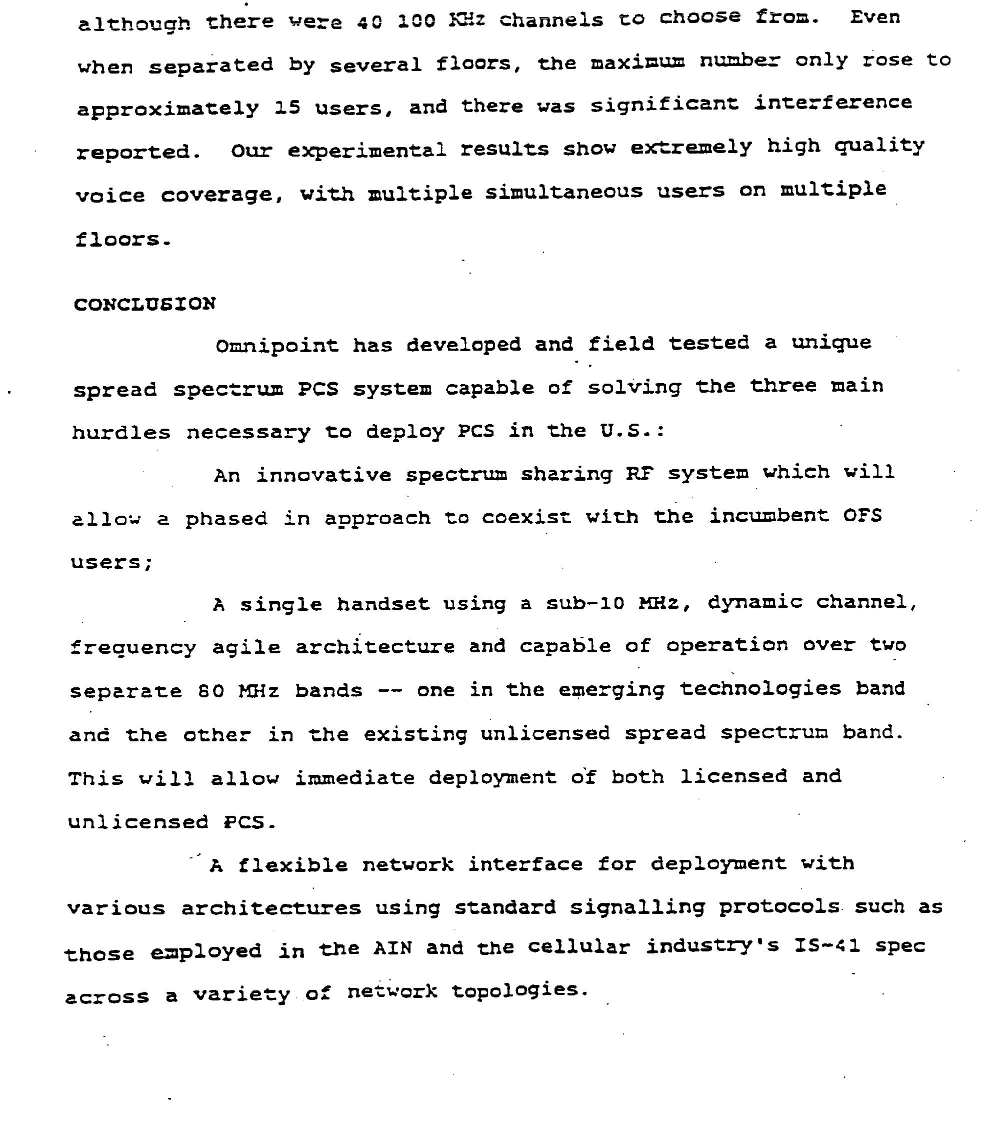

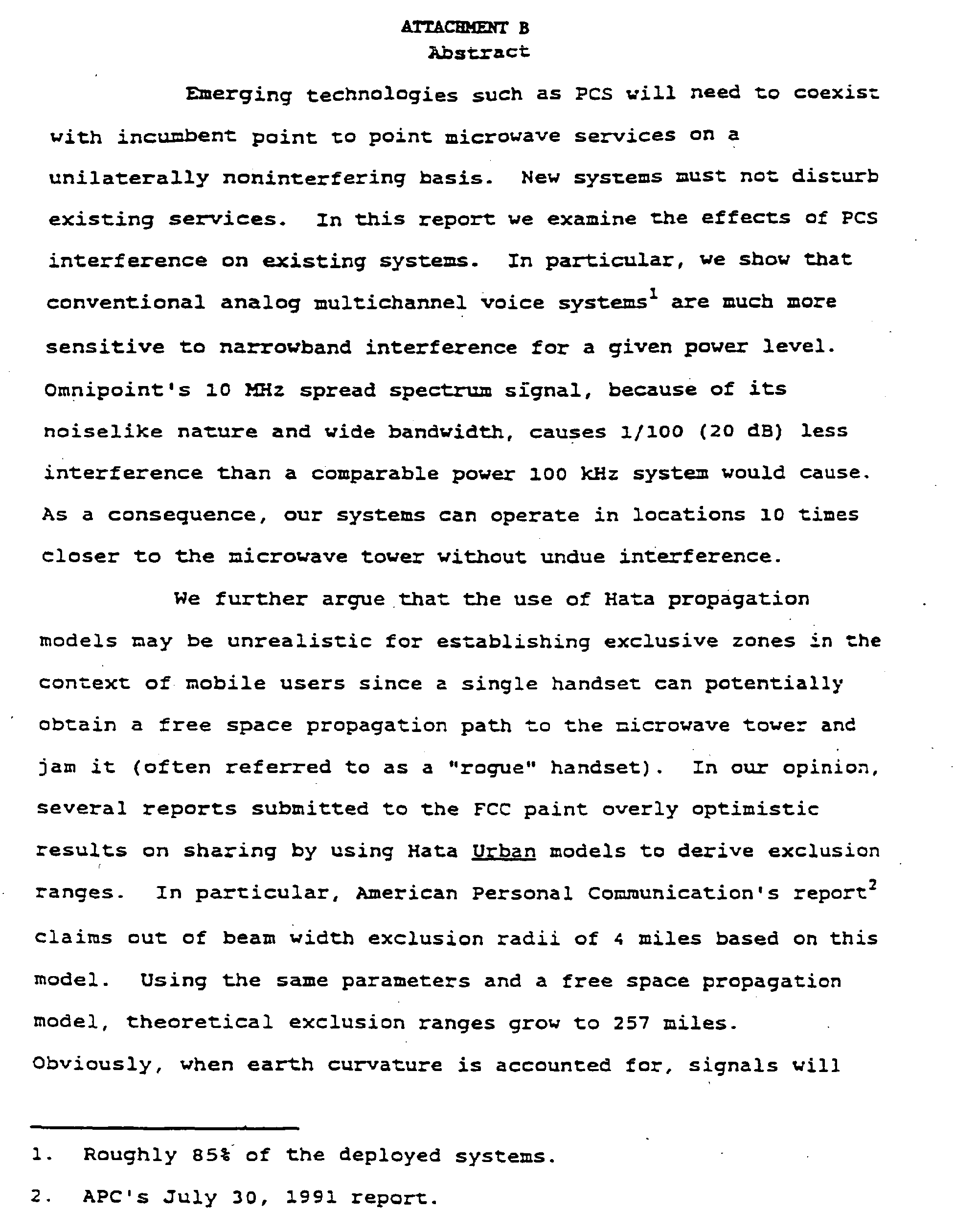

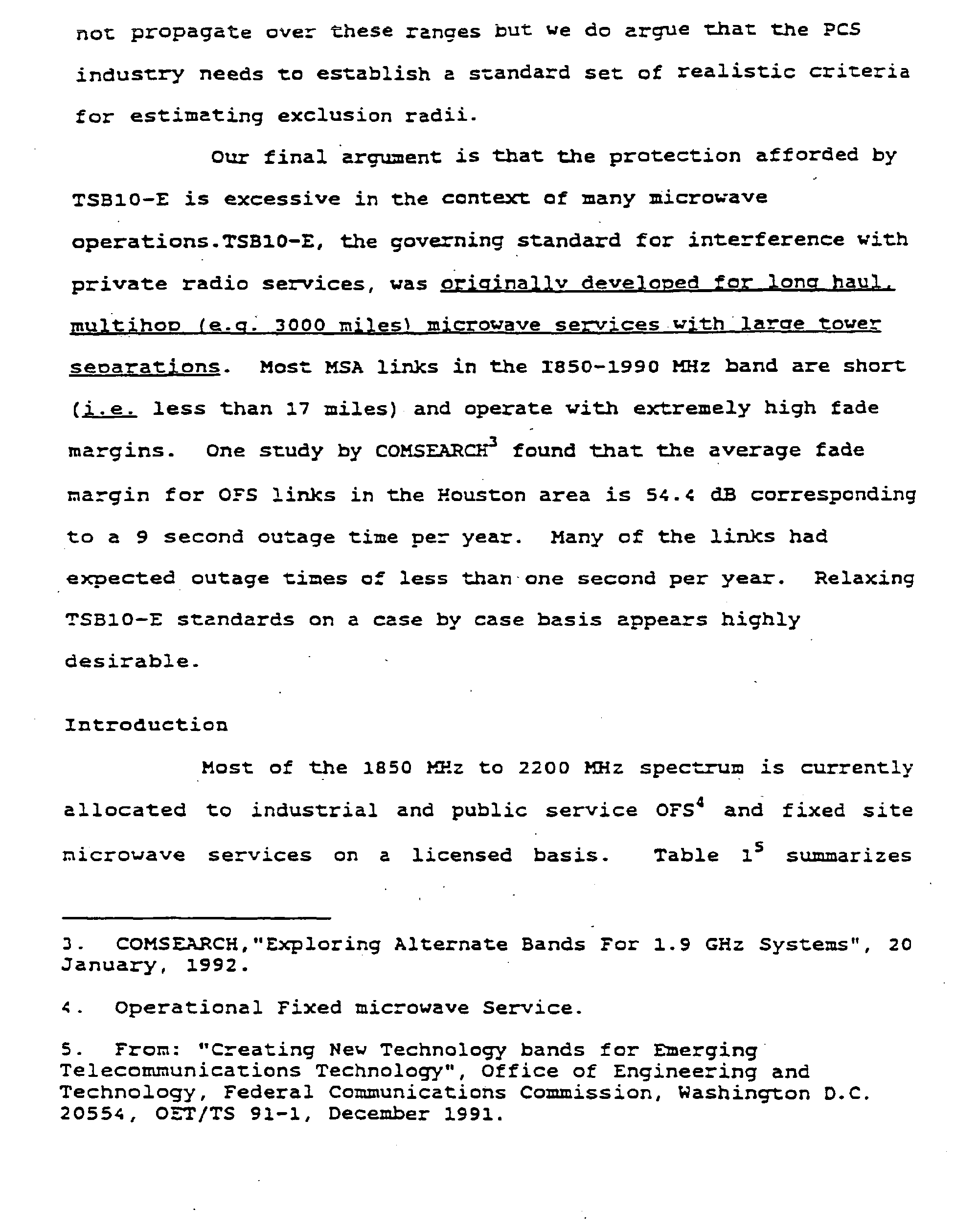

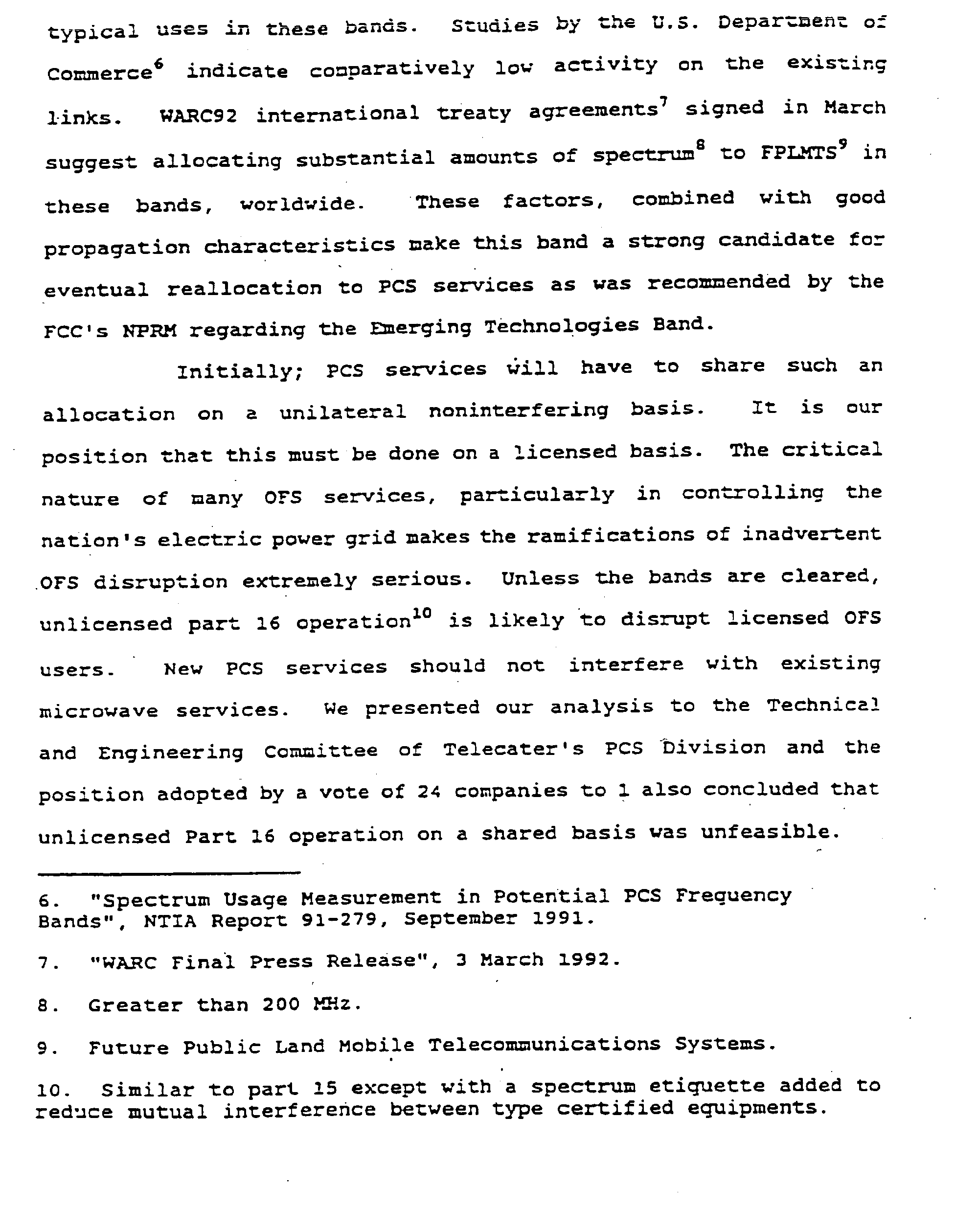

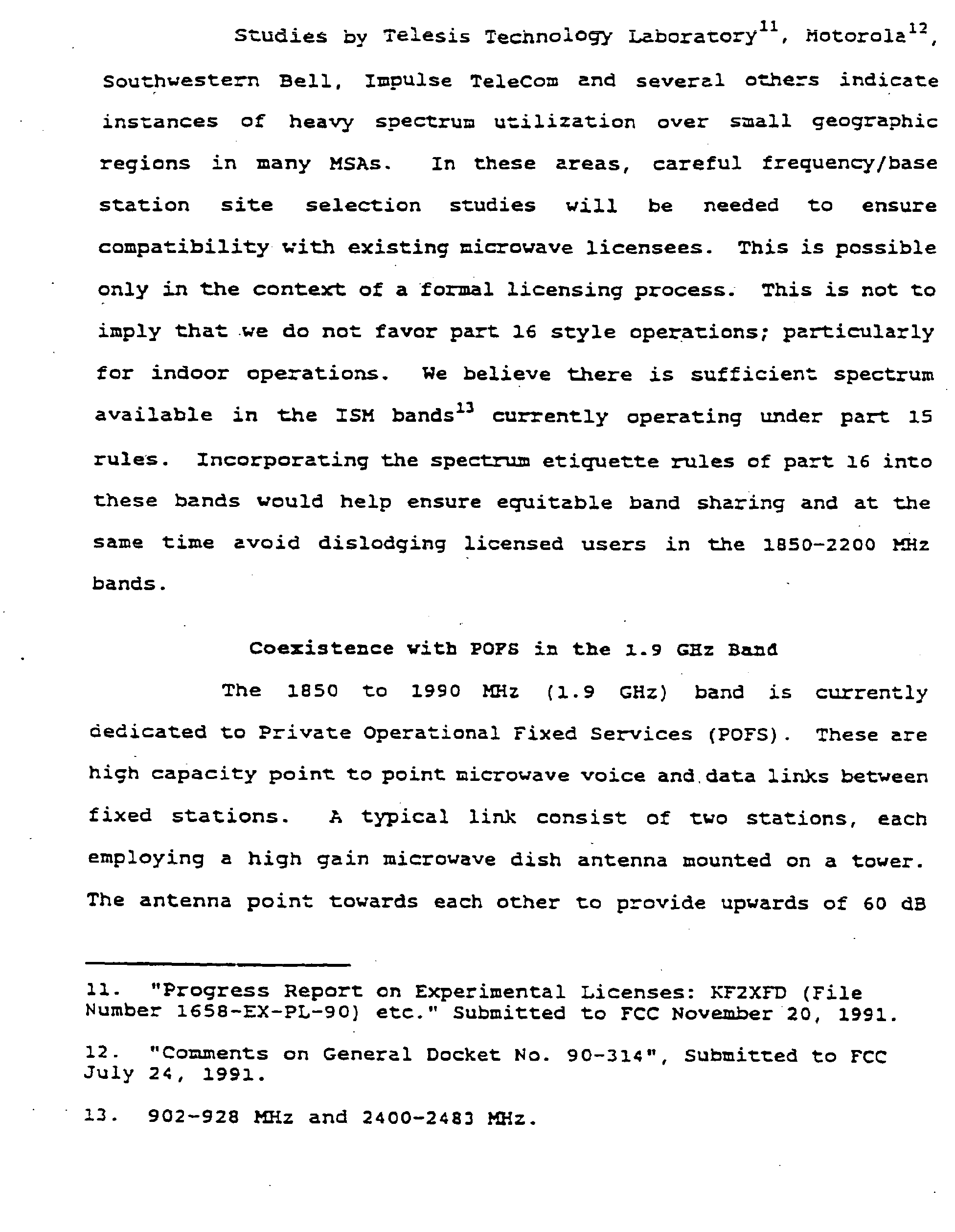

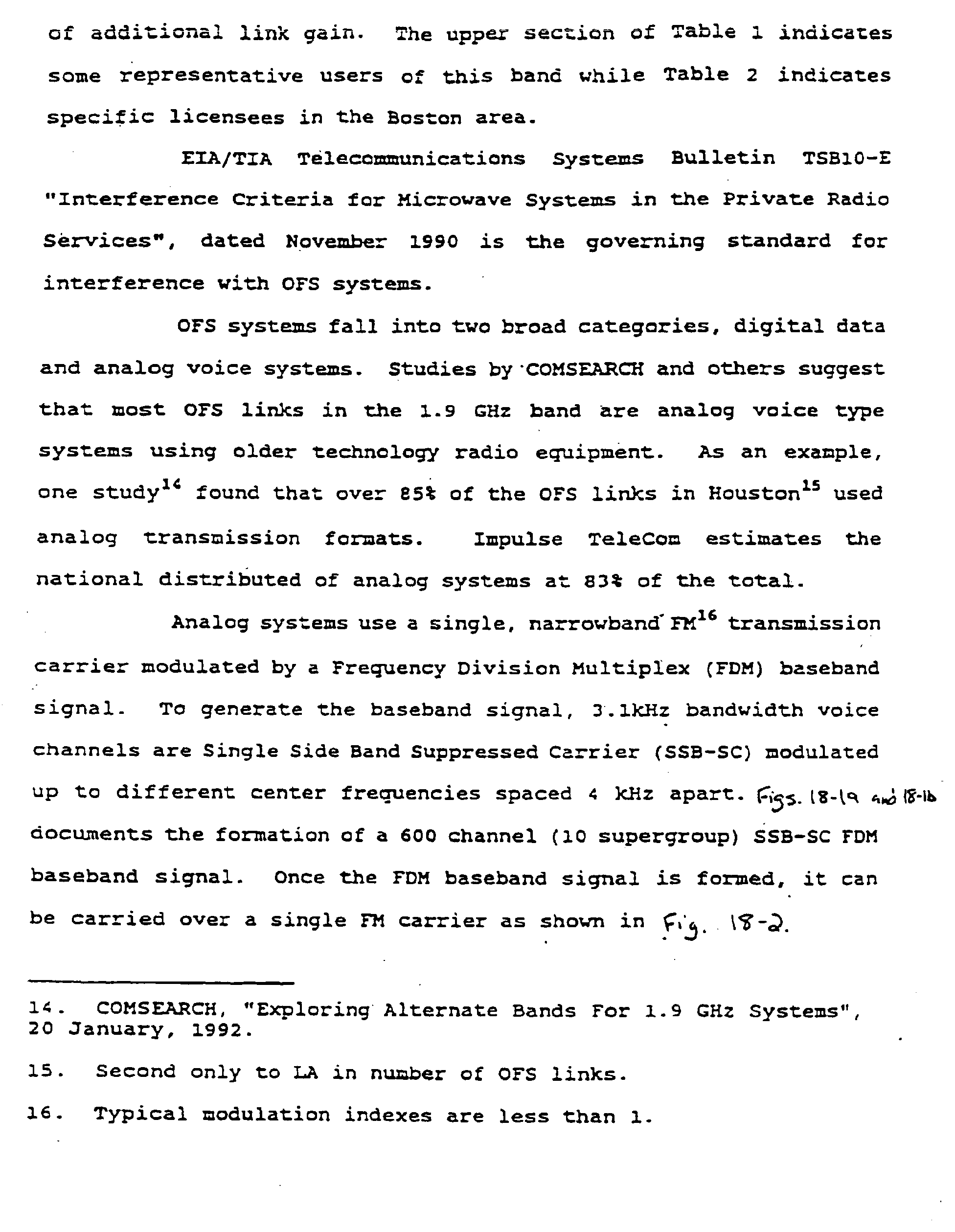

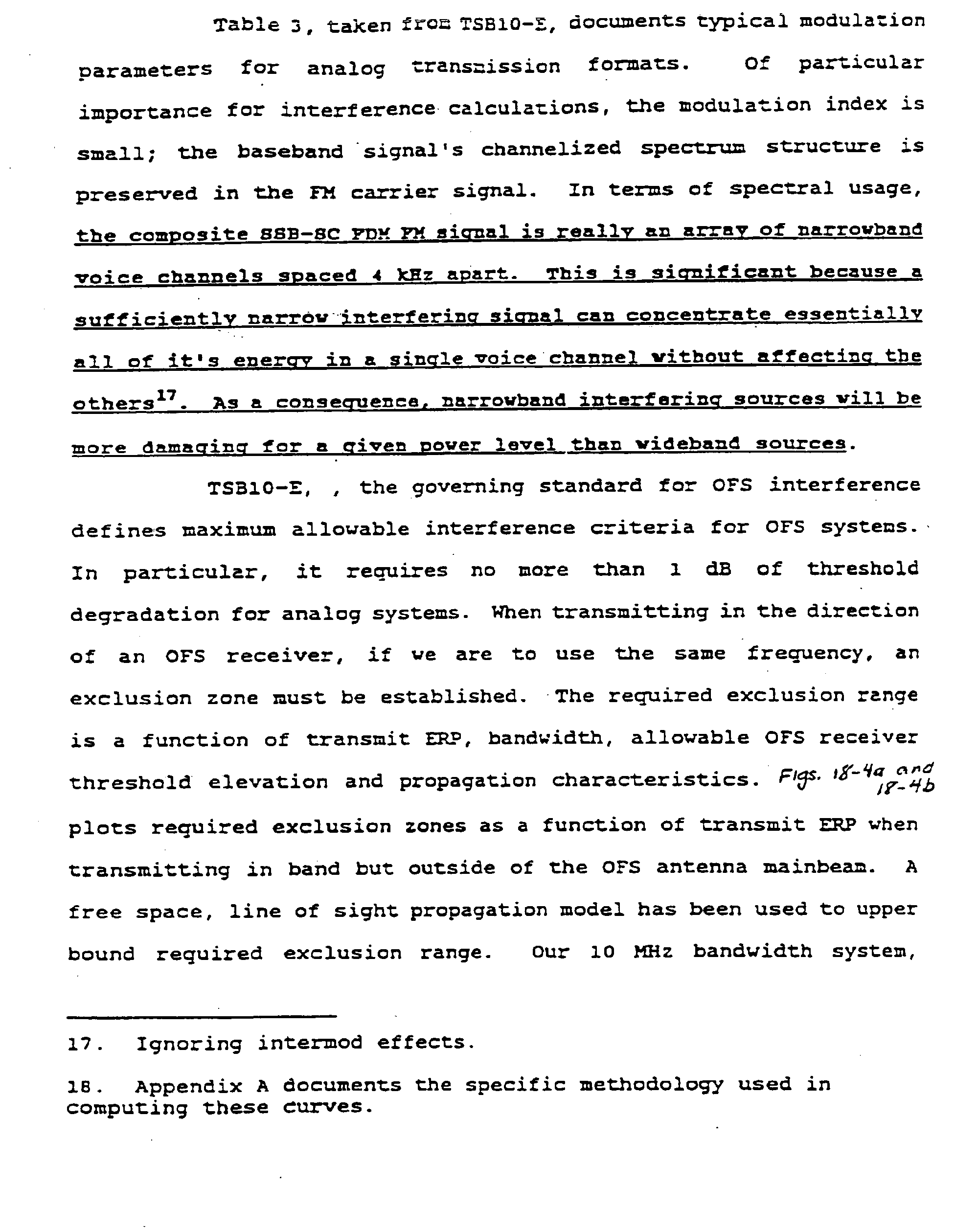

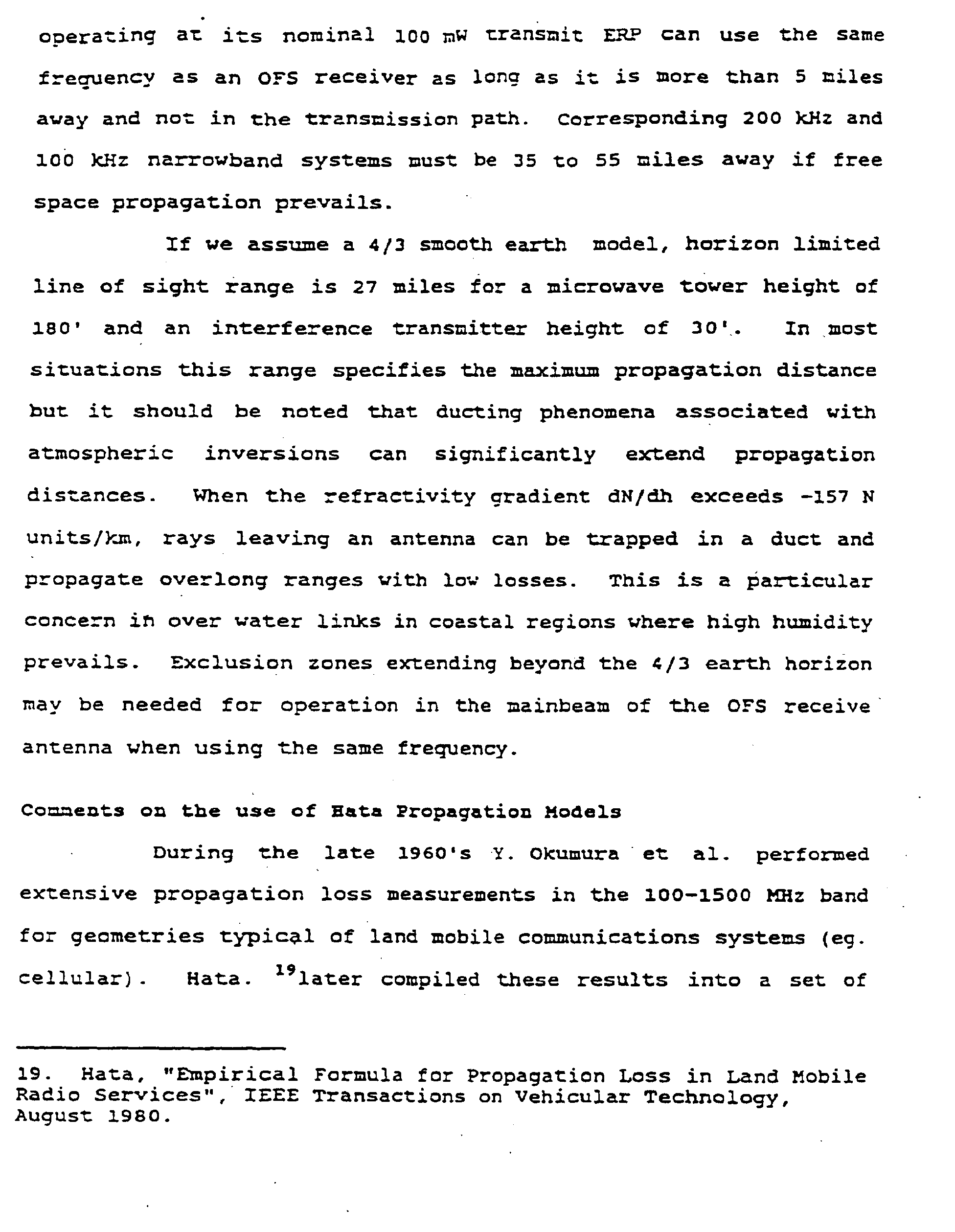

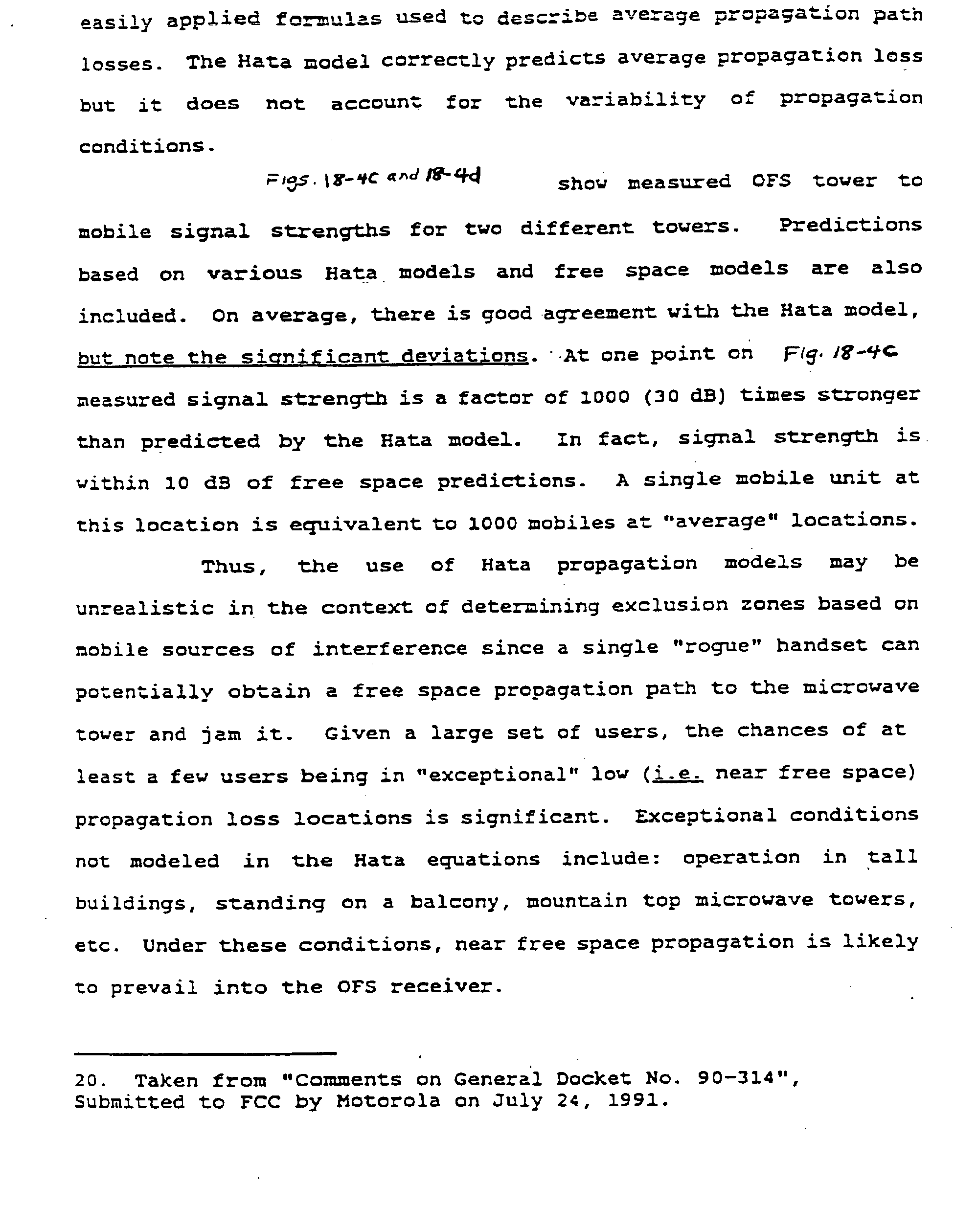

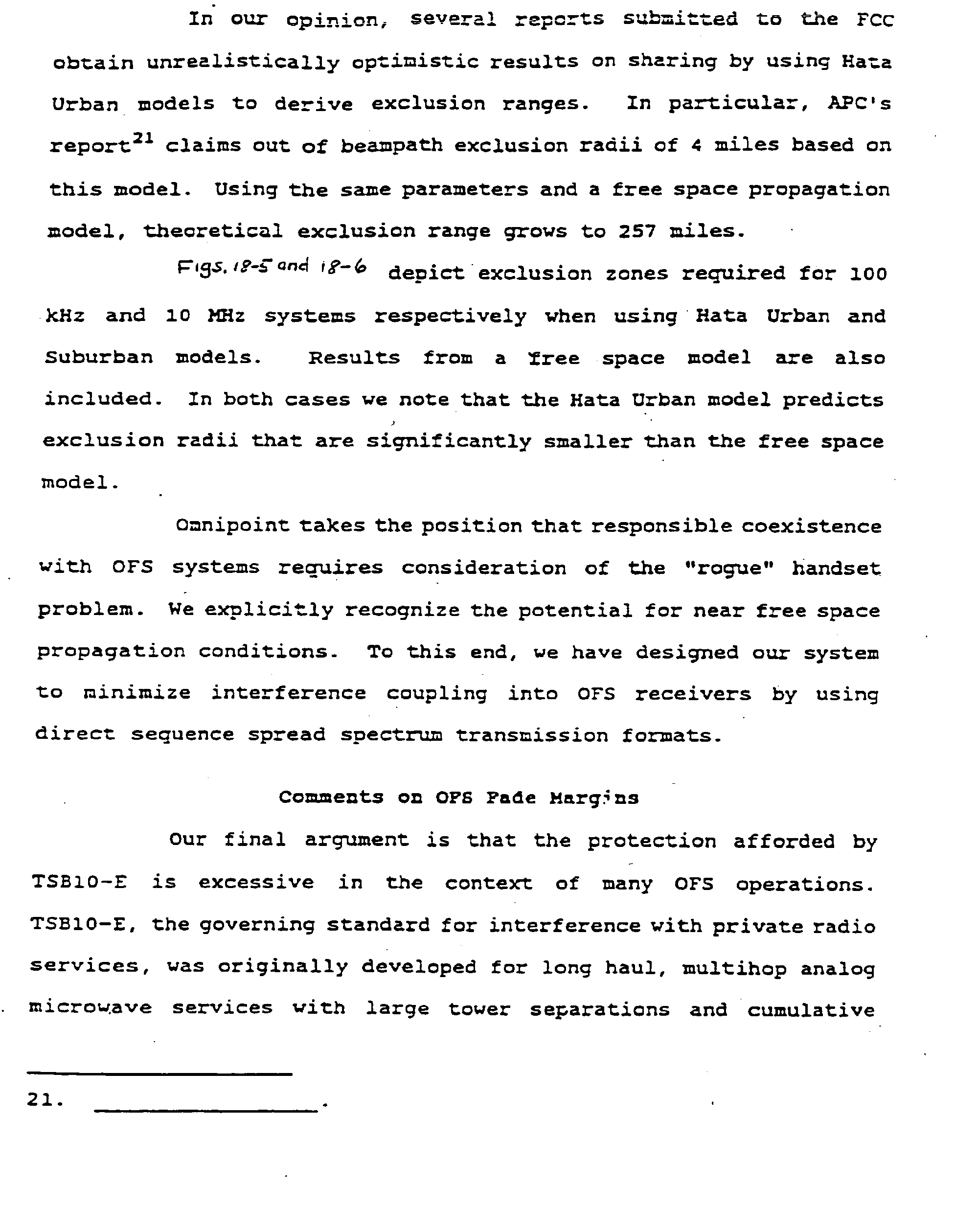

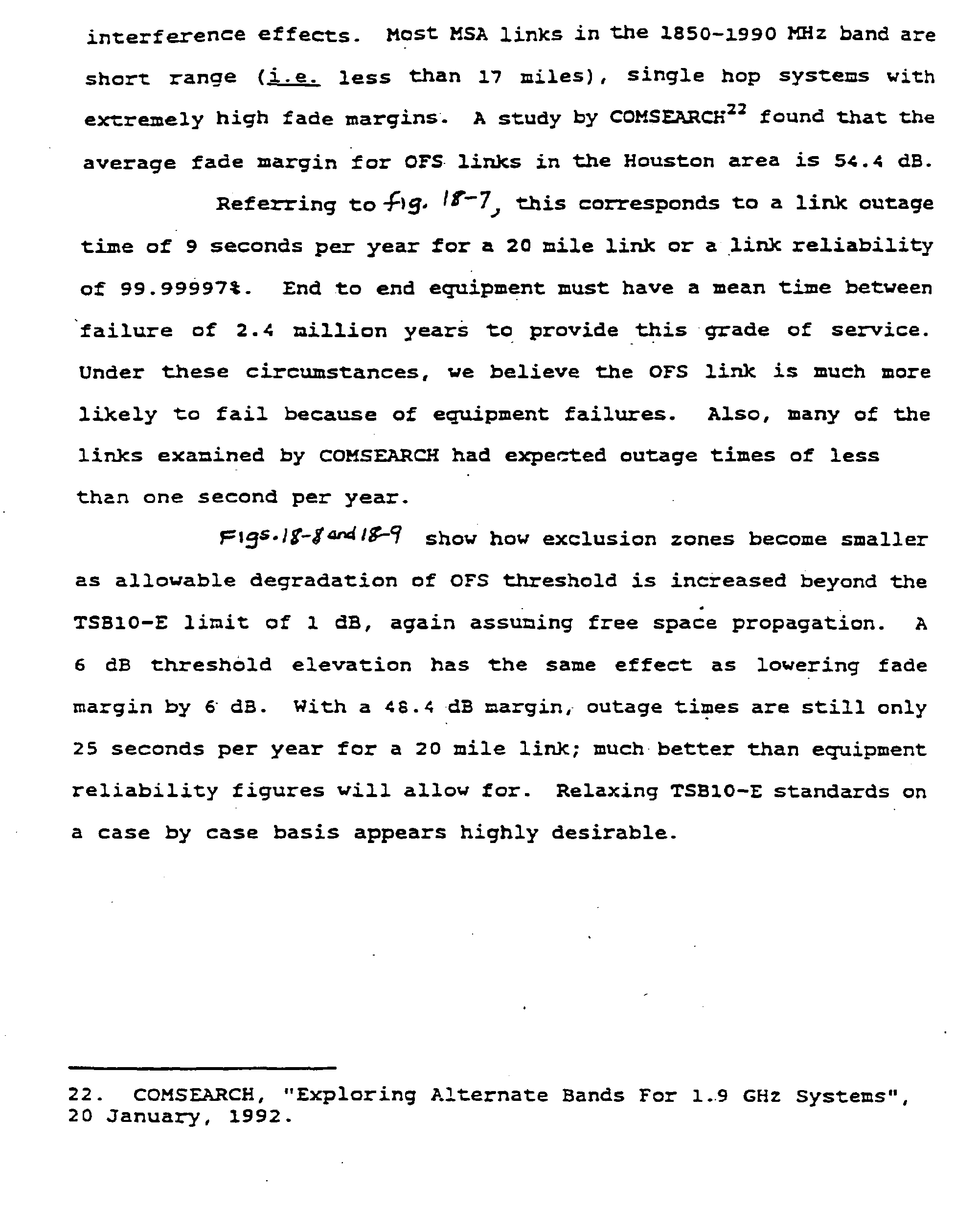

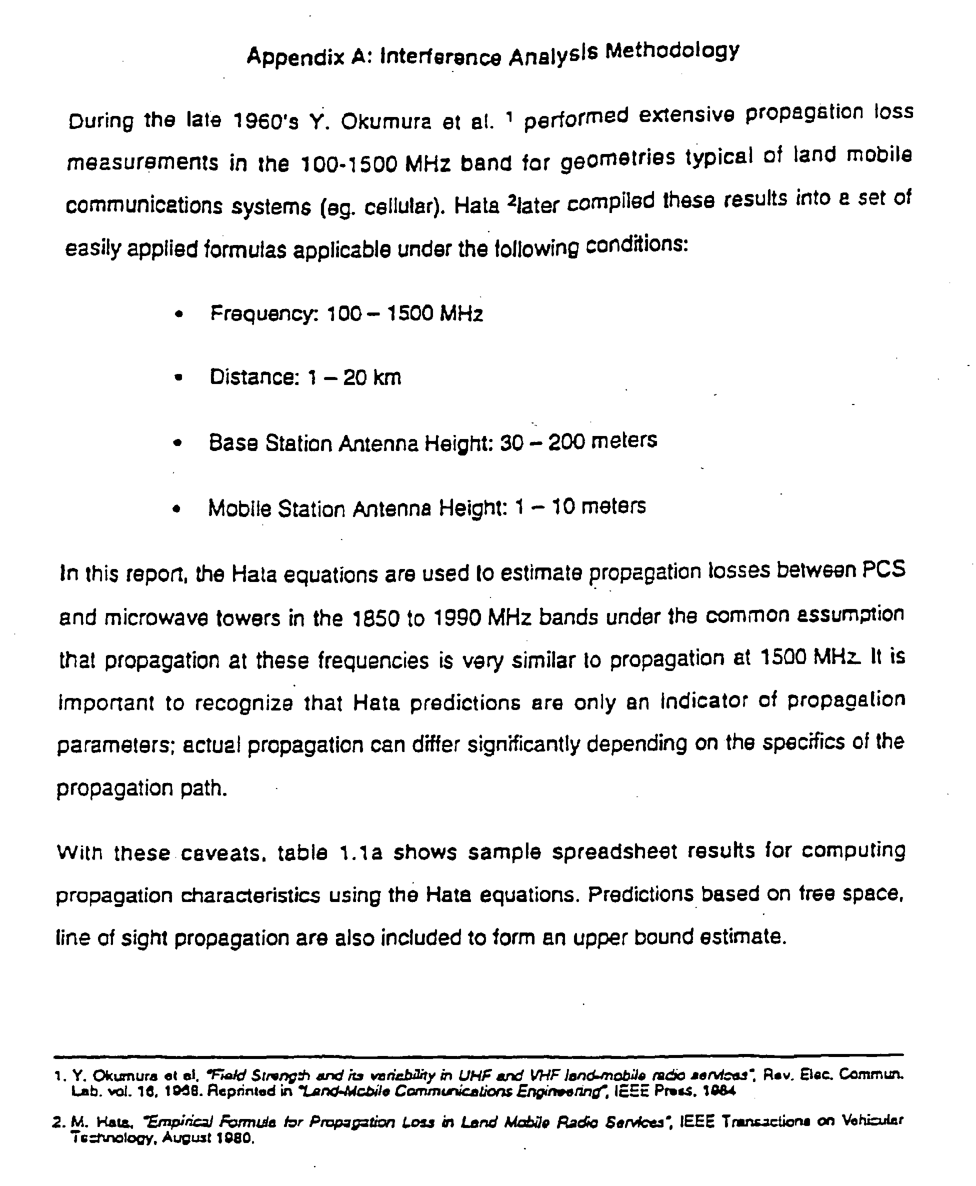

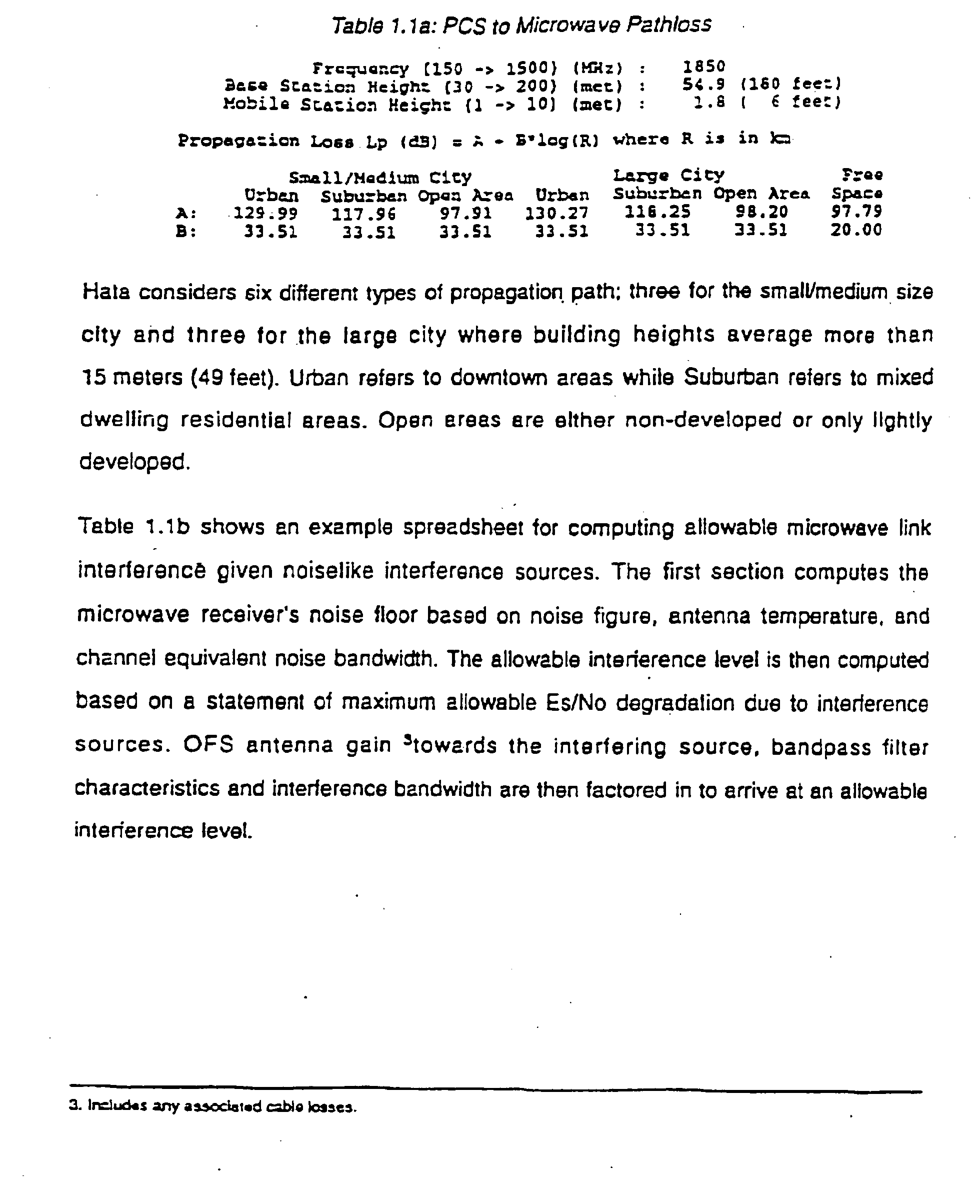

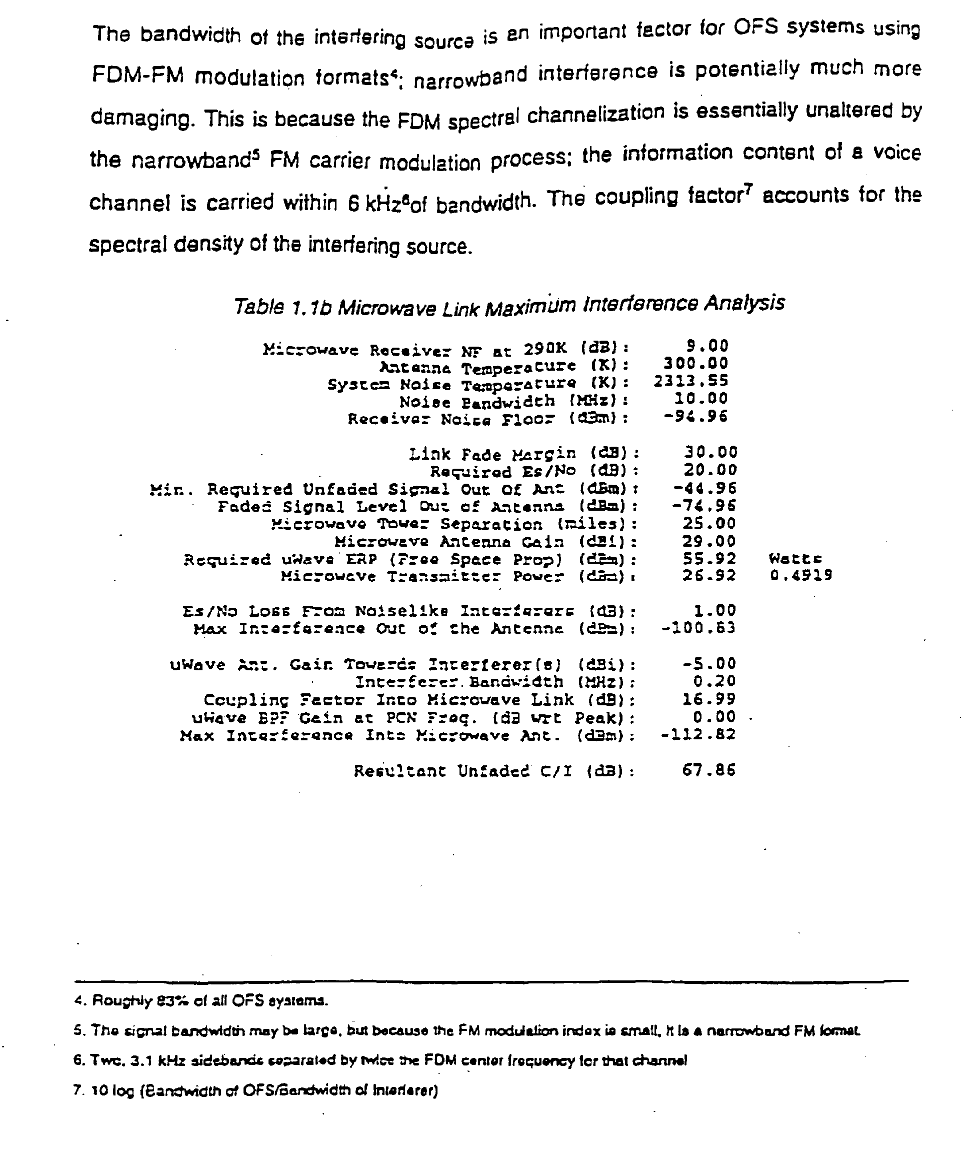

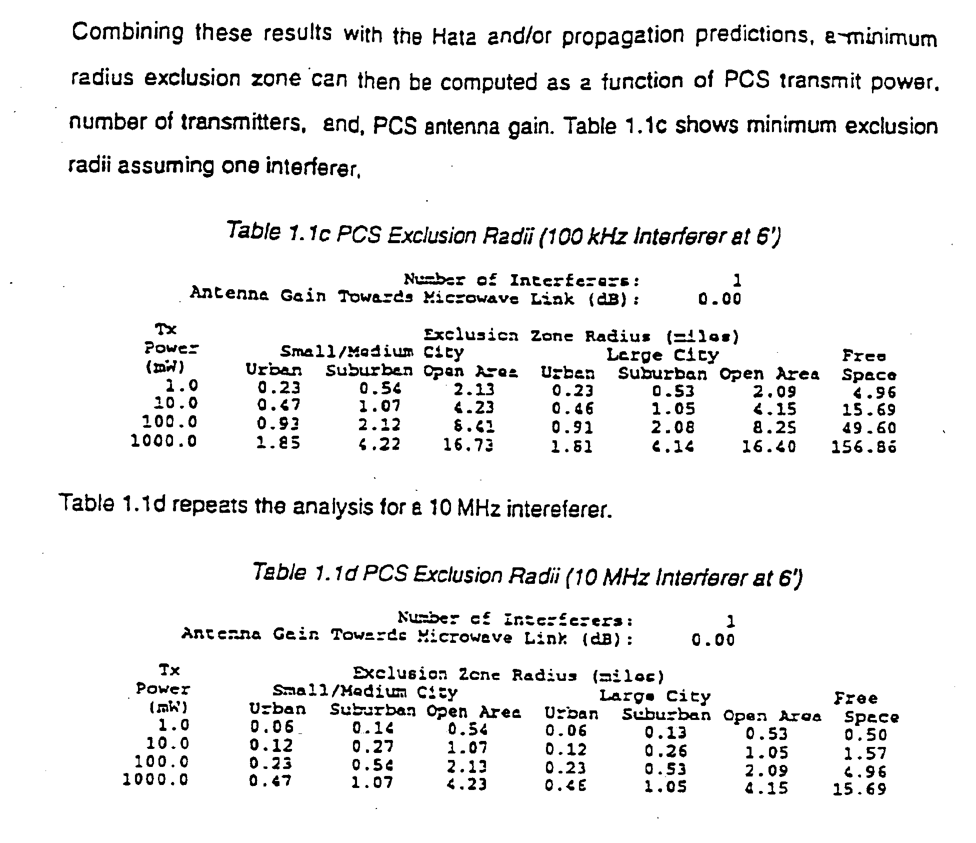

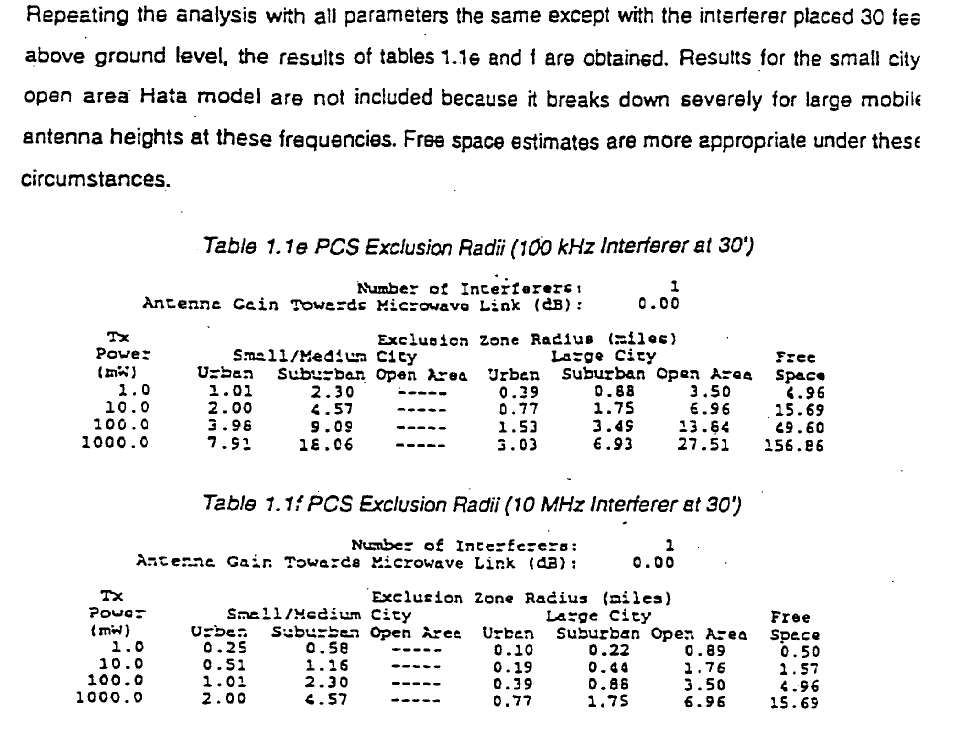

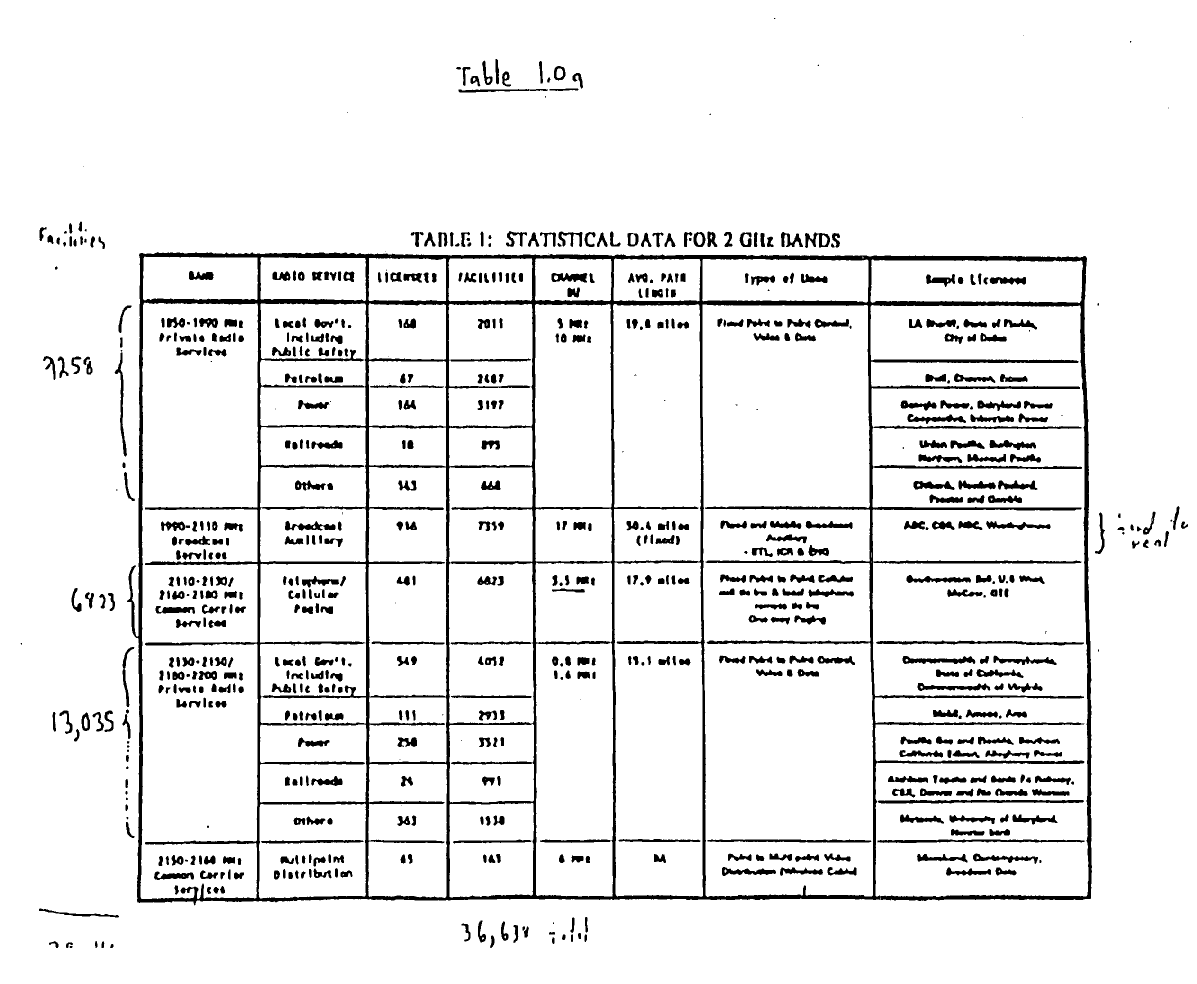

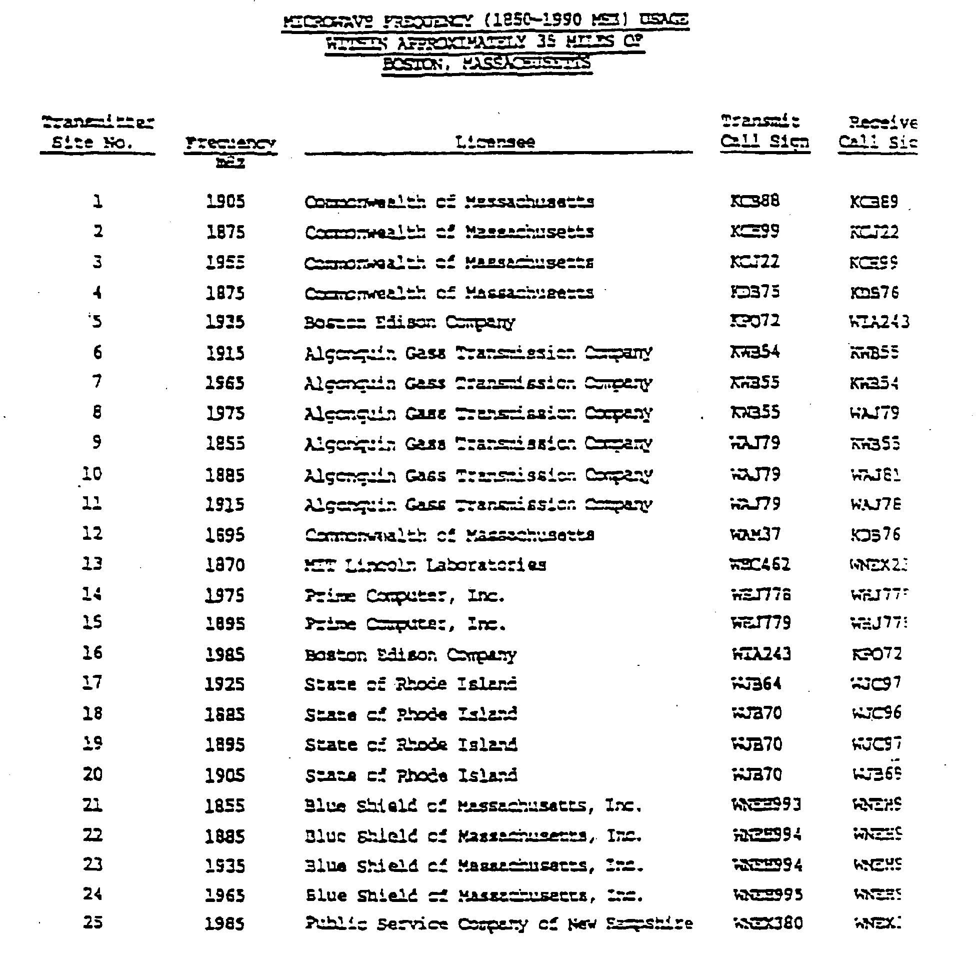

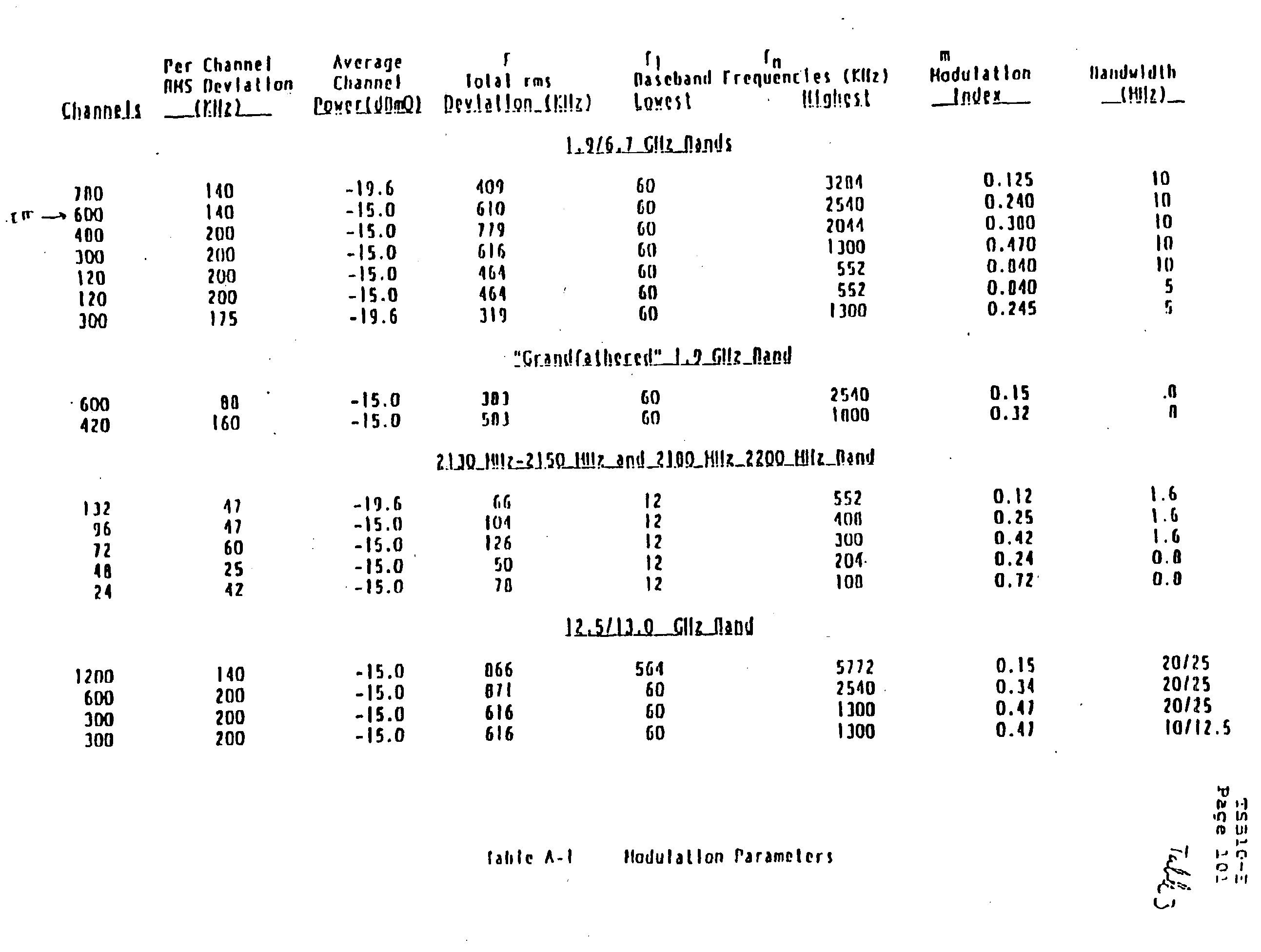

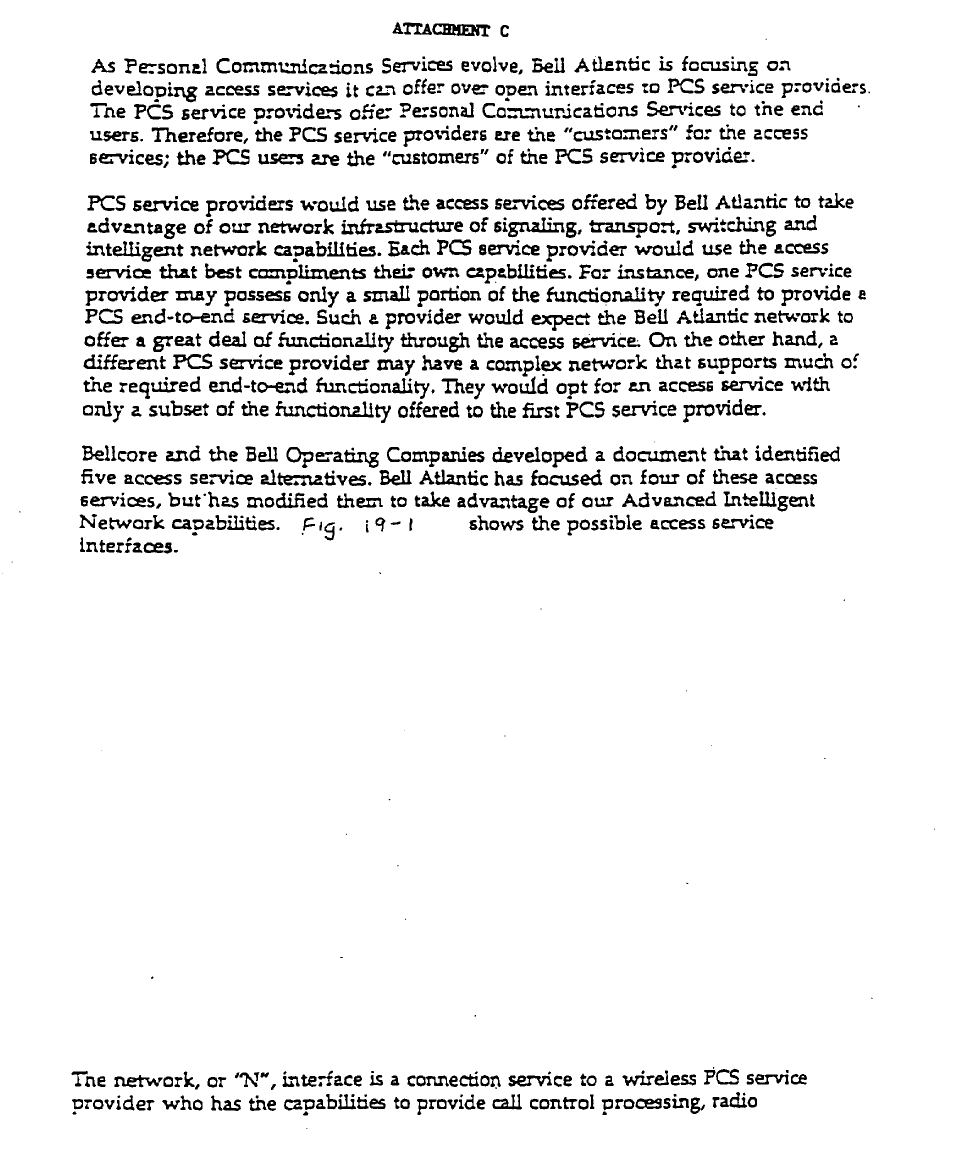

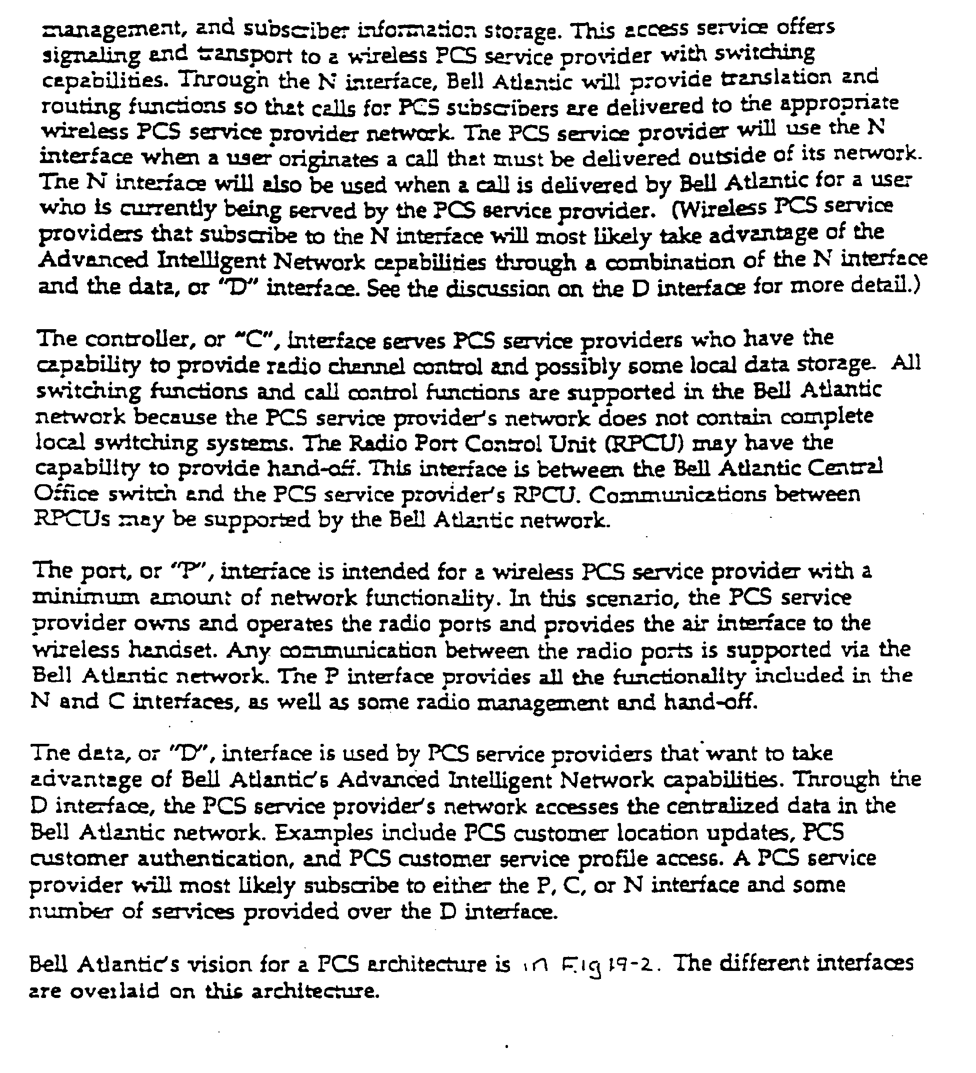

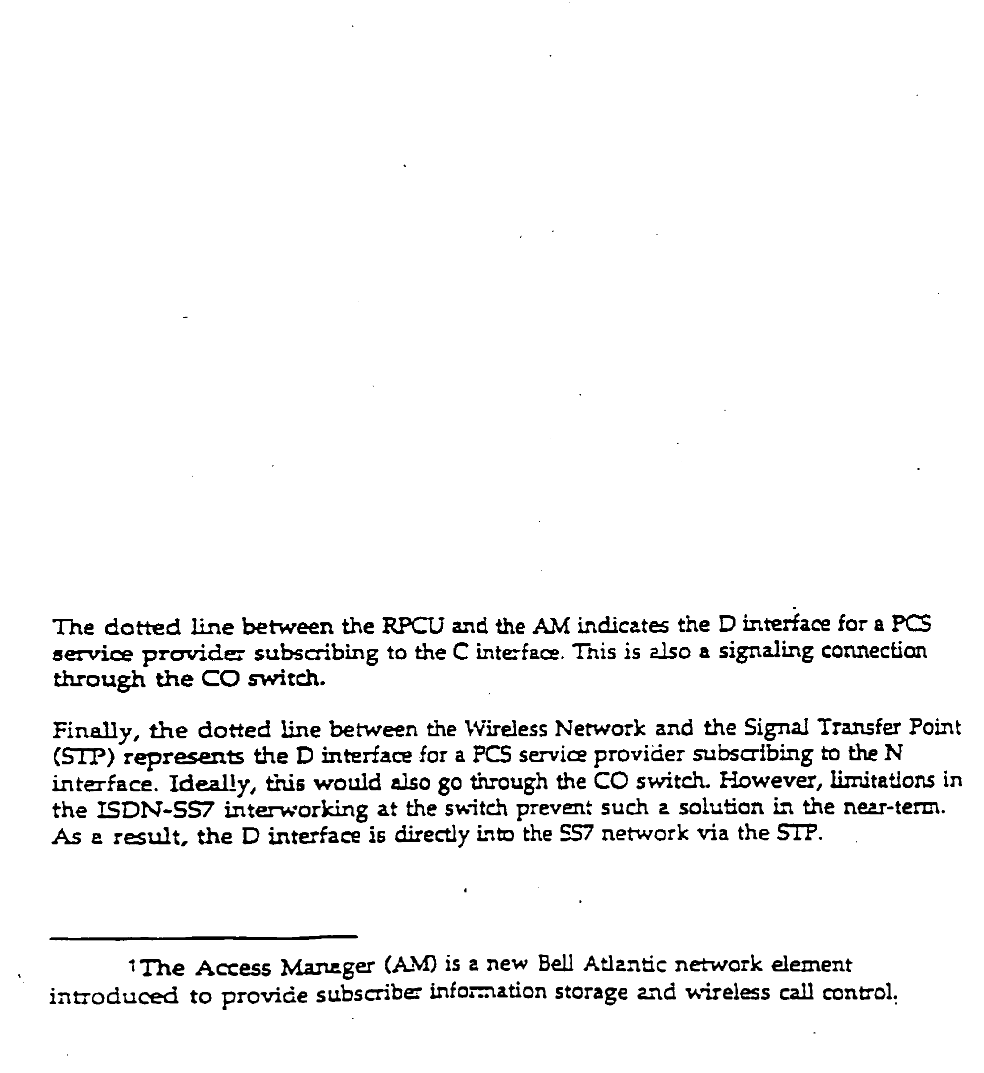

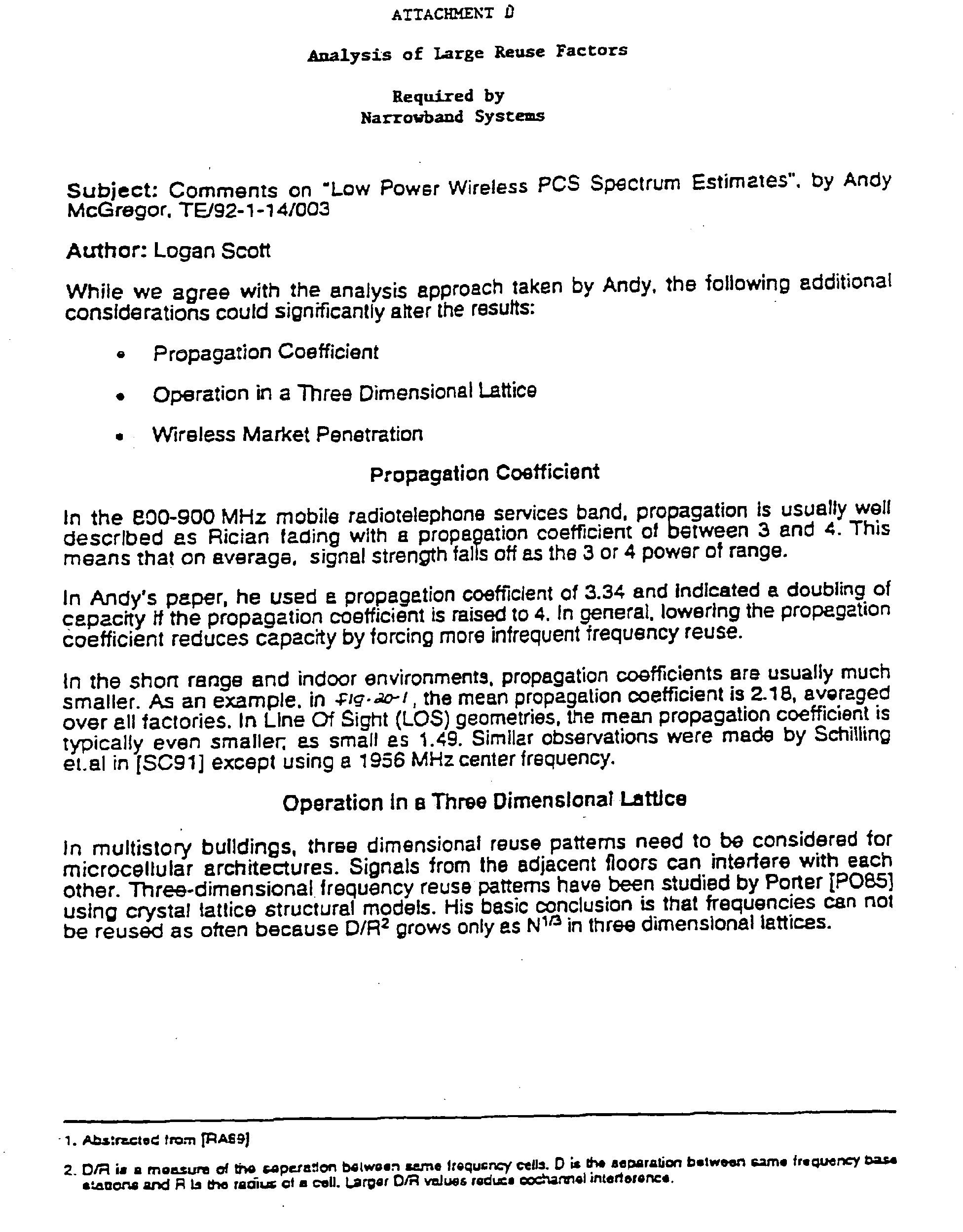

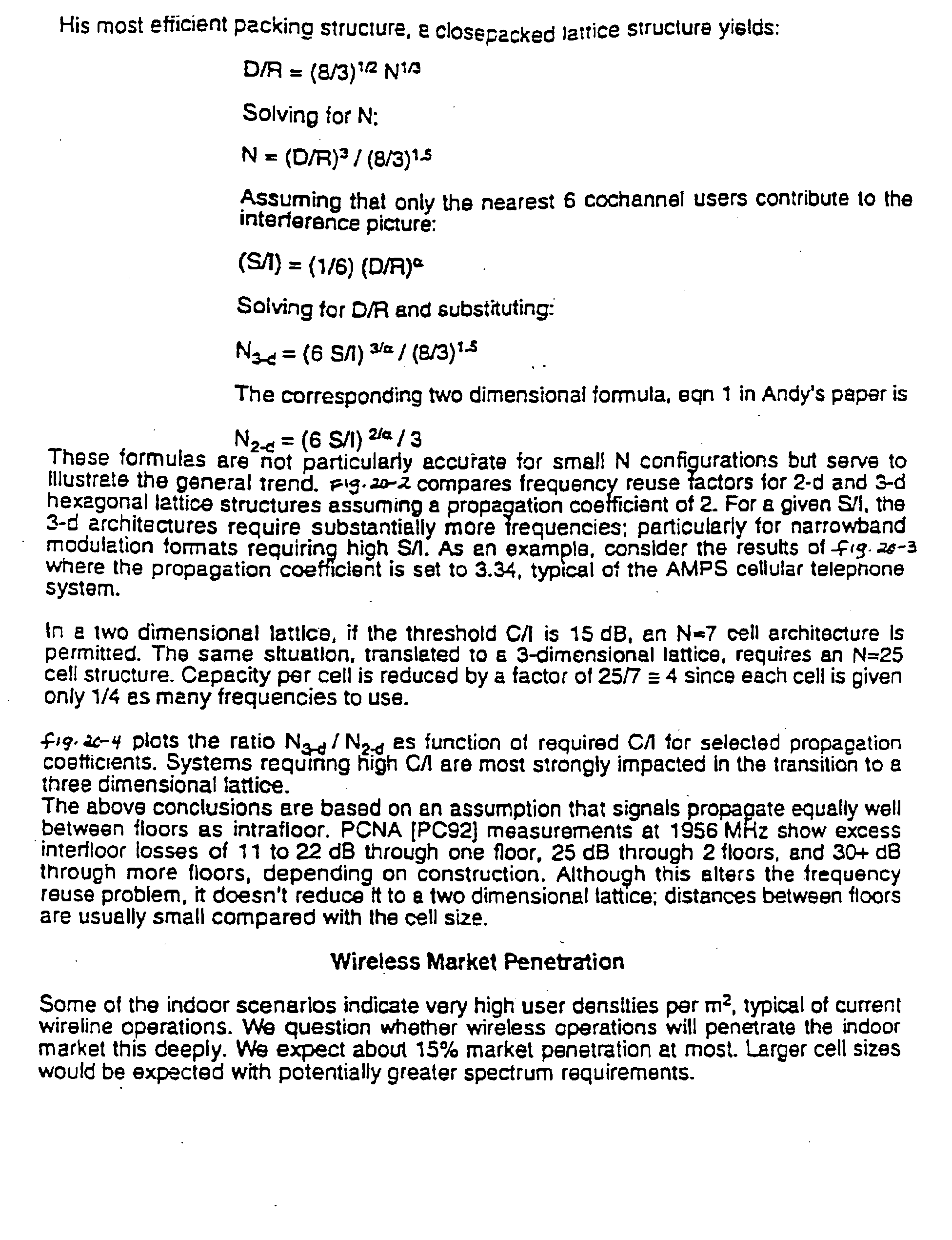

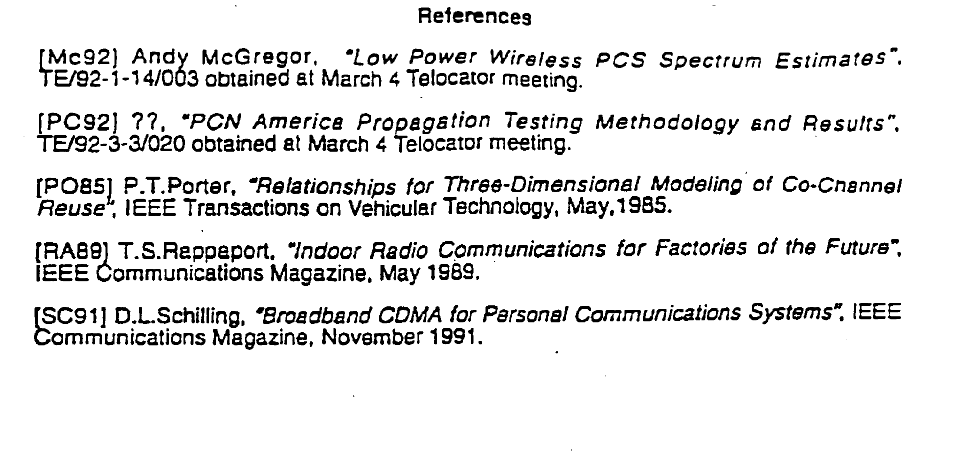

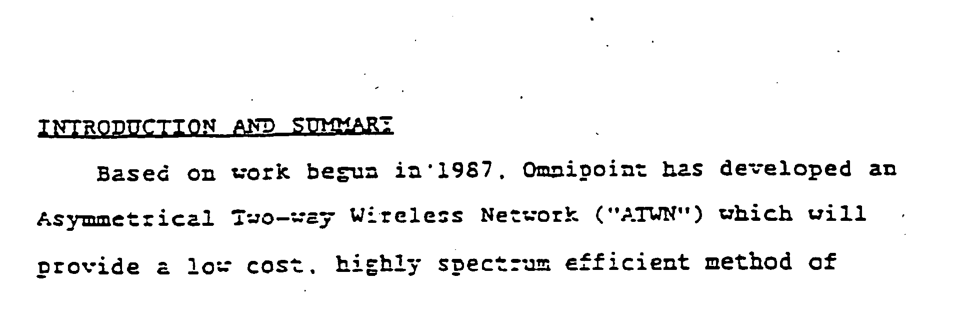

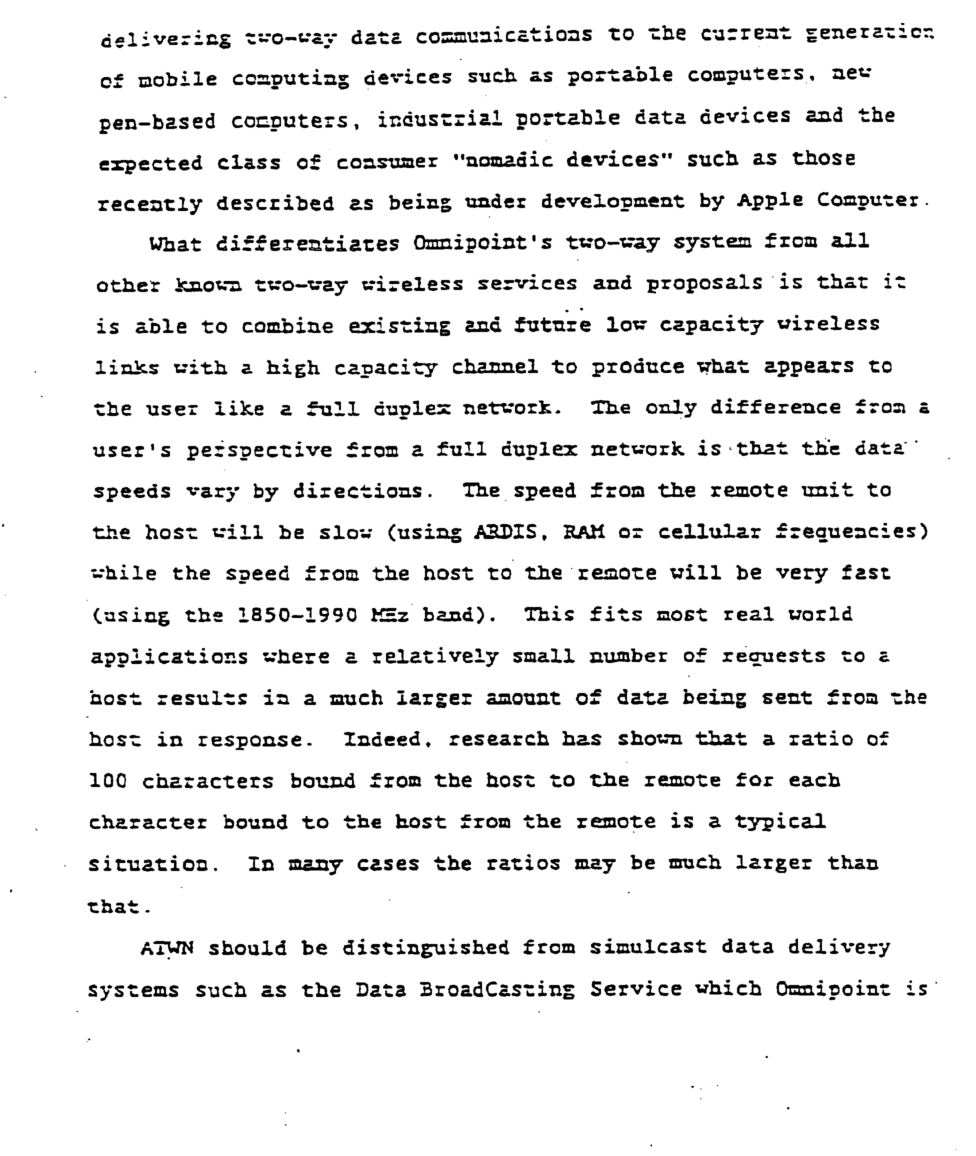

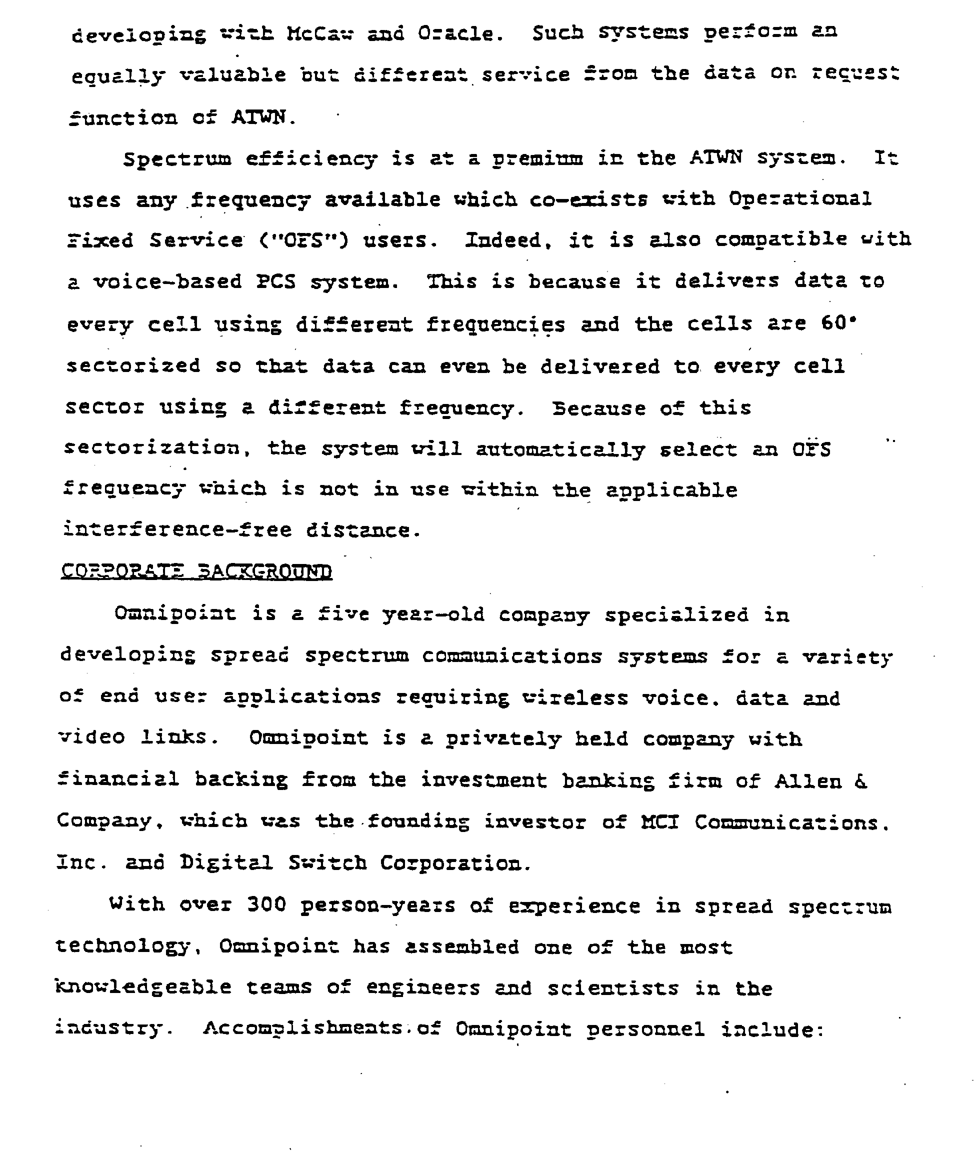

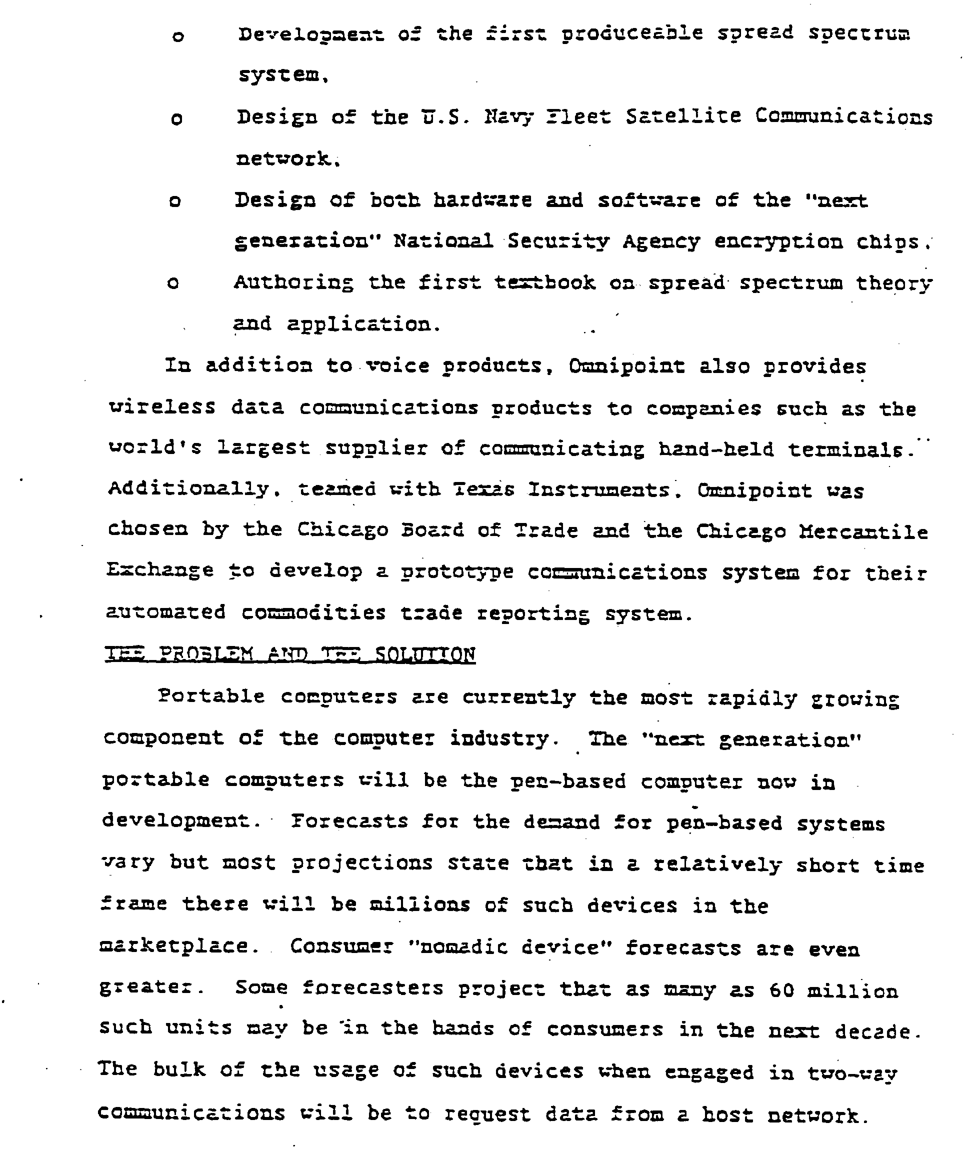

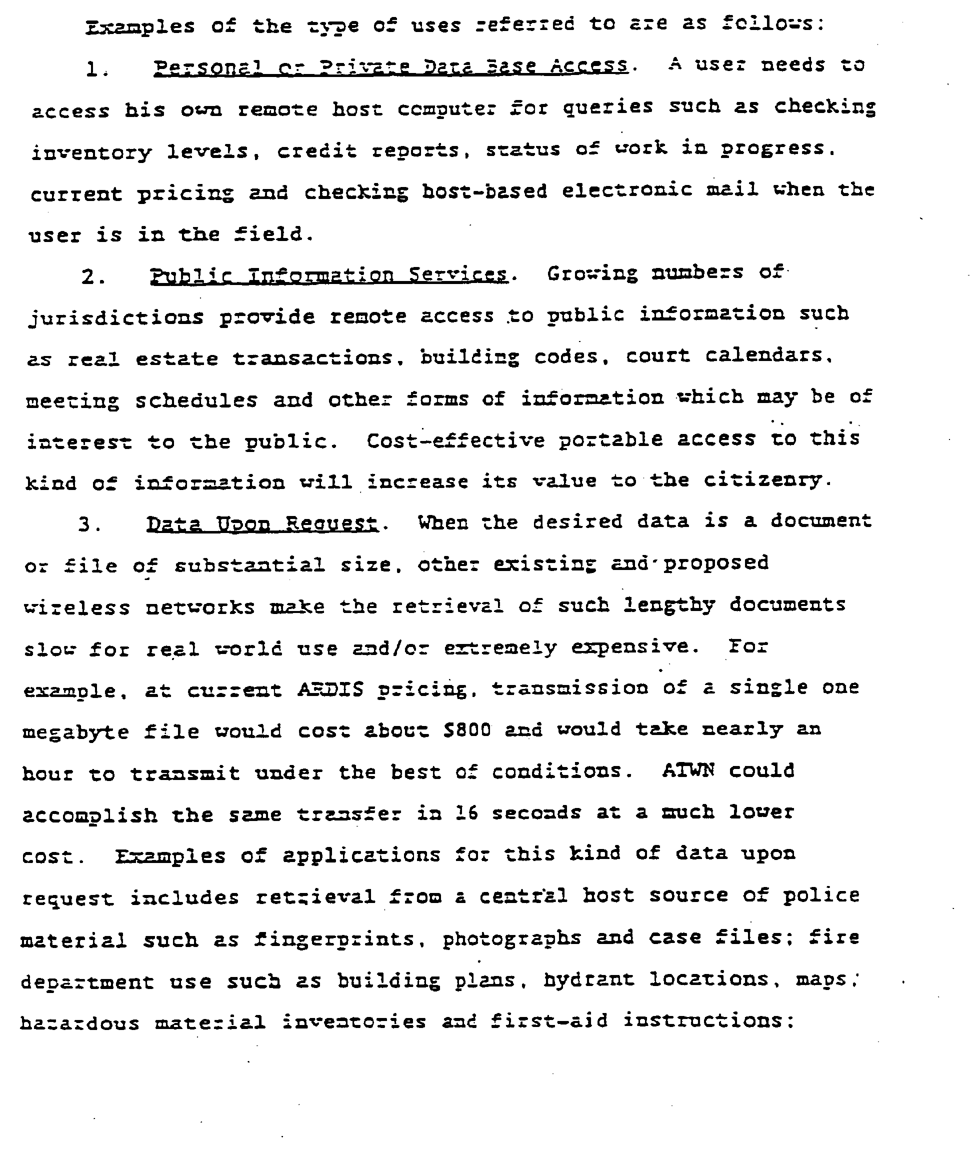

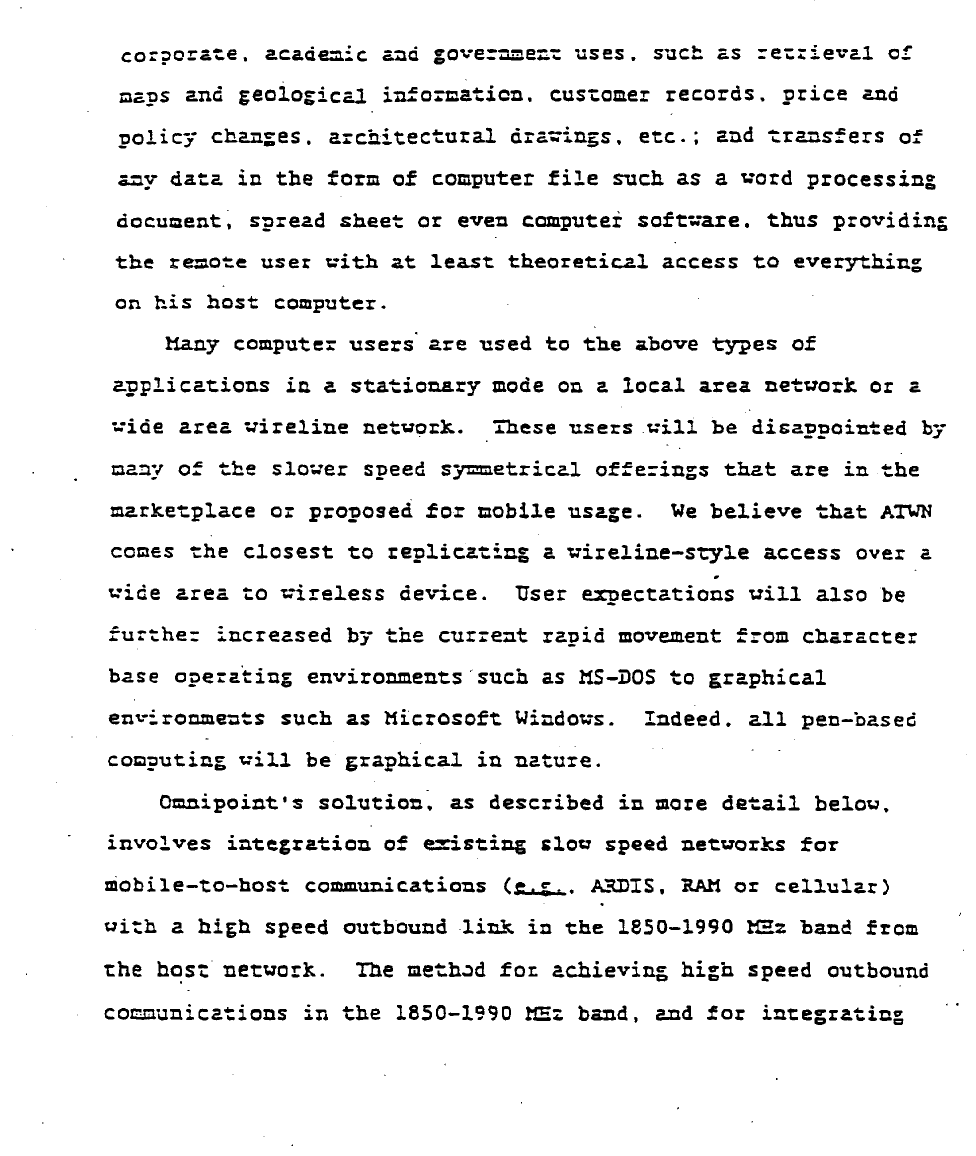

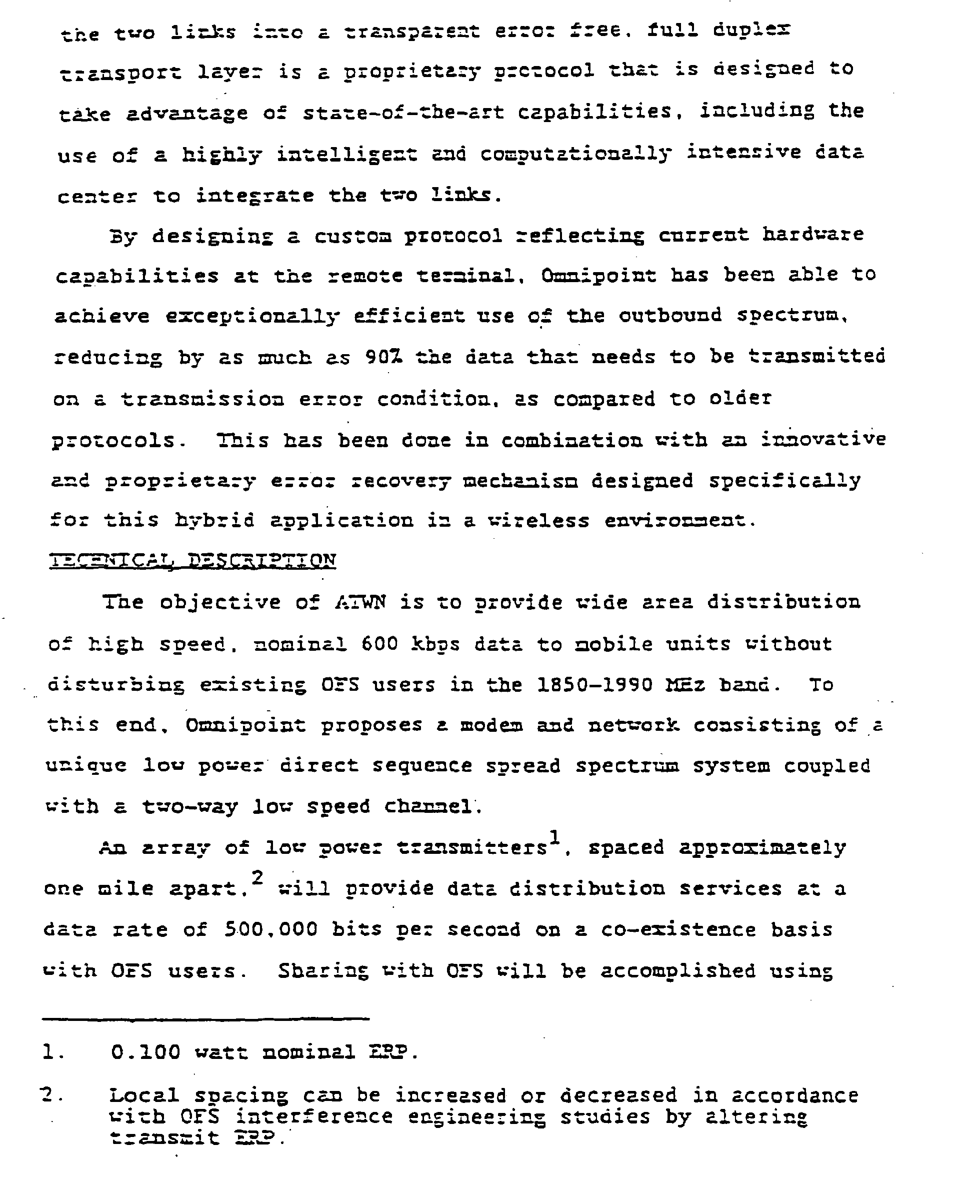

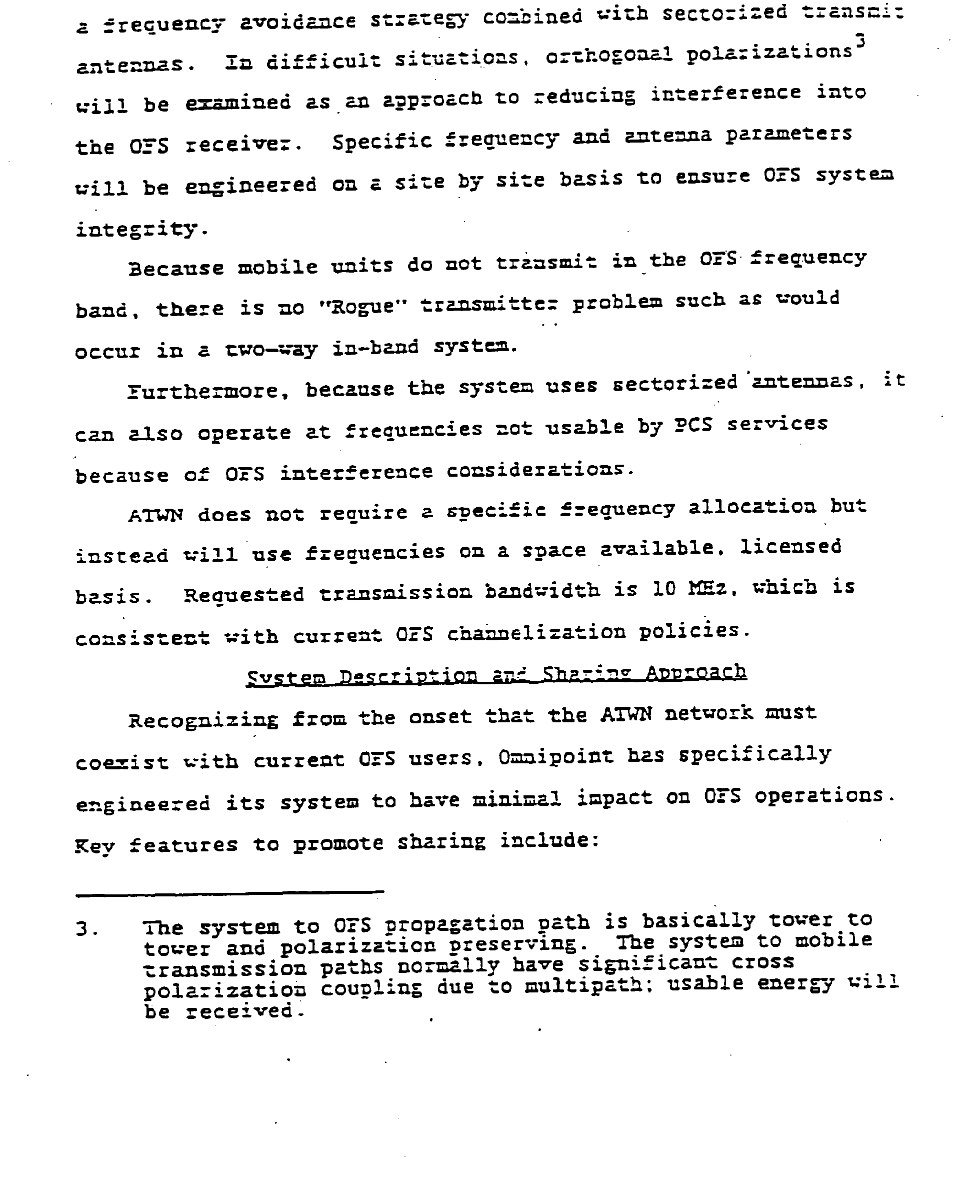

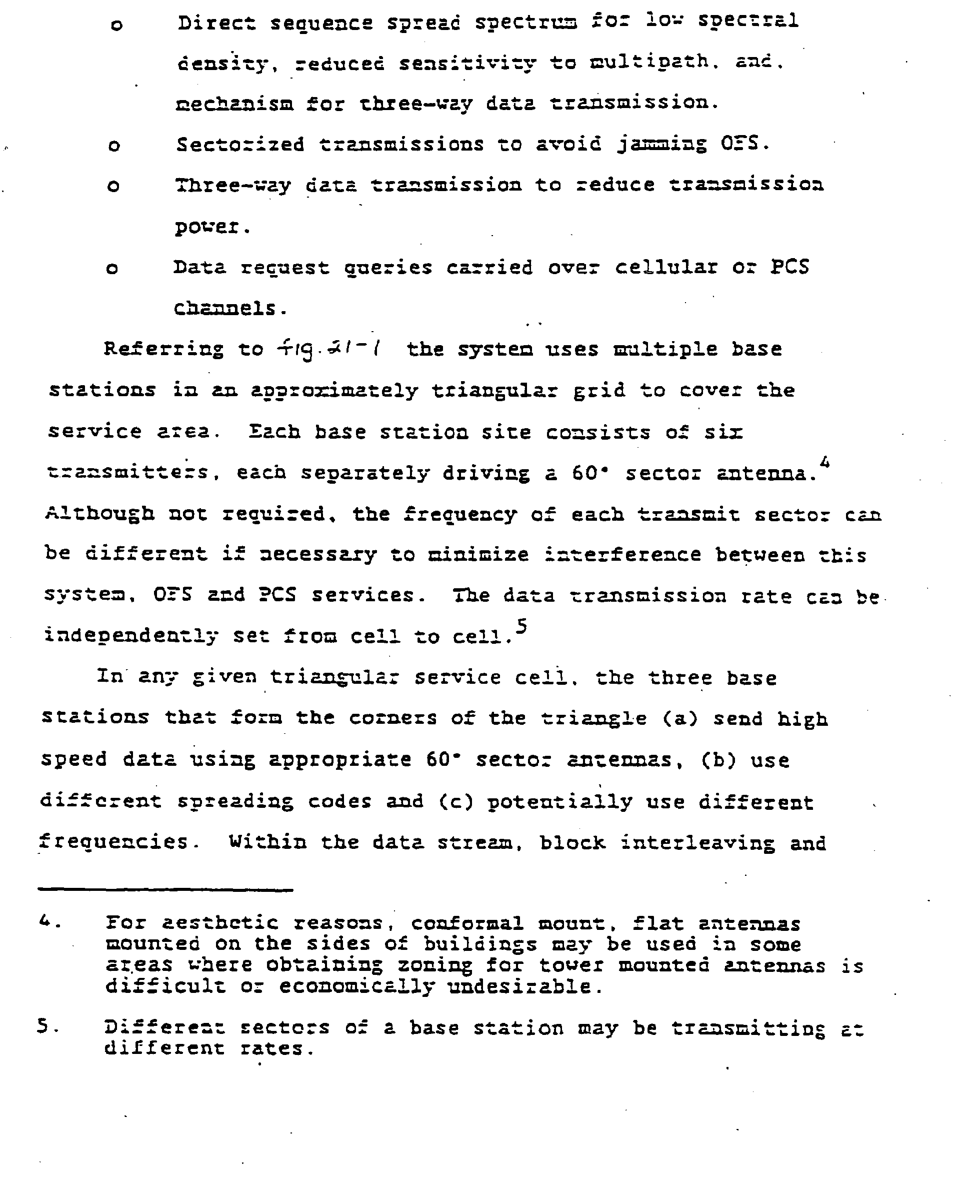

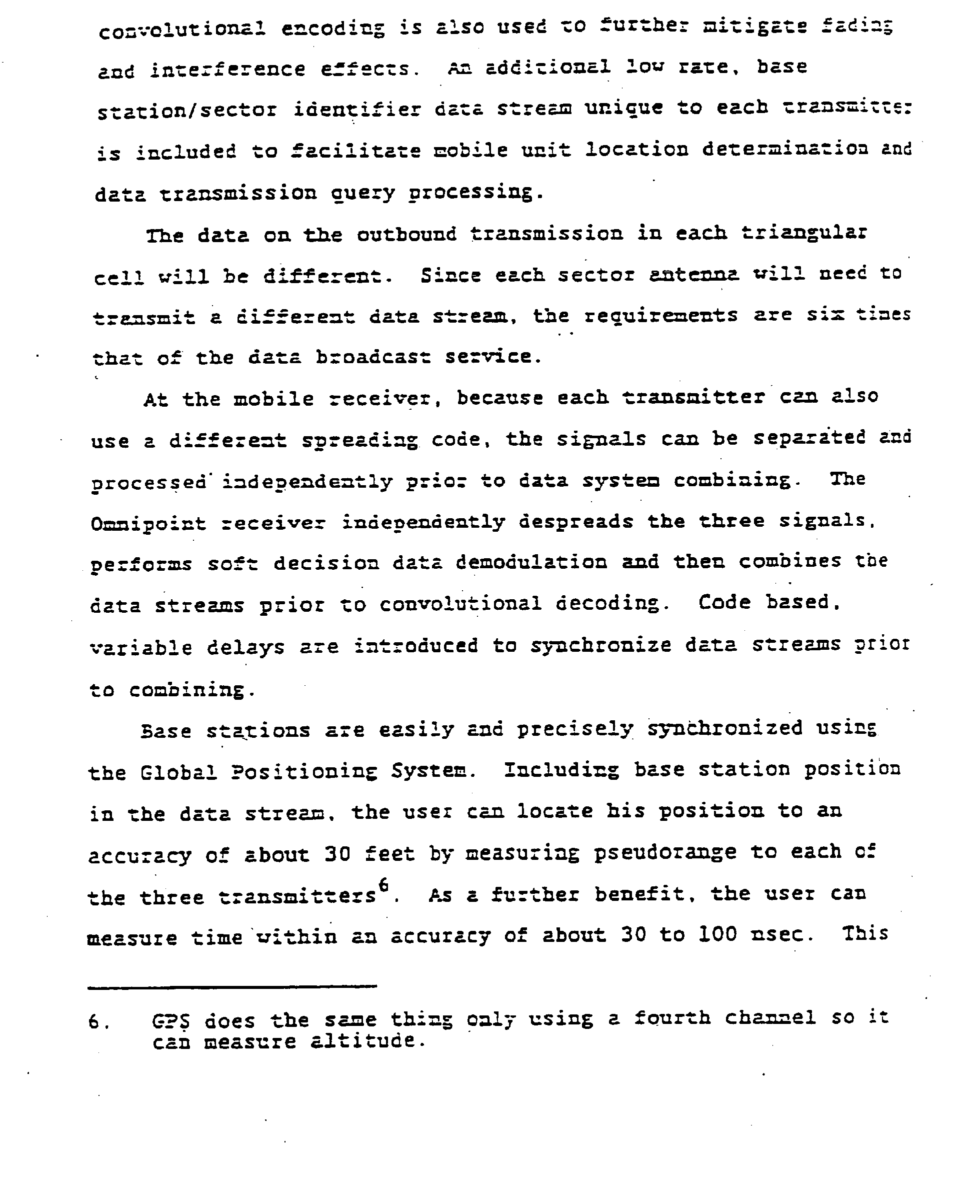

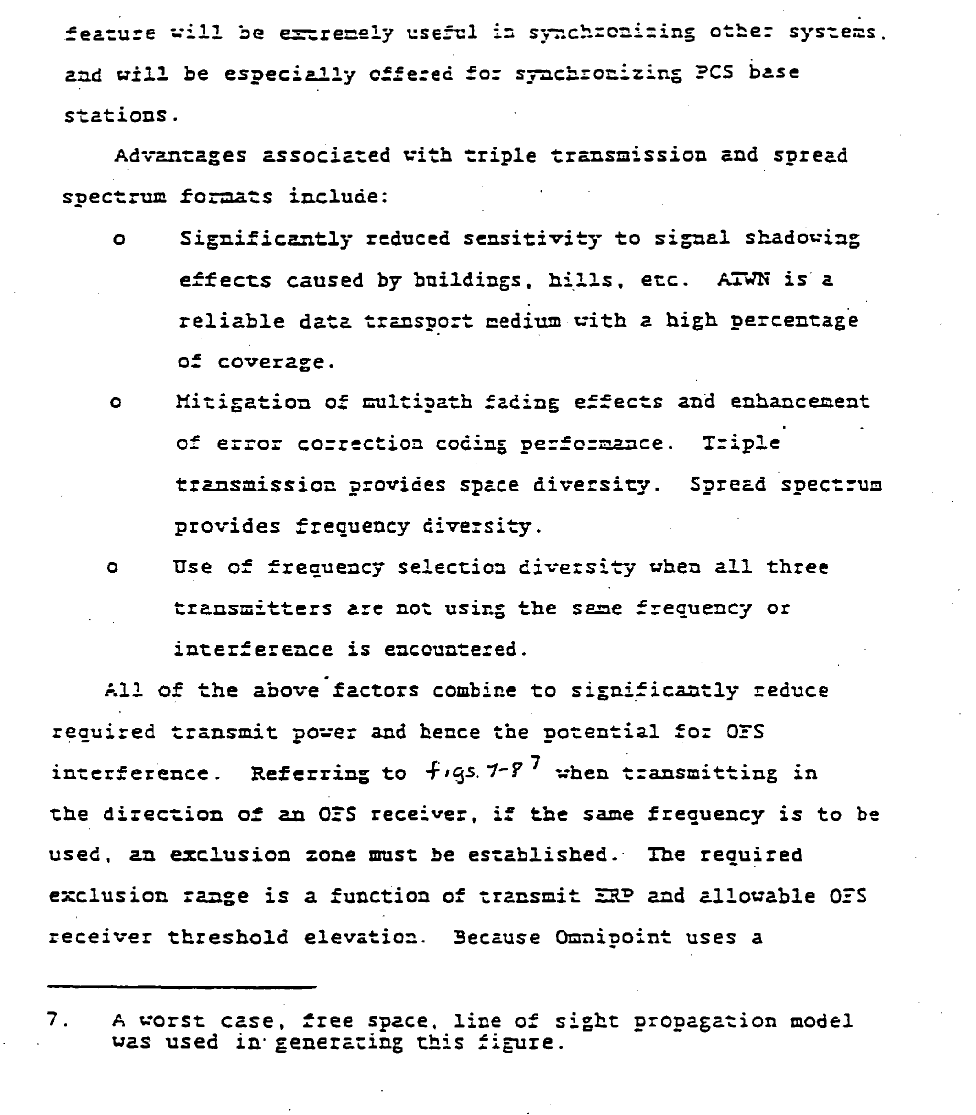

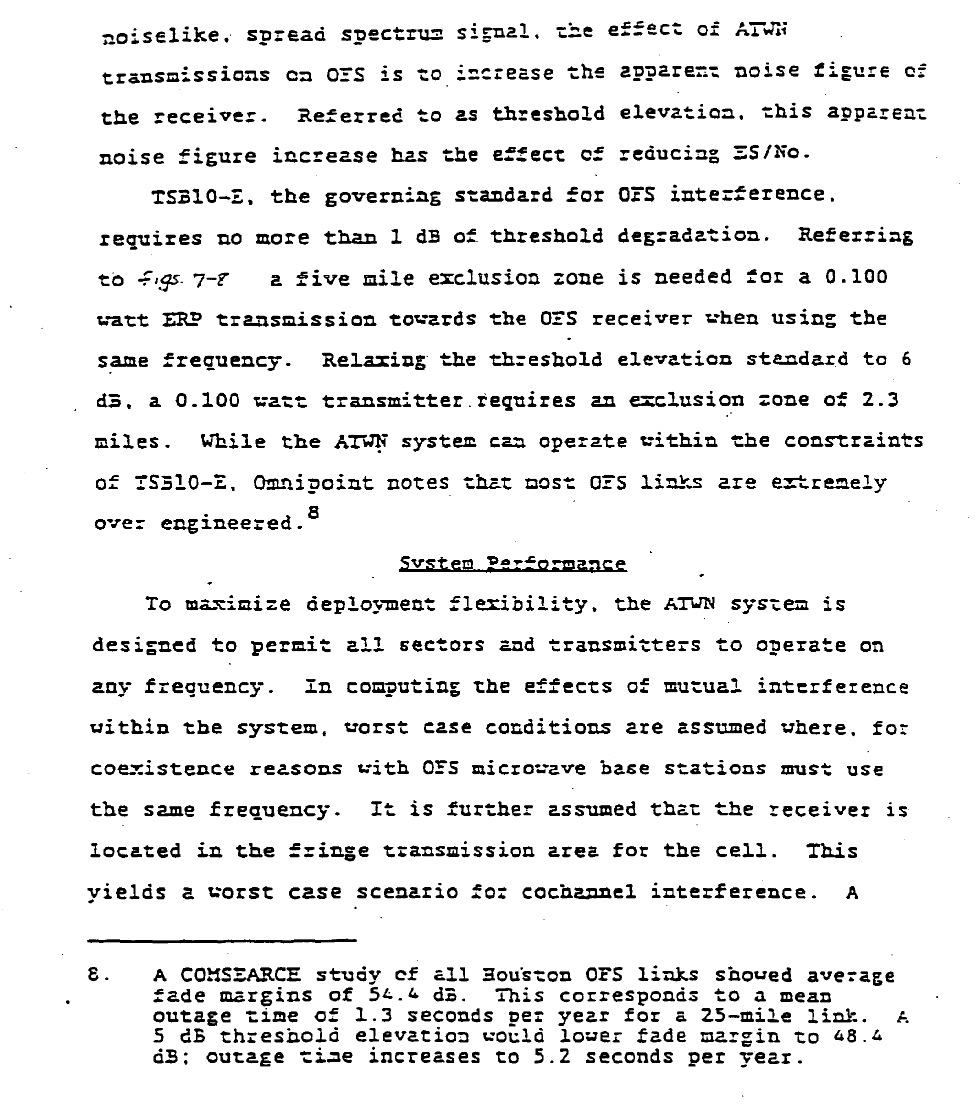

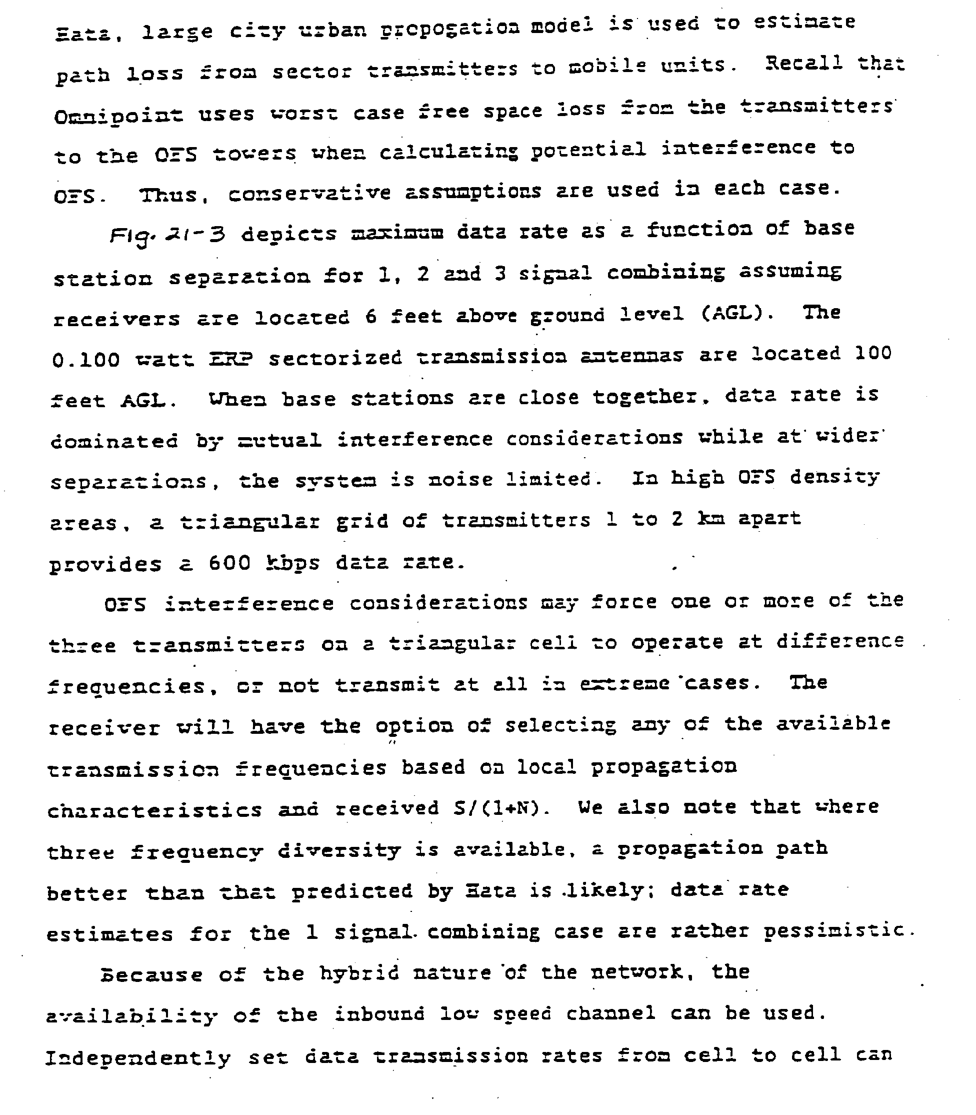

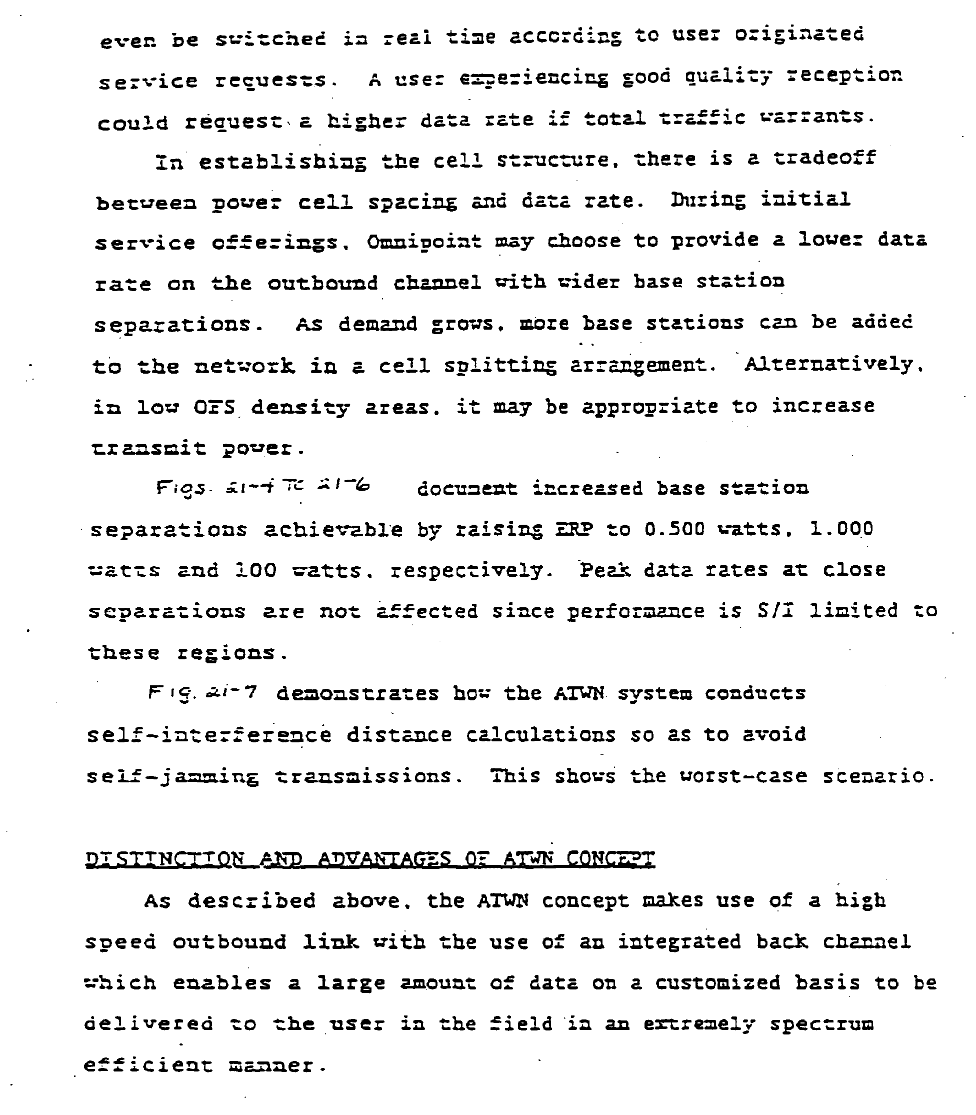

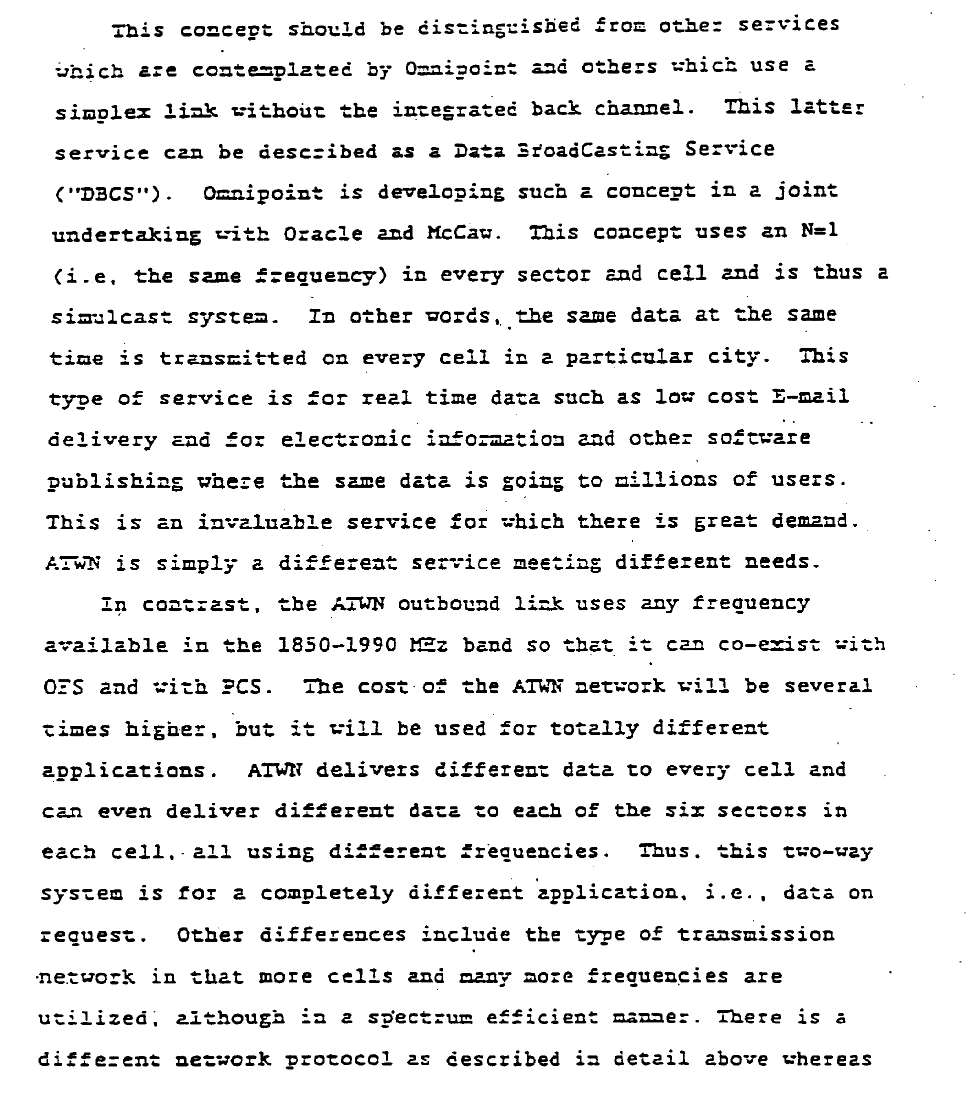

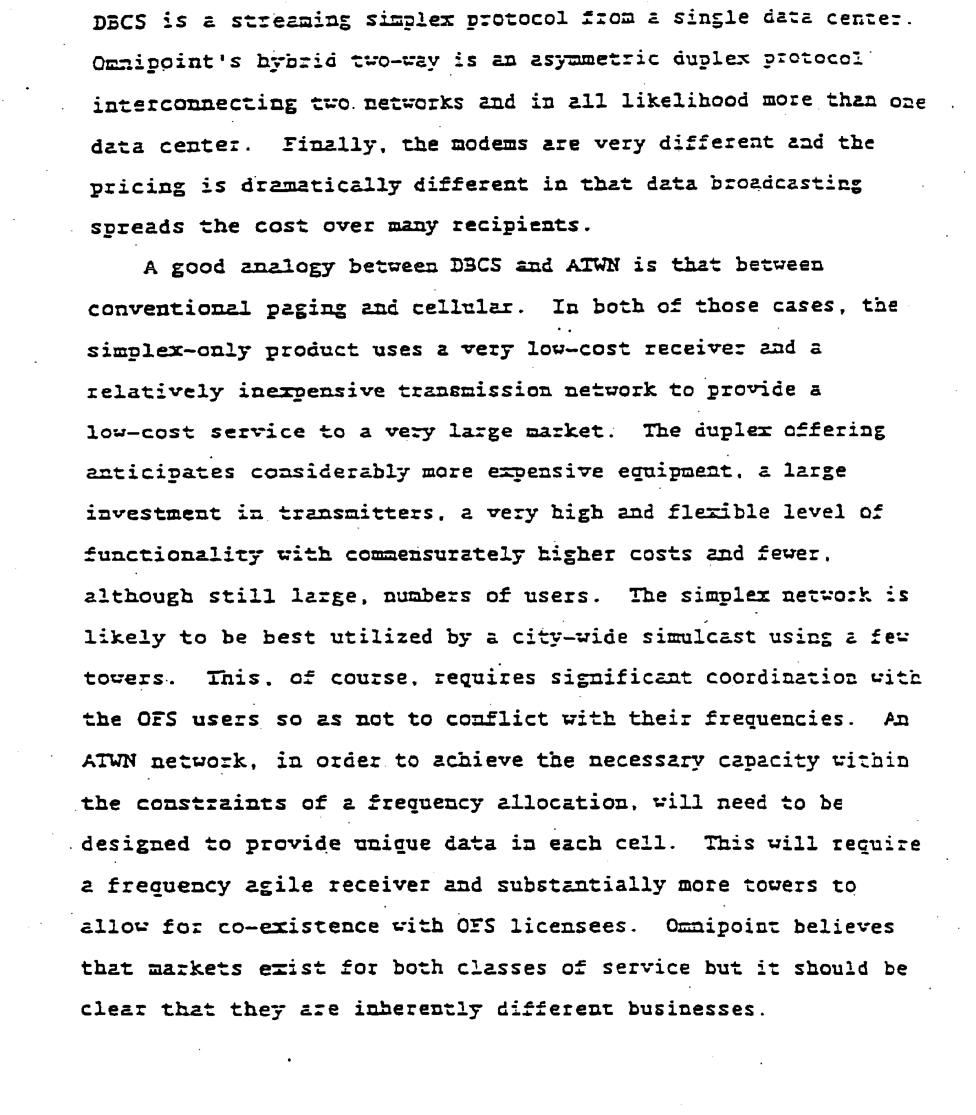

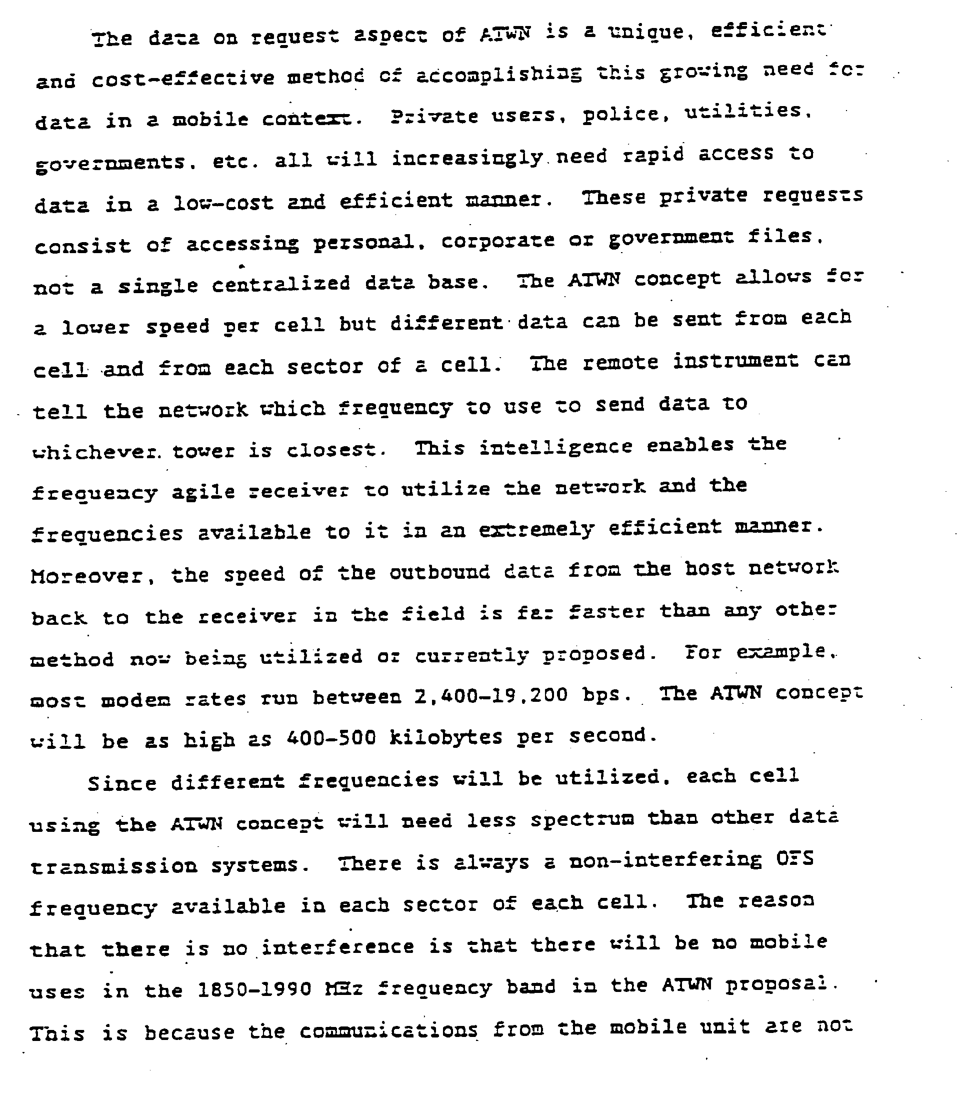

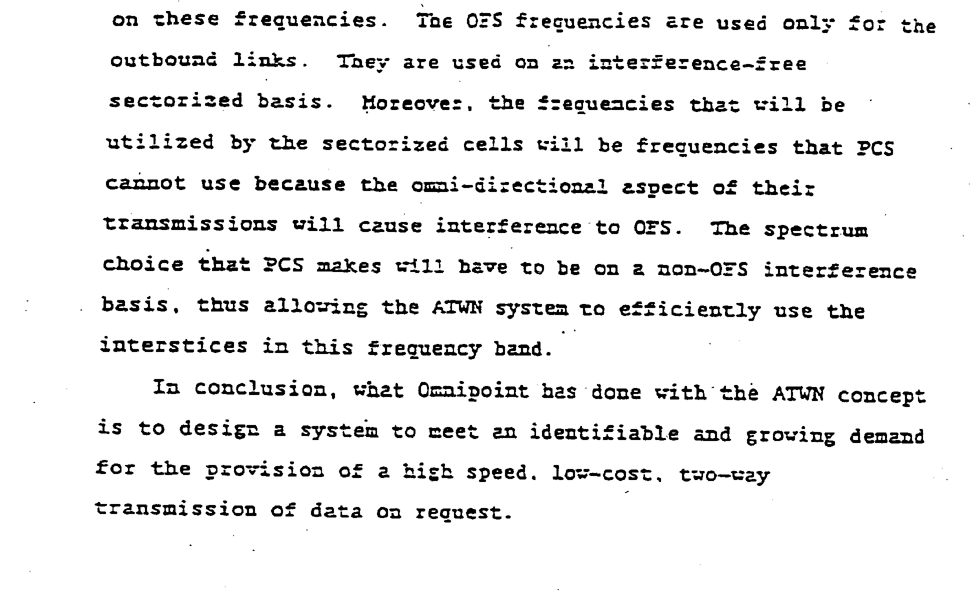

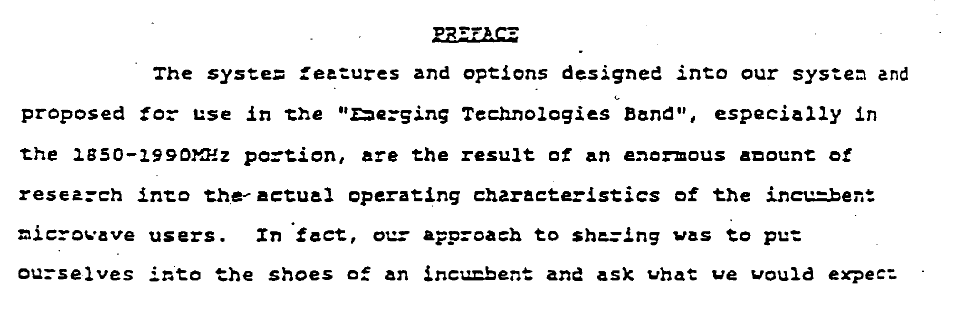

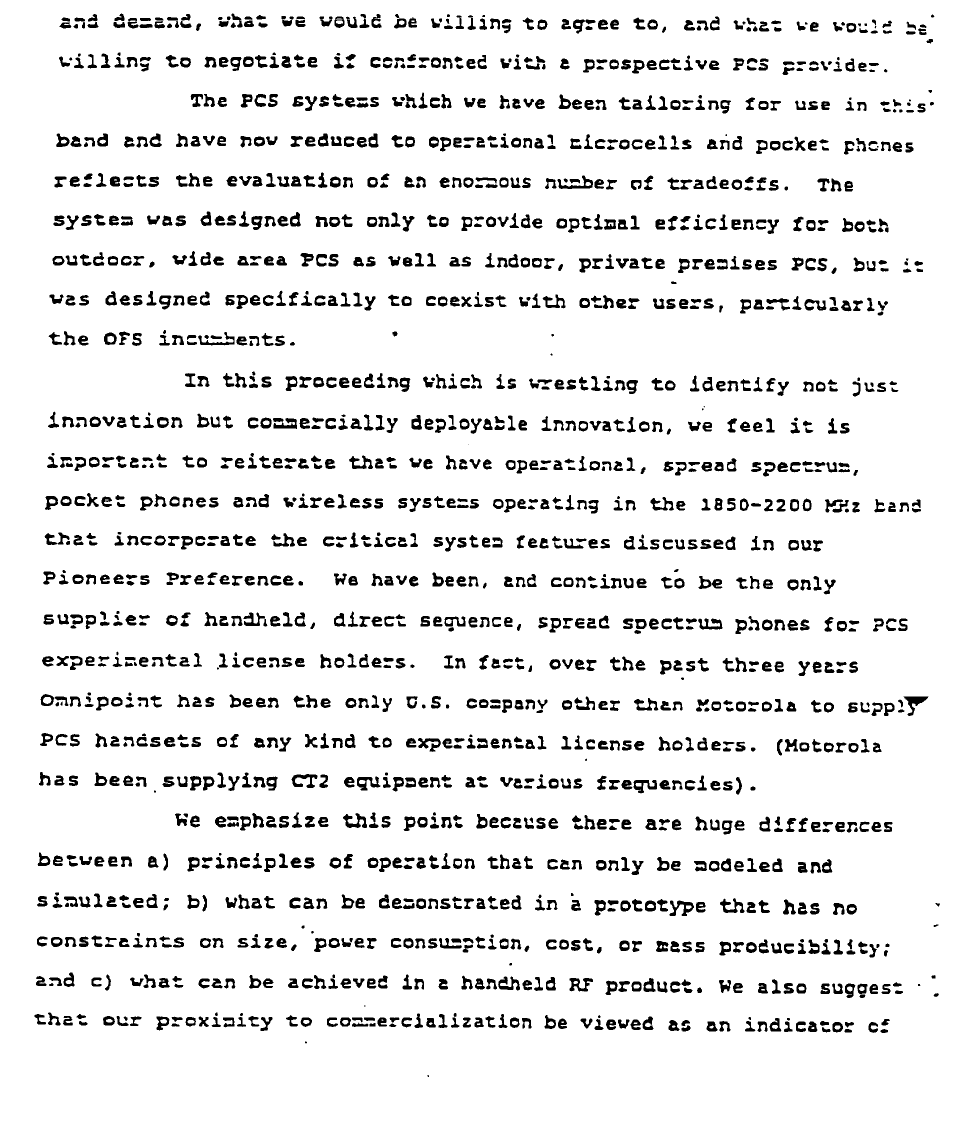

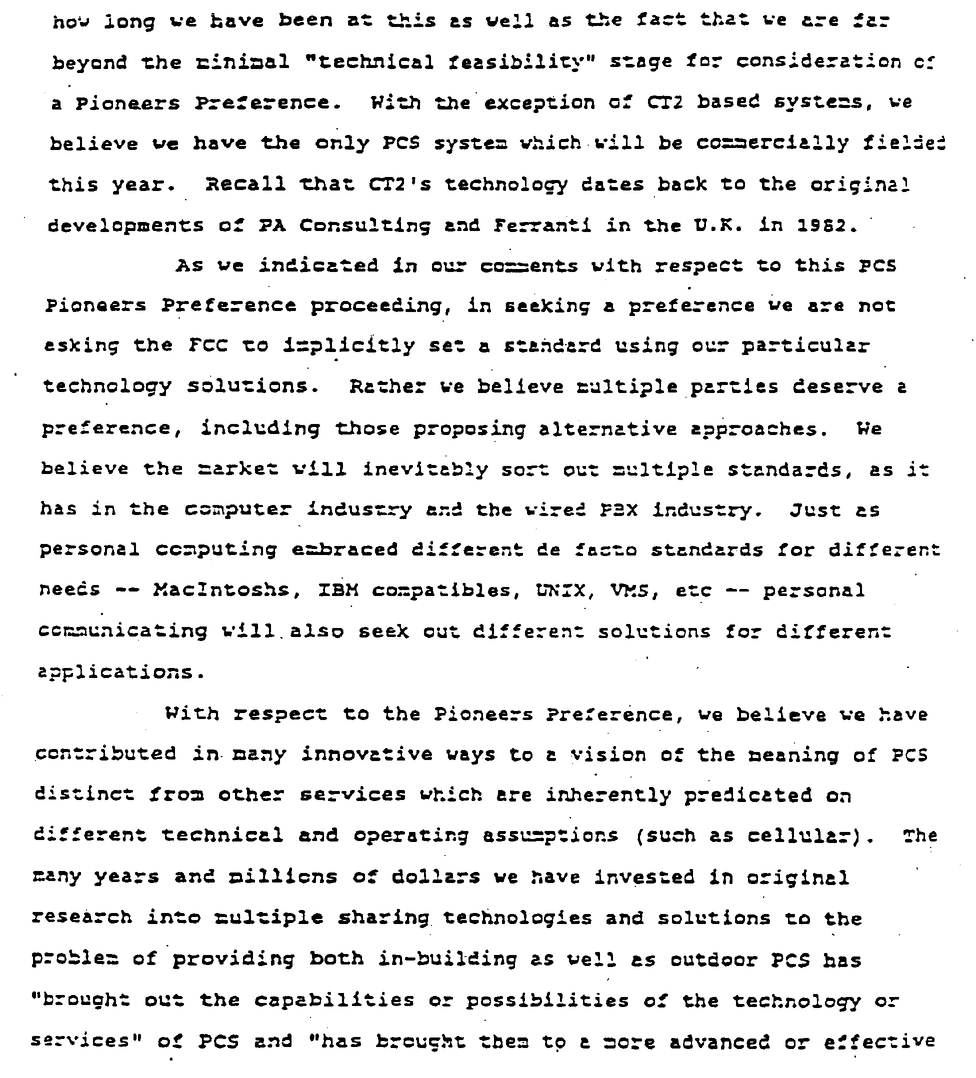

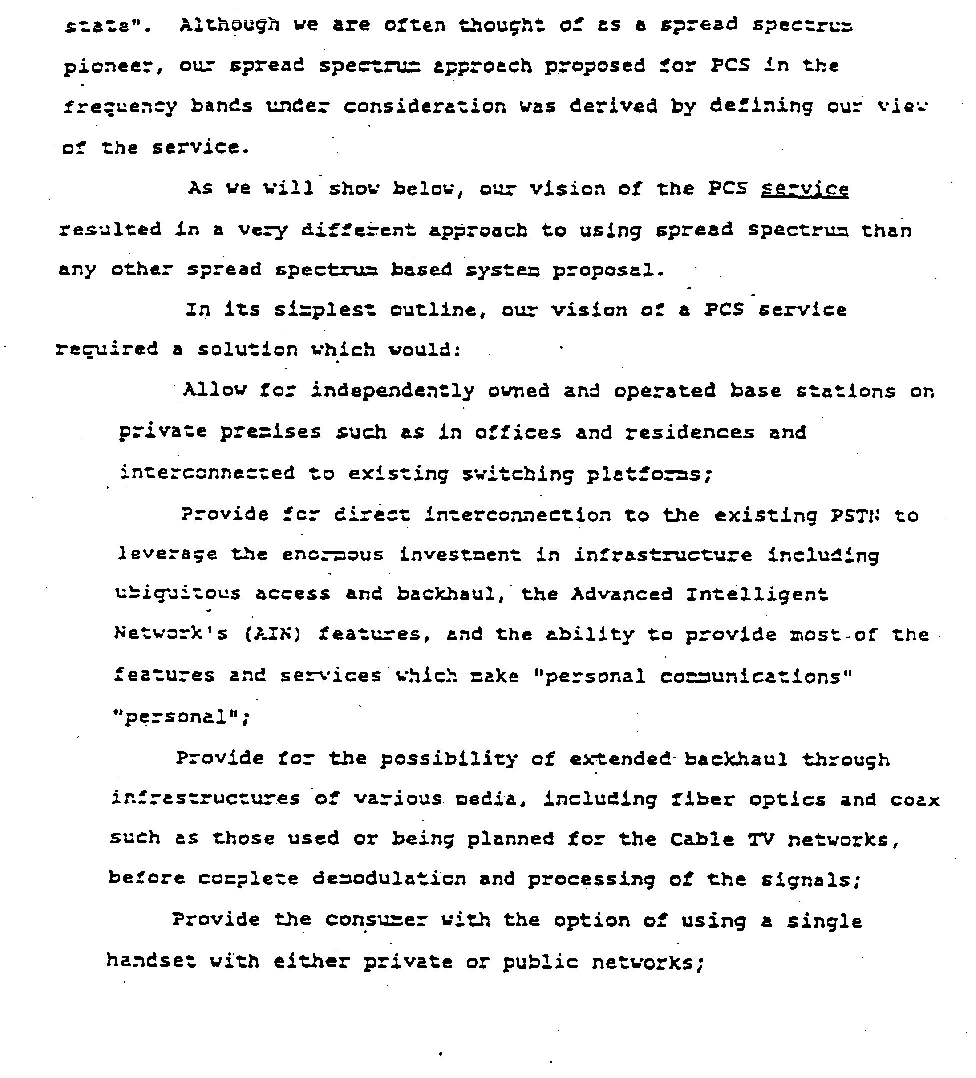

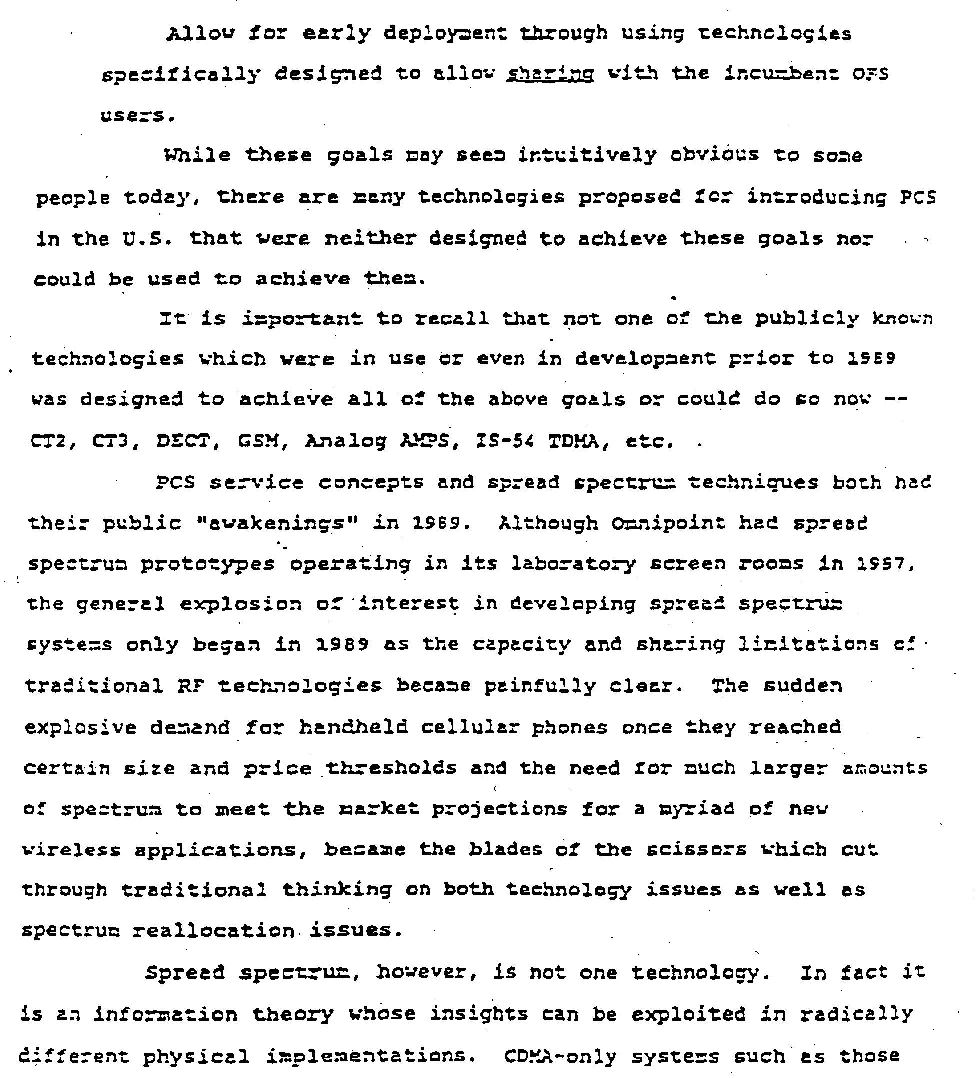

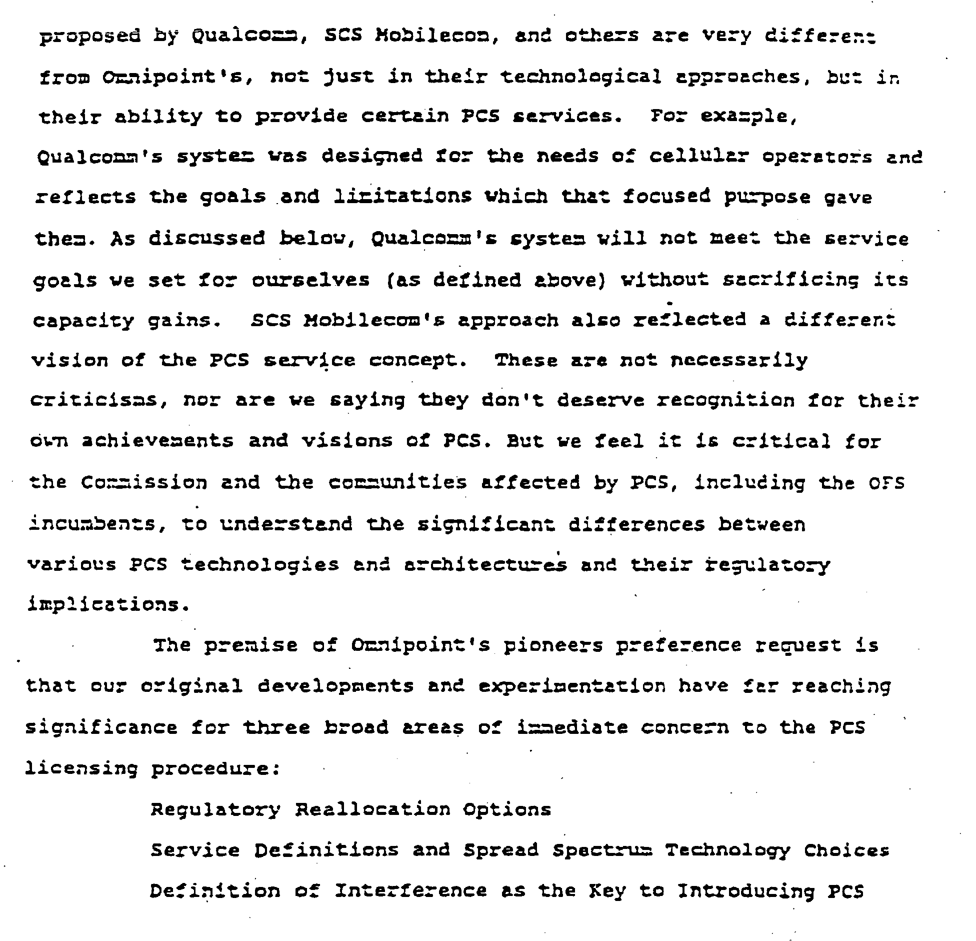

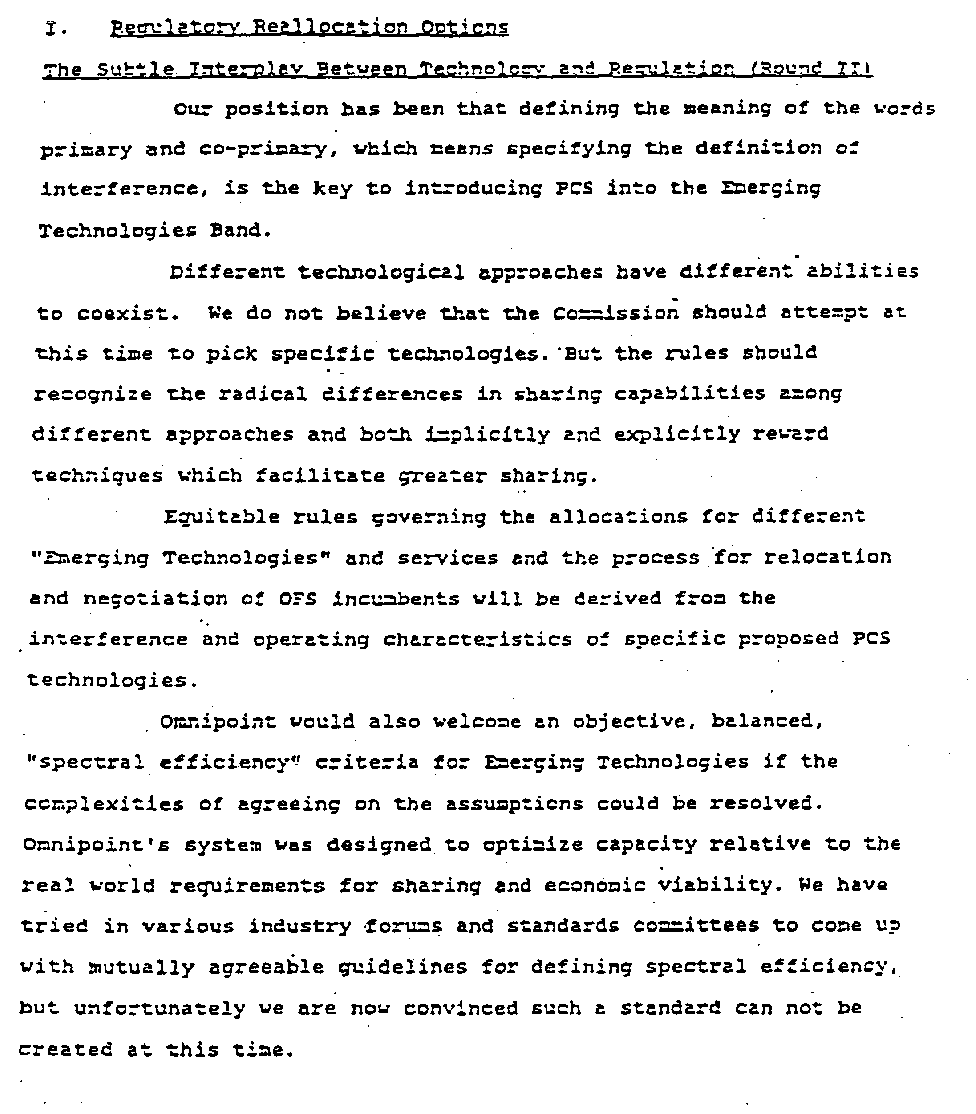

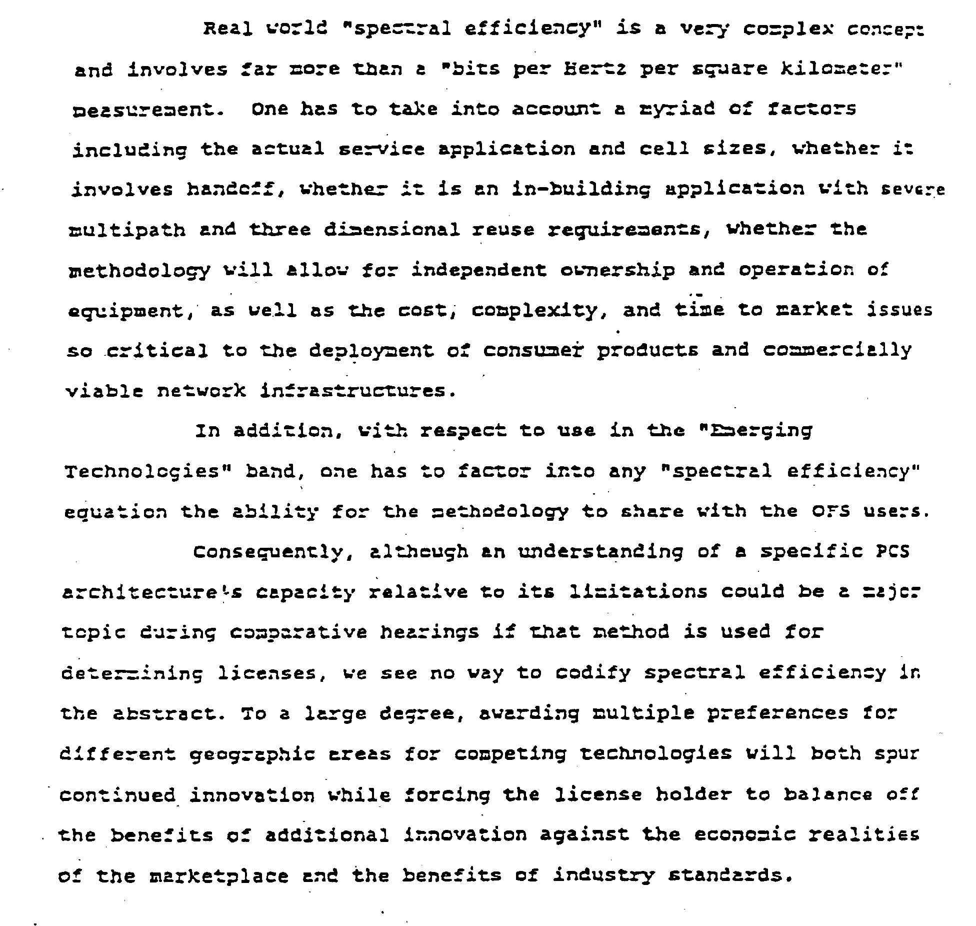

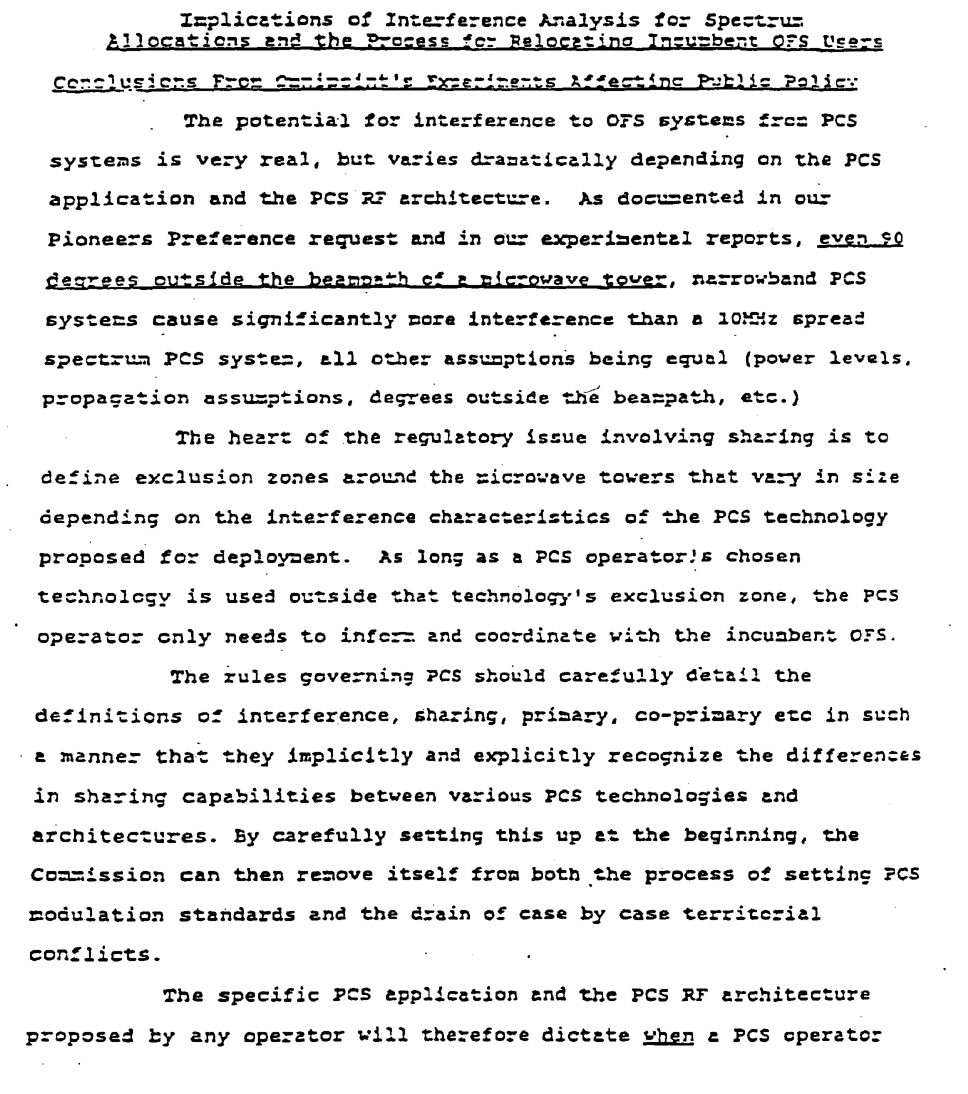

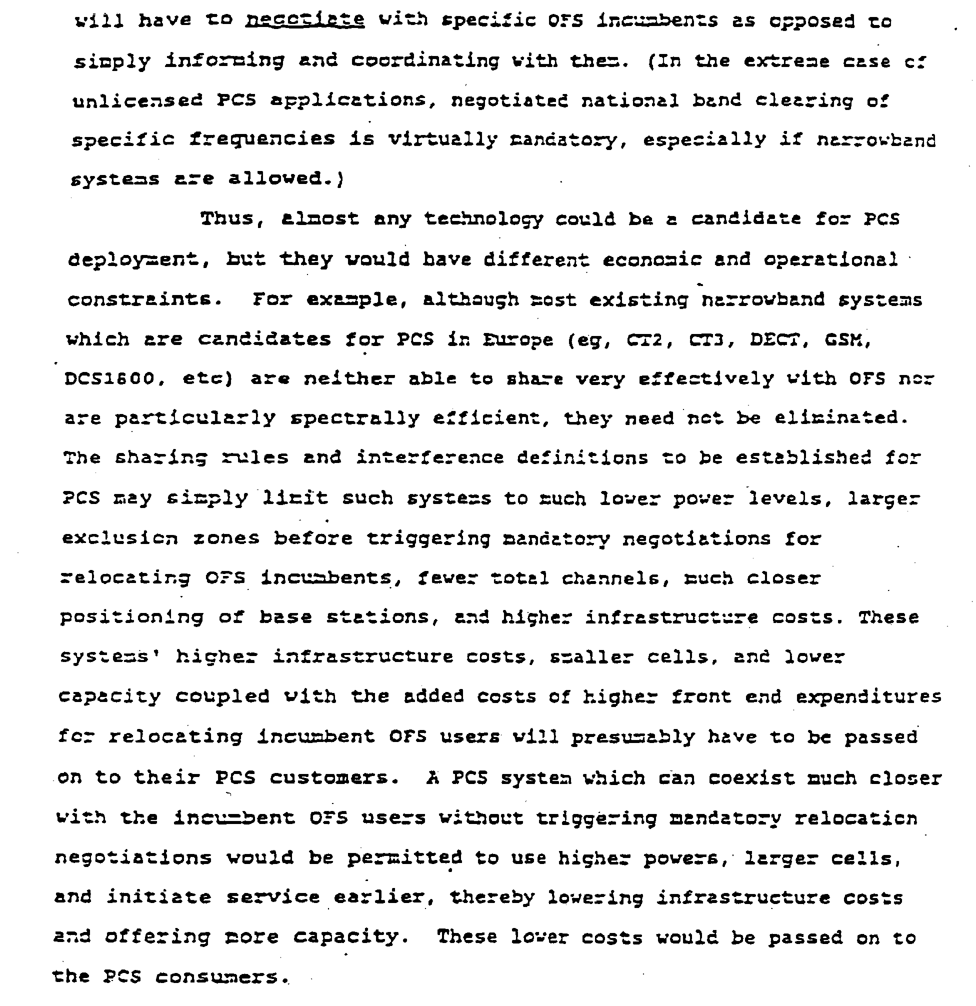

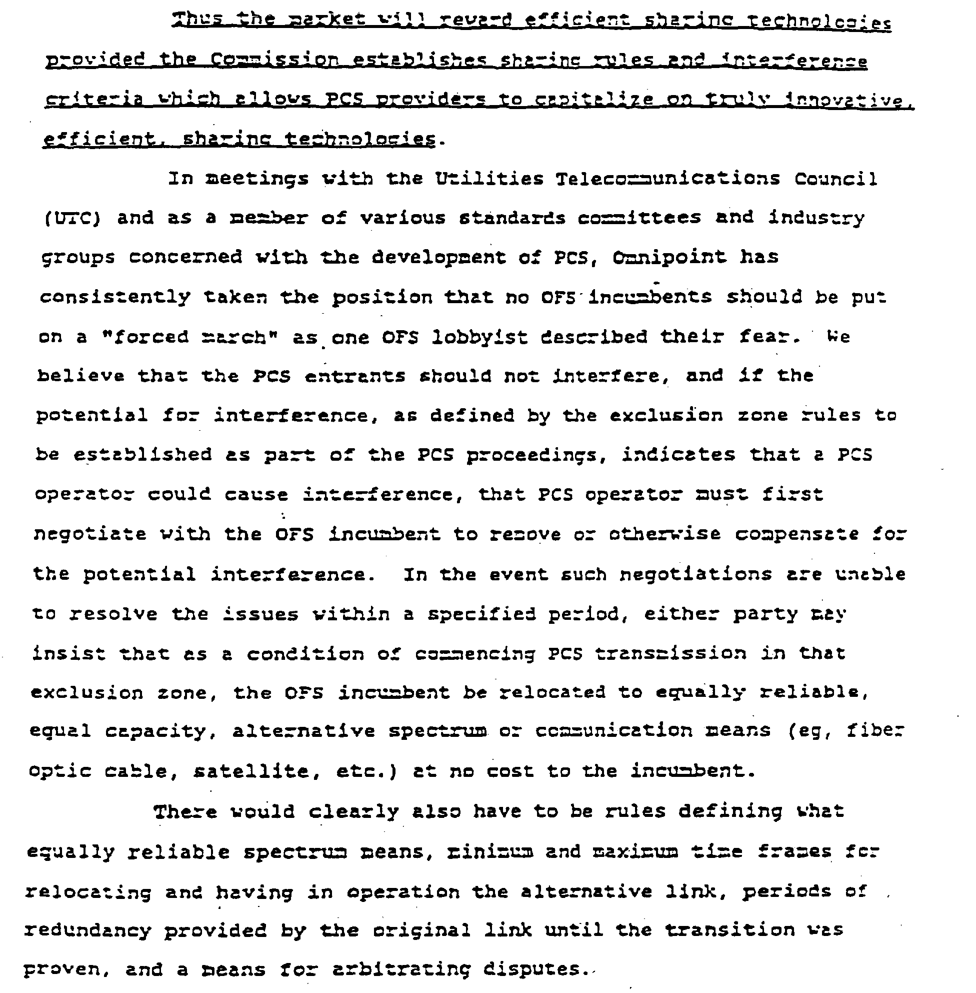

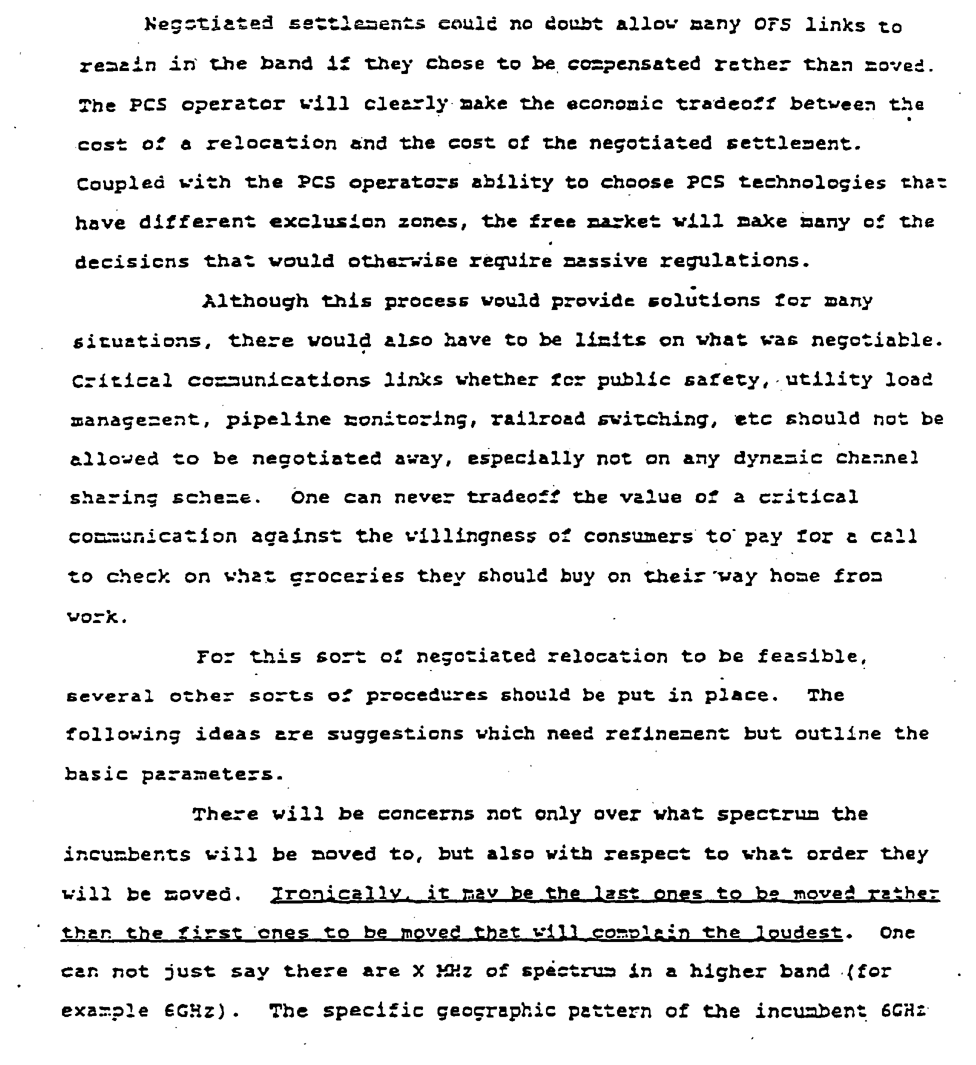

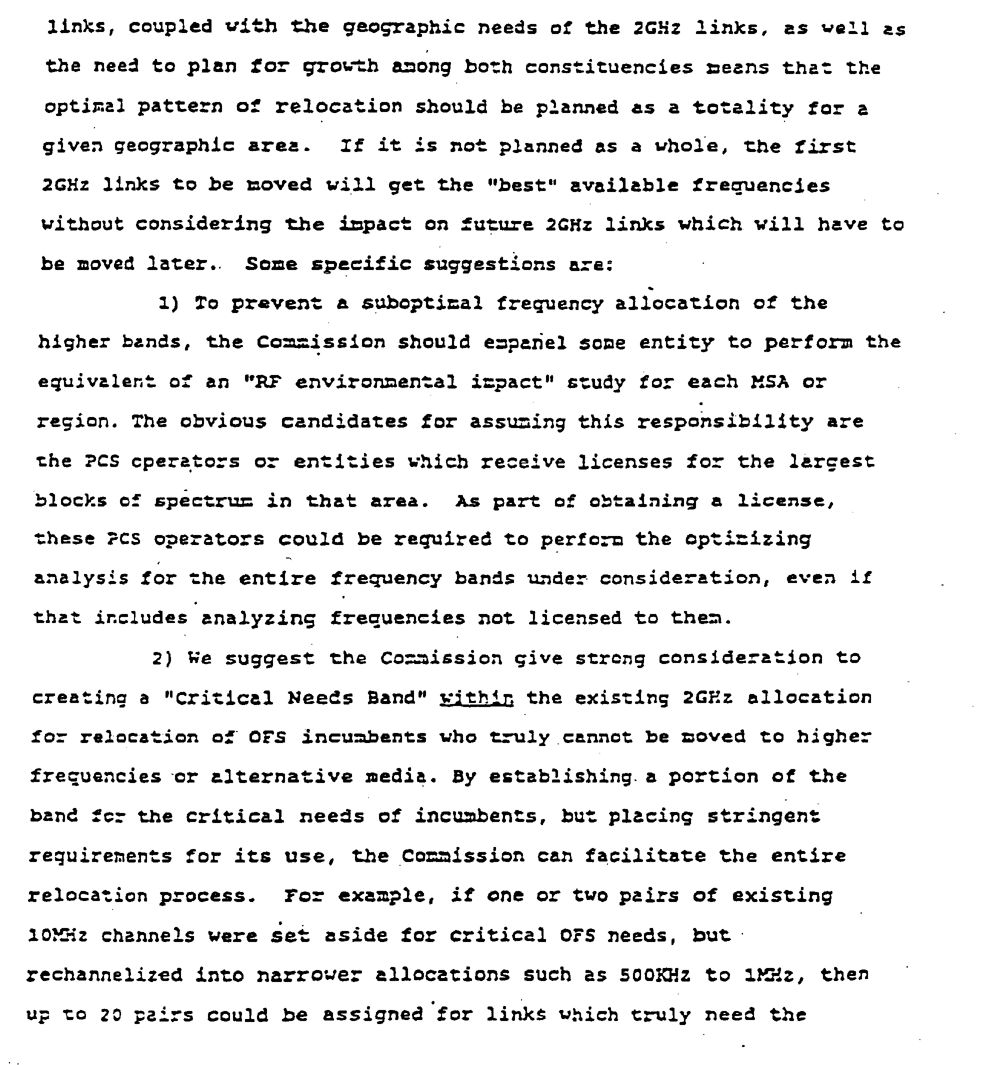

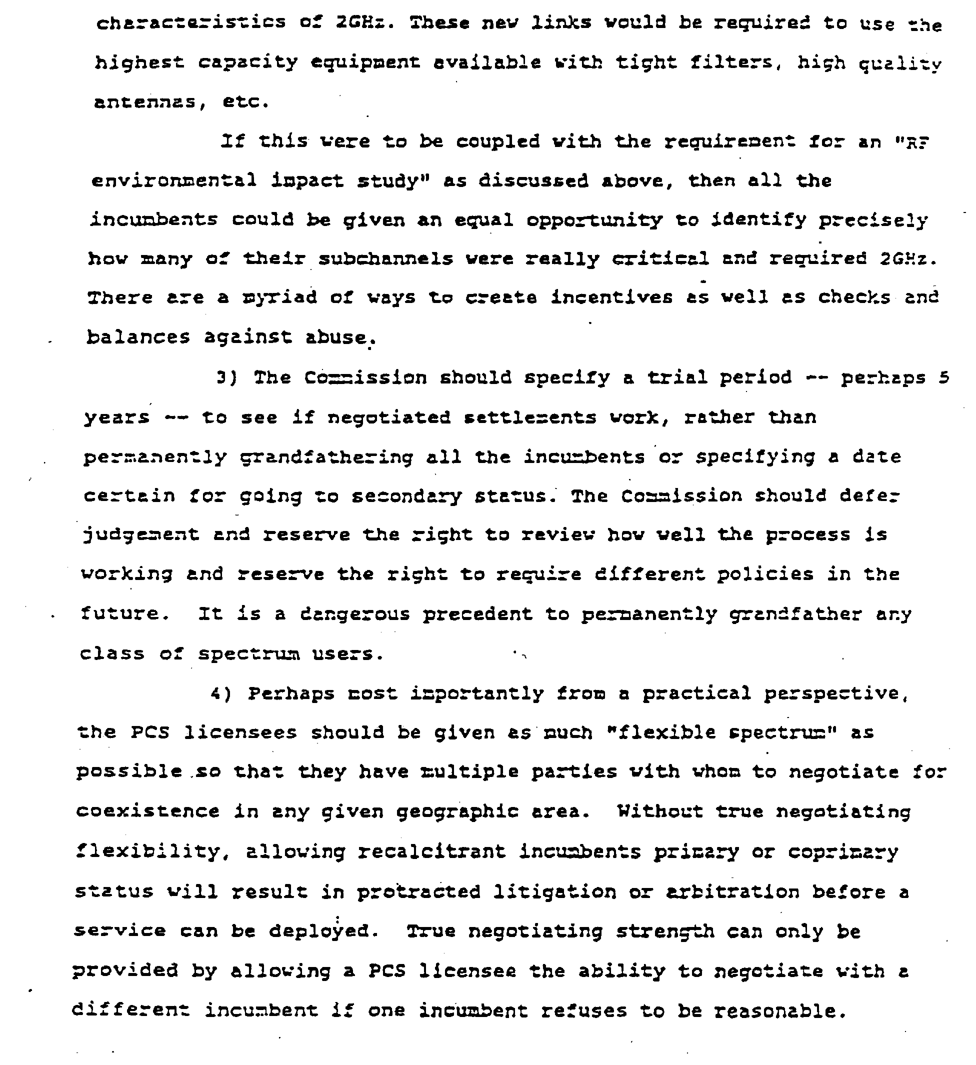

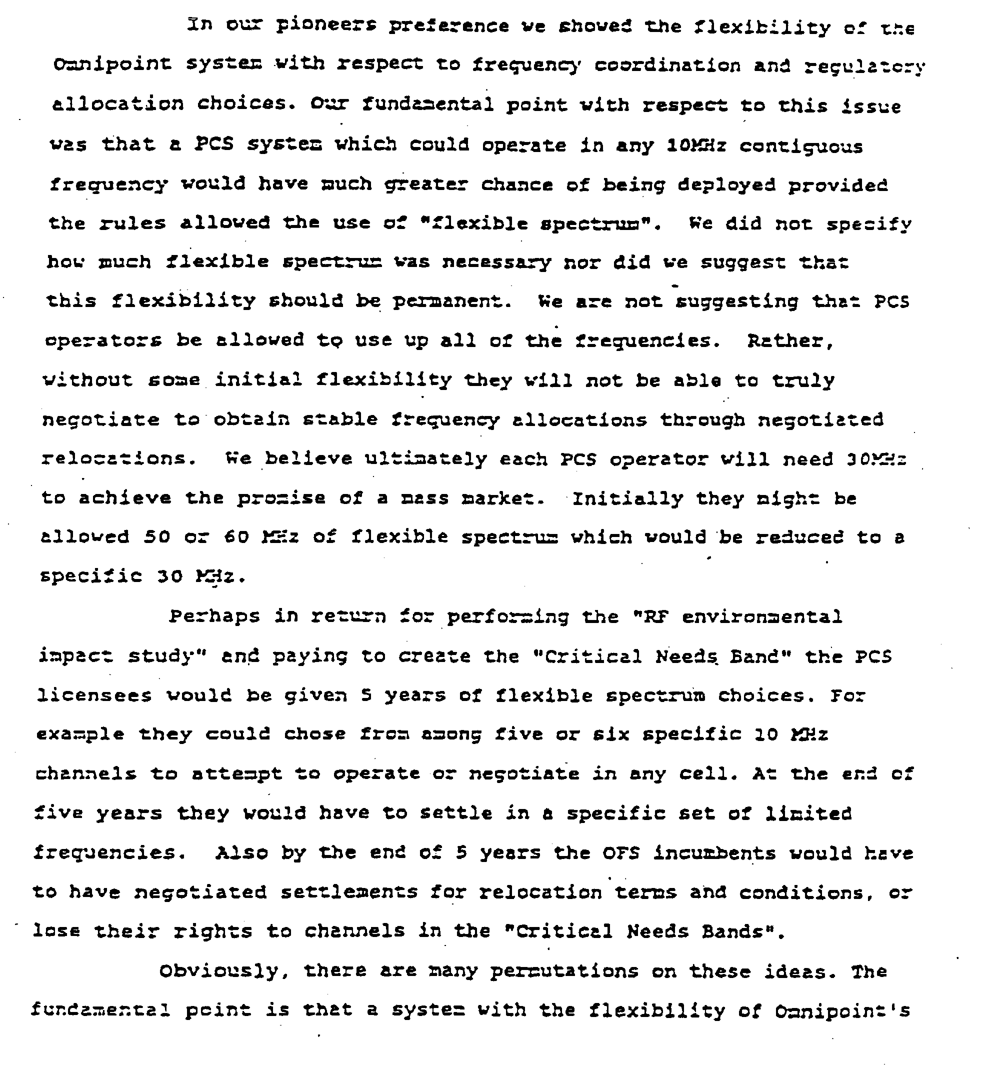

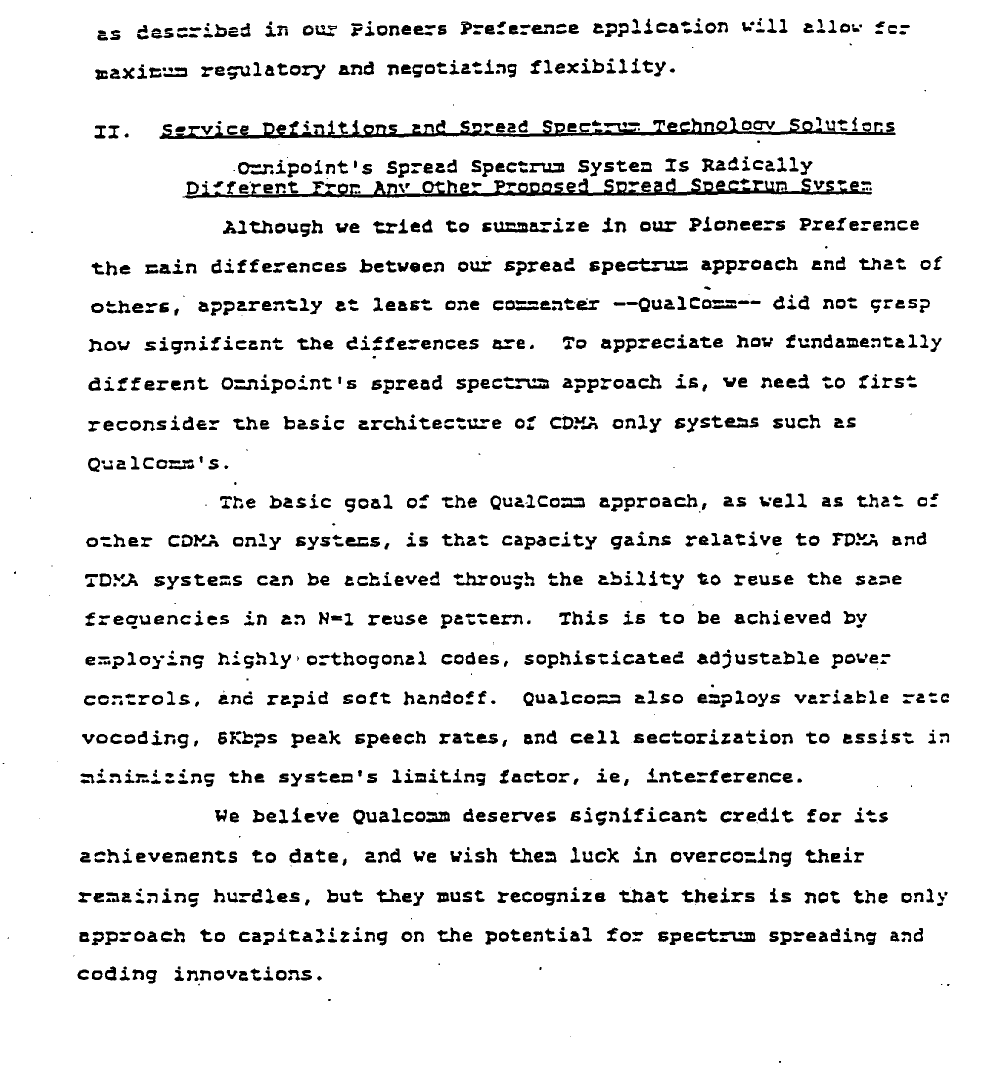

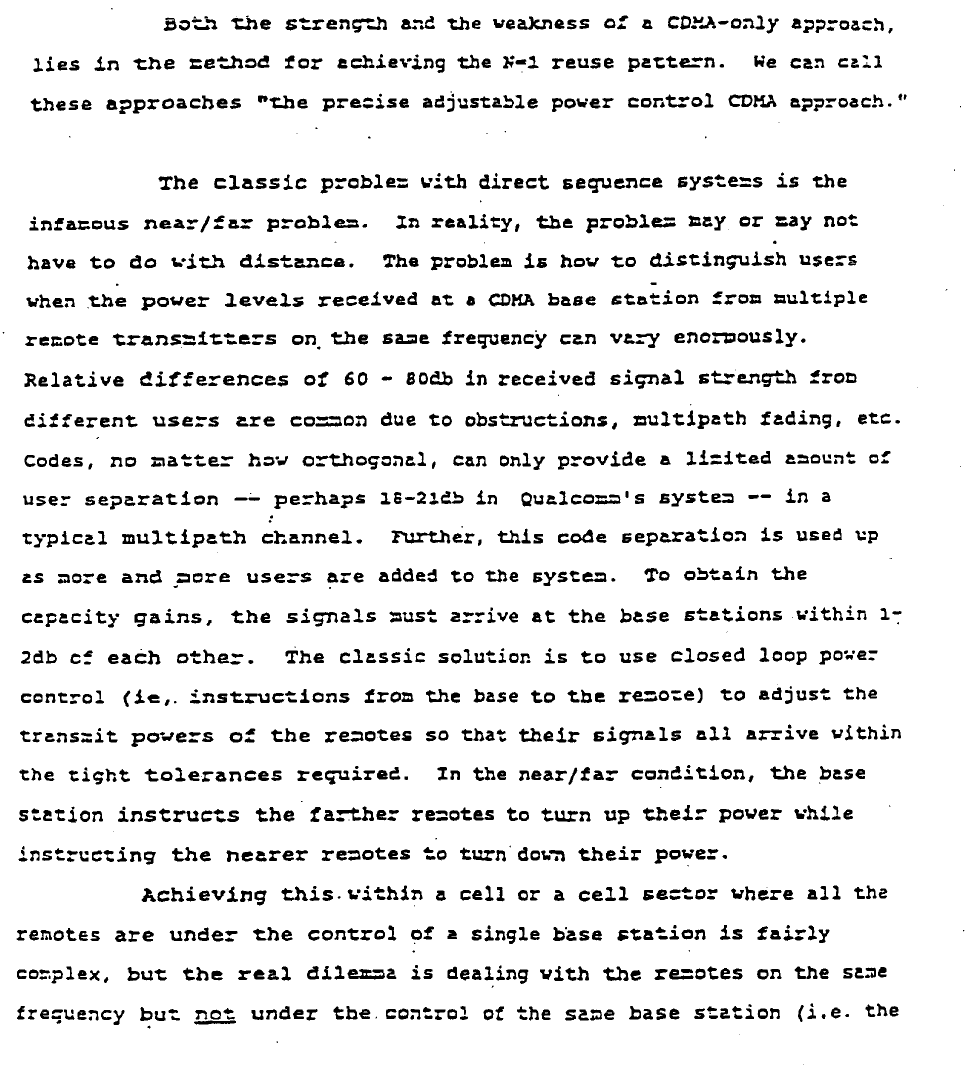

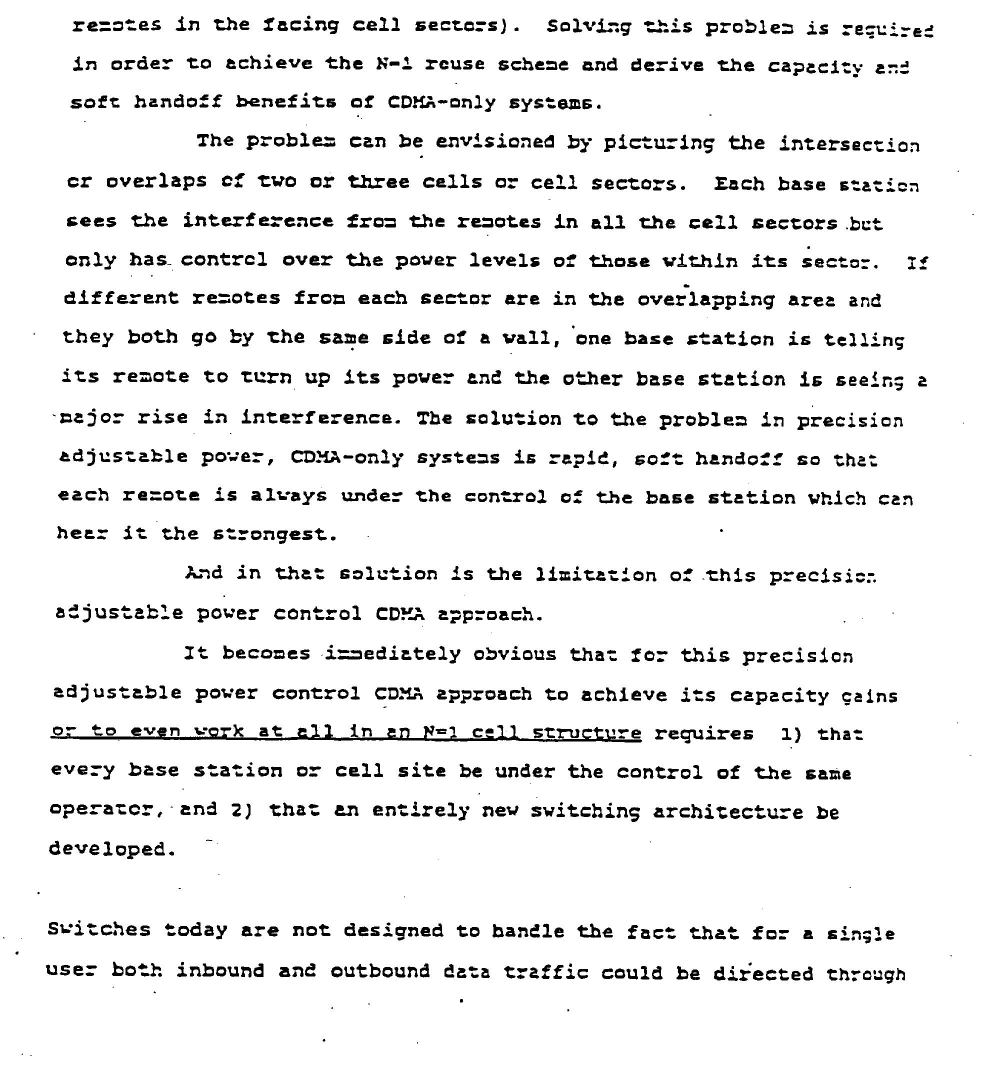

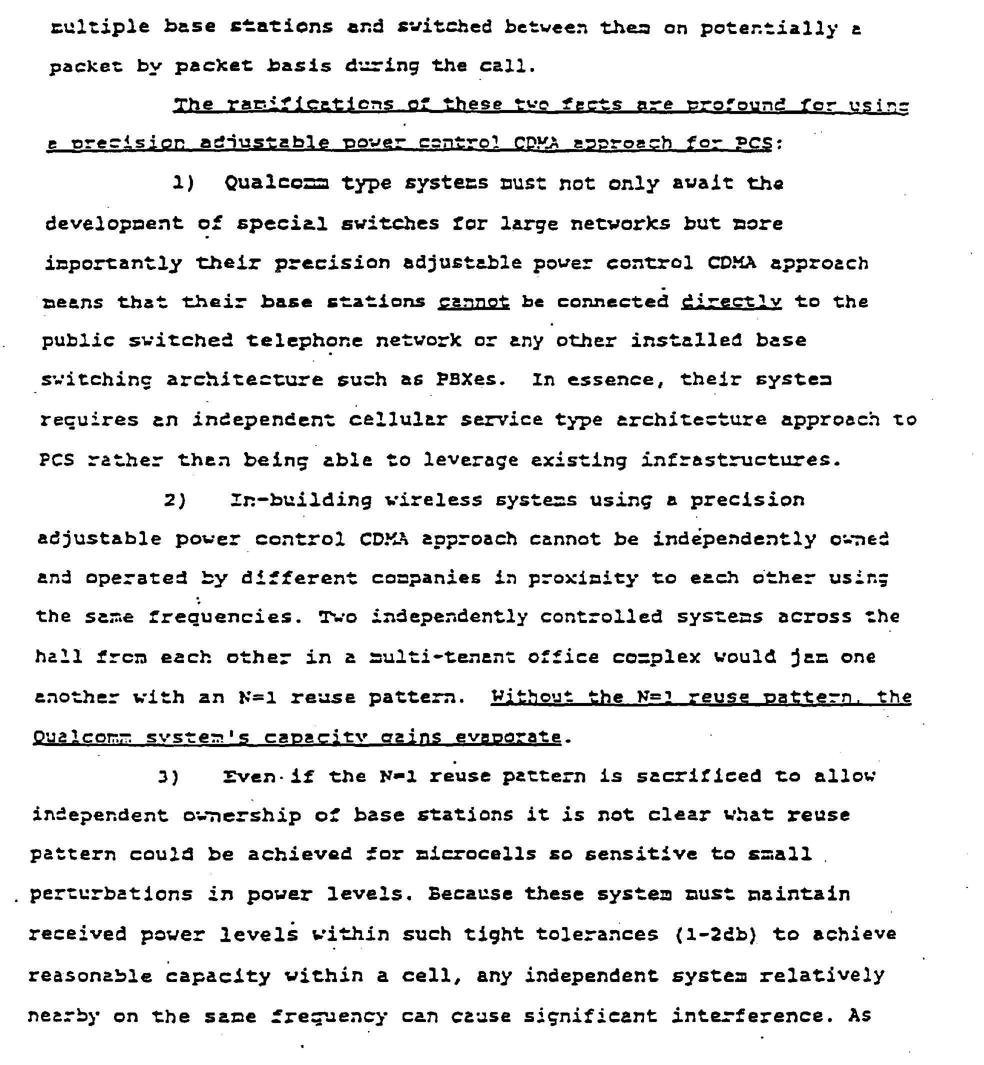

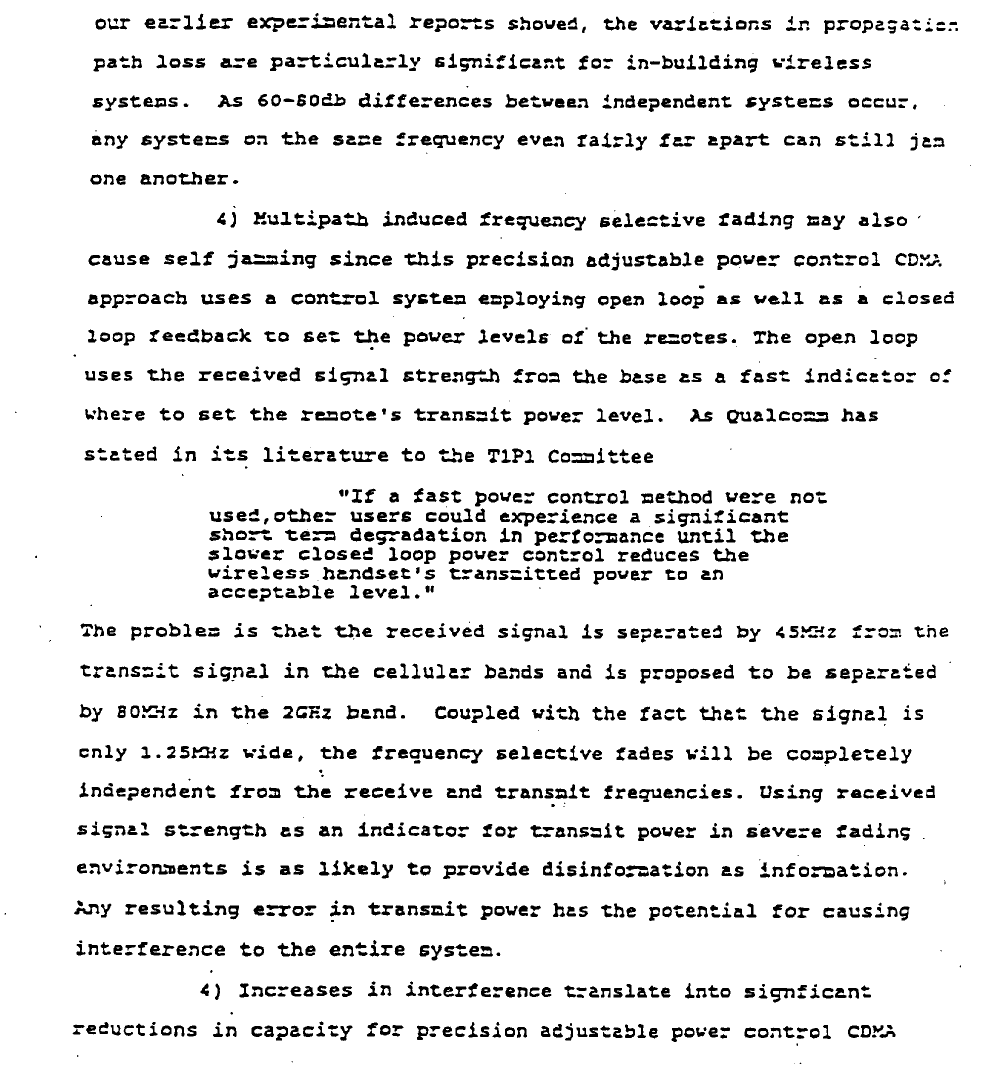

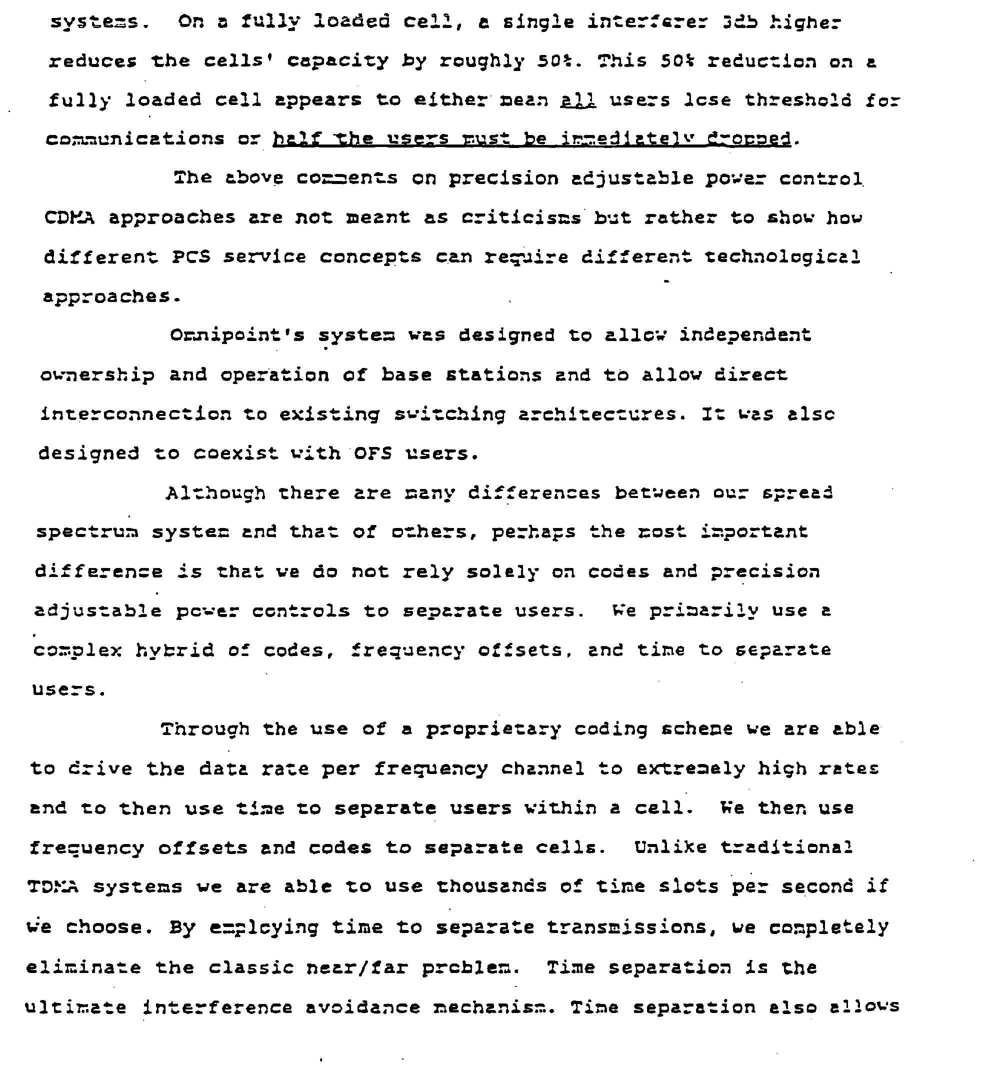

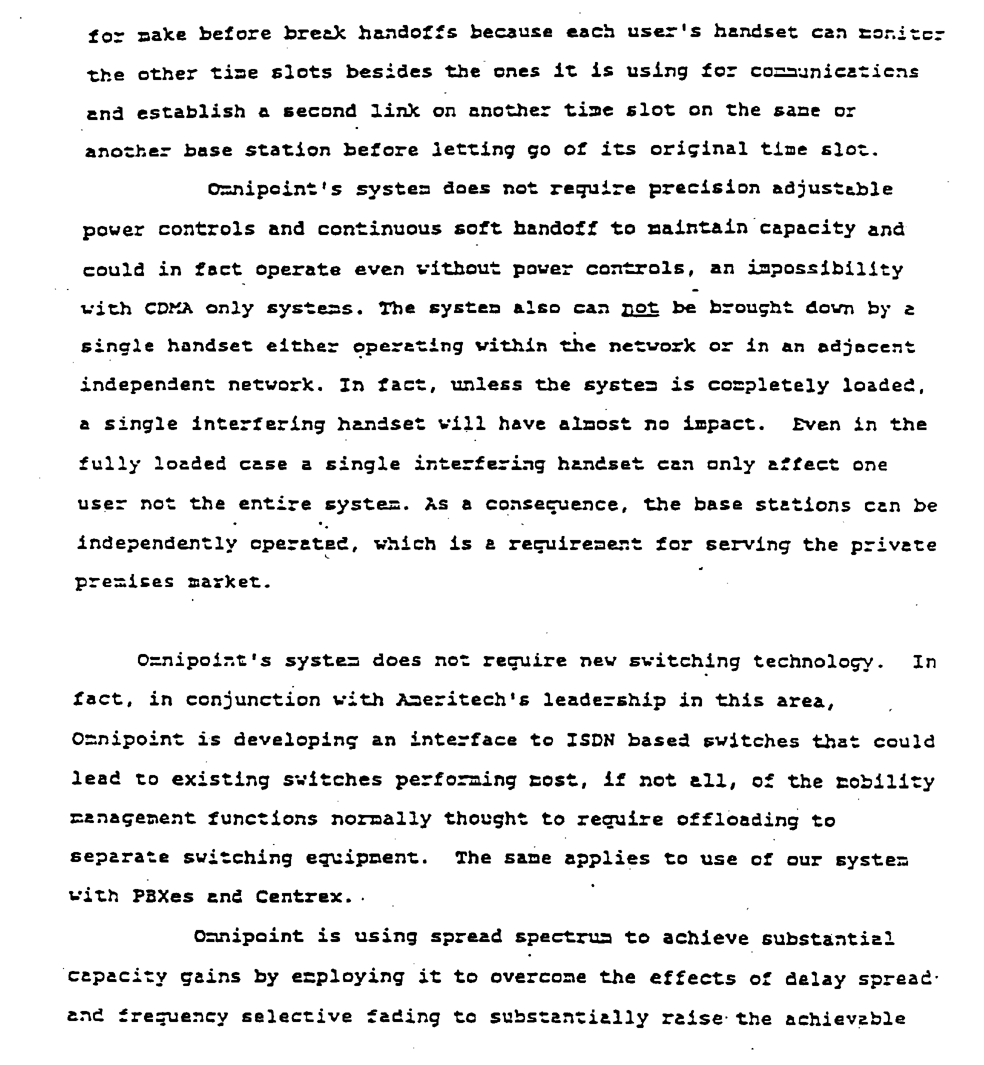

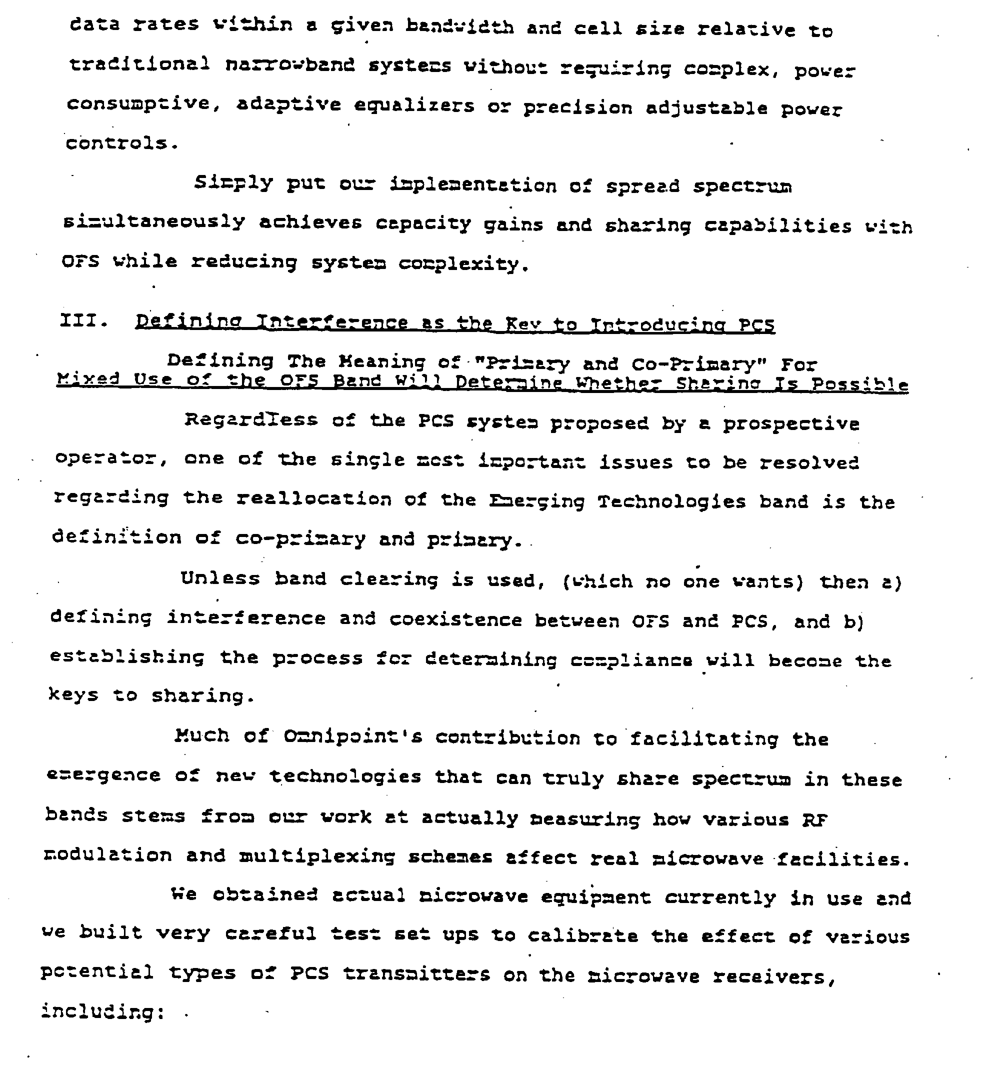

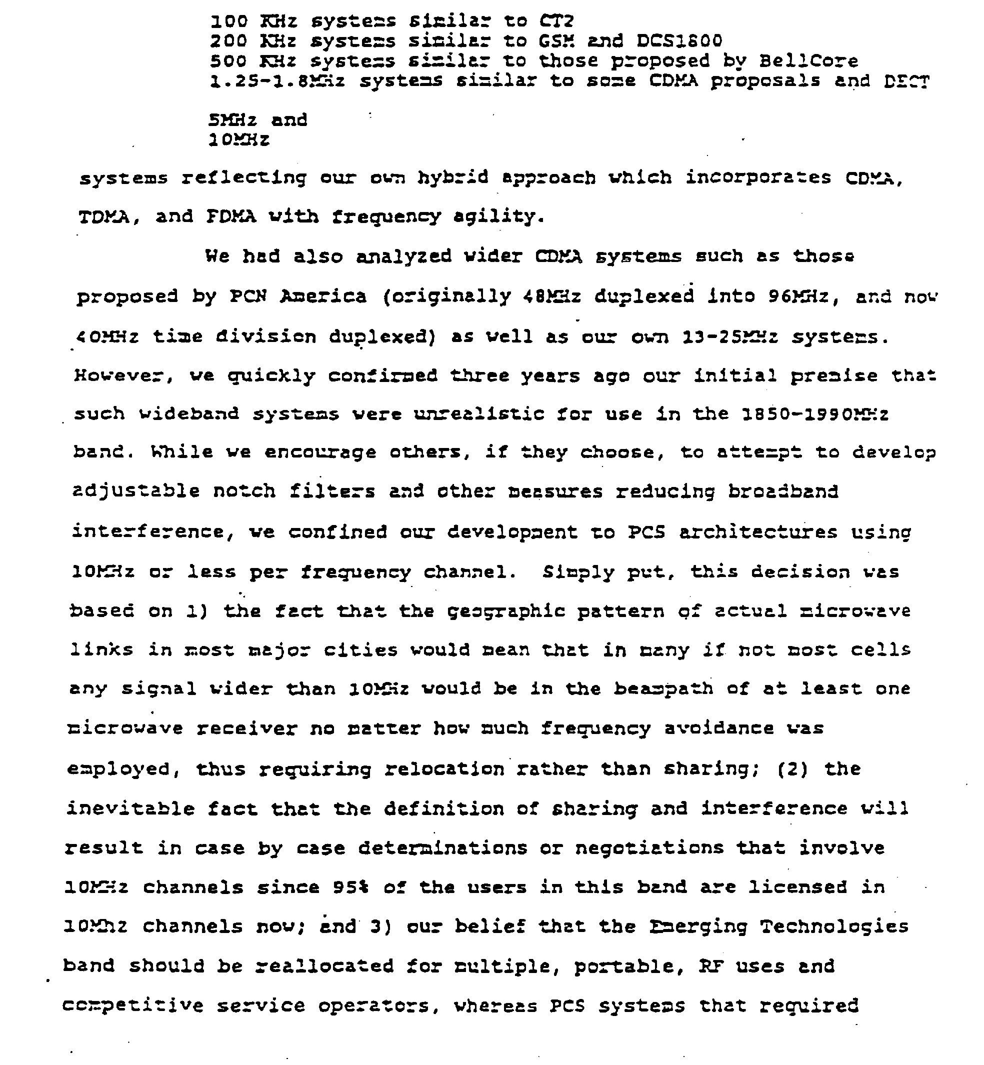

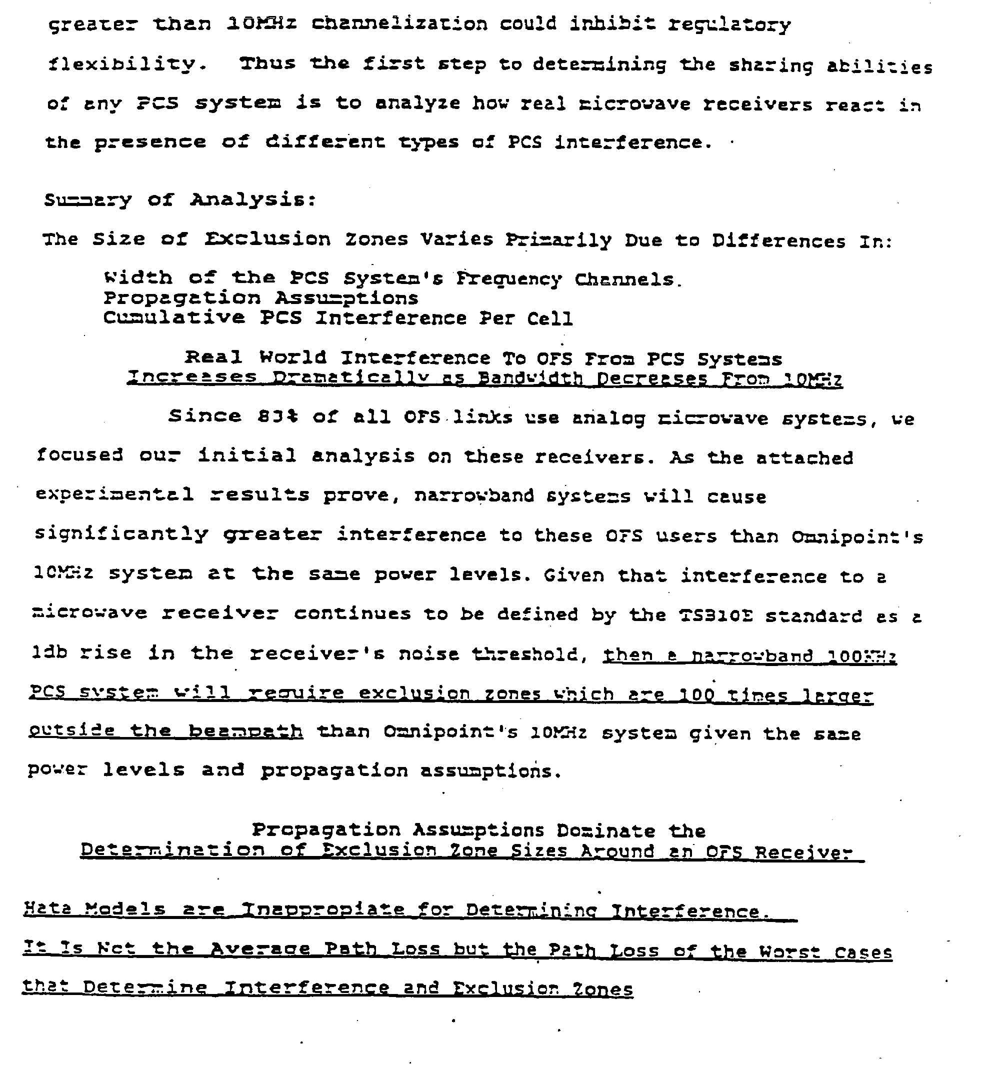

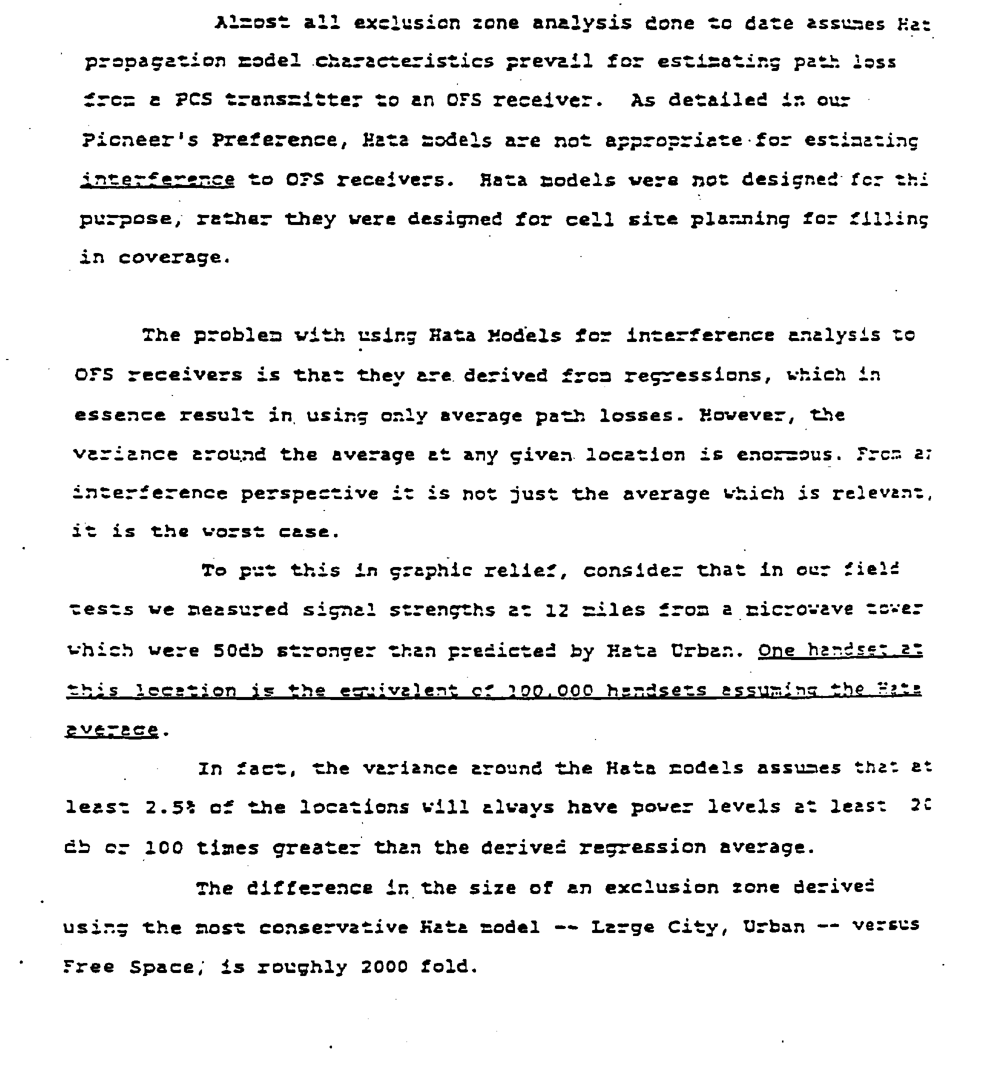

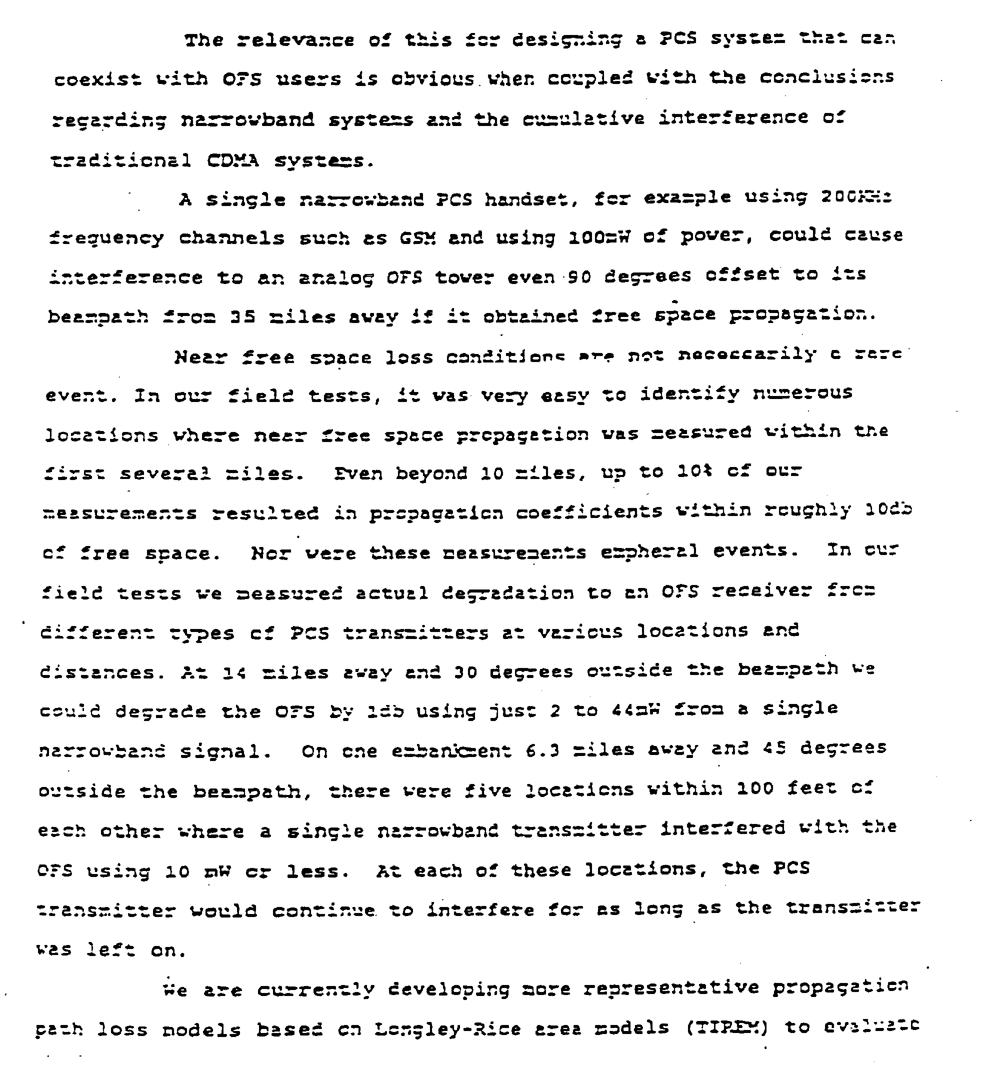

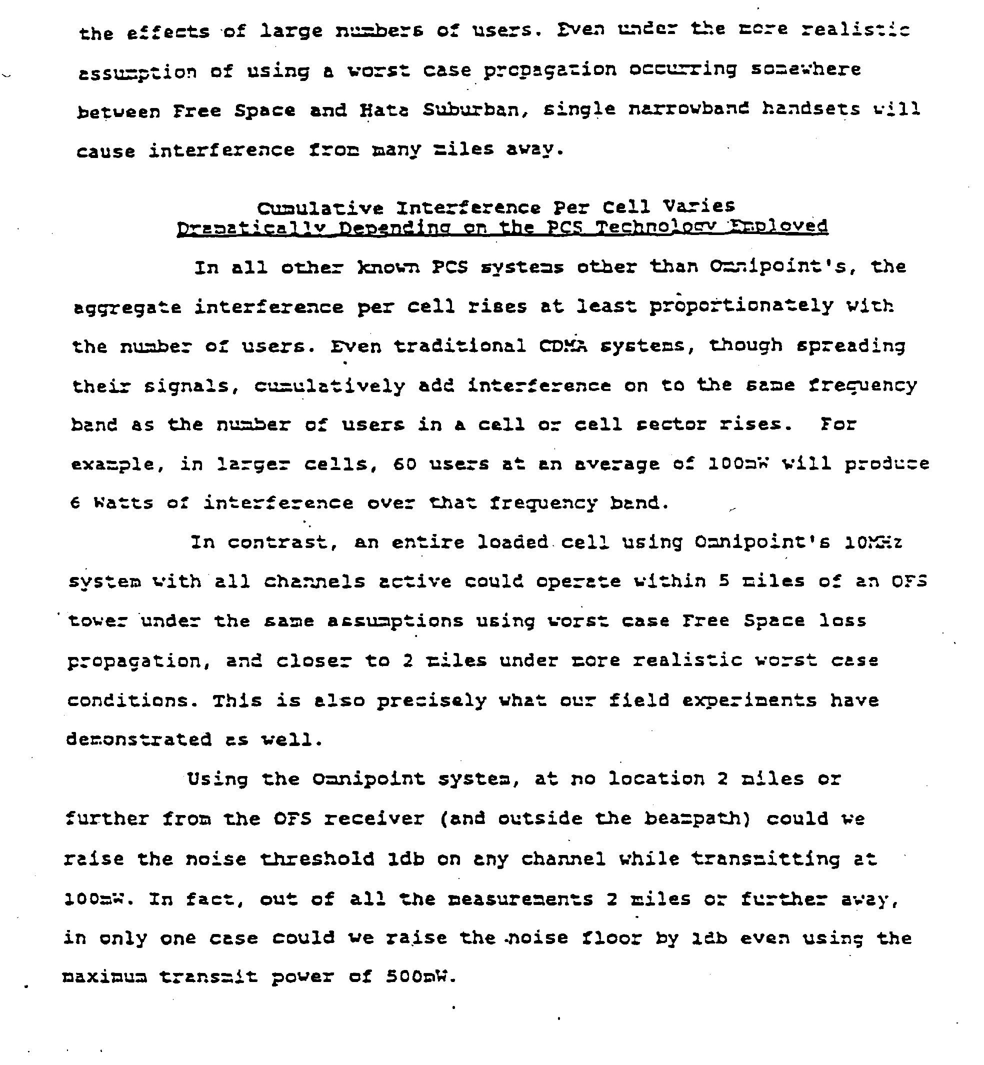

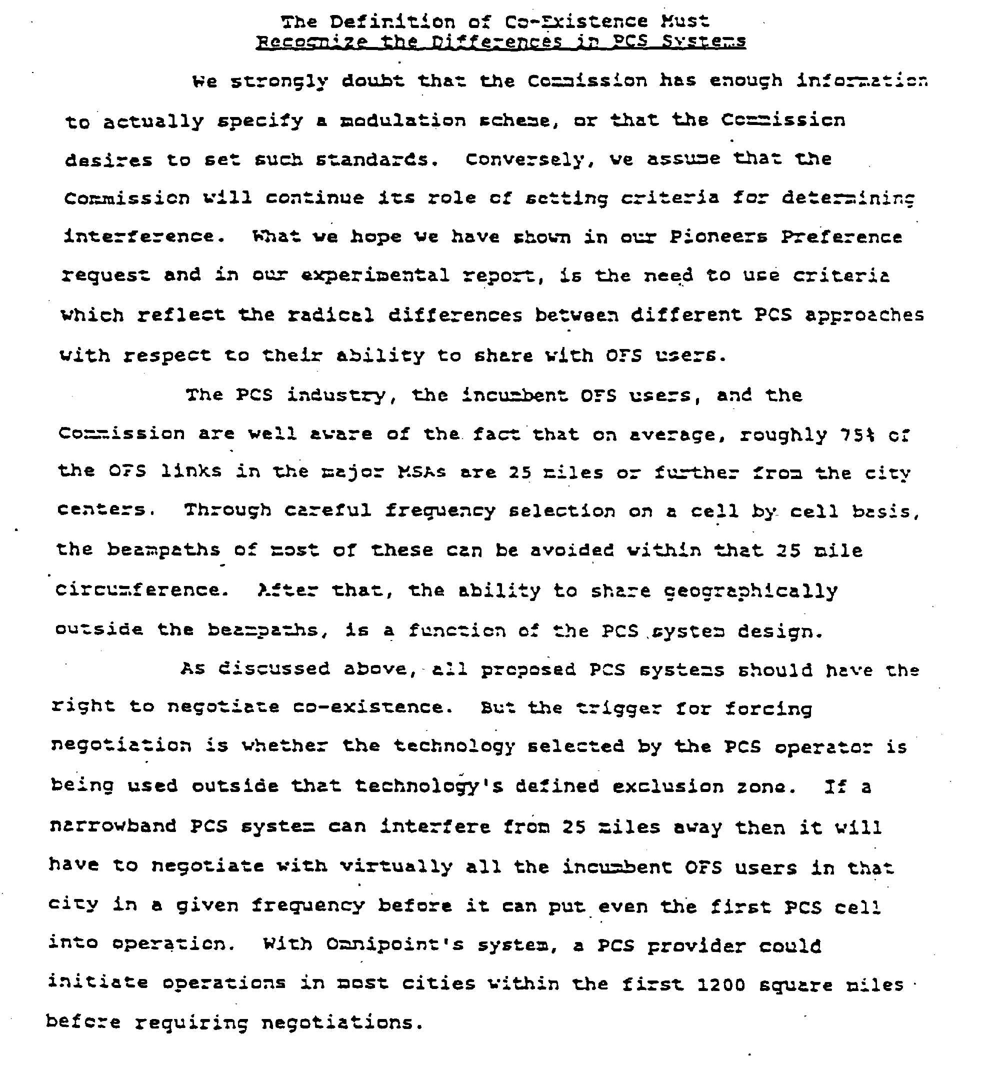

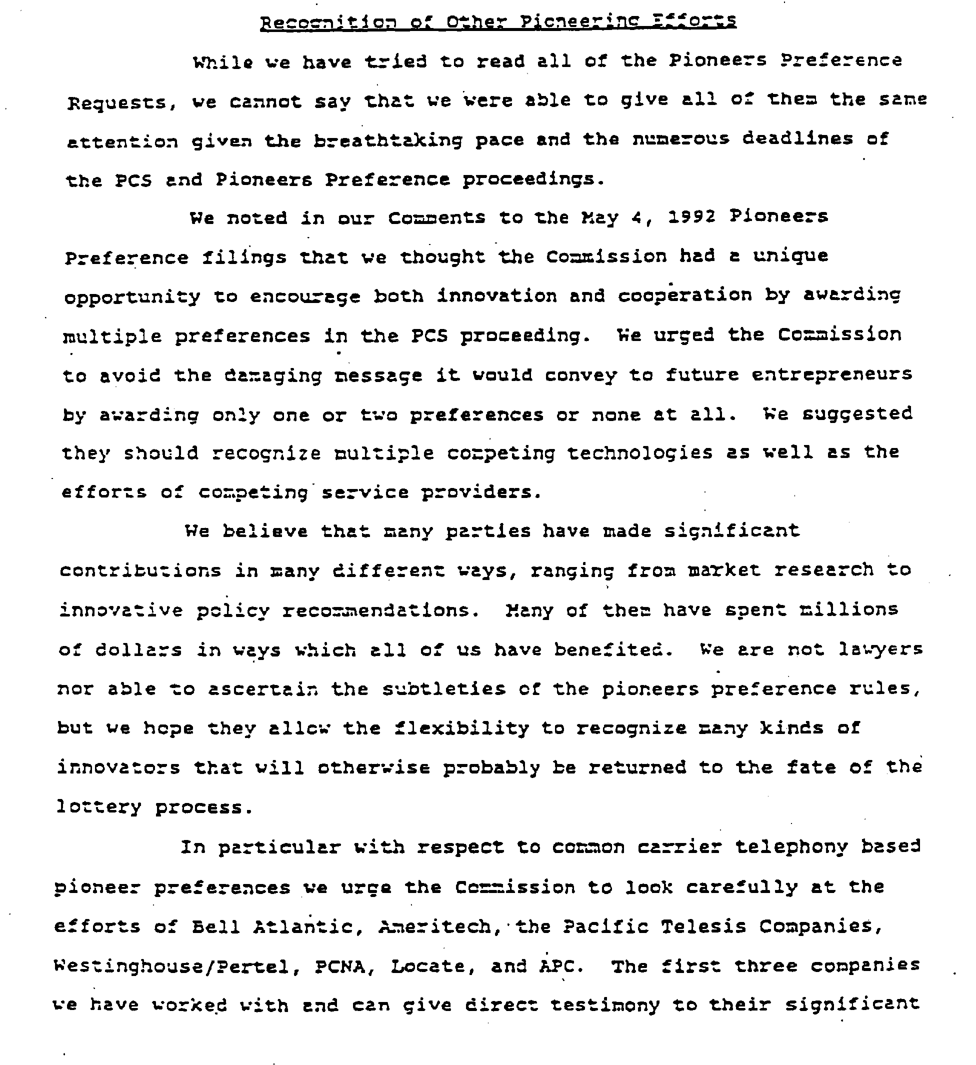

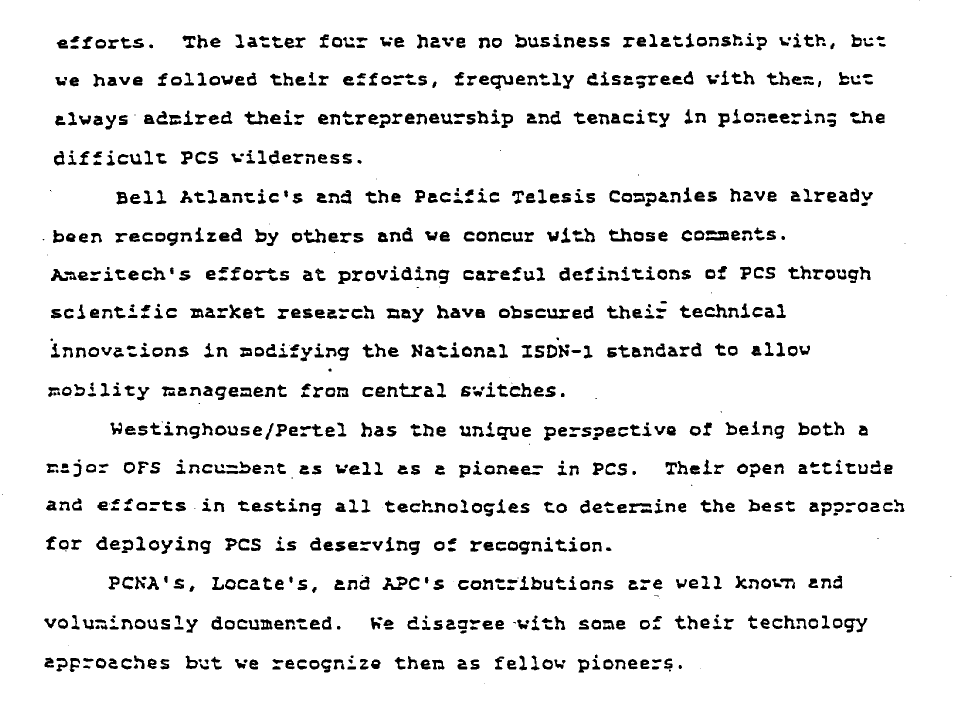

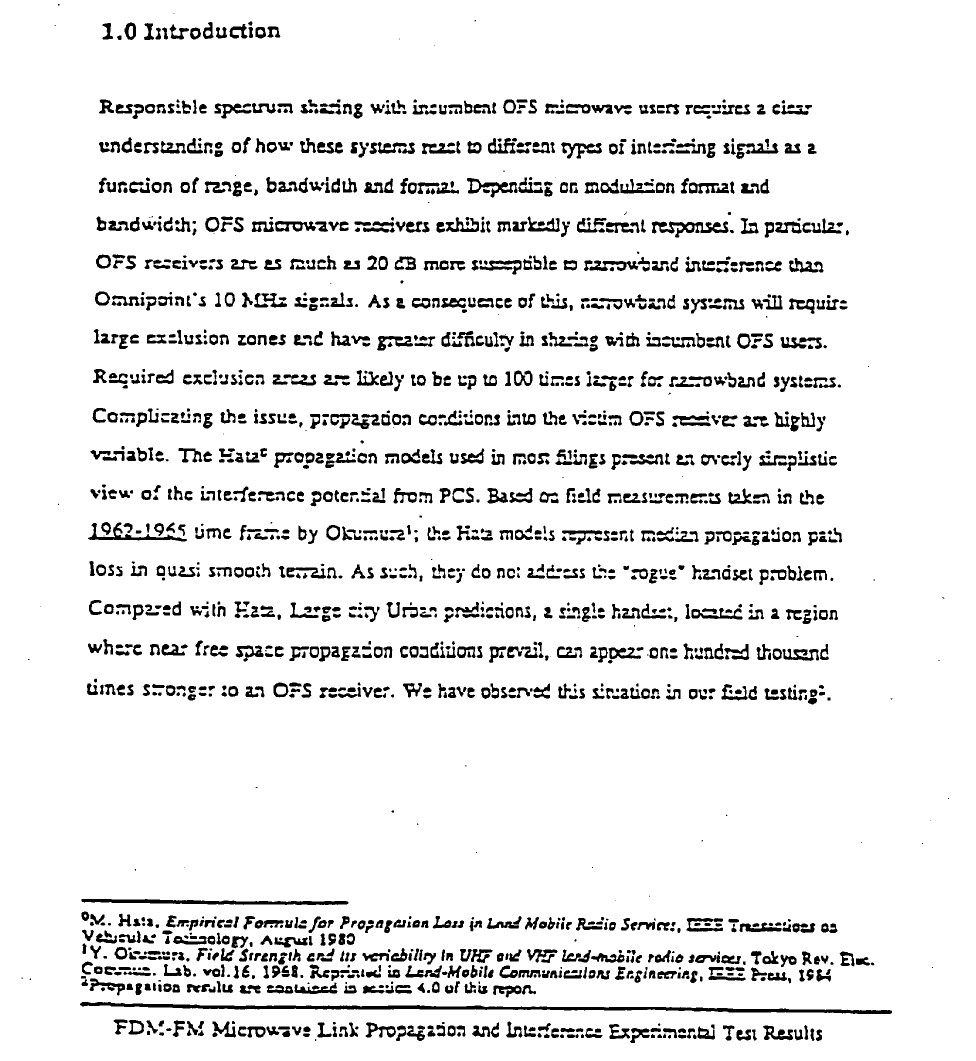

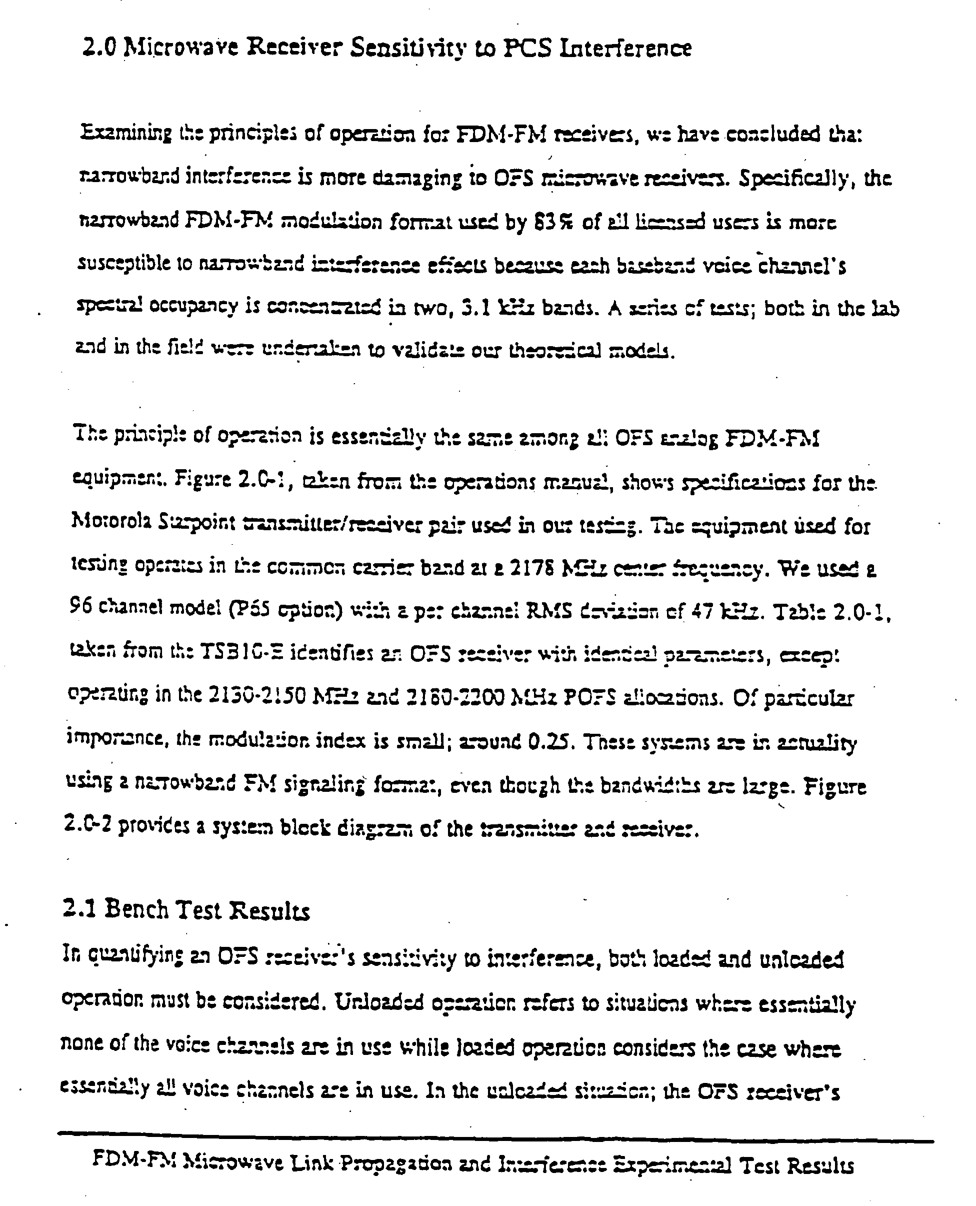

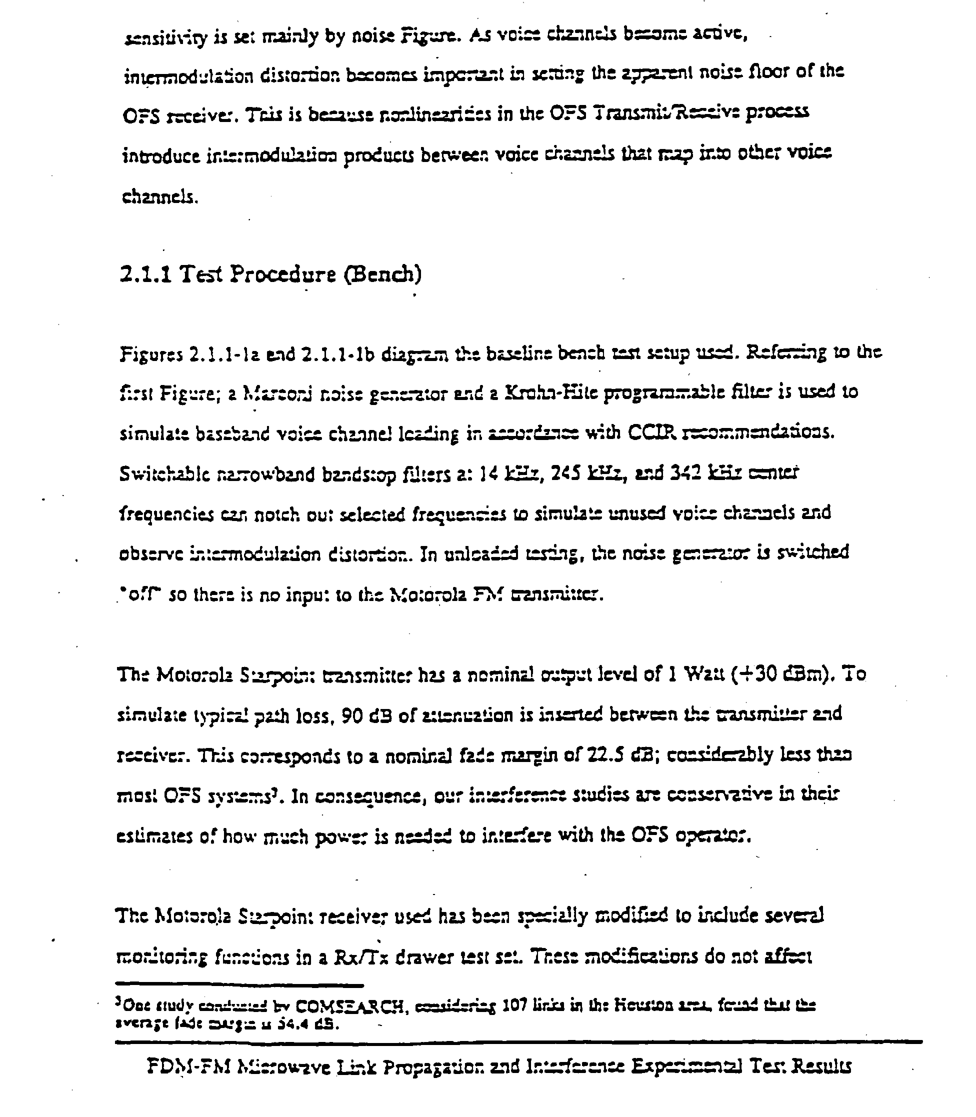

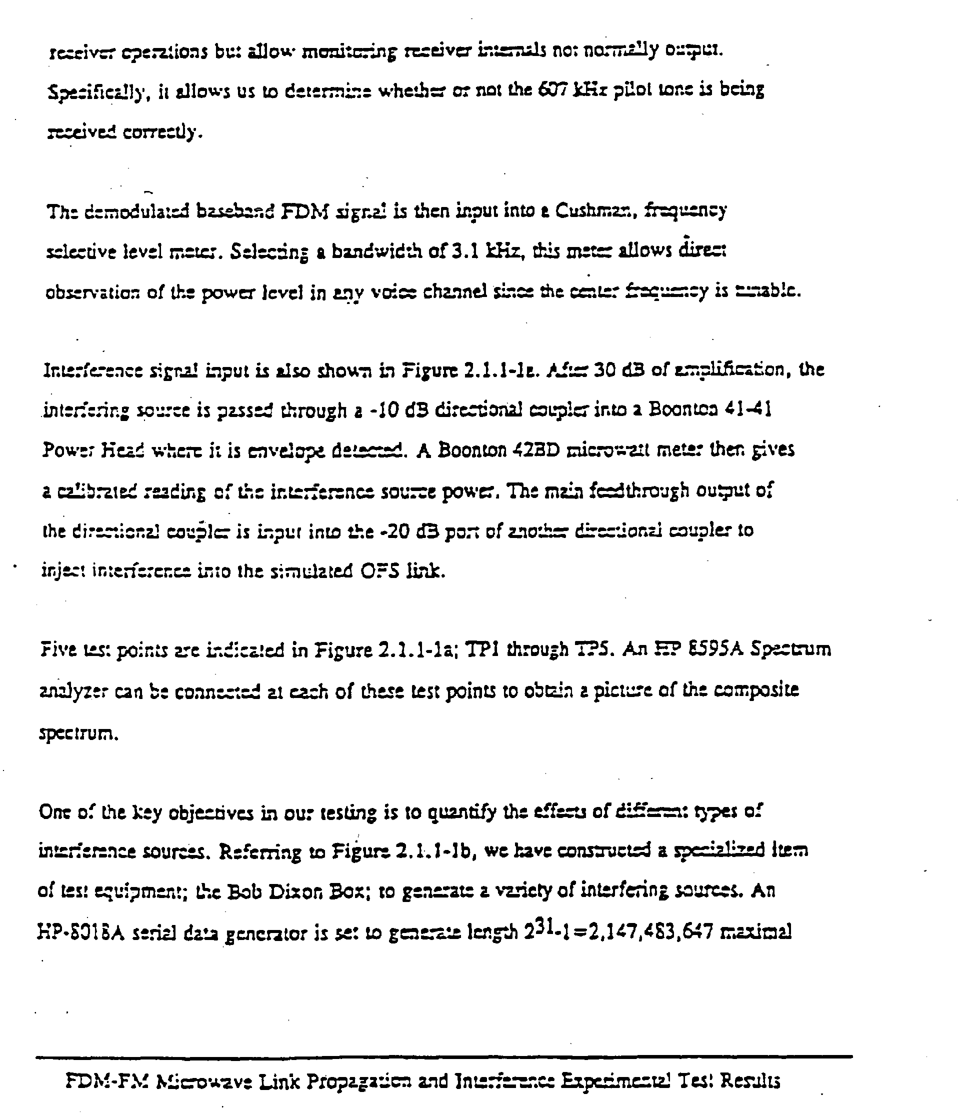

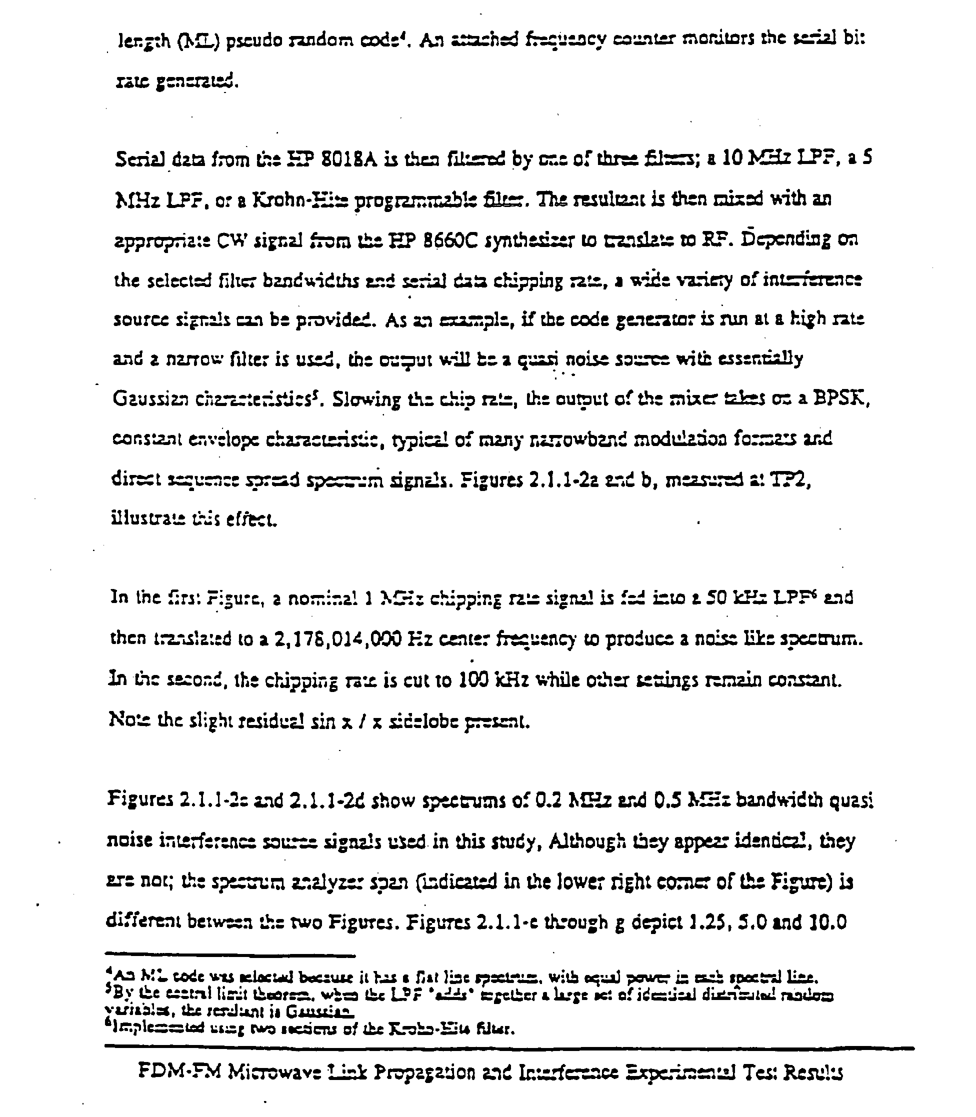

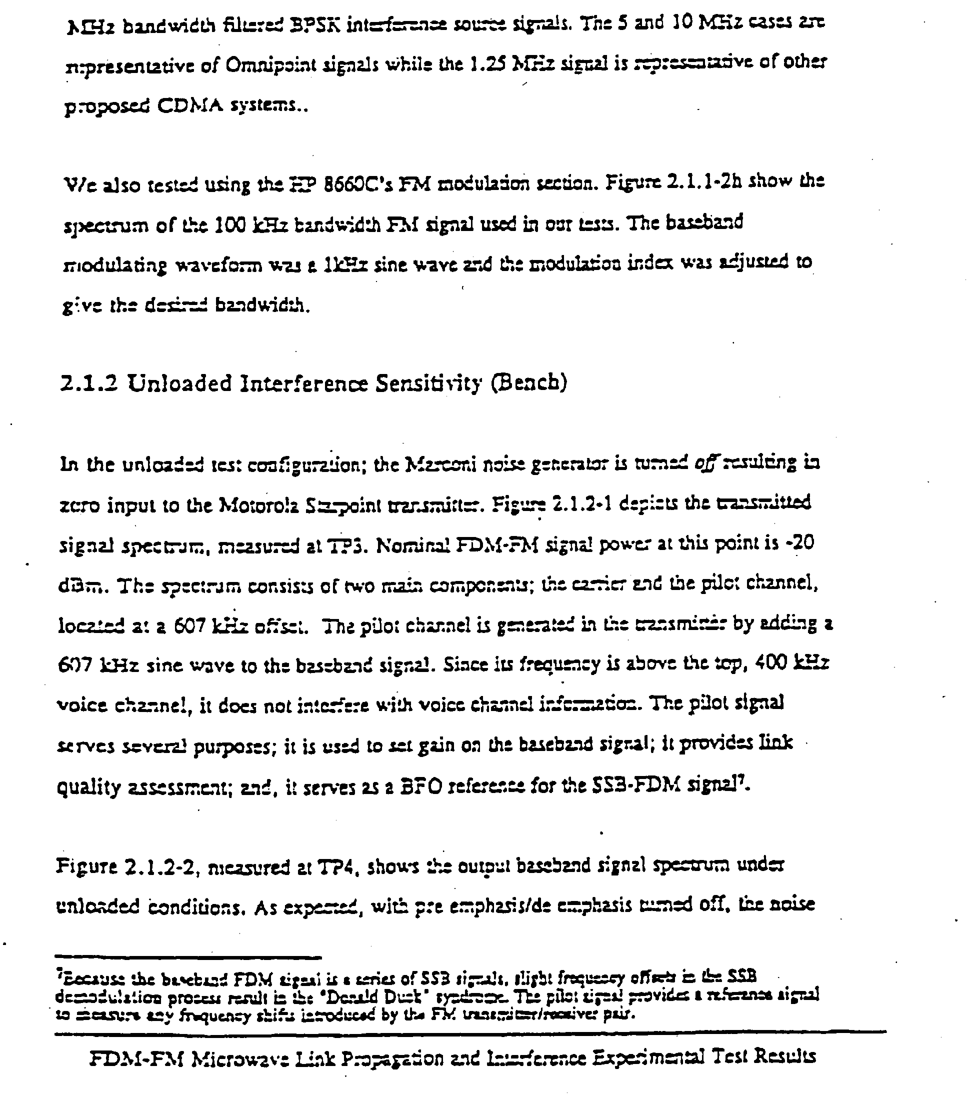

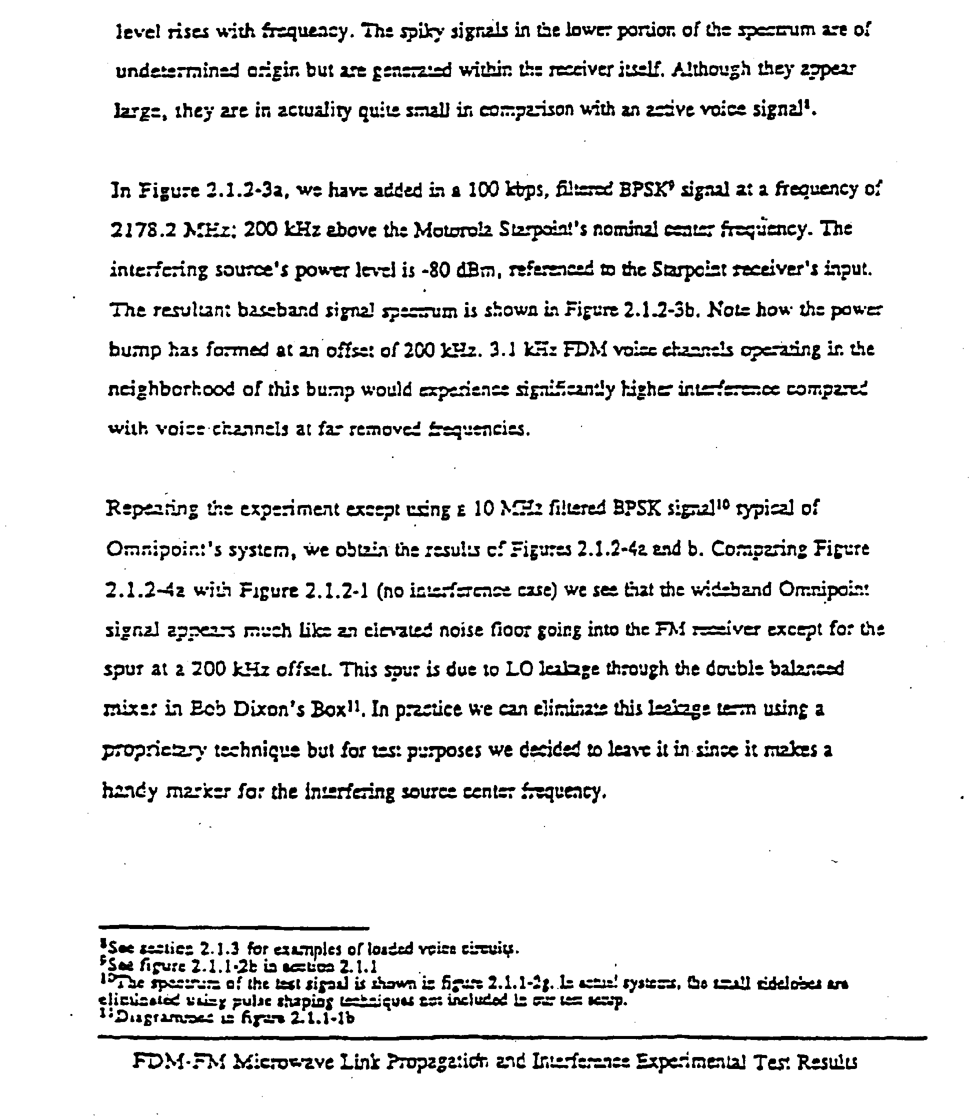

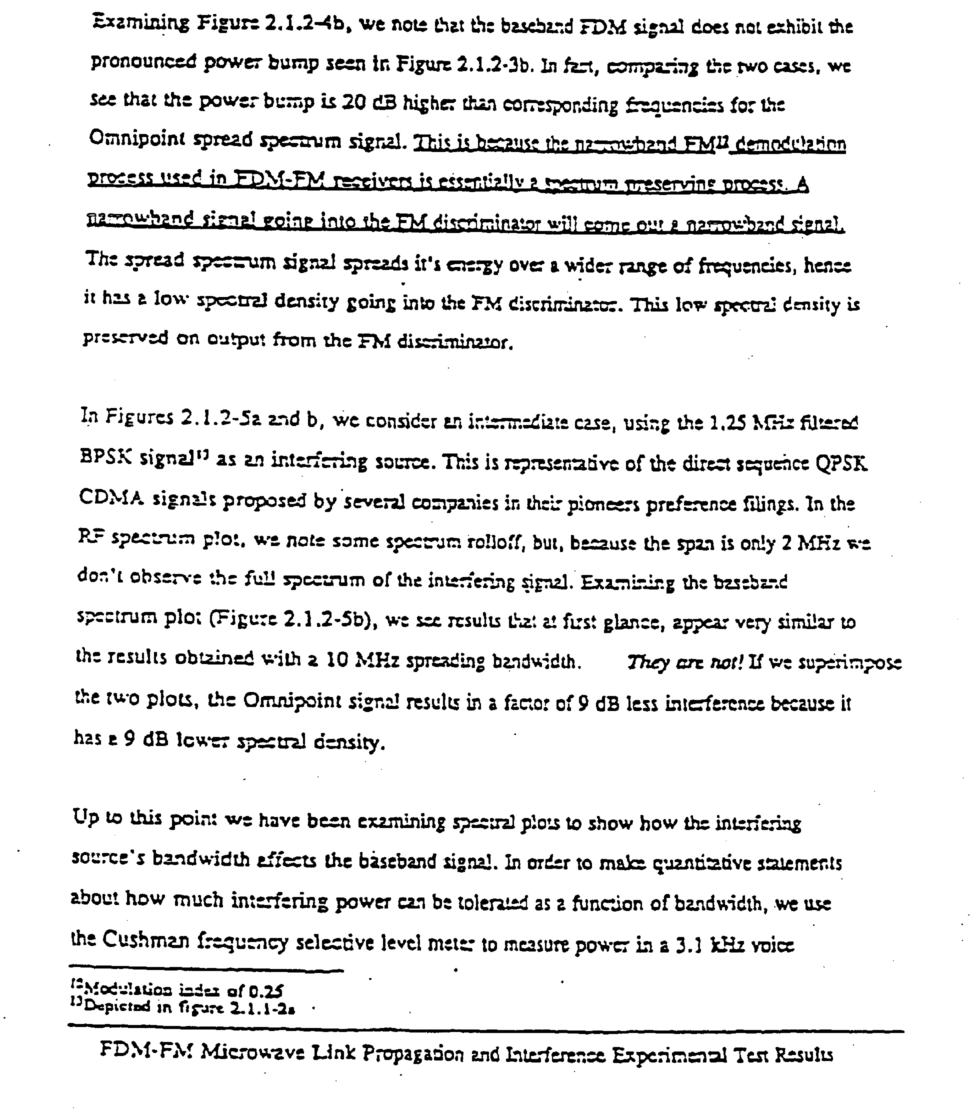

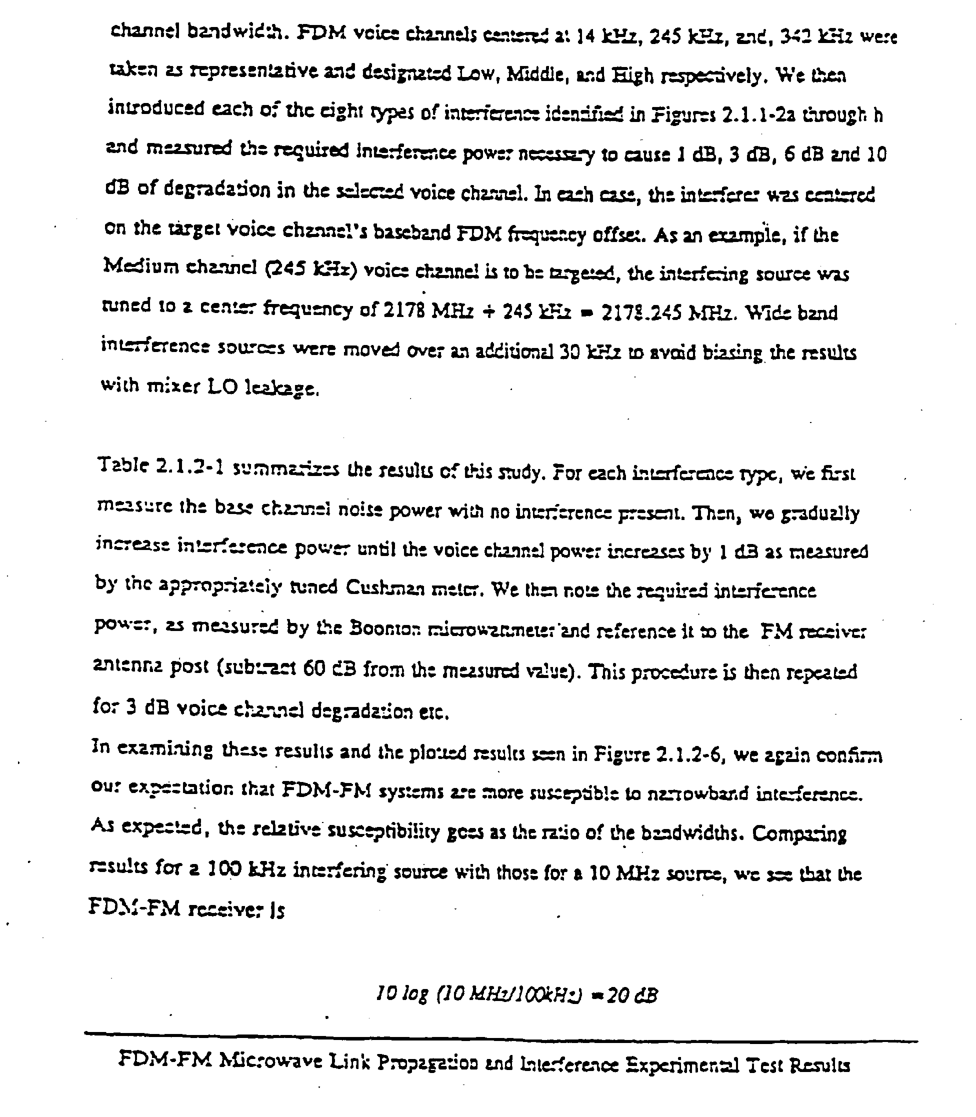

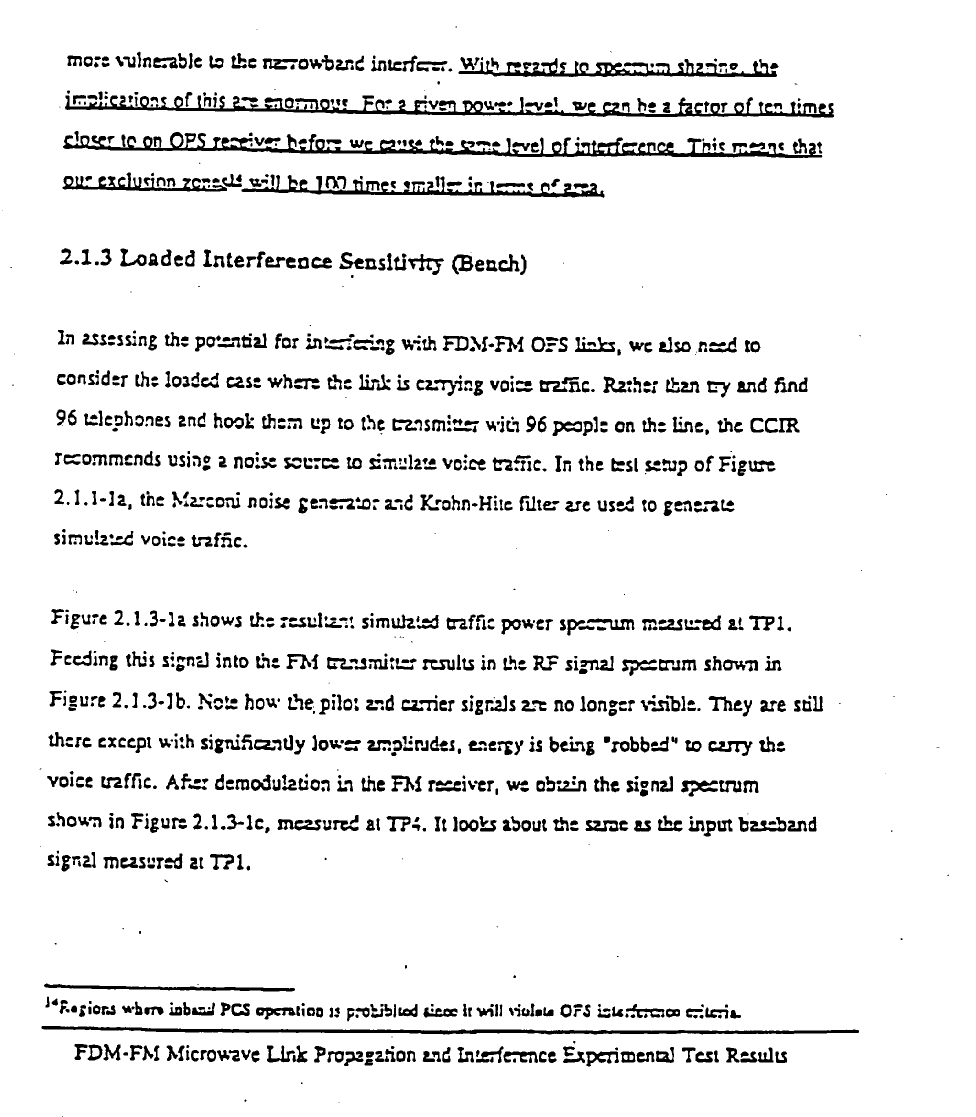

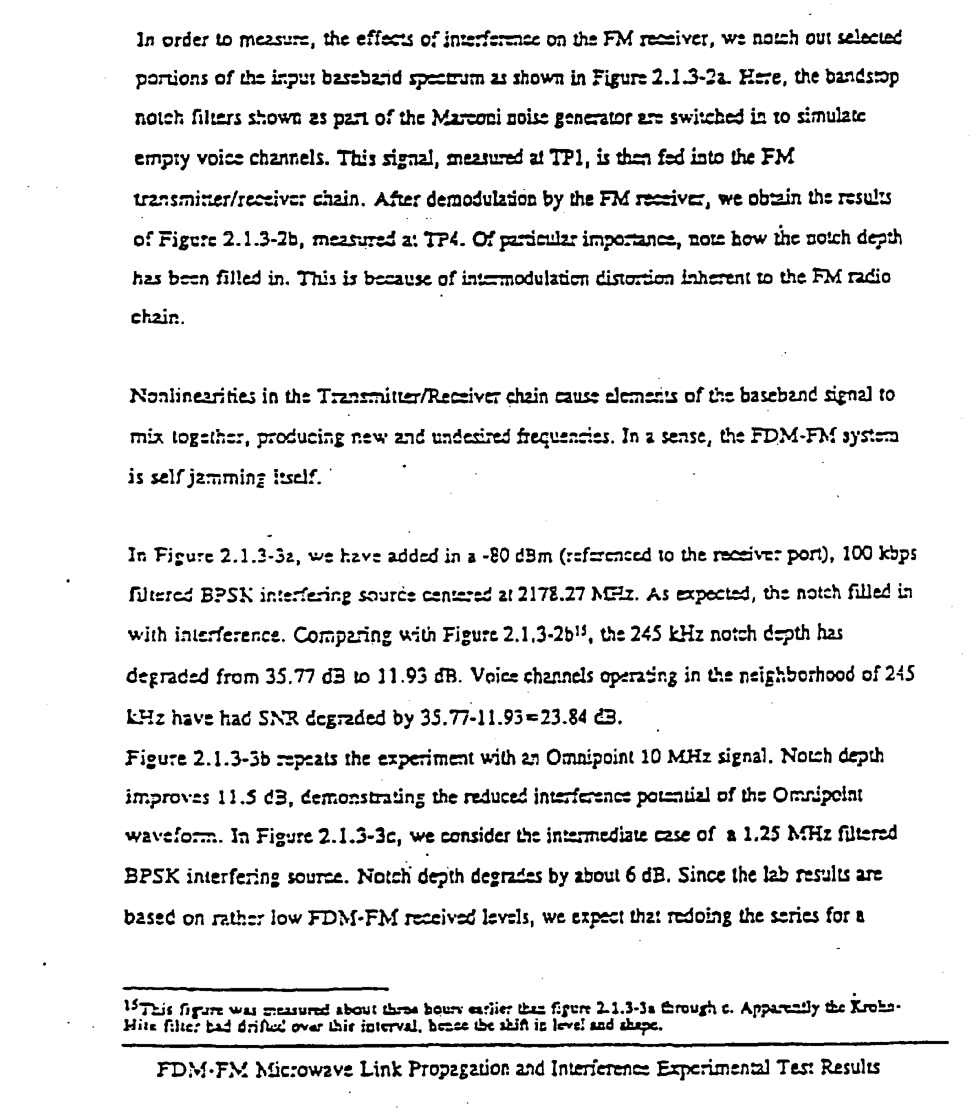

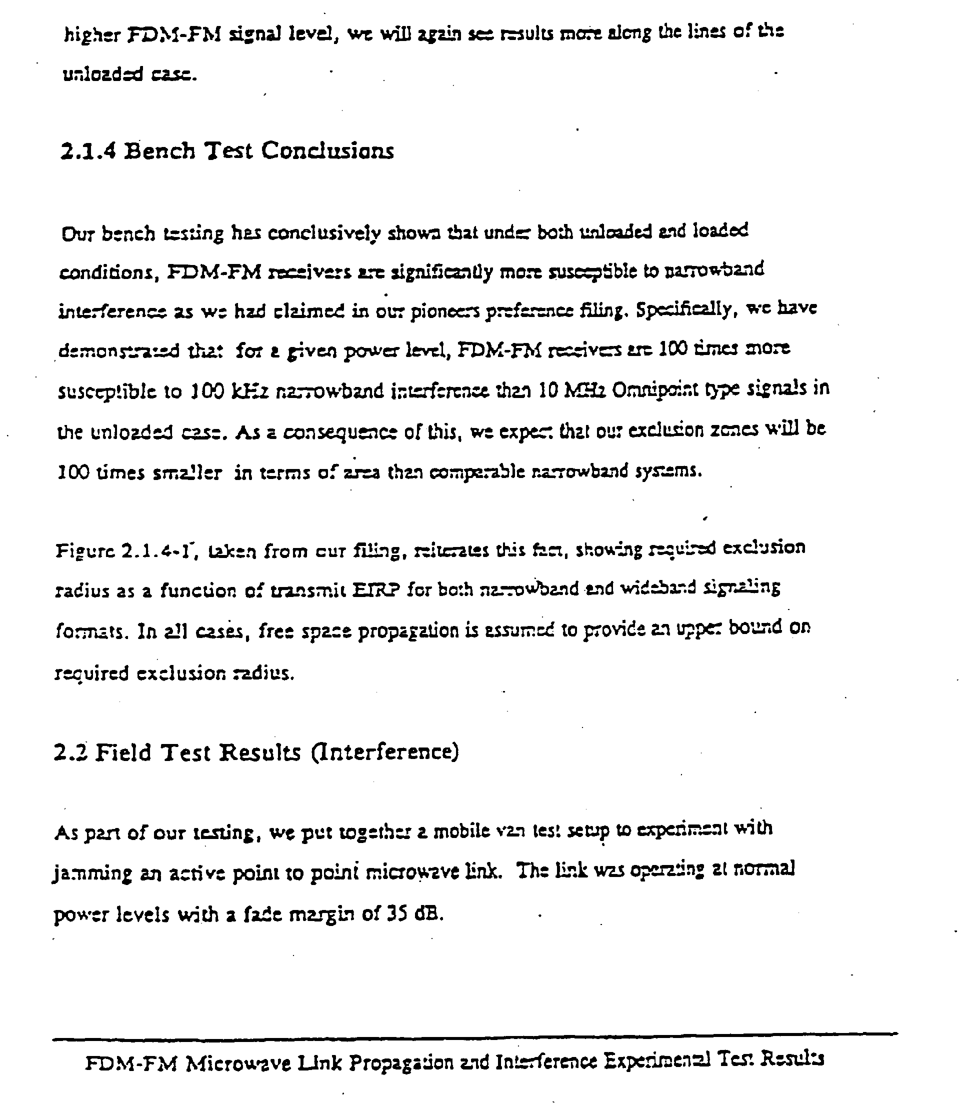

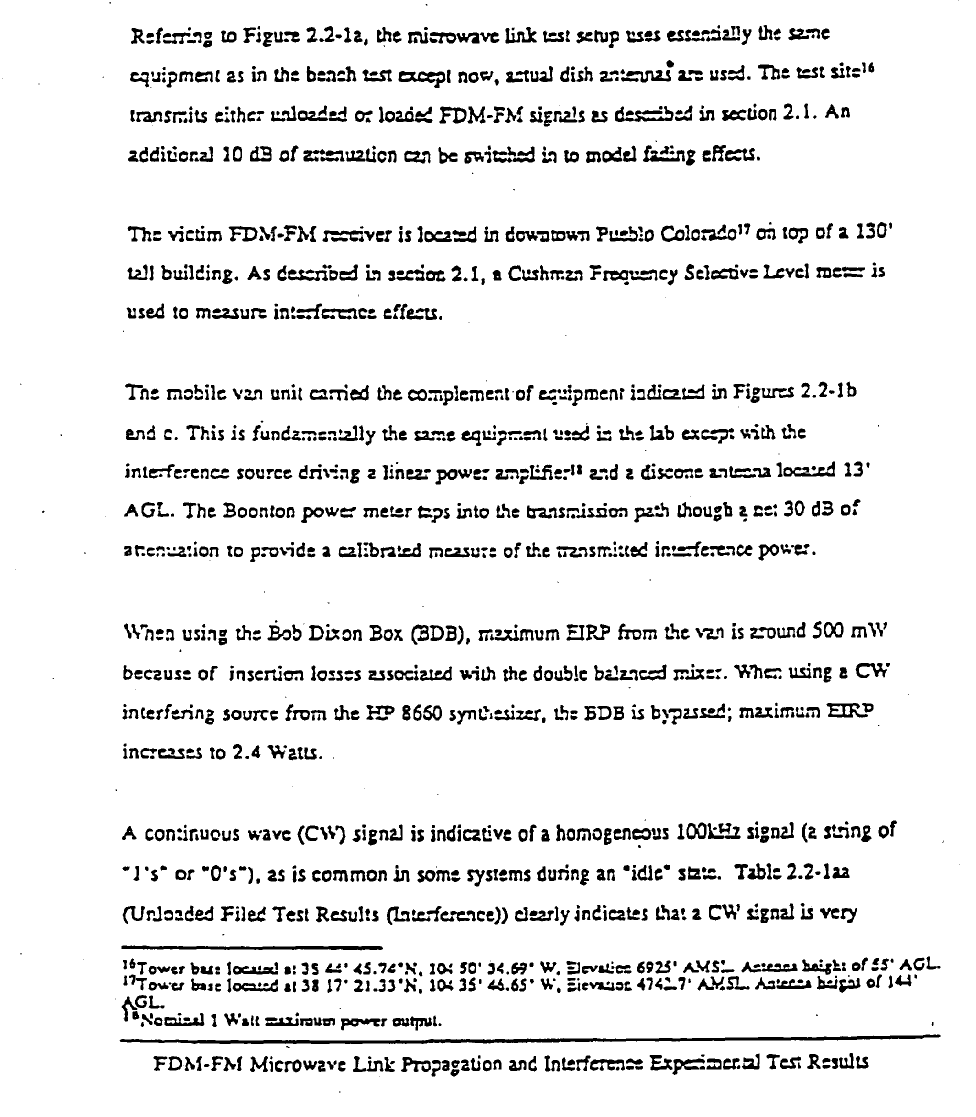

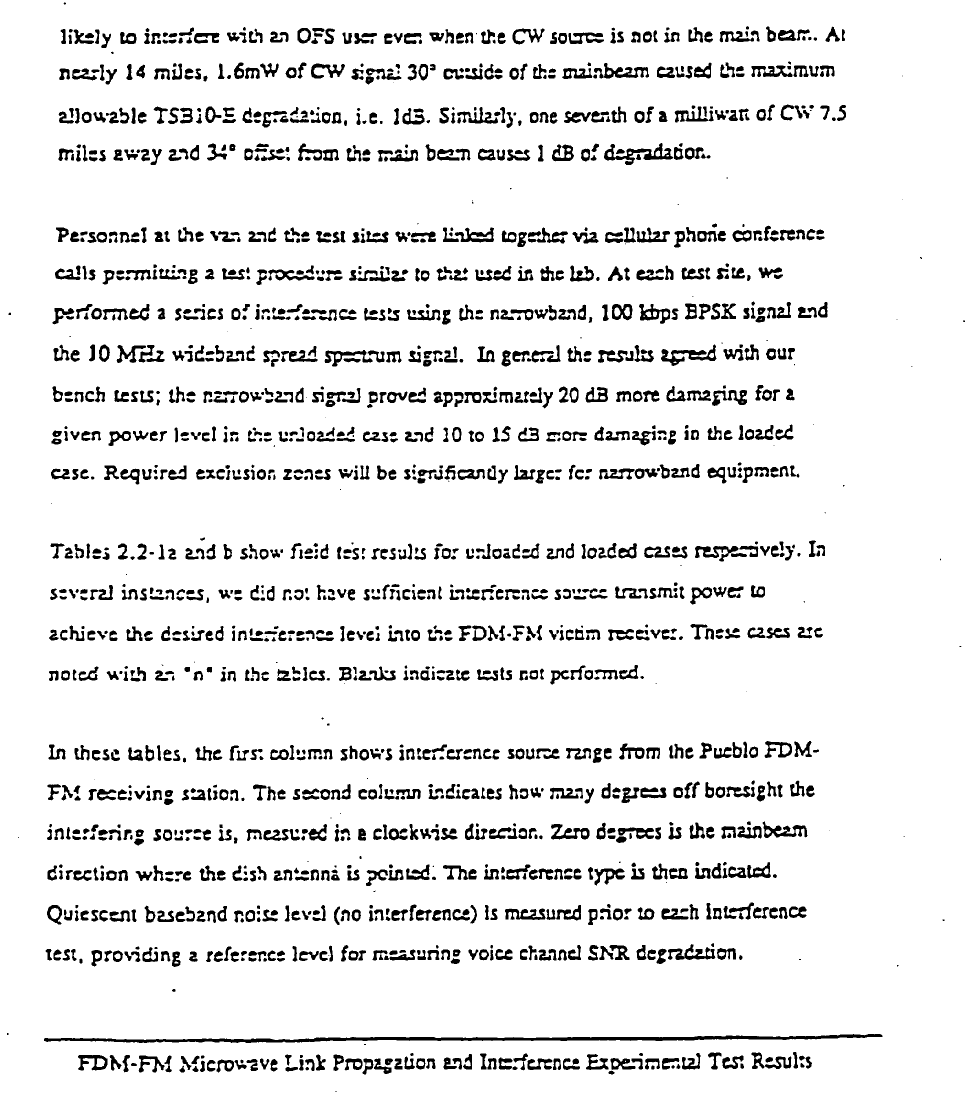

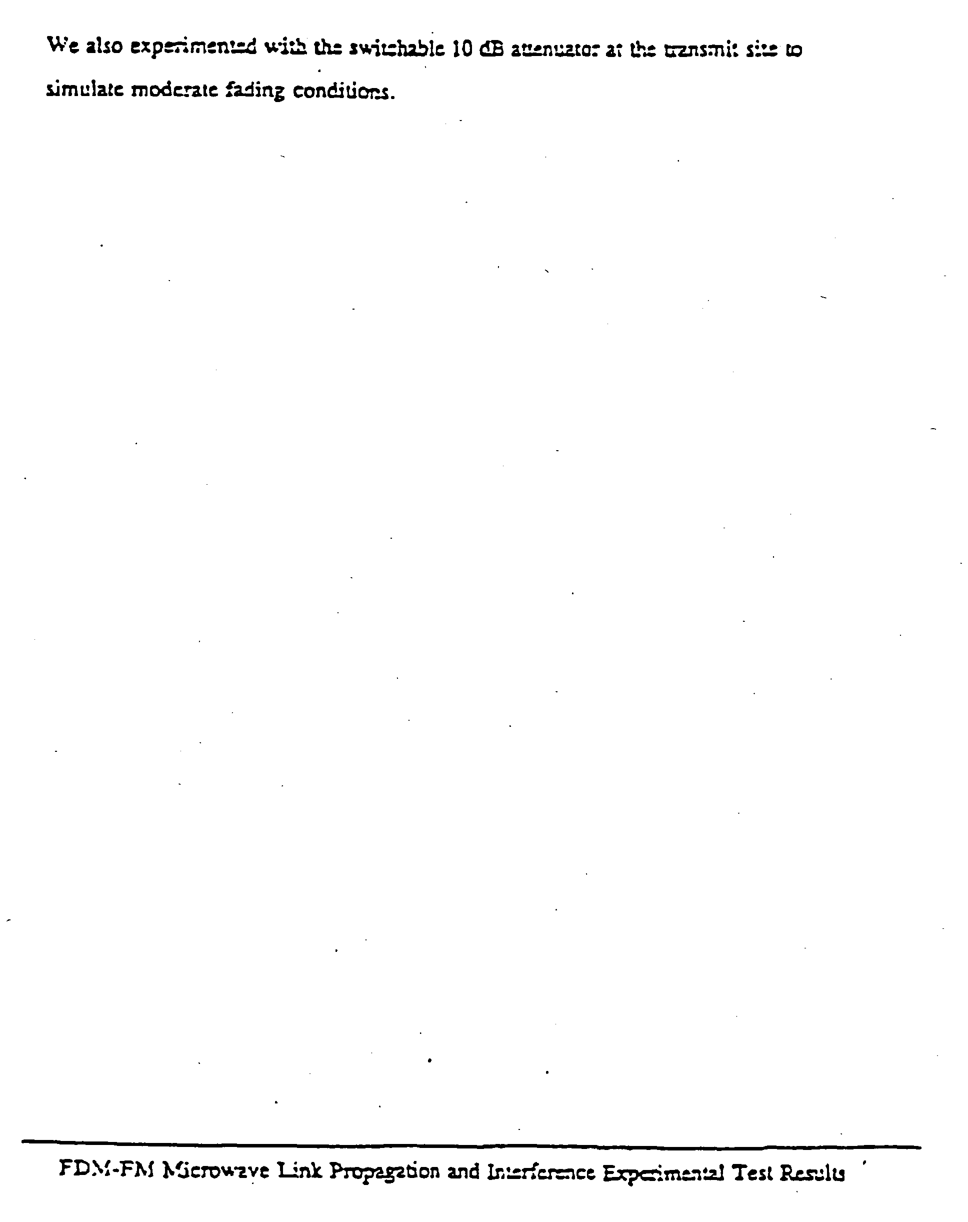

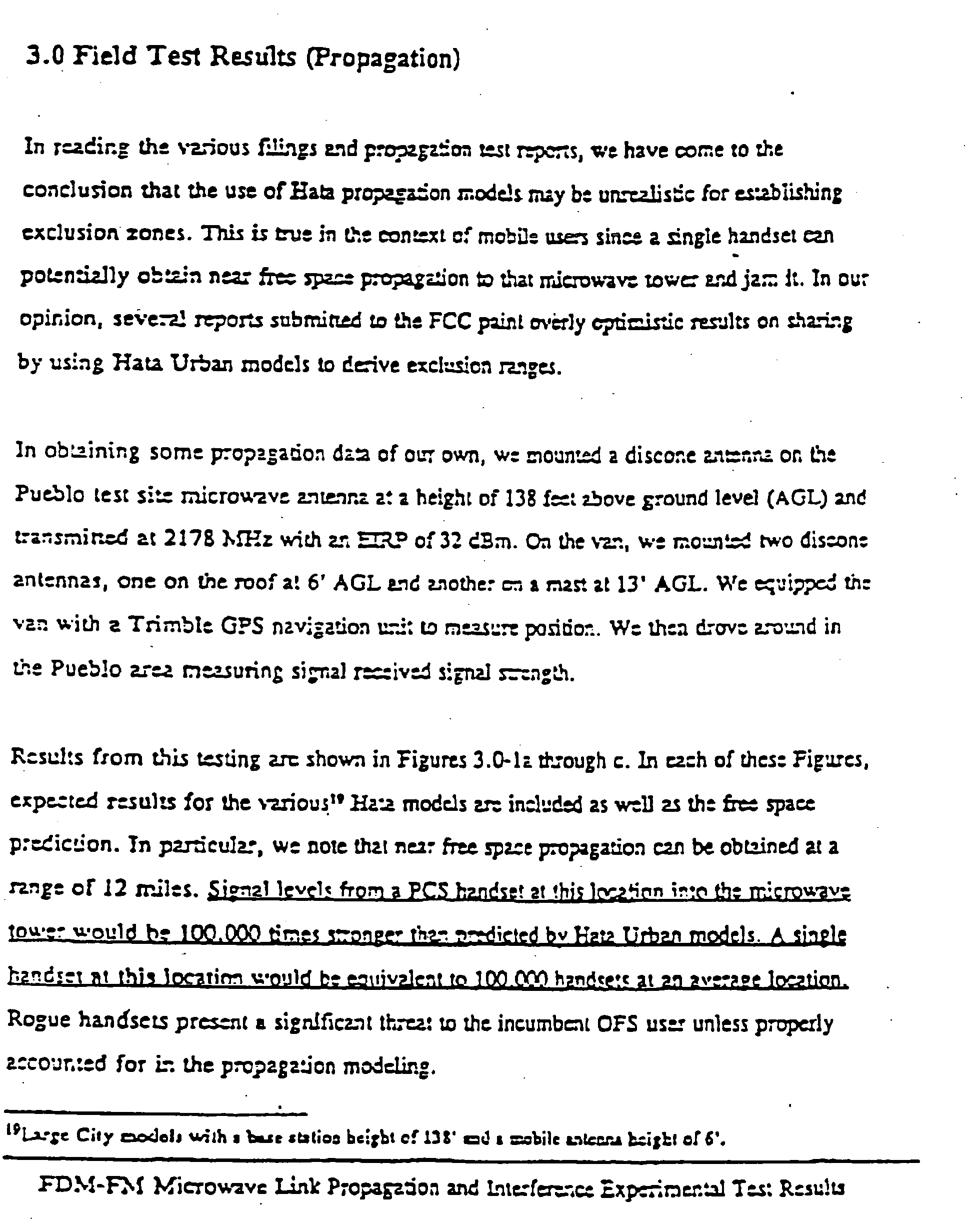

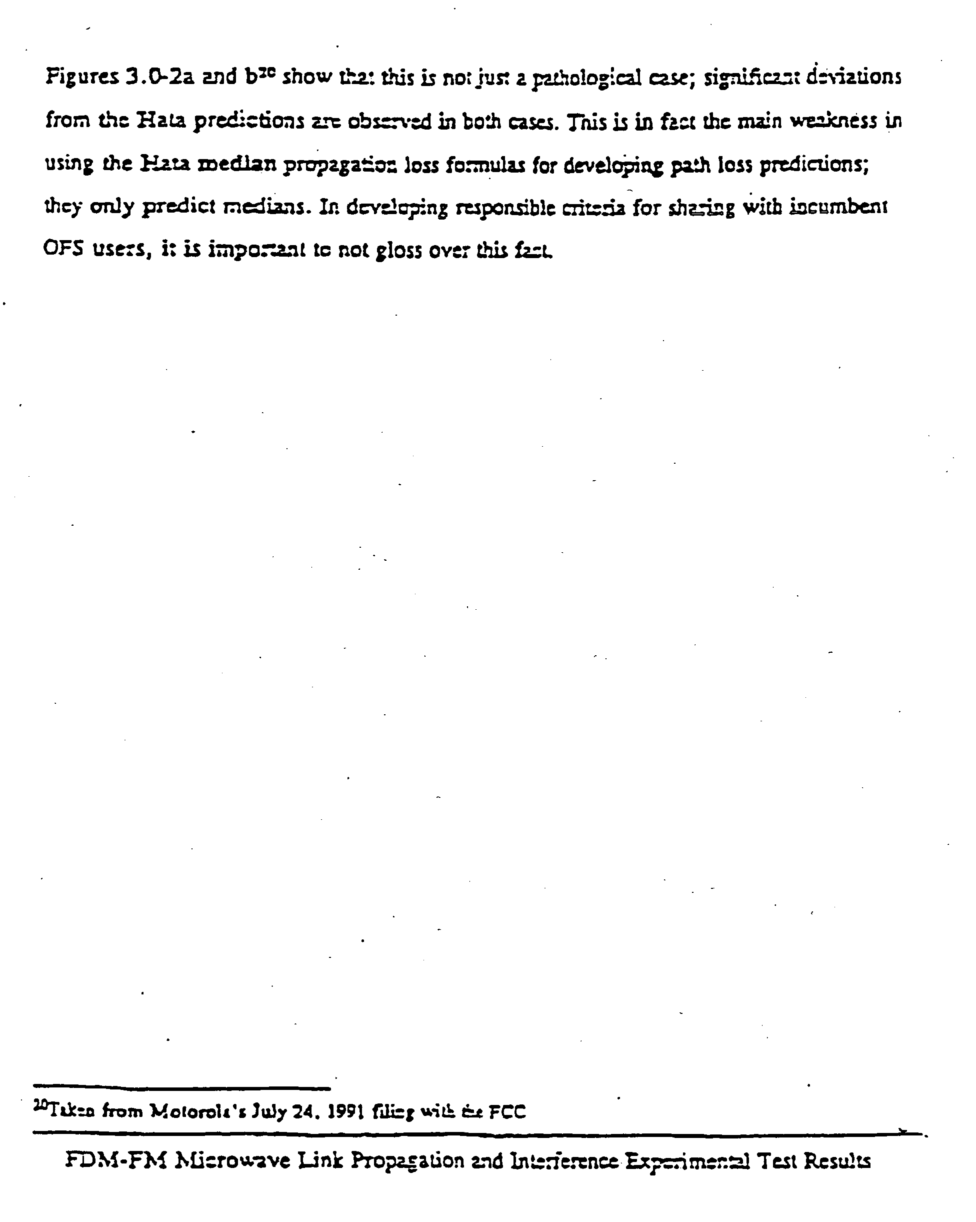

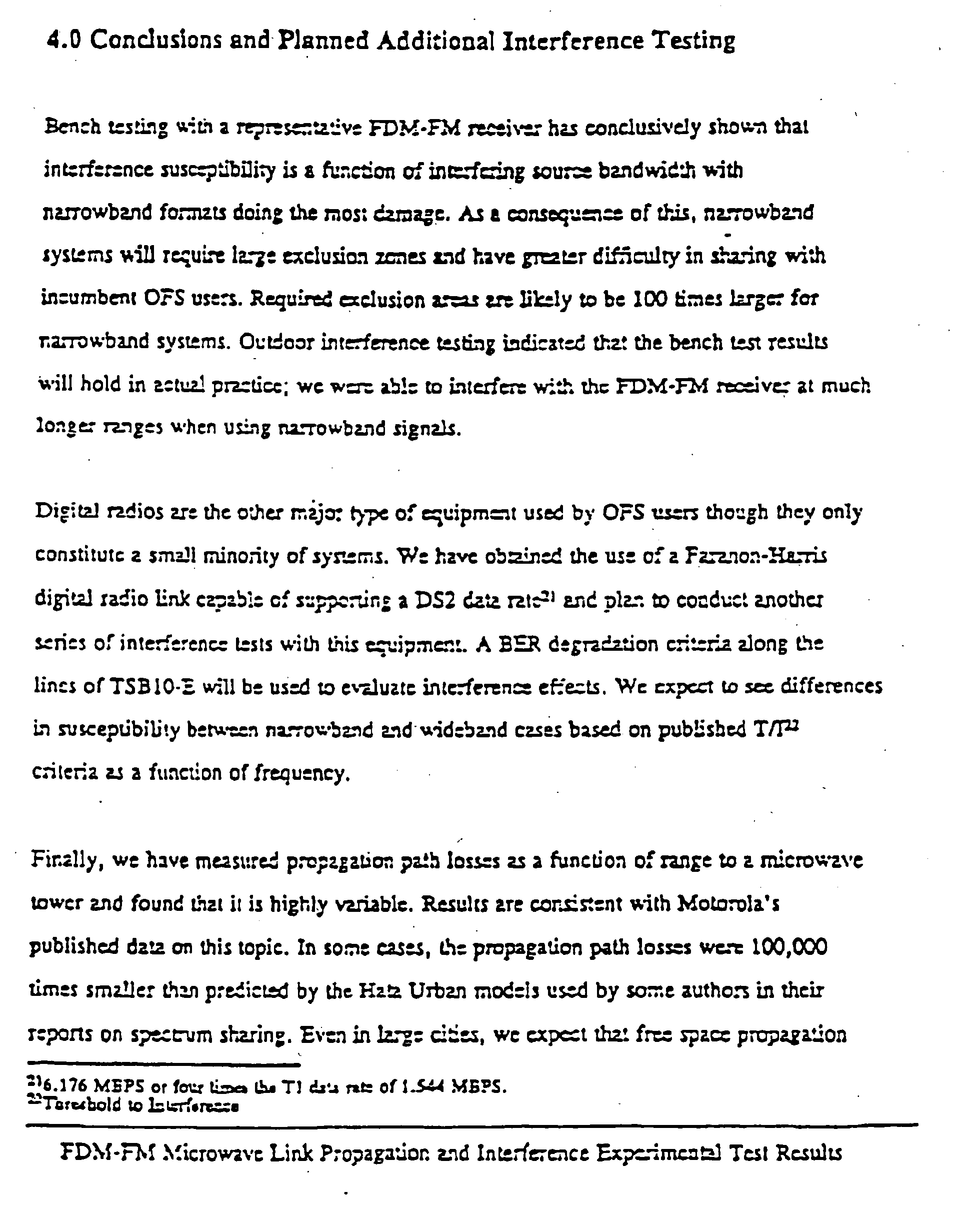

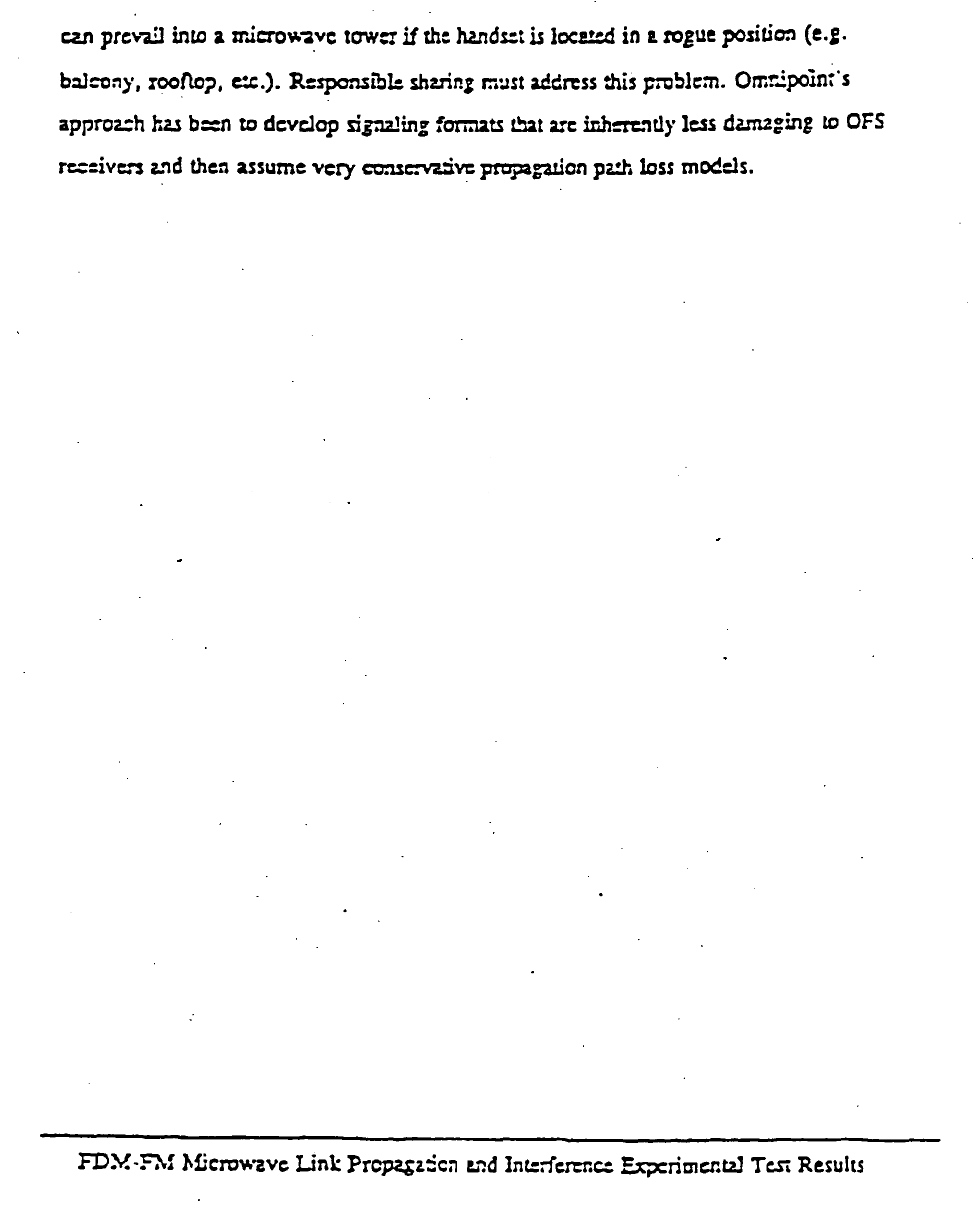

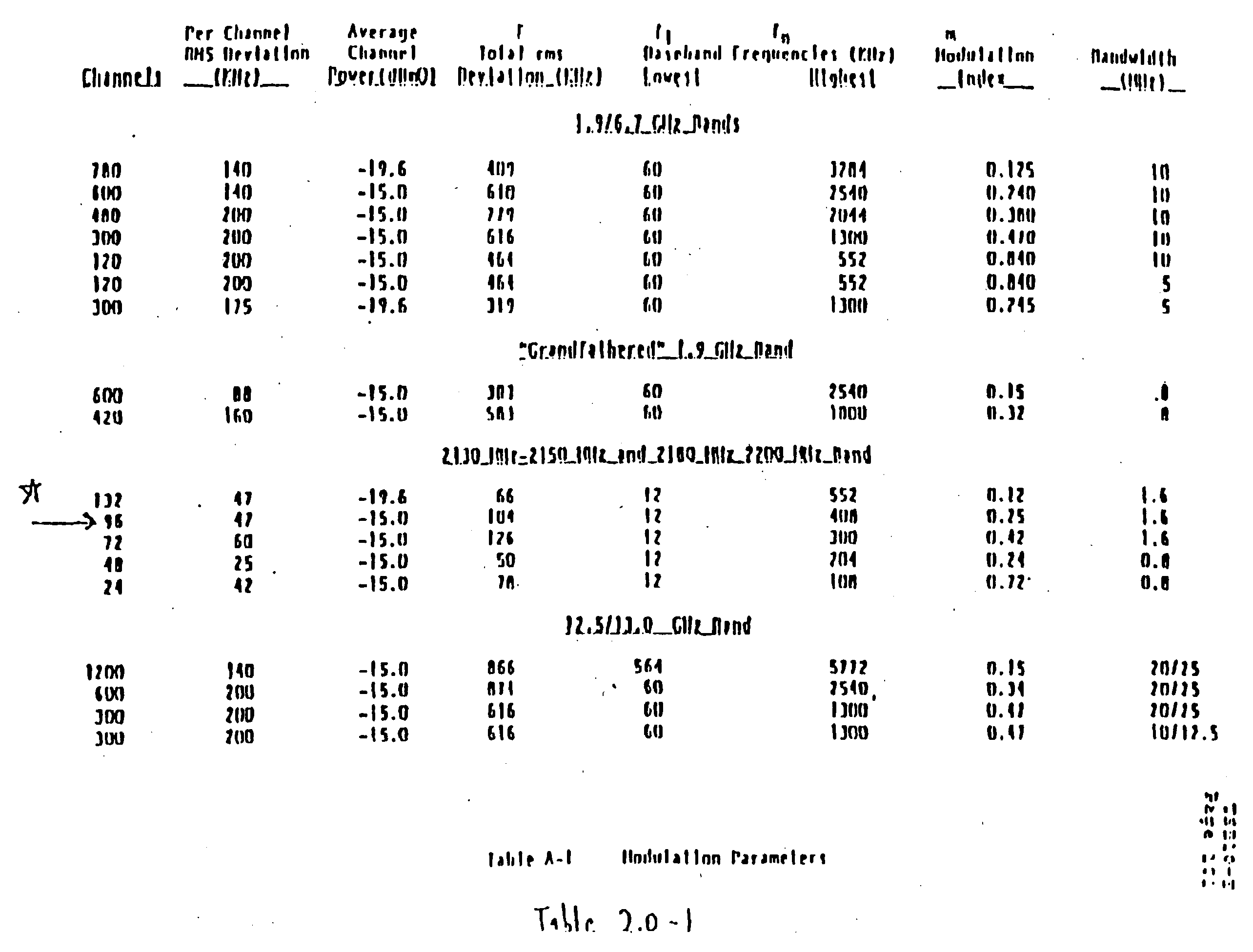

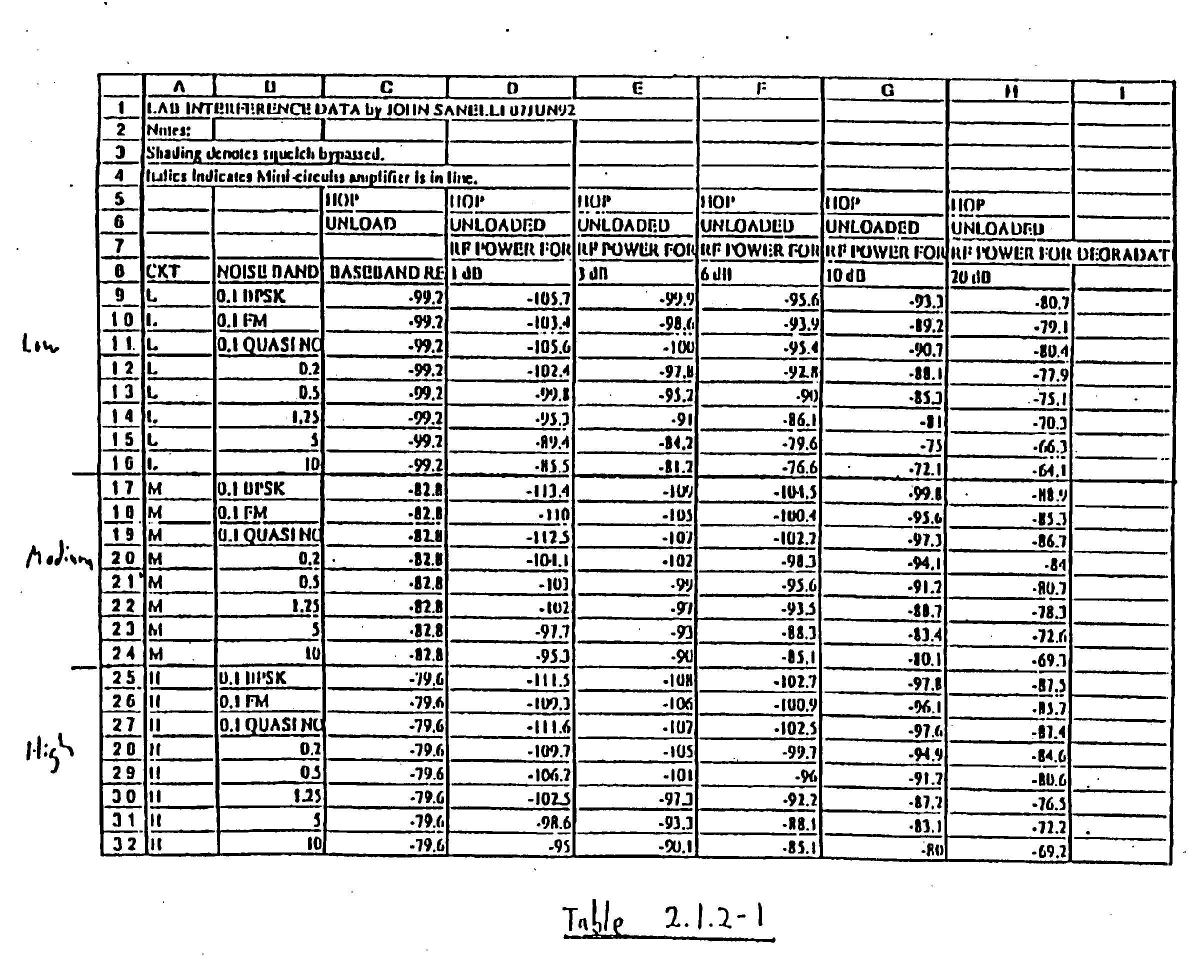

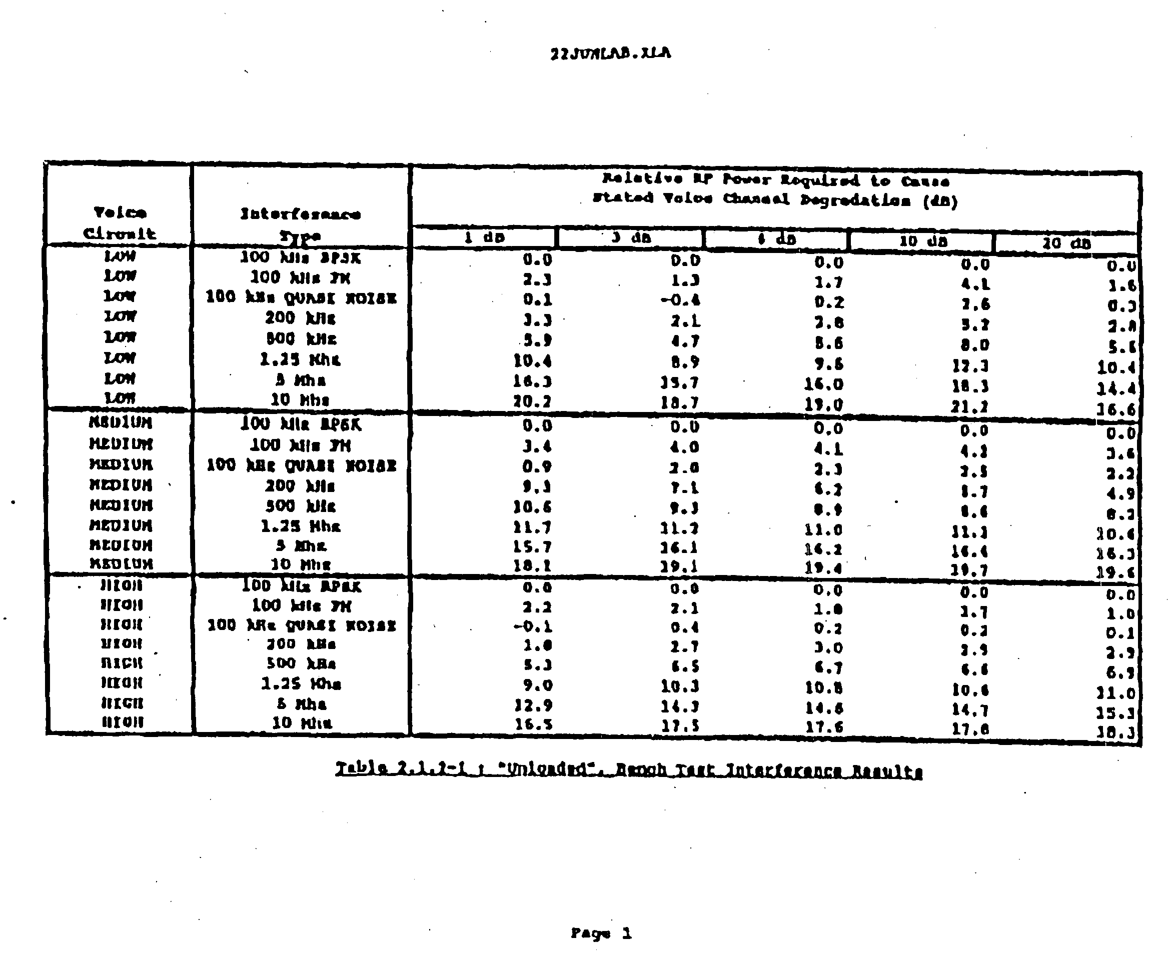

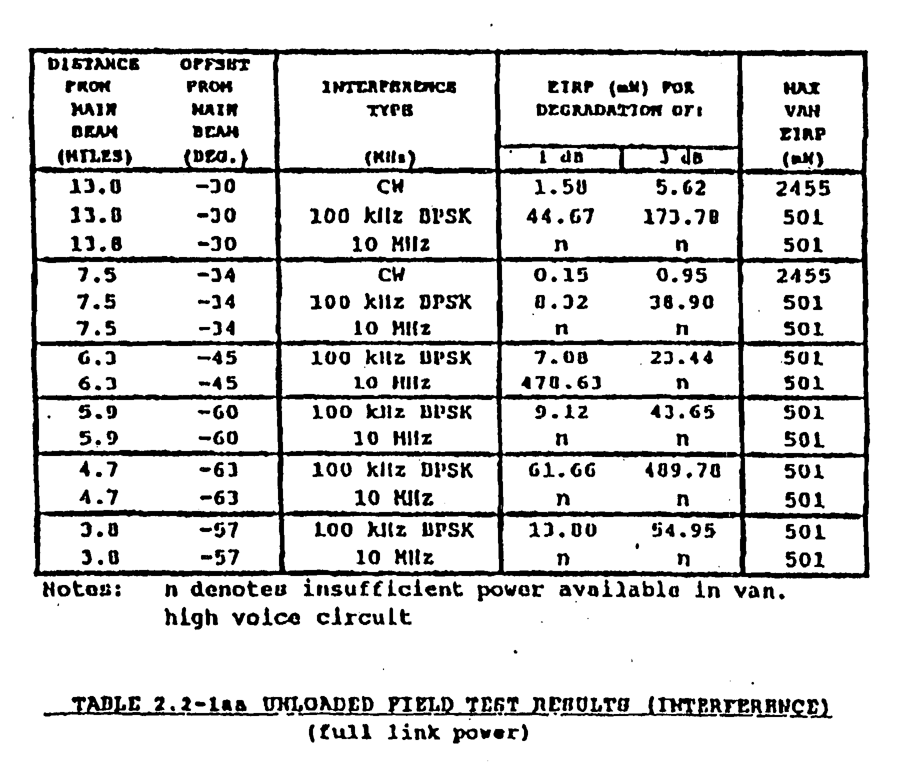

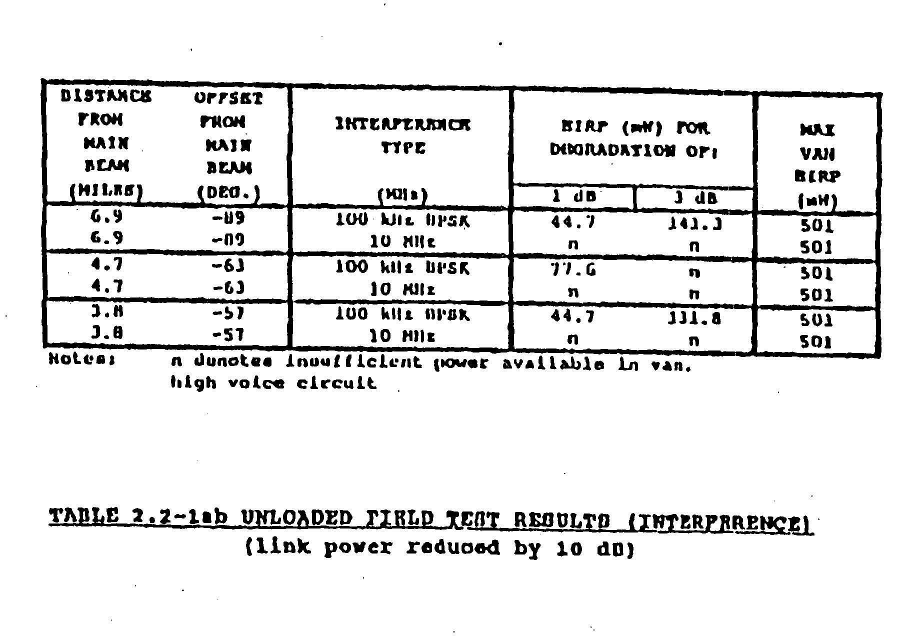

## Claims

1. A method of communication, comprising:
selecting a first carrier frequency with a first frequency band (619) associated with a first multiple access network;
transmitting a first spread spectrum signal modulated onto the first carrier frequency (622) from a mobile transceiver to the first multiple access network;
receiving a second spread spectrum signal modulated onto the first carrier frequency (714) at the mobile transceiver from the first multiple access network;
selecting a second carrier frequency within a second frequency band (620) different from the first frequency band and associated with a second multiple access network;
transmitting a third spread spectrum signal modulated onto the second carrier frequency (623) from the mobile transceiver to the second multiple access network; and
receiving a fourth spread spectrum signal modulated onto the second carrier frequency (715) at the mobile transceiver from the second multiple access network.

2. A method as in claim 1 wherein the first and second spread spectrum signals are transmitted using time division multiple access.

3. A method as in claim 1 or 2 wherein the first frequency band is within a licensed frequency band and the first multiple access network is a public access network.

4. A method as in claim 3 wherein the second frequency band is, at least partially, outside the licensed frequency band and the second multiple access network is a private access network, for example a microcellular system.

5. A method as in claim 1, 2, 3, or 4 further comprising:
receiving the first spread spectrum signal at a destination station;
monitoring a spread spectrum signal-to-noise ratio of the first spread spectrum signal received at the destination station; and
switching (709, 710) from the first carrier frequency to the second carrier frequency in response to the spread spectrum signal-to-noise ratio.

6. A method as in claim 1, 2, 3, 4 or 5 further comprising switching (709, 710) from the first carrier frequency to the second carrier frequency in response to a failure to establish communication with a destination station.

7. An apparatus for mobile wireless communication, comprising:
a transmission circuit having a first transmission mode (619) for transmitting spread spectrum data over a first carrier frequency within a first frequency band to a first multiple access network and a second transmission mode (620) for transmitting spread spectrum data over a second carrier frequency within a second frequency band different from the first frequency band to a second multiple access network;
a reception circuit having a first reception mode (714) for receiving spread spectrum data over the first carrier frequency from the first multiple access network and a second reception mode (715) for receiving spread spectrum data over the second carrier frequency from the second multiple access network; and
a control circuit coupled to the transmission circuit and to the reception circuit and programmed for switching (709, 710) the transmission circuit between the first and second transmission modes and switching the reception circuit between the first and second reception modes.

8. An apparatus as in claim 7 wherein the transmission circuit is capable of transmitting the spread spectrum data using time division multiple access.

9. An apparatus as in claim 7 or 8 wherein the first frequency band is in a licensed frequency band and the first multiple access network is a public access network.

10. An apparatus as in claim 9 wherein the second frequency band is an unlicensed frequency band and the second multiple access network is a microcellular private access network.

11. An apparatus as in claim 9 wherein the first carrier frequency has a bandwidth of 10 megahertz or less.

12. An apparatus as in claim 7, 8, 9, 10, or 11 wherein the control circuit is programmed for switching the transmission circuit between the first and second transmission modes in response to a spread spectrum signal-to-noise ratio.

13. An apparatus as in claim 7, 8, 9, 10, 11 or 12 wherein the first and second carrier frequencies are selected from ranges consisting of about 920-928, 1850-1990, and 2400-2483.5 megahertz.

14. A method for wireless communication, comprising:
tuning a transceiver to a first carrier frequency band (619) associated with a first multiple access network;
transmitting a first spread spectrum signal over the first carrier frequency band (622) from the transceiver to a base station in the first multiple access network;
tuning the transceiver to a second carrier frequency band (620) different from the first carrier frequency and associated with a second multiple access network; and
transmitting a second spread spectrum signal over the second carrier frequency band (623) from the transceiver to a base station in the second multiple access network.

15. The method as claimed in claim 14 further comprising the step of receiving a third spread spectrum signal over the first carrier frequency band (712) at the transceiver from the base station in the first multiple access network.

16. The method as claimed in claim 14 or 15 wherein the steps of transmitting a first spread spectrum signal and transmitting a second spread spectrum signal include transmitting the first and second spread spectrum signals using time division multiple access.

17. The method as claimed in claim 14 or 15 wherein the step of tuning a transceiver to a first carrier frequency band includes tuning the transceiver to the first carrier frequency band within a licensed carrier frequency band associated with a public access network.

18. The method as claimed in claim 17 wherein the step of transmitting a first spread spectrum signal further includes the step of modulating (610) the first spread spectrum signal over the first carrier frequency band having a bandwidth of about 10 megahertz or less.

19. The method as claimed in claim 17 or 18 wherein the step of tuning the transceiver to a second carrier frequency band includes tuning the transceiver to an unlicensed carrier frequency band associated with a microcellular private access network.

20. The method as claimed in claim 14, 15, 16, 17, 18 or 19 further comprising the steps of:
receiving the first spread spectrum signal at a destination station;
monitoring a signal-to-noise ratio of the first spread spectrum signal at the destination station; and
tuning the transceiver from the first carrier frequency band to the second carrier frequency band in response to the signal-to-noise ratio.

21. The method as claimed in claim 20 further comprising the step of tuning the transceiver from the first carrier frequency band to the second carrier frequency band in response to a failure to establish communication with the destination station.

22. The method as claimed in claim 14, 15, 16, 17, 18, 19, 20 or 21, wherein the step of tuning a transceiver to a first carrier frequency band includes selecting the first carrier frequency band from a range consisting of about 902-928 megahertz, 1850-1990 megahertz, and 2400-2483.5 megahertz.
